(19) Europäisches Patentamt
European Patent Office
Office européen des brevets

(11) **EP 4 686 132 A1**

(12) **EUROPEAN PATENT APPLICATION**
published in accordance with Art. 153(4) EPC

(43) Date of publication:
**28.01.2026 Bulletin 2026/05**

(21) Application number: **24784369.1**

(22) Date of filing: **03.04.2024**

(51) International Patent Classification (IPC):
**H04L 5/00** $^{(2006.01)}$ **H04W 72/0453** $^{(2023.01)}$

(52) Cooperative Patent Classification (CPC):
**H04L 5/00; H04W 72/0453**

(86) International application number:
**PCT/CN2024/085879**

(87) International publication number:
**WO 2024/208287 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.04.2023 CN 202310411270**
**11.08.2023 CN 202311021417**

(71) Applicant: **Huawei Technologies Co., Ltd.
Shenzhen, Guangdong 518129 (CN)**

(72) Inventors:
• **GAO, Xiang**
  **Shenzhen, Guangdong 518129 (CN)**
• **LIU, Xianda**
  **Shenzhen, Guangdong 518129 (CN)**
• **ZHANG, Zhening**
  **Shenzhen, Guangdong 518129 (CN)**
• **WANG, Yihong**
  **Shenzhen, Guangdong 518129 (CN)**
• **LIU, Kunpeng**
  **Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **COMMUNICATION METHOD AND COMMUNICATION APPARATUS**

(57)    This application provides a communication method and a communication apparatus. In the communication method, ports for sending an SRS may be divided into P groups, and the SRS may be sent based on at least one comb offset in a first comb offset set $\varphi_p$ corresponding to a $P^{th}$ group of ports of the P groups of ports. Different port groups may correspond to different comb offset sets. In this way, ports in different port groups may hop at different CO steps. This can reduce a probability of repetition with a CO of a port of UE that does not support CO hopping, to reduce interference during sending of the SRS.

*500*

FIG. 5

## Description

This application claims priorities to Chinese Patent Application No. 202310411270.0, filed with the China National Intellectual Property Administration on April 7, 2023 and entitled "COMMUNICATION METHOD AND COMMUNICATION APPARATUS", and to Chinese Patent Application No. 202311021417.1, filed with the China National Intellectual Property Administration on August 11, 2023 and entitled "COMMUNICATION METHOD AND COMMUNICATION APPARATUS", both of which are incorporated herein by reference in their entireties.

## TECHNICAL FIELD

This application relates to the communication field, and more specifically, to a communication method and a communication apparatus in the communication field.

## BACKGROUND

A channel sounding reference signal (sounding reference signal, SRS) is an uplink reference signal sent by a terminal device to a network device (for example, a base station). The network device may perform channel estimation on an uplink (uplink, UL) channel based on the SRS, or the network device may perform channel estimation on a downlink (downlink, DL) channel based on channel reciprocity, so that the network device can perform uplink transmission or downlink transmission with the terminal device.

To avoid interference that occurs when different terminal devices send SRSs, SRS sequences used by different terminal devices may be cyclic shift (cyclic shift, CS) values of different base sequences, or may be different CS values of a same base sequence. For different base sequences, interference occurs between obtained SRS sequences regardless of whether a same cyclic shift value or different cyclic shift values are used. Different CSs of a same base sequence form different SRS sequences, and a difference between two different CS values causes interference between different SRS sequences of a same base sequence. Consequently, performance of sending an SRS is affected.

## SUMMARY

Embodiments of this application provide a communication method and a communication apparatus, to reduce interference and improve performance of sending an SRS.

According to a first aspect, a communication method is provided, and includes: A plurality of ports for sending an SRS correspond to one or more port groups. One port group corresponds to one comb offset set that supports hopping. The one or more port groups correspond to a total of one or more comb offset sets.

In the foregoing solution, COs, supporting hopping, of ports in different port groups may be different. This can reduce a probability of repetition with a CO occupied by a port of UE that does not support CO hopping, to reduce interference during sending of the SRS.

In a possible implementation, sending an SRS based on at least one comb offset in a first comb offset set $\varphi_p$ corresponding to a $p^{th}$ group of ports, where $N_{ap}^{SRS}$ ports corresponding to a first SRS resource are divided into $P$ groups, the $P$ groups of ports corresponding to the first SRS resource include the $p^{th}$ group of ports, $N_{ap}^{SRS}$ is a positive integer, $p$ is a positive integer ranging from 1 to $P$, and a value of $P$ is a positive integer greater than or equal to 1 and less than or equal to $N_{ap}^{SRS}$.

In the foregoing solution, the ports for sending the SRS may be divided into the $P$ groups, and the SRS may be sent based on the at least one comb offset in the first comb offset set $\varphi_p$ corresponding to the $p^{th}$ group of ports of the $P$ groups of ports. Different port groups may correspond to different comb offset sets. In this way, ports in different port groups may hop at different CO steps. This can reduce a probability of repetition with a CO of a port of UE that does not support CO hopping, to reduce interference during sending of the SRS and improve performance of sending the SRS.

Optionally, the first SRS resource corresponds to one or more of the following resources: a time domain resource, a frequency domain resource, or a code domain resource.

Optionally, the first comb offset set $\varphi_p$ may be configured by a network device or specified in a protocol.

Optionally, sending the SRS based on the at least one comb offset in the first comb offset set $\varphi_p$ corresponding to the $p^{th}$ group of ports includes: sending the SRS based on one comb offset in the first comb offset set $\varphi_p$ corresponding to the $p^{th}$ group of ports, where the $p^{th}$ group of ports corresponds to the comb offset.

Optionally, sending the SRS based on the at least one comb offset in the first comb offset set $\varphi_p$ corresponding to the $p^{th}$ group of ports includes: sending the SRS based on a plurality of comb offsets in the first comb offset set $\varphi_p$

corresponding to the $p^{th}$ group of ports, where a plurality of ports in the $p^{th}$ group of ports correspond to the plurality of comb offsets.

Optionally, a terminal device may send the SRS based on a comb offset that corresponds to each group of ports and that is determined from a comb offset set corresponding to each of the $P$ groups of ports.

Optionally, all of the $P$ groups of ports may correspond to different comb offset sets or a same comb offset set. This is not limited in this embodiment of this application.

In a possible implementation, comb offset intervals between any two adjacent comb offsets in the first comb offset set $\varphi_p$ corresponding to the $p^{th}$ group of ports are equal.

Optionally, the $1^{st}$ comb offset and the last comb offset that are included in the first comb offset set $\varphi_p$ may also be considered as adjacent comb offsets.

In a possible implementation, the first comb offset set $\varphi_p$ corresponding to the $p^{th}$ group of ports includes at least one comb offset subset, comb offsets included in each of the at least one comb offset subset are consecutive, and comb offset intervals between any two adjacent comb offset subsets of the at least one comb offset subset are equal. Comb offsets included in a comb offset subset are consecutive, and comb offset subsets are equally spaced. The last comb offset subset and the $1^{st}$ comb offset subset may also be two adjacent comb offset subsets.

In a possible implementation, comb offsets included in the first comb offset set $\varphi_p$ corresponding to the $p^{th}$ group of ports are consecutive.

Optionally, a difference between adjacent comb offsets included in the first comb offset set $\varphi_p$ is 1.

In a possible implementation, the first comb offset set $\varphi_p$ corresponding to the $p^{th}$ group of ports is obtained based on a reference comb offset $k_{TC,start}^{p}$ of the $p^{th}$ group of ports and a comb offset step of the $p^{th}$ group of ports, and $k_{TC,start}^{p}$ is a positive integer.

Optionally, if the first comb offset set $\varphi_p$ includes $n_p$ comb offsets, the $p^{th}$ group of ports corresponds to $n_p$ comb offset steps. Optionally, the network device may configure the $n_p$ comb offset steps. The network device may configure some of the comb offset steps, and the terminal device may determine remaining comb offset steps based on the some of the comb offset steps. For example, the network device may configure a maximum value of the comb offset steps, and the comb offset steps may be consecutive. Therefore, the network device may determine the $n_p$ comb offset steps based on the maximum value. Optionally, the $n_p$ comb offset steps may be specified in the protocol.

In a possible implementation, the reference comb offset $k_{TC,start}^{p}$ of the $p^{th}$ group of ports is specified in a protocol or is indicated by a network device.

In a possible implementation, the reference comb offset $k_{TC,start}^{p}$ of the $p^{th}$ group of ports is obtained based on at least one of a total comb quantity $K_{TC}$ configured by a network device, $N_{ap}^{SRS}$, a comb offset $\overline{k}_{TC}$ of a reference port, a maximum cyclic shift value $n_{RS}^{cs,max}$, or a cyclic shift value of a reference port in the $p^{th}$ group of ports, $K_{TC}$ is a positive integer greater than or equal to 1, $n_{SRS}^{cs,max}$ is a positive integer greater than or equal to 1, and $\overline{k}_{TC}$ is a positive integer greater than or equal to 0 and less than $K_{TC}$.

Optionally, the reference comb offset $k_{TC,start}^{p}$ of the $p^{th}$ group of ports may be a comb offset determined by the terminal device when CO subset hopping is disabled.

In a possible implementation, the first comb offset set $\varphi_p$ corresponding to the $p^{th}$ group of ports is obtained based on at least one of the total comb quantity $K_{TC}$, the reference comb offset $k_{TC,start}^{p}$ of the $p^{th}$ group of ports, or $n_p$ comb offset steps of the $p^{th}$ group of ports, the first comb offset set $\varphi_p$ includes $n_p$ comb offsets, the $n_p$ comb offsets are in a one-to-one correspondence with the $n_p$ comb offset steps, and $n_p$ is a positive integer less than or equal to $K_{TC}$.

In the foregoing solution, the terminal device may obtain at least one of the total comb quantity $K_{TC}$, the reference comb offset $k_{TC,start}^{p}$ of the $p^{th}$ group of ports, or the $n_p$ comb offset steps of the $p^{th}$ group of ports, and determine the first comb offset set $\varphi_p$ based on at least one of the total comb quantity $K_{TC}$, the reference comb offset $k_{TC,start}^{p}$ of the $p^{th}$ group of ports, or the comb offset steps $n_p$ of the $p^{th}$ group of ports.

A manner of determining a comb offset set for each of the $P$ groups of ports is the same as the manner of determining the first comb offset set $\varphi_p$ for the $p^{th}$ group of ports.

In a possible implementation, the method further includes: receiving first indication information and second indication information from the network device, where the first indication information indicates the total comb quantity $K_{TC}$, and the second indication information indicates $n_p$.

Optionally, the terminal device may simultaneously receive the first indication information and the second indication information; or may separately receive the first indication information and the second indication information, where a sequence of receiving the first indication information and the second indication information is not limited.

In a possible implementation, the first comb offset set $\varphi_p$ corresponding to the $p^{th}$ group of ports is as follows:

$$\left\{ k_{TC,start}^{p}, \left( k_{TC,start}^{p} + 1 \right) \bmod K_{TC}, \left( k_{TC,start}^{p} + 2 \right) \bmod K_{TC}, \cdots, \left( k_{TC,start}^{p} + n_p - 1 \right) \bmod K_{TC} \right\} \quad ,$$

where $0, 1, 2, \cdots, n_p$ -1 are the $n_p$ comb offset steps.

In a possible implementation, the first comb offset set $\varphi_p$ corresponding to the $p^{th}$ group of ports is as follows:

$$\left\{ k_{TC,start}^{p}, \left( k_{TC,start}^{p} - 1 \right) \bmod K_{TC}, \left( k_{TC,start}^{p} - 2 \right) \bmod K_{TC}, \cdots, \left( k_{TC,start}^{p} - n_p + 1 \right) \bmod K_{TC} \right\} \quad ,$$

where $0, -1, -2, \cdots, -n_p$ +1 are the $n_p$ comb offset steps, where
mod($\cdot$) is a modulo operation, and $0, 1, 2, \cdots, n_p$ -1 is the $n_p$ comb offset steps.

In a possible implementation, the method further includes:
receiving third indication information from the network device, where the third indication information indicates that the first comb offset set $\varphi_p$ corresponding to the $p$ $^{th}$ group of ports is

$$\left\{ k_{TC,start}^{p}, \left( k_{TC,start}^{p} + 1 \right) \bmod K_{TC}, \left( k_{TC,start}^{p} + 2 \right) \bmod K_{TC}, \cdots, \left( k_{TC,start}^{p} + n_p - 1 \right) \bmod K_{TC} \right\}$$ , or the third indication information indicates that the first comb offset set $\varphi_p$ corresponding to the $p^{th}$ group of ports is

$$\left\{ k_{TC,start}^{p}, \left( k_{TC,start}^{p} - 1 \right) \bmod K_{TC}, \left( k_{TC,start}^{p} - 2 \right) \bmod K_{TC}, \cdots, \left( k_{TC,start}^{p} - n_p + 1 \right) \bmod K_{TC} \right\}$$

In a possible implementation, sending the SRS based on the at least one comb offset in the first comb offset set $\varphi_p$ corresponding to the $p^{th}$ group of ports includes:

generating a first value based on a total quantity $n_p$ of comb offsets included in the first comb offset set $\varphi_p$, where a value range of the first value is [0, $n_p$ - 1];
determining, from the first comb offset set $\varphi_p$, a first comb offset corresponding to the first value, where a comb offset of each port in the $p^{th}$ group of ports is the first comb offset, and one value in [0, $n_p$ - 1] corresponds to one comb offset in the first comb offset set $\varphi_p$; and
sending the SRS based on the first comb offset.

In a possible implementation, an $n_p^{i}$ $^{th}$ comb offset in the first comb offset set $\varphi_p$ corresponding to the $p^{th}$ group of ports corresponds to an $n_p^{i}$ $^{th}$ comb offset step, the $n_p^{i}$ $^{th}$ comb offset step corresponds to a second value generated based on a quantity $n_p$ of comb offset steps, and a value range of the second value is [0, $n_p$ - 1] .

In a possible implementation, the $n_p^{i}$ $^{th}$ comb offset step $k_{COH,i}^{p}$ is $(-1)^b f(n_{SRS})$, where $f(n_{SRS})$ is the second value, and a value of $b$ is 0 or 1.

In a possible implementation, sending the SRS based on the at least one comb offset in the first comb offset set $\varphi_p$ corresponding to the $p^{th}$ group of ports includes:

determining a first comb offset of the $p^{th}$ group of ports based on at least one of the $n_p^{i}$ $^{th}$ comb offset step $k_{COH,i}^{p}$ in the first comb offset set $\varphi_p$, the reference comb offset $k_{TC,start}^{p}$ of the $p^{th}$ group of ports, or the total comb quantity $K_{TC}$;
determining, based on the first comb offset and a frequency domain resource offset, a frequency domain starting position to which the $p^{th}$ group of ports is mapped; and
sending the SRS based on the frequency domain starting position to which the $p^{th}$ group of ports is mapped.

In a possible implementation, the reference comb offset $k_{TC,start}^{p}$ of the $p^{th}$ group of ports is $k_{TC}^{p}$ obtained based on at least one of the total comb quantity $K_{TC}$ configured by the network device, $N_{ap}^{SRS}$, the comb offset $\overline{k}_{TC}$ of the reference port, the maximum cyclic shift value $n_{RS}^{cs,max}$, or the cyclic shift value of the reference port in the $p^{th}$ group of ports, and determining the first comb offset of the $p^{th}$ group of ports based on at least one of the $n_p^{i}$ $^{th}$ comb offset step

$k_{COH,i}^{p}$ in the first comb offset set $\varphi_p$, the reference comb offset $k_{TC,start}^{p}$ of the $p^{th}$ group of ports, or the total comb quantity $K_{TC}$ includes:

determining that the first comb offset of the $p^{th}$ group of ports is $(k_{TC}^{P} + k_{offset}^{i} + k_{COH,i}^{p}) \bmod K_{TC}$, where $k_{offset}^{i}$ is a comb offset adjustment value; and

determining, based on the first comb offset and the frequency domain resource offset, the frequency domain starting position to which the $p^{th}$ group of ports is mapped includes:

determining that the frequency domain starting position to which the $p^{th}$ group of ports is mapped is

$$n_{shift}N_{SC}^{RB} + (k_{TC}^{P} + k_{offset}^{i} + k_{COH,i}^{p}) \bmod K_{TC}$$, where $n_{shift}N_{SC}^{RB}$ is the frequency domain resource offset.

In a possible implementation, the reference comb offset $k_{TC,start}^{p}$ of the $p^{th}$ group of ports is specified in the protocol or is indicated by the network device, and determining the first comb offset of the $p^{th}$ group of ports based on at least one of the $n_p^{i}{}^{th}$ comb offset step $k_{COH,i}^{p}$ in the first comb offset set $\varphi_p$, the reference comb offset $k_{TC,start}^{p}$ of the $p^{th}$ group of ports, or the total comb quantity $K_{TC}$ includes:

determining that the first comb offset of the $p^{th}$ group of ports is

$$\{[(k_{TC}^{p} + k_{offset}^{i} + k_{COH,i}^{p} - k_{TC,start}^{p}) \bmod n_p] + k_{TC,start}^{p}\} \bmod K_{TC}$$, where $k_{offset}^{i}$ is a comb offset adjustment value, and $k_{TC}^{p}$ is obtained based on at least one of the total comb quantity $K_{TC}$ configured by the network device, $N_{ap}^{SRS}$, the comb offset $\overline{k}_{TC}$ of the reference port, the maximum cyclic shift value $n_{RS}^{cs,max}$, or the cyclic shift value of the reference port in the $p^{th}$ group of ports; and

determining, based on the first comb offset and the frequency domain resource offset, the frequency domain starting position to which the $p^{th}$ group of ports is mapped includes:

determining that the frequency domain starting position to which the $p^{th}$ group of ports is mapped is

$$n_{shift}N_{SC}^{RB} + \{[(k_{TC}^{p} + k_{offset}^{i} + k_{COH,i}^{p} - k_{TC,start}^{P}) \bmod n_p] + k_{TC,start}^{P}\} \bmod K_{TC}$$, where $n_{shift}N_{SC}^{RB}$ is the frequency domain resource offset.

In a possible implementation, the $p^{th}$ group of ports includes $m_p$ ports, a comb offset of each of the $m_p$ ports in the first comb offset set $\varphi_p$ is related to an index of a cyclic shift group to which a cyclic shift value corresponding to the port belongs, the first SRS resource corresponds to $T$ groups of cyclic shift values, and the $T$ groups of cyclic shift values correspond to $T$ cyclic shift group indexes, where $T$ is a positive integer.

In a possible implementation, a comb offset $n_p^{j}$ of an $m_p^{j}{}^{th}$ port of the $m_p$ ports in the first comb offset set $\varphi_p$ is obtained based on at least one of $k_{TC}^{P}$ or an index of a cyclic shift group to which a cyclic shift value corresponding to the $m_p^{j}{}^{th}$ port belongs.

In a possible implementation, the $p^{th}$ group of ports includes $m_p$ ports; during one time of SRS sending, a comb offset of each of the $m_p$ ports in the first comb offset set $\varphi_p$ is related to a cyclic shift value corresponding to the port; and the first SRS resource corresponds to $T$ cyclic shift values.

In a possible implementation, during one time of SRS sending, a comb offset $n_p^{j}$ of an $m_p^{j}{}^{th}$ port of the $m_p$ ports in the first comb offset set $\varphi_p$ is obtained based on $k_{TC}^{p}$ and/or a cyclic shift value corresponding to the $m_p^{j}{}^{th}$ port, where

$k_{TC}^{p}$ is obtained based on at least one of the total comb quantity $K_{TC}$ configured by the network device, $N_{ap}^{SRS}$, the comb offset $\overline{k}_{TC}$ of the reference port, the maximum cyclic shift value $n_{RS}^{cs,max}$, or the cyclic shift value of the reference port in the $p^{th}$ group of ports.

In a possible implementation, a comb offset $n_p^{j}$ of an $m_p^{j}{}^{th}$ port of the $m_p$ ports in the first comb offset set $\varphi_p$ is

obtained based on $k_{TC}^p$, a cyclic shift value corresponding to the $m_p^{j\ \text{th}}$ port, and T.

In a possible implementation, an $m_p^{j\ \text{th}}$ port of the $m_p$ ports corresponds to an $n_p^{j\ \text{th}}$ comb offset step, the $n_p^{j\ \text{th}}$ comb offset step corresponds to a third value generated based on a quantity $n_p$ of comb offset steps, and a value range of the third value is [0, $n_p$ - 1].

In a possible implementation, the $n_p^{j\ \text{th}}$ comb offset step $k_{COH,j}^p$ is $(-1)^b[f(n_{SRS}) + \lfloor n_{SRS}^{CS,j} \cdot T / n_{srs}^{CS,\max} \rfloor]$ , where $f(n_{SRS})$ is the third value, a value of $b$ is 0 or 1, $n_{srs}^{CS,\max}$ is the maximum cyclic shift value, $n_{SRS}^{CS,j}$ is a cyclic shift value corresponding to the $m_p^{j\ \text{th}}$ port, and T is a quantity of cyclic shift groups.

In a possible implementation, the $n_p^{j\ \text{th}}$ comb offset step $k_{COH,j}^p$ is $(-1)^b[f(n_{SRS})+T_j]$, where $T_j$ is an index of a cyclic shift group to which a cyclic shift value corresponding to the $m_p^{j\ \text{th}}$ port belongs, and a value of $T_j$ is a positive integer ranging from 0 to $T$ -1.

In a possible implementation, sending the SRS based on the at least one comb offset in the first comb offset set $\varphi_p$ corresponding to the $p$th group of ports includes: determining a comb offset of the $m_p^{j\ \text{th}}$ port based on at least one of the $n_p^{j\ \text{th}}$ comb offset step $k_{COH,j}^p$ corresponding to the $m_p^{j\ \text{th}}$ port, a reference comb offset $k_{TC,start}^p$ of the $m_p^{j\ \text{th}}$ port, or the total comb quantity $K_{TC}$;

determining, based on the comb offset of the $m_p^{j\ \text{th}}$ port and a frequency domain resource offset, a frequency domain starting position to which the $m_p^{j\ \text{th}}$ port is mapped; and

sending the SRS based on the frequency domain starting position to which the $m_p^{j\ \text{th}}$ port is mapped, where $m_p^j$ is a positive integer ranging from 1 to $m_p$.

In a possible implementation, the reference comb offset $k_{TC,start}^p$ of the $p$th group of ports is obtained based on at least one of the total comb quantity $K_{TC}$ configured by the network device, $N_{ap}^{SRS}$, the comb offset $\overline{k}_{TC}$ of the reference port, the maximum cyclic shift value $n_{RS}^{cs,\max}$, or the cyclic shift value $k_{TC}^p$ of the reference port in the $p$th group of ports, and determining the comb offset of the $m_p^{j\ \text{th}}$ port based on at least one of the $n_p^{j\ \text{th}}$ comb offset step $k_{COH,j}^p$ corresponding to the $m_p^{j\ \text{th}}$ port, the reference comb offset $k_{TC,start}^p$ of the $m_p^{j\ \text{th}}$ port, or the total comb quantity $K_{TC}$ includes:

determining that the comb offset of the $m_p^{j\ \text{th}}$ port is $(k_{TC}^p + k_{offset}^{i'} + k_{COH,j}^p) \bmod K_{TC}$, where $k_{offset}^{i'}$ is a comb offset adjustment value; and

determining, based on the comb offset of the $m_p^{j\ \text{th}}$ port and the frequency domain resource offset, the frequency domain starting position to which the $m_p^{j\ \text{th}}$ port is mapped includes:

determining that the frequency domain starting position to which the $m_p^{j\ \text{th}}$ port is mapped is $n_{shift}N_{SC}^{RB} + (k_{TC}^P + k_{offset}^{i'} + k_{COH,j}^p) \bmod K_{TC}$ , where $n_{shift}N_{SC}^{RB}$ is the frequency domain resource offset.

In a possible implementation, the reference comb offset $k_{TC,start}^p$ of the $p$th group of ports is specified in the protocol or is indicated by the network device, and determining the comb offset of the $m_p^{j\ \text{th}}$ port based on at least one of the $n_p^{j\ \text{th}}$ comb offset step $k_{COH,j}^p$ corresponding to the $m_p^{j\ \text{th}}$ port, the reference comb offset $k_{TC,start}^p$ of the $m_p^{j\ \text{th}}$ port, or the total comb quantity $K_{TC}$ includes:

determining that the comb offset of the $m_p^{j\ \text{th}}$ port is

$$\{[(k_{TC}^p + k_{offset}^{l} + k_{COH,j}^p - k_{TC,start}^p)\bmod n_p] + k_{TC,start}^p\}\bmod K_{TC}$$ , where $k_{offset}^{l}$ is a comb offset adjustment value, and $k_{TC}^p$ is obtained based on at least one of the total comb quantity $K_{TC}$ configured by the network device, $N_{ap}^{SRS}$ , the comb offset $\overline{k}_{TC}$ of the reference port, the maximum cyclic shift value $n_{RS}^{cs,\max}$ , or the cyclic shift value of the reference port in the $p^{\text{th}}$ group of ports; and

determining, based on the comb offset of the $m_p^{j\ \text{th}}$ port and the frequency domain resource offset, the frequency domain starting position to which the $m_p^{j\ \text{th}}$ port is mapped includes:

determining that the frequency domain starting position to which the $m_p^{j\ \text{th}}$ port is mapped is

$$n_{shift}N_{SC}^{RB} + \{[(k_{TC}^p + k_{offset}^{l} + k_{COH,j}^p - k_{TC,start}^p)\bmod n_p] + k_{TC,start}^p\}\bmod K_{TC}$$ , where $n_{shift}N_{SC}^{RB}$ is the frequency domain resource offset.

In a possible implementation, a value of *b* is specified in the protocol or is indicated by the network device.

In a possible implementation, $f(n_{SRS}) = \left\lceil \sum_{m=0}^{B-1} c(m)\cdot 2^m \right\rceil \bmod n_p$ , where $c(m)$ is an $m^{\text{th}}$ element of a random sequence, *B* is a positive integer greater than or equal to $\lceil \log_2 n_p \rceil$ , and $\lceil \cdot \rceil$ is a round-up operation.

In a possible implementation, the first comb offset set $\varphi_p$ is obtained based on a second comb offset set that is not able to be used for sending an SRS on the first SRS resource.

In a possible implementation, the *P* groups of ports are obtained based on the $N_{ap}^{SRS}$ ports corresponding to the first SRS resource and a quantity *P* of port groups.

In a possible implementation, an interval between port indexes of adjacent ports included in each of the *P* groups of ports is $N_{ap}^{SRS}/P$ .

In a possible implementation, the first comb offset set $\varphi_p$ corresponds to an initial comb offset value of the $p^{\text{th}}$ group of ports and a first comb offset bias value set.

In a possible implementation, the first comb offset bias value set includes $L_{g,1}$ consecutive cyclic shift biases, where $L_{g,1}$ is greater than or equal to 1 and less than or equal to a total comb quantity $K_{TC}$.

In a possible implementation, indication information that indicates $L_{g,1}$ is received from a network device.

In a possible implementation, the first comb offset bias value set is $\{0,1\bmod K_{TC},\cdots,(L_{g,1}-1)\bmod K_{TC}\}$; or the first comb offset bias value set is $\{0,-1\bmod K_{TC},\cdots,(-L_{g,1}+1)\bmod K_{TC}\}$, where $\bmod(\cdot)$ is a modulo operation.

In a possible implementation, a frequency domain starting position to which the $p^{\text{th}}$ group of ports is mapped is

$$n_{shift}N_{SC}^{RB} + (k_{TC}^p + k_{offset}^{'} + n_{SRS}^{comb,\ offset})\bmod K_{TC}$$ , where $n_{shift}N_{SC}^{RB}$ is a frequency domain resource offset, $k_{offset}^{'}$ is a comb offset adjustment value, $k_{TC}^p$ is the initial comb offset value of the $p^{\text{th}}$ group of ports, $f(n_{SRS})$ is a random function, $n_{SRS}^{comb,\ offset} = f(n_{SRS})\bmod L_{g,1}$ , $L_{g,1} = K_{TC}$ or $L_{g,1}$ is a value configured by the network device or is a preset value, and $n_{SRS}^{comb,\ offset}$ is a first comb offset bias value of the $p^{\text{th}}$ group of ports in the first comb offset bias value set.

In a possible implementation, the first comb offset bias value set includes at least one comb offset bias value subset, and comb offset bias values included in each of the at least one comb offset bias value subset are consecutive.

In a possible implementation, comb offset bias value intervals between any two adjacent comb offset bias value subsets of the at least one comb offset bias value subset are equal.

In a possible implementation, all of the at least one comb offset bias value subset include equal quantities of comb offset bias values.

In a possible implementation, a quantity of the at least one comb offset bias value subset is $G$, and a $g^{th}$ comb offset bias value subset of the $G$ comb offset bias value subsets is $\{\Delta_g \bmod K_{TC}, (\Delta_g + 1) \bmod K_{TC} \cdots, (\Delta_g + L_g\text{-}1) \bmod K_{TC}\}$, or is as follows:

$$\left\{-\Delta_g \bmod K_{TC}, (-\Delta_g - 1) \bmod K_{TC} \cdots, (-\Delta_g - L_g + 1) \bmod K_{TC}\right\},$$

where

$\Delta_0 = 0$, $\Delta_g = \Delta'' \cdot g$, $g = 0, 1, \cdots, G\text{-}1$, $\Delta''$ is the comb offset bias value interval between any two adjacent comb offset bias value subsets, $K_{TC}$ is a total comb quantity, $L_g$ is a quantity of comb offset bias values included in the $g^{th}$ comb offset bias value subset, $\sum_{g=1}^{G} L_g = L_{g,1}$, and $L_{g,1}$ is a total quantity of comb offset bias values included in the first comb offset bias value set.

In a possible implementation, $K_{TC} = \Delta'' \cdot G$.

In a possible implementation, $G$ is a quantity of ports of the $N_{ap}^{SRS}$ ports on a same cyclic shift, or $G$ is a quantity of different comb offsets occupied by the $N_{ap}^{SRS}$ ports.

In a possible implementation, a frequency domain starting position to which the $p^{th}$ group of ports is mapped is

$n_{shift} N_{SC}^{RB} + (k_{TC}^p + k_{offset}' + n_{SRS}^{comb,\ offset}) \bmod K_{TC}$, where

$$n_{SRS}^{comb,\ offset} = S(f(n_{SRS}) \bmod L_{g,1}) = f(n_{SRS}) \bmod L_{g,1}, \text{ and } L_{g,1} = K_{TC};$$

or

$$n_{SRS}^{comb,\ offset} = \left(\left\lfloor \frac{f(n_{SRS}) \bmod L_{g,1}}{L_{g,1}/G} \right\rfloor \times \frac{K_{TC}}{G} + \left(\left(f(n_{SRS}) \bmod L_{g,1}\right) \bmod (L_{g,1}/G)\right)\right),$$

where $L_{g,1}$ is a value configured by a network device or is a preset value; or

$$n_{SRS}^{comb,\ offset} = \left(\left\lfloor \frac{f(n_{SRS}) \bmod L_{g,1}}{S_g} \right\rfloor \times \frac{K_{TC}}{G} + \left((f(n_{SRS}) \bmod G) \bmod S_g\right)\right),$$

where $S_g$ is a value configured by a network device or is a preset value, and $L_{g,1} = G \cdot S_g$; or

$$n_{SRS}^{comb,\ offset} = f(n_{SRS}) \bmod K_{TC};$$

or

$$n_{SRS}^{comb,\ offset} = \left(\left\lfloor \frac{f(n_{SRS}) \bmod L_{g,1}}{L_{g,1}/G} \right\rfloor \times \frac{K_{TC}}{G} + \left(f(n_{SRS}) \bmod (L_{g,1}/G)\right)\right),$$

where $L_{g,1}$ is a value configured by a network device or is a preset value; or

$$n_{SRS}^{comb,\ offset} = \left( \left\lfloor \frac{f(n_{SRS}) \bmod L_{g,1}}{S_g} \right\rfloor \times \frac{K_{TC}}{G} + \left( f(n_{SRS}) \bmod S_g \right) \right),$$

where

$n_{shift} N_{SC}^{RB}$ is a frequency domain resource offset, $k_{offset}^{I}$ is a comb offset adjustment value, $k_{TC}^{p}$ is an initial comb offset value of the $p$ groups of ports, $n_{SRS}^{comb,\ offset}$ is a first comb offset bias value of the $p$ groups of ports in the first comb offset bias value set, $f(n_{SRS})$ is a random function, and $\lfloor \cdot \rfloor$ is a round-down operation.

In a possible implementation, $\Delta^{"} = \begin{cases} 1, & \text{if } K_{TC} = 2 \\ 2, & \text{others} \end{cases}$, or $\Delta^{"}$ is indicated by a network device.

In a possible implementation, a frequency domain starting position to which the $P$ groups of ports are mapped is

$n_{shift} N_{SC}^{RB} + (k_{TC}^{p} + k_{offset}^{I} + n_{SRS}^{comb,\ offset}) \bmod K_{TC}$ , where

$$n_{SRS}^{comb,\ offset} = S(f(n_{SRS}) \bmod L_{g,1}) = f(n_{SRS}) \bmod L_{g,1}, \text{ and } L_{g,1} = K_{TC};$$

or

$$n_{SRS}^{comb,\ offset} = \left( \left\lfloor \frac{f(n_{SRS}) \bmod L_{g,1}}{(L_{g,1} \times \Delta^{"})/K_{TC}} \right\rfloor \times \Delta^{"} + \left( \left( f(n_{SRS}) \bmod L_{g,1} \right) \bmod \left( \left( L_{g,1} \times \Delta \right)/K_{TC} \right) \right) \right) ,$$

where $L_{g,1}$ is a value configured by the network device or is a preset value; or

$$n_{SRS}^{comb,\ offset} = \left( \left\lfloor \frac{f(n_{SRS}) \bmod L_{g,1}}{S_g} \right\rfloor \times \Delta^{"} + \left( \left( f(n_{SRS}) \bmod G \right) \bmod S_g \right) \right) ,$$

where $S_g$ is a value configured by the network device or is a preset value, and $L_{g,1} = G \cdot S_g$; or

$$n_{SRS}^{comb,\ offset} = f(n_{SRS}) \bmod K_{TC};$$

or

$$n_{SRS}^{comb,\ offset} = \left( \left\lfloor \frac{f(n_{SRS}) \bmod L_{g,1}}{\left( L_{g,1} \times \Delta^{"} \right)/K_{TC}} \right\rfloor \times \Delta^{"} + \left( f(n_{SRS}) \bmod \left( \left( L_{g,1} \times \Delta^{"} \right)/K_{TC} \right) \right) \right) ,$$

where $L_{g,1}$ is a value configured by the network device or is a preset value; or

$$n_{SRS}^{comb,\ offset} = \left( \left\lfloor \frac{f(n_{SRS}) \bmod L_{g,1}}{S_g} \right\rfloor \times \Delta^{"} + \left( f(n_{SRS}) \bmod S_g \right) \right) ,$$

where $S_g$ is a value configured by the network device or is a preset value, and $L_{g,1} = G \cdot K_{TC} / \Delta^{"}$, where

$n_{shift} N_{SC}^{RB}$ is a frequency domain resource offset, $k_{offset}^{I}$ is a comb offset adjustment value, $k_{TC}^{p}$ is an initial comb offset value of the $p$ groups of ports, $n_{SRS}^{comb, \ offset}$ is a first comb offset bias value, $f(n_{SRS})$ is a random function, and $\lfloor \cdot \rfloor$ is a round-down operation.

According to a second aspect, a communication method is provided, and includes: receiving an SRS based on at least one comb offset in a first comb offset set $\varphi_p$ corresponding to a $p^{th}$ group of ports, where $N_{ap}^{SRS}$ ports corresponding to a first SRS resource are divided into $P$ groups, the $P$ groups of ports corresponding to the first SRS resource include the $p^{th}$ group of ports, $N_{ap}^{SRS}$ is a positive integer, $p$ is a positive integer ranging from 1 to $P$, and a value of $P$ is a positive integer greater than or equal to 1 and less than or equal to $N_{ap}^{SRS}$.

In a possible implementation, comb offset intervals between any two adjacent comb offsets in the first comb offset set $\varphi_p$ corresponding to the $p^{th}$ group of ports are equal.

In a possible implementation, the first comb offset set $\varphi_p$ corresponding to the $p^{th}$ group of ports includes at least one comb offset subset, comb offsets included in each of the at least one comb offset subset are consecutive, and comb offset intervals between any two adjacent comb offset subsets of the at least one comb offset subset are equal.

In a possible implementation, comb offsets included in the first comb offset set $\varphi_p$ corresponding to the $p^{th}$ group of ports are consecutive.

In a possible implementation, the first comb offset set $\varphi_p$ corresponding to the $p^{th}$ group of ports is obtained based on a reference comb offset $k_{TC,start}^{p}$ of the $p^{th}$ group of ports and a comb offset step of the $p^{th}$ group of ports, and $k_{TC,start}^{p}$ is a positive integer.

In a possible implementation, the reference comb offset $k_{TC,start}^{p}$ of the $p^{th}$ group of ports is specified in a protocol, or a network device may indicate the reference comb offset $k_{TC,start}^{p}$ of the $p^{th}$ group of ports.

In a possible implementation, the reference comb offset $k_{TC,start}^{p}$ of the $p^{th}$ group of ports is obtained based on at least one of a total comb quantity $K_{TC}$, $N_{ap}^{SRS}$, a comb offset $\overline{k}_{TC}$ of a reference port, a maximum cyclic shift value $n_{RS}^{cs,max}$, or a cyclic shift value of a reference port in the $p^{th}$ group of ports, $K_{TC}$ is a positive integer greater than or equal to 1, $n_{SRS}^{cs,max}$ is a positive integer greater than or equal to 1, and $\overline{k}_{TC}$ is a positive integer greater than or equal to 0 and less than $K_{TC}$.

In a possible implementation, the first comb offset set $\varphi_p$ corresponding to the $p^{th}$ group of ports is obtained based on at least one of the total comb quantity $K_{TC}$, the reference comb offset $k_{TC,start}^{p}$ of the $p^{th}$ group of ports, or $n_p$ comb offset steps of the $p^{th}$ group of ports, the first comb offset set $\varphi_p$ includes $n_p$ comb offsets, the $n_p$ comb offsets are in a one-to-one correspondence with the $n_p$ comb offset steps, and $n_p$ is a positive integer less than or equal to $K_{TC}$.

In a possible implementation, the method further includes: sending first indication information and second indication information, where the first indication information indicates the total comb quantity $K_{TC}$, and the second indication information indicates $n_p$.

In a possible implementation, the first comb offset set $\varphi_p$ corresponding to the $p^{th}$ group of ports is as follows:

$$\left\{ k_{TC,start}^{p}, \left( k_{TC,start}^{p} + 1 \right) \bmod K_{TC}, \left( k_{TC,start}^{p} + 2 \right) \bmod K_{TC}, \cdots, \left( k_{TC,start}^{p} + n_p - 1 \right) \bmod K_{TC} \right\} ;$$

or is as follows:

$$\left\{ k_{TC,start}^{p}, \left( k_{TC,start}^{p} - 1 \right) \bmod K_{TC}, \left( k_{TC,start}^{p} - 2 \right) \bmod K_{TC}, \cdots, \left( k_{TC,start}^{p} - n_p + 1 \right) \bmod K_{TC} \right\} ,$$

where

mod($\cdot$) is a modulo operation, and $0, 1, 2, \cdots, n_p$ -1 is the $n_p$ comb offset steps.

In a possible implementation, the method further includes: sending third indication information, where the third indication information indicates that the first comb offset set $\varphi_p$ corresponding to the $p^{th}$ group of ports is

$$\left\{ k_{TC,start}^{p}, \left( k_{TC,start}^{p} + 1 \right) \bmod K_{TC}, \left( k_{TC,start}^{p} + 2 \right) \bmod K_{TC}, \cdots, \left( k_{TC,start}^{p} + n_p - 1 \right) \bmod K_{TC} \right\}$$ , or the third indication information indicates that the first comb offset set $\varphi_p$ corresponding to the $p^{th}$ group of ports is

$$\left\{ k_{TC,start}^{p}, \left(k_{TC,start}^{p} -1\right)\bmod K_{TC}, \left(k_{TC,start}^{p} -2\right)\bmod K_{TC}, \cdots, \left(k_{TC,start}^{p} -n_{p} +1\right)\bmod K_{TC} \right\}.$$

In a possible implementation, receiving the SRS based on the at least one comb offset in the first comb offset set $\varphi_p$ corresponding to the $p^{th}$ group of ports includes:

generating a first value based on a total quantity $n_p$ of comb offsets included in the first comb offset set $\varphi_p$, where a value range of the first value is [0, $n_p$ - 1]; determining, from the first comb offset set $\varphi_p$, a first comb offset corresponding to the first value, where a comb offset of each port in the $p^{th}$ group of ports is the first comb offset, and one value in [0, $n_p$ -1] corresponds to one comb offset in the first comb offset set $\varphi_p$; and receiving the SRS based on the first comb offset.

In a possible implementation, an $n_{p}^{i}$ th comb offset in the first comb offset set $\varphi_p$ corresponding to the $p^{th}$ group of ports corresponds to an $n_{p}^{i}$ th comb offset step, the $n_{p}^{i}$ th comb offset step corresponds to a second value generated based on a quantity $n_p$ of comb offset steps, and a value range of the second value is [0, $n_p$ -1].

In a possible implementation, the $n_{p}^{i}$ th comb offset step $k_{COH,i}^{p}$ is $(-1)^{b}f(n_{SRS})$, where $f(n_{SRS})$ is the second value, and a value of $b$ is 0 or 1.

In a possible implementation, receiving the SRS based on the at least one comb offset in the first comb offset set $\varphi_p$ corresponding to the $p^{th}$ group of ports includes: determining a first comb offset of the $p^{th}$ group of ports based on at least one of the $n_{p}^{i}$ th comb offset step $k_{COH,i}^{p}$ in the first comb offset set $\varphi_p$, the reference comb offset $k_{TC,start}^{p}$ of the $p^{th}$ group of ports, or the total comb quantity $K_{TC}$; determining, based on the first comb offset and a frequency domain resource offset, a frequency domain starting position to which the $p^{th}$ group of ports is mapped; and receiving the SRS based on the frequency domain starting position to which the $p^{th}$ group of ports is mapped.

In a possible implementation, the reference comb offset $k_{TC,start}^{p}$ of the $p^{th}$ group of ports is $k_{TC}^{p}$ obtained based on at least one of the total comb quantity $K_{TC}$, $N_{ap}^{SRS}$, the comb offset $\overline{k}_{TC}$ of the reference port, the maximum cyclic shift value $n_{RS}^{cs,max}$, or the cyclic shift value of the reference port in the $p^{th}$ group of ports; determining the first comb offset of the $p^{th}$ group of ports based on at least one of the $n_{p}^{i}$ th comb offset step $k_{COH,i}^{p}$ in the first comb offset set $\varphi_p$, the reference comb offset $k_{TC,start}^{p}$ of the $p^{th}$ group of ports, or the total comb quantity $K_{TC}$ includes: determining that the first comb offset of the $p^{th}$ group of ports is $(k_{TC}^{P} + k_{offset}^{i} + k_{COH,i}^{p})\bmod K_{TC}$, where $k_{offset}^{i}$ is a comb offset adjustment value; and determining, based on the first comb offset and the frequency domain resource offset, the frequency domain starting position to which the $p^{th}$ group of ports is mapped includes: determining that the frequency domain starting position to which the $p^{th}$ group of ports is mapped is $n_{shift}N_{SC}^{RB} + (k_{TC}^{P} + k_{offset}^{'} + k_{COH,i}^{p})\bmod K_{TC}$, where $n_{shift}N_{SC}^{RB}$ is the frequency domain resource offset.

In a possible implementation, the reference comb offset $k_{TC,start}^{p}$ of the $p^{th}$ group of ports is specified in the protocol or is indicated by the network device, and determining the first comb offset of the $p^{th}$ group of ports based on at least one of the $n_{p}^{i}$ th comb offset step $k_{COH,i}^{p}$ in the first comb offset set $\varphi_p$, the reference comb offset $k_{TC,start}^{p}$ of the $p^{th}$ group of ports, or the total comb quantity $K_{TC}$ includes:

determining that the first comb offset of the $p^{th}$ group of ports is

$$\left\{ \left[ (k_{TC}^{p} + k_{offset}^{i} + k_{COH,i}^{p} - k_{TC,start}^{p})\bmod n_{p} \right] + k_{TC,start}^{p} \right\}\bmod K_{TC},$$ where $k_{offset}^{i}$ is a comb offset adjustment value, and $k_{TC}^{p}$ is obtained based on at least one of the total comb quantity $K_{TC}$, $N_{ap}^{SRS}$, the comb offset $\overline{k}_{TC}$ of the reference port, the maximum cyclic shift value $n_{RS}^{cs,max}$, or the cyclic shift value of the reference port in the $p^{th}$ group of ports; and

determining, based on the first comb offset and the frequency domain resource offset, the frequency domain starting position to which the $p^{th}$ group of ports is mapped includes: determining that the frequency domain starting position to which the $p^{th}$ group of ports is mapped is

$$n_{shift}N_{SC}^{RB} + \{[(k_{TC}^p + k_{offset}^i + k_{COH,i}^p - k_{TC,start}^P) \bmod n_p] + k_{TC,start}^P\} \bmod K_{TC}$$ , where $n_{shift}N_{SC}^{RB}$ is the frequency domain resource offset.

In a possible implementation, the $p$th group of ports includes $m_p$ ports, a comb offset of each of the $m_p$ ports in the first comb offset set $\varphi_p$ is related to an index of a cyclic shift group to which a cyclic shift value corresponding to the port belongs, the first SRS resource corresponds to $T$ groups of cyclic shift values, and the $T$ groups of cyclic shift values correspond to $T$ cyclic shift group indexes, where $T$ is a positive integer.

In a possible implementation, a comb offset $n_p^j$ of an $m_p^{j\,\text{th}}$ port of the $m_p$ ports in the first comb offset set $\varphi_p$ is obtained based on at least one of $k_{TC}^P$ or an index of a cyclic shift group to which a cyclic shift value corresponding to the $m_p^{j\,\text{th}}$ port belongs.

In a possible implementation, the $p$th group of ports includes $m_p$ ports, a comb offset of each of the $m_p$ ports in the first comb offset set $\varphi_p$ is related to a cyclic shift value corresponding to the port, and the first SRS resource corresponds to $T$ cyclic shift values.

In a possible implementation, a comb offset $n_p^j$ of an $m_p^{j\,\text{th}}$ port of the $m_p$ ports in the first comb offset set $\varphi_p$ is obtained based on $k_{TC}^p$ and/or a cyclic shift value corresponding to the $m_p^{j\,\text{th}}$ port, where $k_{TC}^p$ is obtained based on at least one of the total comb quantity $K_{TC}$ configured by the network device, $N_{ap}^{SRS}$, the comb offset $\overline{k}_{TC}$ of the reference port, the maximum cyclic shift value $n_{RS}^{cs,\max}$, or the cyclic shift value of the reference port in the $p$th group of ports.

In a possible implementation, a comb offset $n_p^j$ of an $m_p^{j\,\text{th}}$ port of the $m_p$ ports in the first comb offset set $\varphi_p$ is obtained based on $k_{TC}^p$, a cyclic shift value corresponding to the $m_p^{j\,\text{th}}$ port, and $T$.

In a possible implementation, an $m_p^{j\,\text{th}}$ port of the $m_p$ ports corresponds to an $n_p^{j\,\text{th}}$ comb offset step, the $n_p^{j\,\text{th}}$ comb offset step corresponds to a third value generated based on a quantity $n_p$ of comb offset steps, and a value range of the third value is $[0,n_p$ -1$]$.

In a possible implementation, the $n_p^j$ comb offset step $k_{COH,j}^p$ is $(-1)^b[f(n_{SRS}) + \lfloor n_{SRS}^{CS,j} \cdot T / n_{srs}^{CS,\max} \rfloor]$ , where $f(n_{SRS})$ is the third value, a value of $b$ is 0 or 1, $n_{srs}^{CS,\max}$ is the maximum cyclic shift value, $n_{SRS}^{CS,j}$ is a cyclic shift value corresponding to the $m_p^j$ th port, and $T$ is a quantity of cyclic shift groups.

In a possible implementation, the $n_p^{j\,\text{th}}$ comb offset step $k_{COH,j}^p$ is $(-1)^b[f(n_{SRS})+T_j]$, where $T_j$ is an index of a cyclic shift group to which a cyclic shift value corresponding to the $m_p^{j\,\text{th}}$ port belongs, and a value of $T_j$ is a positive integer ranging from 0 to $T$-1.

In a possible implementation, receiving the SRS based on the at least one comb offset in the first comb offset set $\varphi_p$ corresponding to the $p$th group of ports includes: determining a comb offset of the $m_p^{j\,\text{th}}$ port based on at least one of the $n_p^{j\,\text{th}}$ comb offset step $k_{COH,j}^p$ corresponding to the $m_p^{j\,\text{th}}$ port, a reference comb offset $k_{TC,start}^p$ of the $m_p^{j\,\text{th}}$ port, or the total comb quantity $K_{TC}$;

determining, based on the comb offset of the $m_p^{j\,\text{th}}$ port and a frequency domain resource offset, a frequency domain starting position to which the $m_p^{j\,\text{th}}$ port is mapped; and

receiving the SRS based on the frequency domain starting position to which the $m_p^{j\,\text{th}}$ port is mapped, where $m_p^j$

is a positive integer ranging from 1 to $m_p$.

In a possible implementation, the reference comb offset $k_{TC,start}^{p}$ of the $P^{th}$ group of ports is obtained based on at least one of the total comb quantity $K_{TC}$ configured by the network device, $N_{ap}^{SRS}$ , the comb offset $\overline{k}_{TC}$ of the reference port, the maximum cyclic shift value $n_{RS}^{cs,max}$ , or the cyclic shift value $k_{TC}^{p}$ of the reference port in the $p^{th}$ group of ports, and determining the comb offset of the $m_p^{j}$ th port based on at least one of the $n_p^{j}$ th comb offset step $k_{COH,j}^{p}$ corresponding to the $m_p^{j}$ th port, the reference comb offset $k_{TC,start}^{p}$ of the $m_p^{j}$ th port, or the total comb quantity $K_{TC}$ includes: determining that the comb offset of the $m_p^{j}$ th port is $(k_{TC}^{p} + k_{offset}^{i} + k_{COH,j}^{p}) \bmod K_{TC}$ , where $k_{offset}^{i'}$ is a comb offset adjustment value; and

determining, based on the comb offset of the $m_p^{j}$ th port and the frequency domain resource offset, the frequency domain starting position to which the $m_p^{j}$ th port is mapped includes: determining that the frequency domain starting position to which the $m_p^{j}$ th port is mapped is $n_{shift}N_{SC}^{RB} + (k_{TC}^{P} + k_{offset}^{i'} + k_{COH,j}^{p}) \bmod K_{TC}$ , where $n_{shift}N_{SC}^{RB}$ is the frequency domain resource offset.

In a possible implementation, the reference comb offset $k_{TC,start}^{p}$ of the $p^{th}$ group of ports is specified in the protocol or is indicated by the network device, and determining the comb offset of the $m_p^{j}$ th port based on at least one of the $n_p^{j}$ th comb offset step $k_{COH,j}^{p}$ corresponding to the $m_p^{j}$ th port, the reference comb offset $k_{TC,start}^{p}$ of the $m_p^{j}$ th port, or the total comb quantity $K_{TC}$ includes:

determining that the comb offset of the $m_p^{j}$ th port is

$\{[(k_{TC}^{p} + k_{offset}^{i'} + k_{COH,j}^{p} - k_{TC,start}^{p}) \bmod n_p] + k_{TC,start}^{p}\} \bmod K_{TC}$ , where $k_{offset}^{i'}$ is a comb offset adjustment value, and $k_{TC}^{p}$ is obtained based on at least one of the total comb quantity $K_{TC}$ configured by the network device, $N_{ap}^{SRS}$ , the comb offset $\overline{k}_{TC}$ of the reference port, the maximum cyclic shift value $n_{RS}^{cs,max}$ , or the cyclic shift value of the reference port in the $p^{th}$ group of ports; and

determining, based on the comb offset of the $m_p^{j}$ th port and the frequency domain resource offset, the frequency domain starting position to which the $m_p^{j}$ th port is mapped includes:

determining that the frequency domain starting position to which the $m_p^{j}$ th port is mapped is

$n_{shift}N_{SC}^{RB} + \{[(k_{TC}^{p} + k_{offset}^{i'} + k_{COH,j}^{p} - k_{TC,start}^{p}) \bmod n_p] + k_{TC,start}^{p}\} \bmod K_{TC}$ , where $n_{shift}N_{SC}^{RB}$ is the frequency domain resource offset.

In a possible implementation, a value of $b$ is specified in the protocol or is indicated by the network device.

In a possible implementation, $f(\mathrm{n}_{SRS}) = \left\lceil \sum_{m=0}^{B-1} c(m) \cdot 2^m \right\rceil \bmod n_p$ , where $c(m)$ is an $m^{th}$ element of a random sequence, $B$ is a positive integer greater than or equal to $\left\lceil \log_2 n_p \right\rceil$ , and $\left\lceil \cdot \right\rceil$ is a round-up operation.

In a possible implementation, the first comb offset set $\varphi_p$ is obtained based on a second comb offset set that is not able to be used for sending an SRS on the first SRS resource.

In a possible implementation, the P groups of ports are obtained based on the $N_{ap}^{SRS}$ ports corresponding to the first SRS resource and a quantity P of port groups.

In a possible implementation, an interval between port indexes of adjacent ports included in each of the P groups of ports is $N_{ap}^{SRS} / P$.

In a possible implementation, the first comb offset set $\varphi_p$ corresponds to an initial comb offset value of the P th group of ports and a first comb offset bias value set.

In a possible implementation, the first comb offset bias value set includes $L_{g,l}$ consecutive cyclic shift biases, where

$L_{g,l}$ is greater than or equal to 1 and less than or equal to a total comb quantity $K_{TC}$.

In a possible implementation, indication information that indicates $L_{g,l}$ is sent.

In a possible implementation, the first comb offset bias value set is {0,1mod $K_{TC}, \cdots, (L_{g,l}$-1) mod $K_{TC}$}, or the first comb offset bias value set is {0,-1mod $K_{TC}, \cdots, (-L_{g,l}$+1)mod $K_{TC}$}, where

mod($\cdot$) is a modulo operation.

In a possible implementation, a frequency domain starting position to which the P th group of ports is mapped is

$$n_{shift}N_{SC}^{RB} + (k_{TC}^{p} + k_{offset}^{'} + n_{SRS}^{comb,\ offset}) \mod K_{TC}$$ , where

$n_{shift}N_{SC}^{RB}$ is a frequency domain resource offset, $k_{offset}^{i'}$ is a comb offset adjustment value, $k_{TC}^{p}$ is the initial comb offset value of the P th group of ports, $f(n_{SRS})$ is a random function, $n_{SRS}^{comb,\ offset} = f(n_{SRS}) \mod L_{g,1}$, $L_{g,l} = K_{TC}$ or $L_{g,l}$ is a value configured by the network device or is a preset value, and $n_{SRS}^{comb,\ offset}$ is a first comb offset bias value of the $p^{th}$ group of ports in the first comb offset bias value set.

In a possible implementation, the first comb offset bias value set includes at least one comb offset bias value subset, and comb offset bias values included in each of the at least one comb offset bias value subset are consecutive.

In a possible implementation, comb offset bias value intervals between any two adjacent comb offset bias value subsets of the at least one comb offset bias value subset are equal.

In a possible implementation, all of the at least one comb offset bias value subset include equal quantities of comb offset bias values.

In a possible implementation, a quantity of the at least one comb offset bias value subset is G, and a $g^{th}$ comb offset bias value subset of the G comb offset bias value subsets is {$\Delta_g$ mod $K_{TC}, (\Delta_g + 1)$ mod $K_{TC} \cdots, (\Delta_g + L_g$-1)mod $K_{TC}$}, or is as follows:

$$\left\{ -\Delta_g \mod K_{TC}, (-\Delta_g - 1) \mod K_{TC} \cdots, (-\Delta_g - L_g + 1) \mod K_{TC} \right\},$$

where

$\Delta_0 = 0$, $\Delta_g = \Delta^{"} \cdot g$, g = 0,1,..., G-1, $\Delta^{"}$ is the comb offset bias value interval between any two adjacent comb offset bias value subsets, $K_{TC}$ is a total comb quantity, $L_g$ is a quantity of comb offset bias values included in the $g^{th}$ comb offset bias value subset, $\sum_{g=1}^{G} L_g = L_{g,l}$, and $L_{g,l}$ is a total quantity of comb offset bias values included in the first comb offset bias value set.

In a possible implementation, $K_{TC} = \Delta^{"} \cdot G$.

In a possible implementation, G is a quantity of ports of the $N_{ap}^{SRS}$ ports on a same cyclic shift, or G is a quantity of different comb offsets occupied by the $N_{ap}^{SRS}$ ports.

In a possible implementation, a frequency domain starting position to which the $p^{th}$ group of ports is mapped is

$$n_{shift}N_{SC}^{RB} + (k_{TC}^{p} + k_{offset}^{'} + n_{SRS}^{comb,\ offset}) \mod K_{TC}$$ , where

$$n_{SRS}^{comb,\ offset} = S(f(n_{SRS}) \mod L_{g,1}) = f(n_{SRS}) \mod L_{g,1}, \text{ and } L_{g,1} = K_{TC};$$

or

$$n_{SRS}^{comb,\ offset} = \left( \left\lfloor \frac{f(n_{SRS}) \bmod L_{g,1}}{L_{g,1}/G} \right\rfloor \times \frac{K_{TC}}{G} + \left( \left( f(n_{SRS}) \bmod L_{g,1} \right) \bmod (L_{g,1}/G) \right) \right),$$

where

$L_{g,1}$ is a value configured by a network device or is a preset value; or

$$n_{SRS}^{comb,\ offset} = \left( \left\lfloor \frac{f(n_{SRS}) \bmod L_{g,1}}{S_g} \right\rfloor \times \frac{K_{TC}}{G} + \left( \left( f(n_{SRS}) \bmod G \right) \bmod S_g \right) \right),$$

where $S_g$ is a value configured by a network device or is a preset value, and $L_{g,1} = G \cdot S_g$; or

$$n_{SRS}^{comb,\ offset} = f(n_{SRS}) \bmod K_{TC};$$

or

$$n_{SRS}^{comb,\ offset} = \left( \left\lfloor \frac{f(n_{SRS}) \bmod L_{g,1}}{L_{g,1}/G} \right\rfloor \times \frac{K_{TC}}{G} + \left( f(n_{SRS}) \bmod (L_{g,1}/G) \right) \right),$$

where $L_{g,l}$ is a value configured by a network device or is a preset value; or

$$n_{SRS}^{comb,\ offset} = \left( \left\lfloor \frac{f(n_{SRS}) \bmod L_{g,1}}{S_g} \right\rfloor \times \frac{K_{TC}}{G} + \left( f(n_{SRS}) \bmod S_g \right) \right),$$

where

$n_{shift} N_{SC}^{RB}$ is a frequency domain resource offset, $k_{offset}^{'}$ is a comb offset adjustment value, $k_{TC}^{p}$ is an initial comb offset value of the P groups of ports, $n_{SRS}^{comb,\ offset}$ is a first comb offset bias value of the P groups of ports in the first comb offset bias value set, $f(n_{SRS})$ is a random function, and $\lfloor \cdot \rfloor$ is a round-down operation.

In a possible implementation, $\Delta^{"} = \begin{cases} 1, & \text{if } K_{TC} = 2 \\ 2, & \text{others} \end{cases}$, or $\Delta^{"}$ is indicated by a network device.

In a possible implementation, a frequency domain starting position to which the $p$ groups of ports are mapped is $n_{shift} N_{SC}^{RB} + (k_{TC}^{p} + k_{offset}^{'} + n_{SRS}^{comb,\ offset}) \bmod K_{TC}$, where

$$n_{SRS}^{comb,\ offset} = S(f(n_{SRS}) \bmod L_{g,1}) = f(n_{SRS}) \bmod L_{g,1}, \text{ and } L_{g,1} = K_{TC};$$

or

$$n_{SRS}^{comb,\ offset} = \left( \left\lfloor \frac{f(n_{SRS}) \bmod L_{g,1}}{(L_{g,1} \times \Delta^{"})/K_{TC}} \right\rfloor \times \Delta^{"} + \left( \left( f(n_{SRS}) \bmod L_{g,1} \right) \bmod \left( (L_{g,1} \times \Delta)/K_{TC} \right) \right) \right),$$

where $L_{g,l}$ is a value configured by the network device or is a preset value; or

$$n_{SRS}^{comb,\ offset} = \left( \left\lfloor \frac{f(n_{SRS}) \bmod L_{g,1}}{S_g} \right\rfloor \times \Delta' + \left( \left( f(n_{SRS}) \bmod G \right) \bmod S_g \right) \right),$$

where $S_g$ is a value configured by the network device or is a preset value, and $L_{g,l} = G \cdot S_g$; or

$$n_{SRS}^{comb,\ offset} = f(n_{SRS}) \bmod K_{TC};$$

or

$$n_{SRS}^{comb,\ offset} = \left( \left\lfloor \frac{f(n_{SRS}) \bmod L_{g,1}}{\left( L_{g,1} \times \Delta'' \right) / K_{TC}} \right\rfloor \times \Delta'' + \left( f(n_{SRS}) \bmod \left( \left( L_{g,1} \times \Delta'' \right) / K_{TC} \right) \right) \right),$$

where $L_{g,l}$ is a value configured by the network device or is a preset value; or

$$n_{SRS}^{comb,\ offset} = \left( \left\lfloor \frac{f(n_{SRS}) \bmod L_{g,1}}{S_g} \right\rfloor \times \Delta'' + \left( f(n_{SRS}) \bmod S_g \right) \right),$$

where $S_g$ is a value configured by the network device or is a preset value, and $L_{g,l} = G \cdot K_{TC}/\Delta''$, where $n_{shift} N_{SC}^{RB}$ is a frequency domain resource offset, $k_{offset}^{i}$ is a comb offset adjustment value, $k_{TC}^{p}$ is an initial comb offset value of the P groups of ports, $n_{SRS}^{comb,\ offset}$ is a first comb offset bias value, $f(n_{SRS})$ is a random function, and $\lfloor \cdot \rfloor$ is a round-down operation.

According to a third aspect, a communication method is provided, and includes: determining, from Q cyclic shift value sets, a cyclic shift value of each of $N_{ap}^{SRS}$ ports corresponding to a first SRS resource, where $N_{ap}^{SRS}$ is a positive integer, and Q is a positive integer greater than 1 and less than or equal to $N_{ap}^{RS}$ ; and sending an SRS based on the cyclic shift value of each of the $N_{ap}^{SRS}$ ports.

In the foregoing solution, there are Q cyclic shift value sets, and a cyclic shift in $n_{SRS}^{cs,max}$ other than the Q cyclic shift value sets may be a CS that does not support CS hopping. Therefore, the cyclic shift value of each of the $N_{ap}^{SRS}$ ports corresponding to the first SRS resource is determined from the Q cyclic shift value sets, so that overlapping with a CS that does not support CS hopping can be avoided, to reduce interference. The $N_{ap}^{SRS}$ ports may correspond to Q cyclic shift value sets, and each CS set of the Q cyclic shift value sets does not include CSs of ports of UE that does not support CS hopping. In this way, when CSs for hopping are selected from the Q cyclic shift value sets for ports used by a terminal device to send an SRS, the CSs that do not support CS hopping are not selected, to reduce interference.

In a possible implementation, cyclic shift values included in any two of the Q cyclic shift value sets are inconsecutive, and cyclic shift values included in each of the Q cyclic shift value sets are consecutive.

In a possible implementation, the method further includes: receiving fourth indication information from a network device, where the fourth indication information indicates that a quantity of cyclic shift values included in each of the Q cyclic shift value sets is $L_l$, $L_l$ is a positive integer greater than or equal to 1 and less than or equal to a maximum cyclic shift value $n_{RS}^{cs,max}$ , and $n_{SRS}^{cs,max}$ is a positive integer greater than 1.

In a possible implementation, a $q^{th}$ cyclic shift value set of the Q cyclic shift value sets is obtained based on at least one of a starting cyclic shift value $n_{CS}^{start}$ , a cyclic shift value interval $\Delta$ between any two adjacent cyclic shift value sets, a

quantity $L_1$ of cyclic shift values included in the $q^{th}$ cyclic shift value set, or the maximum cyclic shift value $n_{RS}^{cs,max}$, where the cyclic shift value interval between any two adjacent cyclic shift value sets is $\Delta$, $\Delta$ is greater than or equal to 1 and less than $n_{RS}^{cs,max}$, and $q$ is a positive integer ranging from 1 to $Q$.

In a possible implementation, the $q^{th}$ cyclic shift value set is as follows:

$$\left\{ \left( n_{CS}^{start} + (q-1)\Delta \right) \bmod n_{SRS}^{CS,max}, \left( n_{CS}^{start} + (q-1)\Delta + 1 \right) \bmod n_{SRS}^{CS,max}, \cdots, \left( n_{CS}^{start} + (q-1)\Delta + L_1 - 1 \right) \bmod n_{SRS}^{CS,max} \right\} ,$$

where mod(-) is a modulo operation.

In a possible implementation, the cyclic shift value interval $\Delta$ between any two adjacent cyclic shift value sets is related to the maximum cyclic shift value $n_{SRS}^{cs,max}$ and the quantity $Q$ of cyclic shift value sets.

In a possible implementation, $\Delta = \dfrac{n_{SRS}^{CS,max}}{Q}$ .

In a possible implementation, a cyclic shift value of an $i^{th}$ port of the $N_{ap}^{SRS}$ ports is $\alpha_i$, where

$$\alpha_i = 2\pi \dfrac{\left[ n_{SRS}^{CS,i} + \left\lfloor \dfrac{n_{SRS}^{CSH}}{L_1} \right\rfloor \cdot \dfrac{n_{SRS}^{cs,max}}{Q} + \left( n_{SRS}^{CSH} \bmod L_1 \right) \right] \bmod n_{SRS}^{cs,max}}{n_{SRS}^{cs,max}} ,$$

where

$$n_{SRS}^{CSH} = (-1)^b f(n_{SRS}), \text{ a value of } b \text{ is 0 or 1}, \quad f(n_{SRS}) = \left[ \sum_{m=0}^{B-1} c(m) \cdot 2^m \right] \bmod L_1, \quad c(m)$$

is an $m^{th}$ element of a random sequence, $B$ is a positive integer greater than or equal to $\lceil \log_2 n_p \rceil$, $\lceil \cdot \rceil$ is a round-up operation, $\alpha_i$ is a positive integer, $n_{SRS}^{CS,i}$ is an initial cyclic shift value of the $i^{th}$ port, and $n_{SRS}^{cs,max}$ is the maximum cyclic shift value.

In a possible implementation, the $Q$ cyclic shift value sets correspond to $Q$ cyclic shift bias value subsets.

In a possible implementation, a first cyclic shift bias value set including the $Q$ cyclic shift bias value subsets includes $Y_1$ consecutive cyclic shift biases, where

$Y$ is greater than or equal to 1 and less than or equal to the maximum cyclic shift value $n_{RS}^{cs,max}$ .

In a possible implementation, indication information that indicates $Y_1$ is received from a network device.

In a possible implementation, the first cyclic shift bias value set is $\left\{ 0, 1 \bmod n_{SRS}^{CS,max}, \cdots, (Y_1 - 1) \bmod n_{SRS}^{CS,max} \right\}$ ; or

the first cyclic shift bias value set is $\left\{ 0, -1 \bmod n_{SRS}^{CS,max}, \cdots, (-Y_1 + 1) \bmod n_{SRS}^{CS,max} \right\}$ , where mod(-) is a modulo operation.

In a possible implementation, a cyclic shift value of an $i^{th}$ port of the $N_{ap}^{SRS}$ ports is $\alpha_i$, where

$$\alpha_i = 2\pi \dfrac{n_{SRS}^{cs,i}}{n_{SRS}^{cs,max}} + 2\pi \dfrac{n_{SRS}^{cs,offset}}{K n_{SRS}^{cs,max}} ,$$

$$n_{SRS}^{cs,offset} = f(n_{SRS}) \bmod Y_1;$$

Y is $n_{SRS}^{cs,max}$ and $K$ is 1, or $Y_1 = K \cdot n_{SRS}^{cs,max}$ and $K$ is a value configured by the network device or is a preset value, or $Y_l$ is a value configured by the network device and $K$ is 1; $f(n_{SRS})$ is a random function; $K$ is 1 or a preset value; $n_{SRS}^{CS,i}$ is an initial cyclic shift value of the $i^{th}$ port; $n_{SRS}^{cs,max}$ is the maximum cyclic shift value; and $n_{SRS}^{cs,offset}$ is a first cyclic shift bias value.

In a possible implementation, cyclic shift biases included in each of the $Q$ cyclic shift bias value subsets are consecutive.

In a possible implementation, cyclic shift bias intervals between any two adjacent cyclic shift bias value subsets of the $Q$ cyclic shift bias value subsets are equal.

In a possible implementation, all of the $Q$ cyclic shift bias value subsets include equal quantities of cyclic shift bias values.

In a possible implementation, a quantity of the $Q$ cyclic shift bias value subsets is $Q$, and a $q^{th}$ cyclic shift bias value subset of the $Q$ cyclic shift bias value subsets is

$$\left\{\Delta_q \bmod n_{SRS}^{CS,max}, (\Delta_q + 1) \bmod n_{SRS}^{CS,max} \cdots, (\Delta_q + S_q - 1) \bmod n_{SRS}^{CS,max}\right\}, \text{ or is as follows:}$$

$$\left\{-\Delta_q \bmod n_{SRS}^{CS,max}, (-\Delta_q - 1) \bmod n_{SRS}^{CS,max} \cdots, (-\Delta_q - S_q + 1) \bmod n_{SRS}^{CS,max}\right\},$$

where

$$\triangle_0 = 0, \quad \Delta_q = \Delta' \cdot q,$$

$q = 0,1,\cdots, Q-1$, $\Delta'$ is a cyclic shift bias interval between any two adjacent cyclic shift bias value subsets, $n_{SRS}^{cs,max}$ is a maximum cyclic shift value, $S_q$ is a quantity of cyclic shift bias values included in the $q^{th}$ cyclic shift bias value subset,

$$\sum_{q=1}^{Q} S_q = Y_1$$, and $Y_l$ is a total quantity of cyclic shift bias values included in the first cyclic shift bias value set.

In a possible implementation, $n_{SRS}^{cs,max} = \Delta' \cdot Q$.

In a possible implementation, $Q$ is a quantity of ports of the $N_{ap}^{SRS}$ ports on a same comb offset, or $Q$ is a quantity of different cyclic shifts occupied by the $N_{ap}^{SRS}$ ports, or $Q$ is a total quantity $N_{ap}^{SRS}$ of ports corresponding to the first SRS resource, or $Q = \begin{cases} 4, & \text{if } n_{SRS}^{cs,max} = 8 \text{ or } 12 \\ 2, & \text{others} \end{cases}$.

In a possible implementation, a cyclic shift value of an $i^{th}$ port of the $N_{ap}^{SRS}$ ports is $\alpha_i$, where

$$\alpha_i = 2\pi \frac{n_{SRS}^{cs,i}}{n_{SRS}^{cs,max}} + 2\pi \frac{n_{SRS}^{cs,offset}}{K n_{SRS}^{cs,max}},$$

where

$$n_{SRS}^{cs,offset} = S(f(n_{SRS}) \bmod Y_1) = f(n_{SRS}) \bmod Y_1,$$

$$Y_1 = n_{SRS}^{cs,\max}$$ , and $K$ is 1; or $$Y_1 = K \cdot n_{SRS}^{cs,\max}$$ , and $K$ is a value configured by a network device or is a preset value; or

$$n_{SRS}^{cs,offset} = \left( \left\lfloor \frac{f(n_{SRS}) \bmod Y_1}{Y_1 / Q} \right\rfloor \times \frac{n_{SRS}^{cs,\max}}{Q} + \left( (f(n_{SRS}) \bmod Y_1) \bmod (Y_1 / Q) \right) \right)$$

, $Y_1$ is configured by a network device or is a preset value, and $K$ is 1; or

$$n_{SRS}^{cs,offset} = \left( \left\lfloor \frac{f(n_{SRS}) \bmod Y_1}{S_q} \right\rfloor \times \frac{n_{SRS}^{cs,\max}}{Q} + \left( (f(n_{SRS}) \bmod Y_1) \bmod S_q \right) \right) ,$$

$S_q$ is a value configured by a network device or is a preset value, $Y_1 = Q \cdot S_q$, and $K$ is 1; or

$$n_{SRS}^{cs,offset} = f(n_{SRS}) \bmod n_{SRS}^{cs,\max} ,$$

and $K$ is 1; or

$$n_{SRS}^{cs,offset} = f(n_{SRS}) \bmod \left( K \cdot n_{SRS}^{cs,\max} \right),$$

and $K$ is a value configured by a network device or is a preset value; or

$$n_{SRS}^{cs,offset} = \left( \left\lfloor \frac{f(n_{SRS}) \bmod Y_1}{Y_1 / Q} \right\rfloor \times \frac{n_{SRS}^{cs,\max}}{Q} + \left( f(n_{SRS}) \right) \bmod (Y_1 / Q) \right) ,$$

$Y_1$ is a value configured by a network device or is a preset value, and $K$ is 1; or

$$n_{SRS}^{cs,offset} = \left( \left\lfloor \frac{f(n_{SRS}) \bmod Y_1}{S_q} \right\rfloor \times \frac{n_{SRS}^{cs,\max}}{Q} + \left( f(n_{SRS}) \right) \bmod S_q \right),$$

$S_q$ is a value configured by a network device or is a preset value, $Y_1 = Q \cdot S_q$, and $K$ is 1, where $n_{SRS}^{CS,i}$ is an initial cyclic shift value of the $i^{th}$ port, $f(n_{SRS})$ is a random function, mod(-) is a modulo operation, $n_{SRS}^{cs,offset}$ is a first cyclic shift bias value, and $\lfloor \cdot \rfloor$ is a round-down operation.

In a possible implementation, $\Delta' = \begin{cases} 2, & \text{if } n_{SRS}^{cs,\max} = 8 \\ 3, & \text{others} \end{cases}$ , and $Q = \begin{cases} 4, & \text{if } n_{SRS}^{cs,\max} = 8 \text{ or } 12 \\ 2, & \text{others} \end{cases}$ .

In a possible implementation, a cyclic shift value of an $i^{th}$ port of the $N_{ap}^{SRS}$ ports is $\alpha_i$, where

$$\alpha_i = 2\pi \frac{n_{SRS}^{cs,i}}{n_{SRS}^{cs,\max}} + 2\pi \frac{n_{SRS}^{cs,offset}}{K n_{SRS}^{cs,\max}} ,$$

where

$$n_{SRS}^{cs,offset} = S(f(n_{SRS}) \bmod Y_1) = f(n_{SRS}) \bmod Y_1 ,$$

$$Y_1 = n_{SRS}^{cs,\max} \text{, and } K \text{ is 1; or} \quad Y_1 = K \cdot n_{SRS}^{cs,\max} \text{, and } K \text{ is a value configured by a network device or is a preset value; or}$$

$$n_{SRS}^{cs,offset} = \left( \left\lfloor \frac{f(n_{SRS}) \bmod Y_1}{(L_1 \times \Delta') / n_{SRS}^{cs,\max}} \right\rfloor \times \Delta' + \left( (f(n_{SRS}) \bmod Y_1) \bmod ((L_1 \times \Delta') / n_{SRS}^{cs,\max}) \right) \right),$$

$Y_1$ is a value configured by a network device or is a preset value, $K$ is 1, and $\lfloor \cdot \rfloor$ is a round-down operation; or

$$n_{SRS}^{cs,offset} = \left( \left\lfloor \frac{f(n_{SRS}) \bmod Y_1}{S_q} \right\rfloor \times \Delta' + \left( (f(n_{SRS}) \bmod Y_1) \bmod S_q \right) \right),$$

$S_q$ is a value configured by a network device or is a preset value, $Y_1 = Q \cdot S_q$, and $K$ is 1; or

$$n_{SRS}^{cs,offset} = f(n_{SRS}) \bmod n_{SRS}^{cs,\max},$$

and $K$ is 1; or

$$n_{SRS}^{cs,offset} = f(n_{SRS}) \bmod \left( K \cdot n_{SRS}^{cs,\max} \right),$$

and $K$ is a value configured by a network device or is a preset value; or

$$n_{SRS}^{cs,offset} = \left( \left\lfloor \frac{f(n_{SRS}) \bmod Y_1}{(L_1 \times \Delta') / n_{SRS}^{cs,\max}} \right\rfloor \times \Delta' + \left( f(n_{SRS}) \bmod ((Y_1 \times \Delta') / n_{SRS}^{cs,\max}) \right) \right),$$

$Y_1$ is a value configured by a network device or is a preset value, $K$ is 1, and $\lfloor \cdot \rfloor$ is a round-down operation; or

$$n_{SRS}^{cs,offset} = \left( \left\lfloor \frac{f(n_{SRS}) \bmod Y_1}{S_q} \right\rfloor \times \Delta' + \left( f(n_{SRS}) \bmod S_q \right) \right),$$

$S_q$ is a value configured by a network device or is a preset value, $Y_1 = Q \cdot S_q$, and $K$ is 1, where

$n_{SRS}^{CS,i}$ is an initial cyclic shift value of the $i^{th}$ port, $f(n_{SRS})$ is a random function, $\bmod(\cdot)$ is a modulo operation, and $n_{SRS}^{cs,offset}$ is a first cyclic shift bias value.

According to a fourth aspect, a communication method is provided, and includes: determining, from $Q$ cyclic shift value sets, a cyclic shift value of each of $N_{ap}^{SRS}$ ports corresponding to a first SRS resource, where $N_{ap}^{SRS}$ is a positive integer, and $Q$ is a positive integer greater than 1 and less than or equal to $N_{ap}^{RS}$; and receiving an SRS based on the cyclic shift value of each of the $N_{ap}^{SRS}$ ports.

In a possible implementation, cyclic shift values included in any two of the $Q$ cyclic shift value sets are inconsecutive, and cyclic shift values included in each of the $Q$ cyclic shift value sets are consecutive.

In a possible implementation, the method further includes: sending fourth indication information, where the fourth indication information indicates that a quantity of cyclic shift values included in each of the $Q$ cyclic shift value sets is $L_1$, $L_1$ is a positive integer greater than or equal to 1 and less than or equal to a maximum cyclic shift value $n_{RS}^{cs,\max}$, and $n_{SRS}^{cs,\max}$ is a positive integer greater than 1.

In a possible implementation, a q<sup>th</sup> cyclic shift value set of the Q cyclic shift value sets is obtained based on at least one of a starting cyclic shift value $n_{CS}^{start}$, a cyclic shift value interval $\Delta$ between any two adjacent cyclic shift value sets, a quantity $L_1$ of cyclic shift values included in the q<sup>th</sup> cyclic shift value set, or the maximum cyclic shift value $n_{RS}^{cs,max}$, where the cyclic shift value interval between any two adjacent cyclic shift value sets is $\Delta$, $\Delta$ is greater than or equal to 1 and less than $n_{RS}^{cs,max}$, and q is a positive integer ranging from 1 to Q.

In a possible implementation, the q<sup>th</sup> cyclic shift value set is as follows:

$$\left\{ \left( n_{CS}^{start} + (q-1)\Delta \right) \bmod n_{SRS}^{CS,max}, \left( n_{CS}^{start} + (q-1)\Delta + 1 \right) \bmod n_{SRS}^{CS,max}, \cdots, \left( n_{CS}^{start} + (q-1)\Delta + L_1 - 1 \right) \bmod n_{SRS}^{CS,max} \right\},$$

where mod($\cdot$) is a modulo operation.

In a possible implementation, the cyclic shift value interval $\Delta$ between any two adjacent cyclic shift value sets is related to the maximum cyclic shift value $n_{SRS}^{cs,max}$ and the quantity Q of cyclic shift value sets.

In a possible implementation, $\Delta = \dfrac{n_{SRS}^{CS,max}}{Q}$.

In a possible implementation, a cyclic shift value of an i<sup>th</sup> port of the $N_{ap}^{SRS}$ ports is $\alpha_i$, where

$$\alpha_i = 2\pi \frac{\left[ n_{SRS}^{CS,i} + \left\lfloor \dfrac{n_{SRS}^{CSH}}{L_1} \right\rfloor \cdot \dfrac{n_{SRS}^{cs,max}}{Q} + \left( n_{SRS}^{CSH} \bmod L_1 \right) \right] \bmod n_{SRS}^{cs,max}}{n_{SRS}^{cs,max}},$$

where

$$n_{SRS}^{CSH} = (-1)^b f(n_{SRS}),$$

a value of b is 0 or 1, $f(\mathrm{n}_{SRS}) = \left[ \sum_{m=0}^{B-1} c(m) \cdot 2^m \right] \bmod L_1$, c(m) is an m<sup>th</sup> element of a random sequence, B is a positive integer greater than or equal to $\lceil \log_2 n_p \rceil$, $\lceil \cdot \rceil$ is a round-up operation, $\alpha_i$ is a positive integer, $n_{SRS}^{CS,i}$ is an initial cyclic shift value of the i<sup>th</sup> port, and $n_{SRS}^{cs,max}$ is the maximum cyclic shift value.

In a possible implementation, the Q cyclic shift value sets correspond to Q cyclic shift bias value subsets.

In a possible implementation, a first cyclic shift bias value set including the Q cyclic shift bias value subsets includes $Y_1$ consecutive cyclic shift biases, where

$Y_1$ is greater than or equal to 1 and less than or equal to the maximum cyclic shift value $n_{RS}^{cs,max}$.

In a possible implementation, indication information that indicates $Y_1$ is received from a network device.

In a possible implementation, the first cyclic shift bias value set is

$$\left\{ 0, 1 \bmod n_{SRS}^{CS,max}, \cdots, \left( Y_1 - 1 \right) \bmod n_{SRS}^{CS,max} \right\}; \text{ or}$$

the first cyclic shift bias value set is $\left\{ 0, -1 \bmod n_{SRS}^{CS,max}, \cdots, \left( -Y_1 + 1 \right) \bmod n_{SRS}^{CS,max} \right\}$, where mod($\cdot$) is a modulo operation.

In a possible implementation, a cyclic shift value of an i<sup>th</sup> port of the $N_{ap}^{SRS}$ ports is $\alpha_i$, where

$$\alpha_i = 2\pi \frac{n_{SRS}^{cs,i}}{n_{SRS}^{cs,\max}} + 2\pi \frac{n_{SRS}^{cs,offset}}{Kn_{SRS}^{cs,\max}},$$

where

$$n_{SRS}^{cs,offset} = f(n_{SRS}) \bmod Y_1;$$

$Y_1$ is $n_{SRS}^{cs,\max}$ and $K$ is 1, or $Y_1 = K \cdot n_{SRS}^{cs,\max}$ and $K$ is a value configured by the network device or is a preset value, or $Y_1$ is a value configured by the network device and $K$ is 1; $f(n_{SRS})$ is a random function; $K$ is l or a preset value; $n_{SRS}^{CS,i}$ is an initial cyclic shift value of the $i$th port; $n_{SRS}^{cs,\max}$ is the maximum cyclic shift value; and $n_{SRS}^{cs,offset}$ is a first cyclic shift bias value.

In a possible implementation, cyclic shift biases included in each of the Q cyclic shift bias value subsets are consecutive.

In a possible implementation, cyclic shift bias intervals between any two adjacent cyclic shift bias value subsets of the Q cyclic shift bias value subsets are equal.

In a possible implementation, all of the Q cyclic shift bias value subsets include equal quantities of cyclic shift bias values.

In a possible implementation, a quantity of the Q cyclic shift bias value subsets is $Q$, and a $q$th cyclic shift bias value subset of the Q cyclic shift bias value subsets is

$$\left\{ \Delta_q \bmod n_{SRS}^{CS,\max}, (\Delta_q + 1) \bmod n_{SRS}^{CS,\max} \cdots, (\Delta_q + S_q - 1) \bmod n_{SRS}^{CS,\max} \right\}, \text{ or is as follows:}$$

$$\left\{ -\Delta_q \bmod n_{SRS}^{CS,\max}, (-\Delta_q - 1) \bmod n_{SRS}^{CS,\max} \cdots, (-\Delta_q - S_q + 1) \bmod n_{SRS}^{CS,\max} \right\},$$

where

$\Delta_0 = 0$, $\Delta_q = \Delta' \cdot q$, $q = 0,1,\cdots, Q\text{-}1$, $\Delta'$ is a cyclic shift bias interval between any two adjacent cyclic shift bias value subsets, $n_{SRS}^{cs,\max}$ is a maximum cyclic shift value, $S_q$ is a quantity of cyclic shift bias values included in the $q$th cyclic shift bias value subset, $\sum_{q=1}^{Q} S_q = Y_1$, and $Y_1$ is a total quantity of cyclic shift bias values included in the first cyclic shift bias value set.

In a possible implementation, $n_{SRS}^{cs,\max} = \Delta' \cdot Q$.

In a possible implementation, Q is a quantity of ports of the $N_{ap}^{SRS}$ ports on a same comb offset, or Q is a quantity of different cyclic shifts occupied by the $N_{ap}^{SRS}$ ports, or Q is a total quantity $N_{ap}^{SRS}$ of ports corresponding to the first SRS

resource, or $Q = \begin{cases} 4, & \text{if } n_{SRS}^{cs,\max} = 8 \text{ or } 12 \\ 2, & \text{others} \end{cases}$.

In a possible implementation, a cyclic shift value of an $i$th port of the $N_{ap}^{SRS}$ ports is $\alpha_i$, where

$$\alpha_i = 2\pi \frac{n_{SRS}^{cs,i}}{n_{SRS}^{cs,\max}} + 2\pi \frac{n_{SRS}^{cs,offset}}{Kn_{SRS}^{cs,\max}},$$

where

$$n_{SRS}^{cs,offset} = S(f(n_{SRS}) \bmod Y_1) = f(n_{SRS}) \bmod Y_1,$$

$$Y_1 = n_{SRS}^{cs,\max}$$, and $K$ is 1; or $$Y_1 = K \cdot n_{SRS}^{cs,\max}$$, and $K$ is a value configured by a network device or is a preset value; or

$$n_{SRS}^{cs,offset} = \left( \left\lfloor \frac{f(n_{SRS}) \bmod Y_1}{Y_1 / Q} \right\rfloor \times \frac{n_{SRS}^{cs,\max}}{Q} + \left( (f(n_{SRS}) \bmod Y_1) \bmod (Y_1 / Q) \right) \right) ,$$

$Y_1$ is configured by a network device or is a preset value, and $K$ is 1; or

$$n_{SRS}^{cs,offset} = \left( \left\lfloor \frac{f(n_{SRS}) \bmod Y_1}{S_q} \right\rfloor \times \frac{n_{SRS}^{cs,\max}}{Q} + \left( (f(n_{SRS}) \bmod Y_1) \bmod S_q \right) \right) ,$$

$S_q$ is a value configured by a network device or is a preset value, $Y_1 = Q \cdot S_q$, and $K$ is 1; or

$$n_{SRS}^{cs,offset} = f(n_{SRS}) \bmod n_{SRS}^{cs,\max} ,$$

and $K$ is 1; or

$$n_{SRS}^{cs,offset} = f(n_{SRS}) \bmod \left( K \cdot n_{SRS}^{cs,\max} \right),$$

and $K$ is a value configured by a network device or is a preset value; or

$$n_{SRS}^{cs,offset} = \left( \left\lfloor \frac{f(n_{SRS}) \bmod Y_1}{Y_1 / Q} \right\rfloor \times \frac{n_{SRS}^{cs,\max}}{Q} + \left( f(n_{SRS}) \right) \bmod (Y_1 / Q) \right) ,$$

$Y_1$ is a value configured by a network device or is a preset value, and $K$ is 1; or

$$n_{SRS}^{cs,offset} = \left( \left\lfloor \frac{f(n_{SRS}) \bmod Y_1}{S_q} \right\rfloor \times \frac{n_{SRS}^{cs,\max}}{Q} + \left( f(n_{SRS}) \right) \bmod S_q \right),$$

$S_q$ is a value configured by a network device or is a preset value, $Y_1 = Q \cdot S_q$, and $K$ is 1, where $n_{SRS}^{CS,i}$ is an initial cyclic shift value of the $i^{th}$ port, $f(n_{SRS})$ is a random function, $\mathrm{mod}(\cdot)$ is a modulo operation, $n_{SRS}^{cs,offset}$ is a first cyclic shift bias value, and $\lfloor \cdot \rfloor$ is a round-down operation.

In a possible implementation, $$\Delta' = \begin{cases} 2, & \text{if } \ n_{SRS}^{cs,\max} = 8 \\ 3, & \text{others} \end{cases}$$, and $Q = \begin{cases} 4, & \text{if } \ n_{SRS}^{cs,\max} = 8 \ \text{or} \ 12 \\ 2, & \text{others} \end{cases}$.

In a possible implementation, a cyclic shift value of an $i^{th}$ port of the $N_{ap}^{SRS}$ ports is $\alpha_i$, where

$$\alpha_i = 2\pi \frac{n_{SRS}^{cs,i}}{n_{SRS}^{cs,\max}} + 2\pi \frac{n_{SRS}^{cs,offset}}{K n_{SRS}^{cs,\max}},$$

where

$$n_{SRS}^{cs,offset} = S(f(n_{SRS}) \bmod Y_1) = f(n_{SRS}) \bmod Y_1 ,$$

$$Y_1 = n_{SRS}^{cs,\max}$$, and $K$ is 1; or $$Y_1 = K \cdot n_{SRS}^{cs,\max}$$, and $K$ is a value configured by a network device or is a preset value; or

$$n_{SRS}^{cs,offset} = \left( \left\lfloor \frac{f(n_{SRS}) \bmod Y_1}{(L_1 \times \Delta') / n_{SRS}^{cs,\max}} \right\rfloor \times \Delta' + \left( (f(n_{SRS}) \bmod Y_1) \bmod ((L_1 \times \Delta') / n_{SRS}^{cs,\max}) \right) \right),$$

$Y_1$ is a value configured by a network device or is a preset value, $K$ is 1, and $\lfloor \cdot \rfloor$ is a round-down operation; or

$$n_{SRS}^{cs,offset} = \left( \left\lfloor \frac{f(n_{SRS}) \bmod Y_1}{S_q} \right\rfloor \times \Delta' + \left( (f(n_{SRS}) \bmod Y_1) \bmod S_q \right) \right),$$

$S_q$ is a value configured by a network device or is a preset value, $Y_1 = Q \cdot S_q$, and $K$ is 1;

$$n_{SRS}^{cs,offset} = f(n_{SRS}) \bmod n_{SRS}^{cs,\max},$$

and $K$ is 1; or

$$n_{SRS}^{cs,offset} = f(n_{SRS}) \bmod \left( K \cdot n_{SRS}^{cs,\max} \right),$$

and $K$ is a value configured by a network device or is a preset value; or

$$n_{SRS}^{cs,offset} = \left( \left\lfloor \frac{f(n_{SRS}) \bmod Y_1}{(L_1 \times \Delta') / n_{SRS}^{cs,\max}} \right\rfloor \times \Delta' + \left( f(n_{SRS}) \bmod ((Y_1 \times \Delta') / n_{SRS}^{cs,\max}) \right) \right),$$

$Y_1$ is a value configured by a network device or is a preset value, $K$ is 1, and $\lfloor \cdot \rfloor$ is a round-down operation; or

$$n_{SRS}^{cs,offset} = \left( \left\lfloor \frac{f(n_{SRS}) \bmod Y_1}{S_q} \right\rfloor \times \Delta' + \left( f(n_{SRS}) \bmod S_q \right) \right),$$

$S_q$ is a value configured by a network device or is a preset value, $Y_1 = Q \cdot S_q$, and $K$ is 1, where $n_{SRS}^{CS,i}$ is an initial cyclic shift value of the $i^{th}$ port, $f(n_{SRS})$ is a random function, $\bmod(\cdot)$ is a modulo operation, and $n_{SRS}^{cs,offset}$ is a first cyclic shift bias value.

According to a fifth aspect, a communication method is provided, and includes: sending an SRS based on an initial comb offset value of an $i^{th}$ port of $N_{ap}^{SRS}$ ports corresponding to a first SRS resource and a first comb offset bias value set of the $i^{th}$ port in a first comb offset bias value set, where $i$ is a positive integer ranging from 1 to $N_{ap}^{SRS}$.

In a possible implementation, the first comb offset bias value set includes $L_{g,l}$ consecutive cyclic shift biases, where $L_{g,l}$ is greater than or equal to 1 and less than or equal to a total comb quantity $K_{TC}$.

In a possible implementation, indication information that indicates $L_{g,l}$ is received from a network device.

In a possible implementation, the first comb offset bias value set is $\{0,1 \bmod K_{TC}, \cdots, (L_{g,l} - 1) \bmod K_{TC}\}$; or the first comb offset bias value set is $\{0, -1 \bmod K_{TC}, \cdots, (-L_{g,l} + 1) \bmod K_{TC}\}$, where $\bmod(\cdot)$ is a modulo operation.

In a possible implementation, a frequency domain starting position to which the $i^{th}$ port of the $N_{ap}^{SRS}$ ports is mapped is $n_{shift} N_{SC}^{RB} + (k_{TC}^i + k_{offset}' + n_{SRS}^{comb,\ offset}) \bmod K_{TC}$, where $n_{shift} N_{SC}^{RB}$ is a frequency domain resource

offset, $k^{i}_{offset}$ is a comb offset adjustment value, $k^{i}_{TC}$ is the initial comb offset value of the $i$th port, $f(n_{SRS})$ is a random function, $n^{comb,\ offset}_{SRS} = f(n_{SRS}) \bmod L_{g,1}$, $L_{g,1} = K_{TC}$ or $L_{g,l}$ is a value configured by the network device or is a preset value, and $n^{comb,\ offset}_{SRS}$ is the first comb offset bias value.

In a possible implementation, the first comb offset bias value set includes at least one comb offset bias value subset, and comb offset bias values included in each of the at least one comb offset bias value subset are consecutive.

In a possible implementation, comb offset bias value intervals between any two adjacent comb offset bias value subsets of the at least one comb offset bias value subset are equal.

In a possible implementation, all of the at least one comb offset bias value subset include equal quantities of comb offset bias values.

In a possible implementation, a quantity of the at least one comb offset bias value subset is G, and a $g$th comb offset bias value subset of the G comb offset bias value subsets is $\{\Delta_g \bmod K_{TC}, (\Delta_g +1) \bmod K_{TC} \cdots, (\Delta_g + L_g$-1$) \bmod K_{TC}\}$, or is as follows:

$$\left\{ -\Delta_g \bmod K_{TC}, (-\Delta_g -1) \bmod K_{TC} \cdots, (-\Delta_g - L_g +1) \bmod K_{TC} \right\},$$

where

$\Delta_0 = 0$, $\Delta_g = \Delta" \cdot g$, $g = 0, 1, \cdots, G$-1, $\Delta"$ is the comb offset bias value interval between any two adjacent comb offset bias value subsets, $K_{TC}$ is a total comb quantity, $L_g$ is a quantity of comb offset bias values included in the $g$th comb offset bias value subset, $\sum_{g=1}^{G} L_g = L_{g,1}$, and $L_{g,l}$ is a total quantity of comb offset bias values included in the first comb offset bias value set.

In a possible implementation, $K_{TC} = \Delta" \cdot G$.

In a possible implementation, G is a quantity of ports of the $N^{SRS}_{ap}$ ports on a same cyclic shift, or G is a quantity of different comb offsets occupied by the $N^{SRS}_{ap}$ ports.

In a possible implementation, a frequency domain starting position to which the $i^{th}$ port of the $N^{SRS}_{ap}$ ports is mapped is $n_{shift} N^{RB}_{SC} + (k^{i}_{TC} + k'_{offset} + n^{comb,\ offset}_{SRS}) \bmod K_{TC}$, where

$$n^{comb,\ offset}_{SRS} = S(f(n_{SRS}) \bmod L_{g,1}) = f(n_{SRS}) \bmod L_{g,1},$$

**and** $L_{g,l} = K_{TC}$; or

$$n^{comb,\ offset}_{SRS} = \left( \left\lfloor \frac{f(n_{SRS}) \bmod L_{g,1}}{L_{g,1} / G} \right\rfloor \times \frac{K_{TC}}{G} + \left( \left( f(n_{SRS}) \bmod L_{g,1} \right) \bmod (L_{g,1} / G) \right) \right),$$

where $L_{g,l}$ is a value configured by a network device or is a preset value; or

$$n^{comb,\ offset}_{SRS} = \left( \left\lfloor \frac{f(n_{SRS}) \bmod L_{g,1}}{S_g} \right\rfloor \times \frac{K_{TC}}{G} + \left( \left( f(n_{SRS}) \bmod G \right) \bmod S_g \right) \right),$$

where $S_g$ is a value configured by a network device or is a preset value, and $L_{g,l} = G \cdot S_g$; or

$$n^{comb,\ offset}_{SRS} = f(n_{SRS}) \bmod K_{TC};$$

or

$$n_{SRS}^{comb,\ offset} = \left( \left\lfloor \frac{f(n_{SRS}) \bmod L_{g,1}}{L_{g,1} / G} \right\rfloor \times \frac{K_{TC}}{G} + \left( f(n_{SRS}) \bmod (L_{g,1} / G) \right) \right),$$

where $L_{g,1}$ is a value configured by a network device or is a preset value; or

$$n_{SRS}^{comb,\ offset} = \left( \left\lfloor \frac{f(n_{SRS}) \bmod L_{g,1}}{S_g} \right\rfloor \times \frac{K_{TC}}{G} + \left( f(n_{SRS}) \bmod S_g \right) \right),$$

where

$n_{shift} N_{SC}^{RB}$ is a frequency domain resource offset, $k_{offset}^{'}$ is a comb offset adjustment value, $k_{TC}^{i}$ is an initial comb offset value of the $i$th port, $n_{SRS}^{comb,\ offset}$ is the first comb offset bias value, $f(n_{SRS})$ is a random function, and $\lfloor \cdot \rfloor$ is a round-down operation.

In a possible implementation, $\Delta = \begin{cases} 1, & \text{if } K_{TC} = 2 \\ 2, & \text{others} \end{cases}$, or 11 is indicated by a network device.

In a possible implementation, a frequency domain starting position to which the $i$th port of the $N_{ap}^{SRS}$ ports is mapped is $n_{shift} N_{SC}^{RB} + (k_{TC}^{i} + k_{offset}^{'} + n_{SRS}^{comb,\ offset}) \bmod K_{TC}$, where

$$n_{SRS}^{comb,\ offset} = S(f(n_{SRS}) \bmod L_{g,1}) = f(n_{SRS}) \bmod L_{g,1},$$

**and** $L_{g,1} = K_{TC}$; or

$$n_{SRS}^{comb,\ offset} = \left( \left\lfloor \frac{f(n_{SRS}) \bmod L_{g,1}}{(L_{g,1} \times \Delta^{''}) / K_{TC}} \right\rfloor \times \Delta^{''} + \left( \left( f(n_{SRS}) \bmod L_{g,1} \right) \bmod \left( (L_{g,1} \times \Delta) / K_{TC} \right) \right) \right),$$

where $L_{g,1}$ is a value configured by the network device or is a preset value; or

$$n_{SRS}^{comb,\ offset} = \left( \left\lfloor \frac{f(n_{SRS}) \bmod L_{g,1}}{S_g} \right\rfloor \times \Delta^{''} + \left( (f(n_{SRS}) \bmod G) \bmod S_g \right) \right),$$

where $S_g$ is a value configured by the network device or is a preset value, and $L_{g,1} = G \cdot S_g$; or

$$n_{SRS}^{comb,\ offset} = f(n_{SRS}) \bmod K_{TC};$$

or

$$n_{SRS}^{comb,\ offset} = \left( \left\lfloor \frac{f(n_{SRS}) \bmod L_{g,1}}{(L_{g,1} \times \Delta^{''}) / K_{TC}} \right\rfloor \times \Delta^{''} + \left( f(n_{SRS}) \bmod \left( (L_{g,1} \times \Delta^{''}) / K_{TC} \right) \right) \right),$$

where $L_{g,1}$ is a value configured by the network device or is a preset value; or

$$n_{SRS}^{comb,\ offset} = \left( \left\lfloor \frac{f(n_{SRS}) \bmod L_{g,1}}{S_g} \right\rfloor \times \Delta'' + \left( f(n_{SRS}) \bmod S_g \right) \right),$$

where $S_g$ is a value configured by the network device or is a preset value, and $L_{g,1} = G \cdot K_{TC} / \Delta''$, where $n_{shift} N_{SC}^{RB}$ is a frequency domain resource offset, $k_{offset}^{i'}$ is a comb offset adjustment value, $k_{TC}^{i}$ is an initial comb offset value of the $i$ th port, $n_{SRS}^{comb,\ offset}$ is the first comb offset bias value, $f(n_{SRS})$ is a random function, and $\lfloor \cdot \rfloor$ is a round-down operation.

According to a sixth aspect, a communication method is provided, and includes: receiving an SRS based on an initial comb offset value of an $i$ th port of $N_{ap}^{SRS}$ ports corresponding to a first SRS resource and a first comb offset bias value set of the $i$ th port in a first comb offset bias value set, where i is a positive integer ranging from 1 to $N_{ap}^{SRS}$.

In a possible implementation, the first comb offset bias value set includes $L_{g,1}$ consecutive cyclic shift biases, where $L_{g,l}$ is greater than or equal to 1 and less than or equal to a total comb quantity $K_{TC}$.

In a possible implementation, indication information that indicates $L_{g,1}$ is sent.

In a possible implementation, the first comb offset bias value set is $\{0, 1 \bmod K_{TC}, \cdots, (L_{g,l}-1) \bmod K_{TC}\}$; or the first comb offset bias value set is $\{0, -1 \bmod K_{TC}, \cdots, (-L_{g,l}+1) \bmod K_{TC}\}$, where mod(-) is a modulo operation.

In a possible implementation, a frequency domain starting position to which the $i$ th port of the $N_{ap}^{SRS}$ ports is mapped is $n_{shift} N_{SC}^{RB} + (k_{TC}^{i} + k_{offset}^{i'} + n_{SRS}^{comb,\ offset}) \bmod K_{TC}$, where $n_{shift} N_{SC}^{RB}$ is a frequency domain resource offset, $k_{offset}^{i'}$ is a comb offset adjustment value, $k_{TC}^{i}$ is the initial comb offset value of the $i$ th port, $f(n_{SRS})$ is a random function, $n_{SRS}^{comb,\ offset} = f(n_{SRS}) \bmod L_{g,1}$, $L_{g,1} = K_{TC}$ or $L_{g,1}$ is a value configured by a network device or is a preset value, and $n_{SRS}^{comb,\ offset}$ is the first comb offset bias value.

In a possible implementation, the first comb offset bias value set includes at least one comb offset bias value subset, and comb offset bias values included in each of the at least one comb offset bias value subset are consecutive.

In a possible implementation, comb offset bias value intervals between any two adjacent comb offset bias value subsets of the at least one comb offset bias value subset are equal.

In a possible implementation, all of the at least one comb offset bias value subset include equal quantities of comb offset bias values.

In a possible implementation, a quantity of the at least one comb offset bias value subset is G , and a g$^{th}$ comb offset bias value subset of the G comb offset bias value subsets is $\{\Delta_g \bmod K_{TC}, (\Delta_g+1) \bmod K_{TC} \cdots, (\Delta_g + L_g - 1) \bmod K_{TC}\}$, or is as follows:

$$\left\{ -\Delta_g \bmod K_{TC}, (-\Delta_g - 1) \bmod K_{TC} \cdots, (-\Delta_g - L_g + 1) \bmod K_{TC} \right\},$$

, where
$\Delta_o = o$ , $\Delta_g = \Delta'' \cdot g$, $g = 0, 1, ..., G-1$, $_A''$ is the comb offset bias value interval between any two adjacent comb offset bias value subsets, $K_{TC}$ is a total comb quantity, $L_g$ is a quantity of comb offset bias values included in the g$^{th}$ comb offset bias value subset, $\sum_{g=1}^{G} L_g = L_{g,1}$ , $L_{g,1}$ , and $L_{g,l}$ is a total quantity of comb offset bias values included in the first comb offset bias value set.

In a possible implementation, $K_{TC} = \Delta'' \cdot G$.

In a possible implementation, G is a quantity of ports of the $N_{ap}^{SRS}$ ports on a same cyclic shift, or G is a quantity of different comb offsets occupied by the $N_{ap}^{SRS}$ ports.

In a possible implementation, a frequency domain starting position to which the i$^{th}$ port of the $N_{ap}^{SRS}$ ports is mapped is $n_{shift}N_{SC}^{RB} + (k_{TC}^{i} + k_{offset}^{'} + n_{SRS}^{comb, \ offset}) \bmod K_{TC}$, where

$$n_{SRS}^{comb, \ offset} = S(f(n_{SRS}) \bmod L_{g,1}) = f(n_{SRS}) \bmod L_{g,1},$$

**and** $L_{g,1} = K_{TC}$; or

$$n_{SRS}^{comb, \ offset} = \left( \left\lfloor \frac{f(n_{SRS}) \bmod L_{g,1}}{L_{g,1} / G} \right\rfloor \times \frac{K_{TC}}{G} + \left( \left( f(n_{SRS}) \bmod L_{g,1} \right) \bmod (L_{g,1} / G) \right) \right),$$

where $L_{g,1}$ is a value configured by a network device or is a preset value; or

$$n_{SRS}^{comb, \ offset} = \left( \left\lfloor \frac{f(n_{SRS}) \bmod L_{g,1}}{S_g} \right\rfloor \times \frac{K_{TC}}{G} + \left( (f(n_{SRS}) \bmod G) \bmod S_g \right) \right),$$

where $S_g$ is a value configured by a network device or is a preset value, and $L_{g,1} = G \cdot S_g$; or

$$n_{SRS}^{comb, \ offset} = f(n_{SRS}) \bmod K_{TC};$$

or

$$n_{SRS}^{comb, \ offset} = \left( \left\lfloor \frac{f(n_{SRS}) \bmod L_{g,1}}{L_{g,1} / G} \right\rfloor \times \frac{K_{TC}}{G} + \left( f(n_{SRS}) \bmod (L_{g,1} / G) \right) \right),$$

where $L_{g,1}$ is a value configured by a network device or is a preset value; or

$$n_{SRS}^{comb, \ offset} = \left( \left\lfloor \frac{f(n_{SRS}) \bmod L_{g,1}}{S_g} \right\rfloor \times \frac{K_{TC}}{G} + \left( f(n_{SRS}) \bmod S_g \right) \right),$$

where

$n_{shift}N_{SC}^{RB}$ is a frequency domain resource offset, $k_{offset}^{i'}$ is a comb offset adjustment value, $k_{TC}^{i}$ is an initial comb offset value of the $i$ $^{th}$ port, $n_{SRS}^{comb, \ offset}$ offset is the first comb offset bias value, $f(n_{SRS})$ is a random function, and $\lfloor \cdot \rfloor$ is a round-down operation.

In a possible implementation, $\Delta = \begin{cases} 1, & \text{if } K_{TC} = 2 \\ 2, & \text{others} \end{cases}$, or $\Delta$ is indicated by a network device.

In a possible implementation, a frequency domain starting position to which the $i$ $^{th}$ port of the $N_{ap}^{SRS}$ ports is mapped is $n_{shift}N_{SC}^{RB} + (k_{TC}^{i} + k_{offset}^{'} + n_{SRS}^{comb, \ offset}) \bmod K_{TC}$, where

$$n_{SRS}^{comb,\ offset} = S(f(n_{SRS}) \bmod L_{g,1}) = f(n_{SRS}) \bmod L_{g,1},$$

**and** $L_{g,1} = K_{TC}$; or

$$n_{SRS}^{comb,\ offset} = \left( \left\lfloor \frac{f(n_{SRS}) \bmod L_{g,1}}{(L_{g,1} \times \Delta'') / K_{TC}} \right\rfloor \times \Delta'' + \left( (f(n_{SRS}) \bmod L_{g,1}) \bmod ((L_{g,1} \times \Delta) / K_{TC}) \right) \right),$$

where $L_{g,1}$ is a value configured by the network device or is a preset value; or

$$n_{SRS}^{comb,\ offset} = \left( \left\lfloor \frac{f(n_{SRS}) \bmod L_{g,1}}{S_g} \right\rfloor \times \Delta' + \left( (f(n_{SRS}) \bmod G) \bmod S_g \right) \right),$$

, where $S_g$ is a value configured by the network device or is a preset value, and $L_{g,1} = G \cdot S_g$; or

$$n_{SRS}^{comb,\ offset} = f(n_{SRS}) \bmod K_{TC};$$

or

$$n_{SRS}^{comb,\ offset} = \left( \left\lfloor \frac{f(n_{SRS}) \bmod L_{g,1}}{(L_{g,1} \times \Delta'') / K_{TC}} \right\rfloor \times \Delta'' + \left( f(n_{SRS}) \bmod ((L_{g,1} \times \Delta'') / K_{TC}) \right) \right),$$

where $L_{g,1}$ is a value configured by the network device or is a preset value; or

$$n_{SRS}^{comb,\ offset} = \left( \left\lfloor \frac{f(n_{SRS}) \bmod L_{g,1}}{S_g} \right\rfloor \times \Delta'' + \left( f(n_{SRS}) \bmod S_g \right) \right),$$

where $S_g$ is a value configured by the network device or is a preset value, and $L_{g,1} = G \cdot K_{TC} / \Delta''$, where

$n_{shift} N_{SC}^{RB}$ is a frequency domain resource offset, $k_{offset}^{i}$ is a comb offset adjustment value, $k_{TC}^{i}$ is an initial comb offset value of the $i$ th port, $n_{SRS}^{comb,\ offset}$ is the first comb offset bias value, $f(n_{SRS})$ is a random function, and $\lfloor \cdot \rfloor$ is a round-down operation.

According to a seventh aspect, a communication method is provided, and includes: sending an SRS based on an initial cyclic shift value of an $i$ th port of $N_{ap}^{SRS}$ ports corresponding to a first SRS resource and a first cyclic shift bias value set of the $i$ th port in a first cyclic shift bias value set, where i is a positive integer ranging from 1 to $N_{ap}^{SRS}$.

In a possible implementation, the first cyclic shift bias value set includes $Y_l$ consecutive cyclic shift biases, where $Y_l$ is greater than or equal to 1 and less than or equal to a maximum cyclic shift value $n_{RS}^{cs,\max}$.

In a possible implementation, indication information that indicates $Y_l$ is received from a network device.

In a possible implementation, the first cyclic shift bias value set is $\left\{ 0, 1 \bmod n_{SRS}^{CS,\max}, \cdots, (Y_l - 1) \bmod n_{SRS}^{CS,\max} \right\}$; or

the first cyclic shift bias value set is $\left\{0, -1 \bmod n_{SRS}^{CS,\max}, \cdots, \left(-Y_1 + 1\right) \bmod n_{SRS}^{CS,\max}\right\}$, where mod(·) is a modulo operation.

In a possible implementation, a cyclic shift value of the $i^{\text{th}}$ port of the $N_{ap}^{SRS}$ ports is $\alpha_i$, where

$$\alpha_i = 2\pi \frac{n_{SRS}^{cs,i}}{n_{SRS}^{cs,\max}} + 2\pi \frac{n_{SRS}^{cs,offset}}{K n_{SRS}^{cs,\max}},$$

where

$$n_{SRS}^{cs,offset} = f(n_{SRS}) \bmod Y_1;$$

$Y_1$ is $n_{SRS}^{cs,\max}$ and $K$ is 1, or $Y_1 = K \cdot n_{SRS}^{cs,\max}$ and $K$ is a value configured by the network device or is a preset value, or $Y_1$ is a value configured by the network device and $K$ is 1; $f(n_{SRS})$ is a random function; $K$ is 1 or a preset value; $n_{SRS}^{CS,i}$ is an initial cyclic shift value of the i $^{\text{th}}$ port; $n_{SRS}^{cs,\max}$ is the maximum cyclic shift value; and $n_{SRS}^{cs,offset}$ is the first cyclic shift bias value.

In a possible implementation, the first cyclic shift bias value set includes at least one cyclic shift bias value subset, and cyclic shift biases included in each of the at least one cyclic shift bias value subset are consecutive.

In a possible implementation, cyclic shift bias intervals between any two adjacent cyclic shift bias value subsets of the at least one cyclic shift bias value subset are equal.

In a possible implementation, all of the at least one cyclic shift bias value subset include equal quantities of cyclic shift bias values.

In a possible implementation, a quantity of the at least one cyclic shift bias value subset is $Q$, and a $q^{\text{th}}$ cyclic shift bias value subset of the $Q$ cyclic shift bias value subsets is $\left\{\Delta_q \bmod n_{SRS}^{CS,\max}, (\Delta_q + 1) \bmod n_{SRS}^{CS,\max} \cdots, (\Delta_q + S_q - 1) \bmod n_{SRS}^{CS,\max}\right\}$, or is as follows:

$$\left\{-\Delta_q \bmod n_{SRS}^{CS,\max}, (-\Delta_q - 1) \bmod n_{SRS}^{CS,\max} \cdots, (-\Delta_q - S_q + 1) \bmod n_{SRS}^{CS,\max}\right\},$$

where
$\Delta_0 = 0$, $\Delta_q = \Delta' \cdot q$, $q = 0, 1, \ldots, Q-1$, $\Delta'$ is a cyclic shift bias interval between any two adjacent cyclic shift bias value subsets, $n_{SRS}^{cs,\max}$ is a maximum cyclic shift value, $S_q$ is a quantity of cyclic shift bias values included in the $q^{\text{th}}$ cyclic shift bias value subset, $\sum_{q=1}^{Q} S_q = Y_1$, and $Y_1$ is a total quantity of cyclic shift bias values included in the first cyclic shift bias value set.

In a possible implementation, $n_{SRS}^{cs,\max} = \Delta' \cdot Q$.

In a possible implementation, $Q$ is a quantity of ports of the $N_{ap}^{SRS}$ ports on a same comb offset, or $Q$ is a quantity of different cyclic shifts occupied by the $N_{ap}^{SRS}$ ports, or $Q$ is a total quantity $N_{ap}^{SRS}$ of ports corresponding to the first SRS resource, or $Q = \begin{cases} 4, & \text{if } n_{SRS}^{cs,\max} = 8 \text{ or } 12 \\ 2, & \text{others} \end{cases}$.

In a possible implementation, a cyclic shift value of the $i^{\text{th}}$ port of the $N_{ap}^{SRS}$ ports is $\alpha_i$, where

$$\alpha_i = 2\pi \frac{n_{SRS}^{cs,i}}{n_{SRS}^{cs,\max}} + 2\pi \frac{n_{SRS}^{cs,offset}}{K n_{SRS}^{cs,\max}},$$

where

$$n_{SRS}^{cs,offset} = S(f(n_{SRS}) \bmod Y_1) = f(n_{SRS}) \bmod Y_1,$$

$Y_1 = n_{SRS}^{cs,\max}$, and $K$ is 1; or $Y_1 = K \cdot n_{SRS}^{cs,\max}$, and $K$ is a value configured by a network device or is a preset value; or

$$n_{SRS}^{cs,offset} = \left( \left\lfloor \frac{f(n_{SRS}) \bmod Y_1}{Y_1 / Q} \right\rfloor \times \frac{n_{SRS}^{cs,\max}}{Q} + \left( (f(n_{SRS}) \bmod Y_1) \bmod (Y_1 / Q) \right) \right),$$

$Y_l$ is configured by a network device or is a preset value, and $K$ is 1; or

$$n_{SRS}^{cs,offset} = \left( \left\lfloor \frac{f(n_{SRS}) \bmod Y_1}{S_q} \right\rfloor \times \frac{n_{SRS}^{cs,\max}}{Q} + \left( (f(n_{SRS}) \bmod Y_1) \bmod S_q \right) \right),$$

$S_q$ is a value configured by a network device or is a preset value, $Y_1 = Q \cdot S_q$, and $K$ is 1; or

$$n_{SRS}^{cs,offset} = f(n_{SRS}) \bmod n_{SRS}^{cs,\max},$$

and K is 1; or

$$n_{SRS}^{cs,offset} = f(n_{SRS}) \bmod \left( K \cdot n_{SRS}^{cs,\max} \right),$$

and K is a value configured by a network device or is a preset value; or

$$n_{SRS}^{cs,offset} = \left( \left\lfloor \frac{f(n_{SRS}) \bmod Y_1}{Y_1 / Q} \right\rfloor \times \frac{n_{SRS}^{cs,\max}}{Q} + \left( f(n_{SRS}) \right) \bmod (Y_1 / Q) \right),$$

$Y_l$ is a value configured by a network device or is a preset value, and K is 1; or

$$n_{SRS}^{cs,offset} = \left( \left\lfloor \frac{f(n_{SRS}) \bmod Y_1}{S_q} \right\rfloor \times \frac{n_{SRS}^{cs,\max}}{Q} + \left( f(n_{SRS}) \right) \bmod S_q \right),$$

$S_q$ is a value configured by a network device or is a preset value, $Y = Q \cdot S_q$, and $K$ is 1, where

$n_{SRS}^{CS,i}$ is an initial cyclic shift value of the $i$ th port, $f(n_{SRS})$ is a random function, mod(-) is a modulo operation, $n_{SRS}^{cs,offset}$ is the first cyclic shift bias value, and $\lfloor \cdot \rfloor$ is a round-down operation.

In a possible implementation, $\Delta' = \begin{cases} 2, & \text{if } n_{SRS}^{cs,\max} = 8 \\ 3, & \text{others} \end{cases}$, and $Q = \begin{cases} 4, & \text{if } n_{SRS}^{cs,\max} = 8 \text{ or } 12 \\ 2, & \text{others} \end{cases}$.

In a possible implementation, a cyclic shift value of the i th port of the $N_{ap}^{SRS}$ ports is $\alpha_i$, where

$$\alpha_i = 2\pi \frac{n_{SRS}^{cs,i}}{n_{SRS}^{cs,\max}} + 2\pi \frac{n_{SRS}^{cs,offset}}{K n_{SRS}^{cs,\max}},$$

where

$$n_{SRS}^{cs,offset} = S(f(n_{SRS}) \bmod Y_1) = f(n_{SRS}) \bmod Y_1 \quad,$$

$Y_1 = n_{SRS}^{cs,\max}$, and $K$ is 1; or $\quad Y_1 = K \cdot n_{SRS}^{cs,\max}$, and $K$ is a value configured by a network device or is a preset value; or

$$n_{SRS}^{cs,offset} = \left( \left\lfloor \frac{f(n_{SRS}) \bmod Y_1}{(Y_1 \times \Delta') / n_{SRS}^{cs,\max}} \right\rfloor \times \Delta' + \left( \left( f(n_{SRS}) \bmod Y_1 \right) \bmod ((L_1 \times \Delta') / n_{SRS}^{cs,\max}) \right) \right),$$

$Y_1$ is a value configured by a network device or is a preset value, K is 1, and $\lfloor \cdot \rfloor$ is a round-down operation; or

$$n_{SRS}^{cs,offset} = \left( \left\lfloor \frac{f(n_{SRS}) \bmod Y_1}{S_q} \right\rfloor \times \Delta' + \left( \left( f(n_{SRS}) \bmod Y_1 \right) \bmod S_q \right) \right) \quad,$$

$S_q$ is a value configured by a network device or is a preset value, $Y_1 = Q \cdot S_q$, and $K$ is 1; or

$$n_{SRS}^{cs,offset} = f(n_{SRS}) \bmod n_{SRS}^{cs,\max},$$

and K is 1; or

$$n_{SRS}^{cs,offset} = f(n_{SRS}) \bmod \left( K \cdot n_{SRS}^{cs,\max} \right),$$

and K is a value configured by a network device or is a preset value; or

$$n_{SRS}^{cs,offset} = \left( \left\lfloor \frac{f(n_{SRS}) \bmod Y_1}{(Y_1 \times \Delta') / n_{SRS}^{cs,\max}} \right\rfloor \times \Delta' + \left( f(n_{SRS}) \bmod ((Y_1 \times \Delta') / n_{SRS}^{cs,\max}) \right) \right),$$

$Y_1$ is a value configured by a network device or is a preset value, K is 1, and $\lfloor \cdot \rfloor$ is a round-down operation; or

$$n_{SRS}^{cs,offset} = \left( \left\lfloor \frac{f(n_{SRS}) \bmod Y_1}{S_q} \right\rfloor \times \Delta' + \left( f(n_{SRS}) \bmod S_q \right) \right),$$

$S_q$ is a value configured by a network device or is a preset value, $Y_1 = Q \cdot S_q$, and $K$ is 1, where $n_{SRS}^{CS,i}$ is an initial cyclic shift value of the i th port, $f(n_{SRS})$ is a random function, mod($\cdot$) is a modulo operation, and $n_{SRS}^{cs,offset}$ is the first cyclic shift bias value.

According to an eighth aspect, a communication method is provided, and includes: receiving an SRS based on an initial cyclic shift value of an i th port of $N_{ap}^{SRS}$ ports corresponding to a first SRS resource and a first cyclic shift bias value set of the i<sup>th</sup> port in a first cyclic shift bias value set, where i is a positive integer ranging from 1 to $N_{ap}^{SRS}$ .

In a possible implementation, the first cyclic shift bias value set includes $Y_1$ consecutive cyclic shift biases, where $Y_1$ is greater than or equal to 1 and less than or equal to a maximum cyclic shift value $n_{RS}^{cs,max}$ .

In a possible implementation, indication information that indicates $Y_1$ is sent.

In a possible implementation, the first cyclic shift bias value set is

$$\left\{0, 1 \bmod n_{SRS}^{CS,max}, \cdots, (Y_1 - 1) \bmod n_{SRS}^{CS,max}\right\} ; \text{ or }$$

the first cyclic shift bias value set is $\left\{0, -1 \bmod n_{SRS}^{CS,max}, \cdots, (-Y_1 + 1) \bmod n_{SRS}^{CS,max}\right\}$ , where mod(·) is a modulo operation.

In a possible implementation, a cyclic shift value of the $i$<sup>th</sup> port of the $N_{ap}^{SRS}$ ports is $\alpha_i$, where

$$\alpha_i = 2\pi \frac{n_{SRS}^{cs,i}}{n_{SRS}^{cs,max}} + 2\pi \frac{n_{SRS}^{cs,offset}}{K n_{SRS}^{cs,max}},$$

where

$$n_{SRS}^{cs,offset} = f(n_{SRS}) \bmod Y_1 ;$$

$Y_1$ is $n_{SRS}^{cs,max}$ and $K$ is 1, or $Y_1 = K \cdot n_{SRS}^{cs,max}$ and $K$ is a value configured by the network device or is a preset value, or $Y_1$ is a value configured by the network device and $K$ is 1; $f(n_{SRS})$ is a random function; $K$ is 1 or a preset value; $n_{SRS}^{CS,i}$ is an initial cyclic shift value of the $i$<sup>th</sup> port; $n_{SRS}^{cs,max}$ is the maximum cyclic shift value; and $n_{SRS}^{cs,offset}$ is the first cyclic shift bias value.

In a possible implementation, the first cyclic shift bias value set includes at least one cyclic shift bias value subset, and cyclic shift biases included in each of the at least one cyclic shift bias value subset are consecutive.

In a possible implementation, cyclic shift bias intervals between any two adjacent cyclic shift bias value subsets of the at least one cyclic shift bias value subset are equal.

In a possible implementation, all of the at least one cyclic shift bias value subset include equal quantities of cyclic shift bias values.

In a possible implementation, a quantity of the at least one cyclic shift bias value subset is *Q,* and a $q$<sup>th</sup> cyclic shift bias value subset of the *Q* cyclic shift bias value subsets is

$$\left\{\Delta_q \bmod n_{SRS}^{CS,max}, (\Delta_q + 1) \bmod n_{SRS}^{CS,max} \cdots, (\Delta_q + S_q - 1) \bmod n_{SRS}^{CS,max}\right\} , \text{ or is as follows:}$$

$$\left\{-\Delta_q \bmod n_{SRS}^{CS,max}, (-\Delta_q - 1) \bmod n_{SRS}^{CS,max} \cdots, (-\Delta_q - S_q + 1) \bmod n_{SRS}^{CS,max}\right\},$$

where
$\Delta_0 = 0, \Delta_q = \Delta' \cdot q, q=0,1,\cdots, Q\text{-}1, \Delta'$ is a cyclic shift bias interval between any two adjacent cyclic shift bias value subsets, $n_{SRS}^{cs,max}$ is a maximum cyclic shift value, $S_q$ is a quantity of cyclic shift bias values included in the $q$<sup>th</sup> cyclic shift bias value subset, $\sum_{q=1}^{Q} S_q = Y_1$ , and $Y_1$ is a total quantity of cyclic shift bias values included in the first cyclic shift bias value set.

In a possible implementation, $n_{SRS}^{cs,max} = \Delta' \cdot Q$ .

In a possible implementation, $Q$ is a quantity of ports of the $N_{ap}^{SRS}$ ports on a same comb offset, or $Q$ is a quantity of different cyclic shifts occupied by the $N_{ap}^{SRS}$ ports, or $Q$ is a total quantity $N_{ap}^{SRS}$ of ports corresponding to the first SRS resource, or $Q = \begin{cases} 4, & \text{if } n_{SRS}^{cs,\max} = 8 \text{ or } 12 \\ 2, & \text{others} \end{cases}$ .

In a possible implementation, a cyclic shift value of the $i^{th}$ port of the $N_{ap}^{SRS}$ ports is $\alpha_i$, where

$$\alpha_i = 2\pi \frac{n_{SRS}^{cs,i}}{n_{SRS}^{cs,\max}} + 2\pi \frac{n_{SRS}^{cs,offset}}{K n_{SRS}^{cs,\max}} ,$$

where

$$n_{SRS}^{cs,offset} = S(f(n_{SRS}) \bmod Y_1) = f(n_{SRS}) \bmod Y_1 ,$$

$Y_1 = n_{SRS}^{cs,\max}$, and $K$ is 1; or $Y_1 = K \cdot n_{SRS}^{cs,\max}$, and $K$ is a value configured by a network device or is a preset value; or

$$n_{SRS}^{cs,offset} = \left( \left\lfloor \frac{f(n_{SRS}) \bmod Y_1}{Y_1 / Q} \right\rfloor \times \frac{n_{SRS}^{cs,\max}}{Q} + \left( (f(n_{SRS}) \bmod Y_1) \bmod (Y_1 / Q) \right) \right) ,$$

$Y_1$ is configured by a network device or is a preset value, and K is 1; or

$$n_{SRS}^{cs,offset} = \left( \left\lfloor \frac{f(n_{SRS}) \bmod Y_1}{S_q} \right\rfloor \times \frac{n_{SRS}^{cs,\max}}{Q} + \left( (f(n_{SRS}) \bmod Y_1) \bmod S_q \right) \right) ,$$

$S_q$ is a value configured by a network device or is a preset value, $Y_1 = Q \cdot S_q$, and $K$ is 1; or

$$n_{SRS}^{cs,offset} = f(n_{SRS}) \bmod n_{SRS}^{cs,\max} ,$$

and K is 1; or

$$n_{SRS}^{cs,offset} = f(n_{SRS}) \bmod \left( K \cdot n_{SRS}^{cs,\max} \right),$$

and $K$ is a value configured by a network device or is a preset value; or

$$n_{SRS}^{cs,offset} = \left( \left\lfloor \frac{f(n_{SRS}) \bmod Y_1}{Y_1 / Q} \right\rfloor \times \frac{n_{SRS}^{cs,\max}}{Q} + \left( f(n_{SRS}) \right) \bmod (Y_1 / Q) \right) ,$$

$Y_1$ is a value configured by a network device or is a preset value, and $K$ is 1; or

$$n_{SRS}^{cs,offset} = \left( \left\lfloor \frac{f(n_{SRS}) \bmod Y_1}{S_q} \right\rfloor \times \frac{n_{SRS}^{cs,\max}}{Q} + \left( f(n_{SRS}) \right) \bmod S_q \right),$$

$S_q$ is a value configured by a network device or is a preset value, $Y_1 = Q \cdot S_q$, and $K$ is 1, where $n_{SRS}^{CS,i}$ is an initial cyclic shift value of the $i^{th}$ port, $f(n_{SRS})$ is a random function, $mod(\cdot)$ is a modulo operation, $n_{SRS}^{cs,offset}$ is the first cyclic shift bias value, and $\lfloor \cdot \rfloor$ is a round-down operation.

In a possible implementation, $\Delta' = \begin{cases} 2, & \text{if } n_{SRS}^{cs,max} = 8 \\ 3, & \text{others} \end{cases}$, and $Q = \begin{cases} 4, & \text{if } n_{SRS}^{cs,max} = 8 \text{ or } 12 \\ 2, & \text{others} \end{cases}$.

In a possible implementation, a cyclic shift value of the $i^{th}$ port of the $N_{ap}^{SRS}$ ports is $\alpha_i$, where

$$\alpha_i = 2\pi \frac{n_{SRS}^{cs,i}}{n_{SRS}^{cs,max}} + 2\pi \frac{n_{SRS}^{cs,offset}}{K n_{SRS}^{cs,max}},$$

where

$$n_{SRS}^{cs,offset} = S(f(n_{SRS}) \bmod Y_1) = f(n_{SRS}) \bmod Y_1 \quad ,$$

$Y_1 = n_{SRS}^{cs,max}$, and $K$ is 1; or $Y_1 = K \cdot n_{SRS}^{cs,max}$, and $K$ is a value configured by a network device or is a preset value; or

$$n_{SRS}^{cs,offset} = \left( \left\lfloor \frac{f(n_{SRS}) \bmod Y_1}{(Y_1 \times \Delta')/n_{SRS}^{cs,max}} \right\rfloor \times \Delta' + \left( (f(n_{SRS}) \bmod Y_1) \bmod ((L_1 \times \Delta')/n_{SRS}^{cs,max}) \right) \right),$$

$Y_1$ is a value configured by a network device or is a preset value, $K$ is 1, and $\lfloor \cdot \rfloor$ is a round-down operation; or

$$n_{SRS}^{cs,offset} = \left( \left\lfloor \frac{f(n_{SRS}) \bmod Y_1}{S_q} \right\rfloor \times \Delta' + \left( (f(n_{SRS}) \bmod Y_1) \bmod S_q \right) \right) \quad ,$$

$S_q$ is a value configured by a network device or is a preset value, $Y_1 = Q \cdot S_q$, and $K$ is 1; or

$$n_{SRS}^{cs,offset} = f(n_{SRS}) \bmod n_{SRS}^{cs,max},$$

and $K$ is 1; or

$$n_{SRS}^{cs,offset} = f(n_{SRS}) \bmod \left( K \cdot n_{SRS}^{cs,max} \right),$$

and $K$ is a value configured by a network device or is a preset value; or

$$n_{SRS}^{cs,offset} = \left( \left\lfloor \frac{f(n_{SRS}) \bmod Y_1}{(Y_1 \times \Delta')/n_{SRS}^{cs,max}} \right\rfloor \times \Delta' + \left( f(n_{SRS}) \bmod ((Y_1 \times \Delta')/n_{SRS}^{cs,max}) \right) \right),$$

$Y_1$ is a value configured by a network device or is a preset value, $K$ is 1, and $\lfloor \cdot \rfloor$ is a round-down operation; or

$$n_{SRS}^{cs,offset} = \left( \left\lfloor \frac{f(n_{SRS}) \bmod Y_1}{S_q} \right\rfloor \times \Delta' + \left( f(n_{SRS}) \bmod S_q \right) \right),$$

$S_q$ is a value configured by a network device or is a preset value, $Y_l = Q \cdot S_q$, and $K$ is 1, where $n_{SRS}^{CS,i}$ is an initial cyclic shift value of the i $^{th}$ port, $f(n_{SRS})$ is a random function, $\bmod(\cdot)$ is a modulo operation, and $n_{SRS}^{cs,offset}$ is the first cyclic shift bias value.

According to a ninth aspect, an embodiment of this application provides a communication apparatus. The communication apparatus has a function of implementing any one of the foregoing aspects. The function may be implemented by hardware, or may be implemented by hardware executing corresponding software. The hardware or the software includes one or more modules or units corresponding to the foregoing function, for example, a transceiver module or unit, a processing module or unit, or an obtaining module or unit.

According to a tenth aspect, an embodiment of this application provides an electronic device, including a memory and a processor. The memory is configured to store a computer program. The processor is configured to: when invoking the computer program, enable the electronic device to perform the method in any one of the foregoing aspects.

According to an eleventh aspect, an embodiment of this application provides a chip system. The chip system includes a processor. The processor is coupled to a memory. The processor executes a computer program stored in the memory, to implement the method in any one of the foregoing aspects.

The chip system may be a single chip or a chip module including a plurality of chips.

According to a twelfth aspect, an embodiment of this application provides a computer-readable storage medium. The computer-readable storage medium stores a computer program. When the computer program is executed by a processor, the method in any one of the foregoing aspects is implemented.

According to a thirteenth aspect, an embodiment of this application provides a computer program product. When the computer program product is run on an electronic device, the electronic device is enabled to perform the method in any one of the foregoing aspects.

It can be understood that, for beneficial effects of the ninth aspect to the thirteenth aspect, reference may be made to related descriptions in the first aspect to the fourth aspect. Details are not described herein again.

## BRIEF DESCRIPTION OF DRAWINGS

FIG. 1 is a diagram of an architecture of a communication system according to an embodiment of this application;
FIG. 2 is a diagram of combs according to an embodiment of this application;
FIG. 3 is a diagram of an application scenario according to an embodiment of this application;
FIG. 4 is a diagram of an SRS resource according to an embodiment of this application;
FIG. 5 is a diagram of a communication method according to an embodiment of this application;
FIG. 6 is a diagram of another SRS resource according to an embodiment of this application;
FIG. 7 is a diagram of another SRS resource according to an embodiment of this application;
FIG. 8 is a diagram of another SRS resource according to an embodiment of this application;
FIG. 9 is a diagram of another SRS resource according to an embodiment of this application;
FIG. 10 is a diagram of another SRS resource according to an embodiment of this application;
FIG. 11 is a diagram of another communication method according to an embodiment of this application;
FIG. 12(a) to FIG. 12(h) are a diagram of another SRS resource according to an embodiment of this application;
FIG. 13 is a diagram of another SRS resource according to an embodiment of this application;
FIG. 14 is a diagram of another SRS resource according to an embodiment of this application; and
FIG. 15 is a block diagram of a communication apparatus according to an embodiment of this application.

## DESCRIPTION OF EMBODIMENTS

The following describes the technical solutions in embodiments of this application with reference to the accompanying drawings in embodiments of this application.

It should be understood that division into manners, cases, categories, and embodiments in embodiments of this application is merely intended for ease of description, and shall not constitute a particular limitation. Features in the manners, categories, cases, and embodiments may be combined without contradiction.

It should be further understood that "first", "second", and "third" in embodiments of this application are merely intended for distinguishing, and shall not constitute any limitation on this application. It should be further understood that, in embodiments of this application, sequence numbers of processes do not mean execution sequences. The execution sequences of the processes should be determined based on functions and internal logic of the processes, and shall not constitute any limitation on implementation processes of embodiments of this application. In addition, the terms "include", "have", and any variants thereof are intended to cover a non-exclusive inclusion. For example, a process, a method, a system, a product, or a device that includes a series of steps or units is not limited to the listed steps or units, but optionally further includes steps or units that are not listed, or optionally further includes other steps or units inherent to the process, the method, the product, or the device.

An "embodiment" mentioned in this specification indicates that a specific feature, structure, or characteristic described with reference to the embodiment may be included in at least one embodiment of this application. The term appearing at various positions in this specification does not necessarily mean a same embodiment, and neither means an independent or alternative embodiment mutually exclusive with another embodiment. It can be explicitly and implicitly understood by a person skilled in the art that embodiments described in this specification may be combined with other embodiments.

The technical solutions in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future fifth-generation (5th generation, 5G) system, or a new radio (new radio, NR) system.

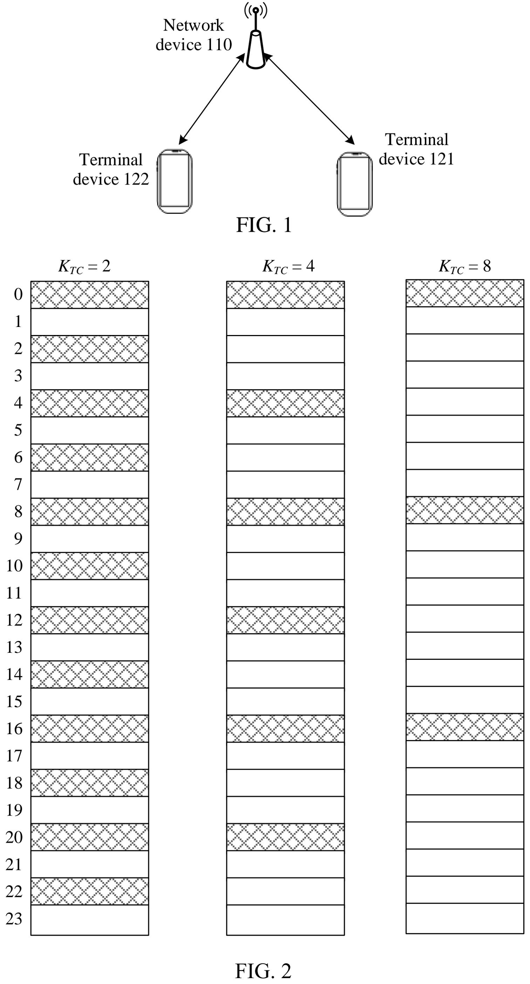

FIG. 1 is a diagram of a communication system to which embodiments of this application are applicable. As shown in FIG. 1, the wireless communication system may include a network device 110 and one or more terminal devices (for example, a terminal device 121 and a terminal device 122 shown in FIG. 1) that communicate with each other. When the network device 110 sends a signal, the network device 110 is a transmit end, and the terminal device 121 or the terminal device 122 is a receive end. On the contrary, when the terminal device 121 or the terminal device 122 sends a signal, the terminal device 121 or the terminal device 122 is a transmit end, and the network device 110 is a receive end.

The network device 110 may be an access network device configured to communicate with the terminal device 121 or the terminal device 122. The access network device may be a base transceiver station (base transceiver station, BTS) in a GSM system or a CDMA system; or may be a base station, namely, a NodeB (NodeB, NB), in a WCDMA system; or may be an evolved base station, namely, an evolved NodeB (evolved NodeB, eNB or eNodeB), in an LTE system; or may be a radio controller in a cloud radio access network (cloud radio access network, CRAN) scenario; or may be a next-generation NodeB (gNodeB, gNB) in a fifth-generation mobile communication technology (5th generation mobile networks, 5G), namely, new radio (new radio, NR) access, or a base station in another future network system. Alternatively, the network device 110 may be a relay station, an access point, a vehicle-mounted device, a wearable device, a network device in a future 5G network, a network device in a future evolved PLMN network, or the like. This is not limited in embodiments of this application.

The terminal device 121 or the terminal device 122 may be user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The terminal device may alternatively be a terminal in a form of a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a handheld device, a wearable device, a computing device, a portable device, a vehicle-mounted device, or the like, a smartphone, smart glasses, a terminal device in a 5G network, a terminal device in a future evolved public land mobile communication network (public land mobile network, PLMN), or the like. This is not limited in embodiments of this application.

It can be understood that the network device 110 in FIG. 1 may alternatively be replaced with a terminal device 110. To be specific, embodiments of this application are applied to a scenario of direct communication, for example, device-to-device (device-to-device, D2D). For example, embodiments of this application may be applied to vehicle-to-other devices (vehicle-to-everything, V2X).

For ease of description, device numbers are omitted in the following embodiments. For example, a "terminal device" represents the "terminal device 121 or terminal device 122", and a "network device" represents the "network device 110".

First, some concepts in embodiments of this application are described.

1. SRS, SRS resource, SRS port, and SRS comb (comb)

An SRS is an uplink reference signal sent by a terminal device to a network device (for example, a base station). The access network device obtains a UL channel of the terminal device based on the SRS sent by the terminal device. Alternatively, the access network device obtains a DL channel of the terminal device based on channel reciprocity, to perform data scheduling (for example, precoding corresponding to downlink data, a modulation and coding scheme (modulation and coding scheme, MCS) corresponding to downlink data, or a scheduled time-frequency resource corresponding to downlink data) on the terminal device based on the DL channel. User equipment (user equipment, UE) and/or a user in the following descriptions may be considered as a terminal device.

An SRS resource is configured by a network device (for example, a base station), and one SRS resource may correspond to a time-frequency resource and a code domain resource. One code domain resource corresponds to one SRS sequence, and is also referred to as an SRS sequence resource. One SRS resource may correspond to one or more SRS ports. One or more SRS ports may correspond to a same time-frequency resource, and different SRS ports correspond to different SRS sequences, or different SRS ports correspond to different time-frequency resources. In an implementation, the SRS resource is semi-statically configured by the network device by using a higher-layer parameter. One SRS port corresponds to one group of time-frequency resources and one SRS sequence. A terminal device sends a corresponding SRS sequence on a time-frequency resource corresponding to one or more ports that correspond to one SRS resource. The SRS sequence may also be referred to as an SRS transmit symbol sequence, an SRS transmit symbol vector, or the like. A name of the SRS sequence is not limited in embodiments of this application.

SRS port: An SRS port is also referred to as a port or an antenna port. In the following embodiments, a port represents an SRS port. The SRS port is used to carry an SRS. One SRS port corresponds to one SRS, or one SRS port corresponds to one SRS sequence. Different SRS ports may be multiplexed in at least one of the following modes: a code division mode, a frequency division mode, a time division mode, or a space division mode. In an implementation, one SRS resource may include $N_{ap}^{SRS} \in \{1, 2, 4\}$ SRS ports (antenna port) $\{p_i\}_{i=0}^{N_{ap}^{SRS}-1}$, where $p_i$ = 1000+$i$. Each SRS port corresponds to at least one of the following resources: a specific time domain resource, frequency domain resource, or code domain resource. Usually, each SRS port occupies different time domain, frequency domain, or code domain resources, to reduce mutual interference or ensure orthogonality between ports. Each SRS port corresponds to a physical antenna or a virtual antenna of a terminal device. In embodiments of this application, a port index 0 is equivalent to a port index 1000, a port index 1 is equivalent to a port index 1001, a port index 2 is equivalent to a port index 1002, and a port index 3 is equivalent to a port index 1003, where the port index 1, the port index 2, the port index 3, and the port index 4 represent the port index 1001, the port index 1002, the port index 1003, and the port index 1004 respectively. To simplify description, in an example process in embodiments of this application, a port 0 may represent the port index 0, a port 1 may represent the port index 1, a port 2 may represent the port index 2, and a port 3 may represent the port index 3. A quantity of ports is not limited to 4, and the quantity of ports may be greater than 4. For example, there are eight ports, which correspond to port indexes 0 to 7 or indexes 1000 to 1007 respectively.

Reference port corresponding to an SRS resource: A reference port corresponding to an SRS resource may be the 1st SRS port, or a port with a port index of 0, or a port with a smallest port index among ports corresponding to the SRS resource.

SRS comb (comb): A comb divides frequency domain subcarriers into a plurality of groups, and a frequency domain interval between two adjacent subcarriers in each group of subcarriers is a fixed value. That is, frequency domain subcarriers on one SRS comb are distributed at equal intervals. A frequency domain interval between two subcarriers is also referred to as a total comb quantity $K_{TC}$. The comb is also some subcarriers extracted at equal intervals in frequency domain. An interval of extraction is referred to as a total comb quantity $K_{TC}$. $K_{TC}$ is semi-statically configured by a network device by using a higher-layer parameter. For example, $K_{TC}$ = {2,4,8}. The total comb quantity $K_{TC}$ may also be understood as that frequency domain subcarriers are divided into $K_{TC}$ equally spaced subcarrier groups. The total comb quantity $K_{TC}$ may also be referred to as comb density or a frequency domain comb quantity. The total comb quantity $K_{TC}$ may also represent a total quantity of supported comb offsets. FIG. 2 shows an example of a comb in the case of three different comb quantities according to this application. A comb may be understood as a subcarrier group corresponding to a comb offset. The comb offset may also be referred to as a comb for short. For example, a comb offset X may also be referred to as a comb X. In FIG. 2, each cell represents a resource element (resource element, RE) or a subcarrier, and a black-filled cell is an example of an RE position or a subcarrier position occupied by a comb in the case of different comb quantities. On the left of FIG. 2, $K_{TC}$ = 2 indicates that frequency domain subcarriers are divided, based on a subcarrier spacing of 2, into two subcarrier groups, namely, two combs, which respectively correspond to comb offsets 0 and 1. An SRS port of a terminal device may send a corresponding SRS on one of the two combs. In the middle of FIG. 2, $K_{TC}$ = 4 indicates that frequency domain subcarriers are divided, based on a subcarrier spacing of 4, into four subcarrier groups, namely, four combs, which respectively correspond to comb offsets 0, 1, 2, and 3. An SRS port of a terminal device may send a corresponding SRS on one of the four combs. On the right of FIG. 2, $K_{TC} = 8$ indicates that frequency domain subcarriers are divided, based on a subcarrier spacing of 8, into eight subcarrier groups, namely, eight combs, which respectively correspond to comb offsets 0, 1, 2, 3, 4, 5, 6, and 7. An SRS port of a terminal device may send an SRS on one of the eight combs. A comb offset (comb offset, CO) indicates a subcarrier offset value of a comb relative to a reference comb. For example, a comb offset of a black-filled cell in FIG. 2 is 0. A plurality of ports of an SRS resource may be distributed on a same comb, or may be distributed on two or more combs. The reference comb may be a starting subcarrier of a frequency domain unit, where the frequency domain unit may be one or more RBs, or a frequency domain subband. In an implementation, a reference comb offset corresponding to a subcarrier 0 that corresponds to a common resource block 0 may be defined as 0. In another implementation, a reference comb offset corresponding to a lowest subcarrier in a bandwidth part (bandwidth part, BWP) may be defined as 0. A comb offset corresponding to the reference comb is referred to as a reference comb offset. Usually, the reference comb offset is 0.

For example, a CO of a port P may be denoted as $k_{TC}^p$, and a frequency domain starting position $k_0^p$ of the port P may be obtained according to a formula (1):

$$k_0^p = \bar{k}_0^p + n_{offset}^{FH} + n_{offset}^{RPFS} \qquad (1)$$

In the formula (1), $n_{offset}^{FH} + n_{offset}^{RPFS}$ represents a frequency domain subband offset, $n_{offset}^{FH}$ corresponds to a frequency domain offset of a frequency-hopping subband used for frequency-hopping sending of an SRS, and $n_{offset}^{RPFS}$ corresponds to a frequency domain offset of a subband used for sending an SRS during sending of a partial SRS (referred to as a partial SRS). $\bar{k}_0^p$ may be obtained according to a formula (2):

$$\bar{k}_0^p = n_{shift} N_{SC}^{RB} + (k_{TC}^p + k_{offset}^{i}) \bmod K_{TC} \qquad (2)$$

In the formula (2), $n_{shift} N_{SC}^{RB}$ is a frequency domain resource offset, and $n_{shift} N_{SC}^{RB}$ represents a frequency domain offset value relative to a reference frequency domain position during sending of an SRS. The frequency domain offset value may be one or more resource blocks (resource block, RB). $n_{shift}$ represents a quantity of frequency domain resource blocks (RB) of an offset, $N_{SC}^{RB}$ represents a quantity of subcarriers included in one RB, and $k_{offset}^{i}$ is a comb offset adjustment value. When the network device configures higher-layer signaling *SRS-PosResource* for the terminal device, $k_{offset}^{i}$ represents a comb offset adjustment value on a symbol with an index of *l'*; otherwise, $k_{offset}^{i} = 0$. mod($\cdot$) is a modulo operation. $k_{TC}^p$ may be obtained according to a formula (3):

$$k_{TC}^p = \begin{cases} (\bar{k}_{TC} + K_{TC} / 2) \bmod K_{TC} & if\ N_{ap}^{SRS} = 4, p \in \{1001,1003\}, and\ n_{SRS}^{CS,\max} = 6 \\ (\bar{k}_{TC} + K_{TC} / 2) \bmod K_{TC} & if\ N_{ap}^{SRS} = 4, p \in \{1001,1003\}, and\ n_{SRS}^{CS} \in \{n_{SRS}^{CS,\max} / 2, \cdots, n_{SRS}^{CS,\max} - 1\} \\ \bar{k}_{TC} & otherwise \end{cases} \qquad (3)$$

In the formula (3), $\bar{k}_{TC}$ is a comb offset parameter $\bar{k}_{TC}$ corresponding to an SRS resource configured by the network device for the terminal device. $k_{TC}$ may alternatively be a comb offset of a reference port corresponding to the SRS resource. A cyclic shift value of a reference port may also be referred to as a cyclic shift value of a reference port corresponding to an SRS resource or a cyclic shift value of a reference port corresponding to an SRS resource. $K_{TC}$ is a total comb quantity. $N_{ap}^{SRS}$ is a total quantity of ports corresponding to the SRS resource. $n_{RS}^{cs,\max}$ is a maximum cyclic shift value. $n_{SRS}^{CS}$ is the cyclic shift value of the reference port. $\bar{k}_{TC}$ and/or $n_{SRS}^{CS}$ are/is semi-statically configured by the network device by using a higher-layer parameter *transmissionComb*.

Optionally, P in the formula (1) to the formula (3) is represented as a port $P$ or a $p^{th}$ group of ports.

3. SRS cyclic shift (cyclic shift, CS)

A sequence $r_{u,v}^{(\alpha,\delta)}(n)$ used for an SRS in LTE and NR is obtained through a cyclic shift on a base sequence (base sequence) $\bar{r}_{u,v}(n)$.

$$r_{u,v}^{(\alpha,\delta)}(n) = e^{j\alpha n}\bar{r}_{u,v}(n), \quad 0 \le n \le M_{SC,b}^{SRS} - 1 \tag{4}$$

$\alpha$ is a real number, and $\alpha$ is a cyclic shift value, which is also referred to as a CS grid value or a CS index, and may also be referred to as a cyclic shift (CS) or a cyclic shift index. For example, a cyclic shift value Y may also be referred to as a cyclic shift Y or a cyclic shift index Y, where Y is a value. In embodiments of this application, the cyclic shift value is used as an example for description. $\delta = log_2(K_{TC})$, and $\delta$ is an integer. $u, v$ is an index of a base sequence in an SRS base sequence group, and both $u$ and $v$ are integers. $j$ is an imaginary unit. $M_{SC,b}^{SRS}$ is a length of an SRS sequence, $M_{SC,b}^{SRS}$ is a positive integer, and $M_{SC,b}^{SRS} = mN_{SC}^{RB}/2^\delta$, where $N_{SC}^{RB}$ is a quantity of subcarriers in a resource block (resource block, RB), and $m$ is a quantity of RBs occupied by an SRS during one frequency-hopping transmission of the SRS. $n$ is a number of an element in the SRS sequence, and $n$ is an integer. Sequence elements (to be specific, elements in the SRS sequence) are sequentially mapped, in ascending order of indexes, to subcarriers that correspond to an SRS resource and whose subcarrier indexes are sorted in ascending order.

The base sequence $\bar{r}_{u,v}(n)$ may be a sequence generated based on a Zadoff-Chu (ZC) sequence, for example, is the ZC sequence, or is a sequence generated by extending or truncating the ZC sequence by using a cyclic shift value. A cyclic shift value $\alpha_i$ corresponding to an SRS port $p_i$ is obtained according to a formula (5):

$$\alpha_i = 2\pi \frac{n_{SRS}^{CS,i}}{n_{SRS}^{cs,max}} \tag{5}$$

$n_{SRS}^{CS,i}$ is a cyclic shift value of the port $p_i$. $n_{SRS}^{CS,i}$ in the formula (5) is obtained according to a formula (6):

$$n_{SRS}^{CS,i} = \begin{cases} \left(n_{SRS}^{cs} + \frac{n_{SRS}^{cs,max}\left\lfloor (p_i - 1000)/2 \right\rfloor}{N_{ap}^{SRS}/2}\right) \bmod n_{SRS}^{cs,max} & \text{if } N_{ap}^{SRS} = 4 \text{ and } n_{SRS}^{cs,max} = 6 \\ \left(n_{SRS}^{cs} + \frac{n_{SRS}^{cs,max}(p_i - 1000)}{N_{ap}^{SRS}}\right) \bmod n_{SRS}^{cs,max} & \text{otherwise} \end{cases} \tag{6}$$

$N_{ap}^{SRS}$ represents a quantity of ports (to be specific, a quantity of SRS ports included in the SRS resource), $n_{SRS}^{CS} \in \left\{0, 1, \cdots, n_{SRS}^{CS,max} - 1\right\}$ is a cyclic shift value of a reference port, and $n_{SRS}^{CS}$ is semi-statically configured by a network device by using a higher-layer parameter *transmissionComb*. $n_{RS}^{cs,max}$ is a maximum cyclic shift value. A meaning of $n_{RS}^{cs,max}$ may be understood as equally dividing delay domain into $n_{RS}^{cs,max}$ portions, or may be understood as equally dividing a phase value $2\pi$ into $n_{RS}^{cs,max}$ portions. When CS values are allocated to a plurality of ports corresponding to an SRS resource, CSs corresponding to the ports of the SRS resource are equally divided within a length of $n_{RS}^{cs,\max}$ based on a maximum interval if possible, to ensure minimum interference between the plurality of ports of the SRS resource. In an implementation, there is an association relationship between values of $n_{RS}^{cs,\max}$ and $K_{TC}$, as shown in Table 1.

Table 1

| $K_{TC}$ | $n_{RS}^{cs,\max}$ |
|---|---|
| 2 | 8 |
| 4 | 12 |
| 8 | 6 |

For different base sequences, interference occurs between obtained SRS sequences regardless of whether a same cyclic shift value or different cyclic shift values are used. To be specific, the network device allocates, to different terminal devices, SRS sequences obtained based on a same cyclic shift value or different cyclic shift values of different base sequences, the terminal devices may send the SRS sequences on a same time-frequency resource, and the SRS sequences cause interference between the terminal devices.

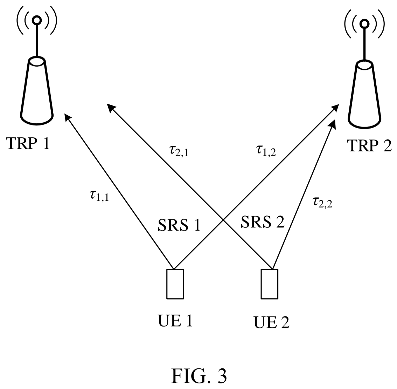

For a same base sequence, different SRS sequences may be obtained by using different cyclic shift values $\alpha$. Because SRS sequences obtained based on a same base sequence and different cyclic shift values are orthogonal to each other, the network device may allocate the SRS sequences obtained based on the same base sequence and the different cyclic shift values to different terminal devices, and the terminal devices may send the SRS sequences on a same time-frequency resource. The SRS sequences do not cause interference between the terminal devices. However, because distances from different terminal devices to different network devices are different, different terminal devices have different delays. A reception point (transmission reception point, TRP) 1 and a TRP 2 are used as an example. As shown in FIG. 3, the TRP 1 and the TRP 2 configure mutually orthogonal SRS resources for UE 1 and UE 2. Usually, a base sequence of an SRS 1 is the same as a base sequence of an SRS 2, but cyclic shift values $\alpha$ of the SRS 1 and the SRS 2 are different. In this way, the SRS 1 and the SRS 2 are orthogonal to each other. However, because distances from the UE 1 and the UE 2 to the TRP 1 and the TRP 2 are different, a delay of the SRS 1 sent by the UE 1 to the TRP 2 is different from a propagation delay of the SRS 2 sent by the UE 2 to the TRP 2. For example, as shown in FIG. 3, a propagation delay from the UE 1 to the TRP 1 is $\tau_{1,1}$, a propagation delay from the UE 1 to the TRP 2 is $\tau_{1,2}$, a propagation delay from the UE 2 to the TRP 1 is $\tau_{2,1}$, and a propagation delay from the UE 2 to the TRP 2 is $\tau_{2,2}$. Therefore, $\tau_{1,1} < \tau_{1,2}$, and $\tau_{2,1} < \tau_{2,2}$. Orthogonality is ensured through code division multiplexing. For example, orthogonality between the SRS 1 and the SRS 2 is ensured by using different SRS cyclic shift values. It is assumed that a maximum quantity of SRS CSs configured for the UE 1 and the UE 2 is 12, the SRS 1 occupies a CS 0, a CS 3, a CS 6, and a CS 9, and the SRS 2 occupies a CS 1, a CS 4, a CS 7, and a CS 10. When there is no delay difference, the SRS 1 and the SRS 2 occupy different delay ranges in delay domain, so that code division orthogonality can be ensured. However, when there is a delay difference, a propagation delay between the TRP 2 and the UE 1 is greater than a propagation delay between the TRP 2 and the UE 2. It is assumed that the TRP 2 and the UE 2 are time-aligned. In this case, a channel result obtained by the TRP 2 by measuring the SRS 1 has an offset in delay domain, leading to interference with the SRS 2, and affecting accuracy of channel measurement.

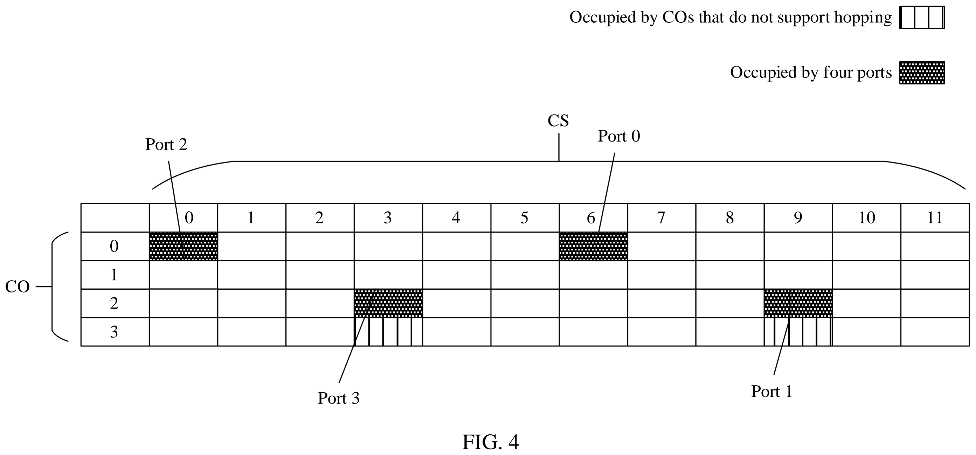

In a possible implementation, to resolve the foregoing interference problem, a frequency domain resource for sending an SRS may be randomized through comb offset hopping (CO hopping), to reduce interference to the SRS. Good interference randomization effect can be achieved by randomizing, through CO hopping, a frequency domain resource for sending an SRS. However, in an actual application scenario, there are both a terminal device supporting CO hopping and a terminal device not supporting CO hopping. The terminal device not supporting CO hopping may also be referred to as a legacy terminal device (for example, legacy UE, or a terminal device of Release 15 to Release 17). In this application, the terminal device supporting CO hopping is a terminal device that can randomize, through CO hopping, a frequency domain resource for sending an SRS. In other words, the terminal device supporting CO hopping has a capability or a function of randomizing, through CO hopping, a frequency domain resource for sending an SRS. In this application, the terminal device not supporting CO hopping is a terminal device that cannot randomize, through CO hopping, a frequency domain resource for sending an SRS. In other words, the terminal device not supporting CO hopping does not have a capability or a function of randomizing, through CO hopping, a frequency domain resource for sending an SRS. When CO hopping is enabled, to avoid a more serious interference problem caused by random hopping, a plurality of ports corresponding to an SRS resource need to occupy a same CO. When a network device configures, on a same comb for multiplexing, a port corresponding to an SRS resource of the terminal device supporting CO hopping and a port corresponding to an SRS resource of the terminal device not supporting CO hopping, channel estimation performance of the two terminal devices may be seriously degraded. Therefore, how to avoid degradation of channel estimation performance in the foregoing case while fully leveraging interference randomization effect of CO hopping is an urgent problem to be resolved. Comb offsets for hopping of a plurality of ports corresponding to an SRS resource of a terminal device are consistent. For example, in CO hopping, COs of ports may randomly change. For example, as shown in FIG. 4, an SRS resource corresponds to a port 0, a port 1, a port 2, and a port 3, comb offsets of the port 0 and the port 2 are a CO 0, and comb offsets of the port 1 and the port 3 are a CO 2. In CO hopping, all of the four ports may be moved downward by one CO. After the movement, comb offsets of the port 0 and the port 2 are a CO 1, and comb offsets of the port 1 and the port 3 are a CO 3. However, the CO 3 has been occupied by a CO that does not support CO hopping. Consequently, severe interference is caused to an SRS sent on the CO 3.

That is, in the foregoing implementation, to reduce interference, COs, by which ports used by the terminal device to send an SRS are hopped, are the same. Consequently, a CO obtained through hopping overlaps a CO of UE that does not support hopping, and sending of an SRS on the overlapping CO is affected. In embodiments of this application, a plurality of ports for sending an SRS may be grouped, and different port groups may correspond to different CO hopping sets. In this way, ports in different port groups may hop at different CO steps. This can reduce a probability of repetition with a CO of a port of UE that does not support CO hopping, to reduce interference during sending of the SRS.

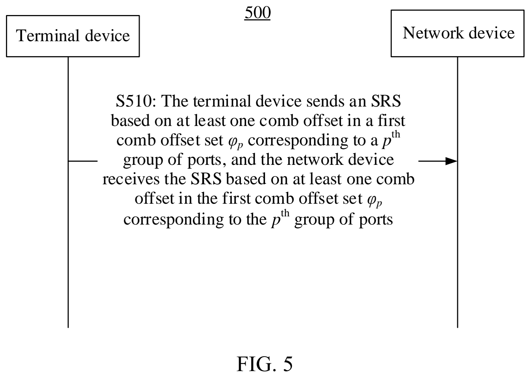

The following describes a communication method in embodiments of this application with reference to FIG. 5. As shown in FIG. 5, the communication method 500 includes the following steps.

S510: A terminal device sends an SRS based on at least one comb offset in a first comb offset set $\varphi_p$ corresponding to a $P^{\text{th}}$ group of ports, and a network device receives the SRS based on at least one comb offset in the first comb offset set $\varphi_p$ corresponding to the $P^{\text{th}}$ group of ports.

A first SRS resource corresponds to $N_{ap}^{SRS}$ ports. The $N_{ap}^{SRS}$ ports may be divided into P groups of ports. The P groups of ports include the $P^{\text{th}}$ group of ports. A value of $P$ is a positive integer greater than or equal to 1 and less than or equal to $N_{ap}^{SRS}$. $p$ is a positive integer ranging from 1 to $P$. For example, $P$ may be sequentially 1, 2, ..., and $P$; or $P$ may be a positive integer ranging from 0 to P-1, and P may be sequentially 0, 1, ..., and P-1. Optionally, $N_{ap}^{SRS}$ may be configured by the network device for the terminal device.

Optionally, the first comb offset set $\varphi_p$ may also be referred to as a set supporting CO hopping, or may be referred to as a CO value to which the $p^{\text{th}}$ group of ports can be mapped after CO hopping is enabled. The first comb offset set $\varphi_p$ may alternatively be replaced with a first comb offset range $\varphi_p$, or may be replaced with a first comb offset area $\varphi_p$, or the like. A name of the first comb offset set is not limited in this embodiment of this application.

Optionally, a length $n_p$ of the first comb offset set $\varphi_p$ may be specified in a protocol or configured by the network device. The length $n_p$ of the first comb offset set $\varphi_p$ may also be understood as a quantity of comb offsets included in the first comb offset set $\varphi_p$. $n_p$ is a positive integer greater than or equal to 1 and less than or equal to $K_{TC}$. $n_p$=1 indicates that the $p^{\text{th}}$ group of ports does not support CO hopping, or at each SRS sending moment, an SRS corresponding to the $P^{\text{th}}$ group of ports can be sent only on a unique CO. $n_p = K_{TC}$ indicates that the $P^{\text{th}}$ group of ports supports CO hopping on all COs. To be specific, in this case, the first comb offset set $\varphi_p = \{0,1,\cdots,K_{TC}-1\}$, and at each SRS sending moment, an SRS corresponding to the $P^{\text{th}}$ group of ports can be sent only on all supported COs.

Optionally, P being 1 indicates that the $N_{ap}^{SRS}$ ports corresponding to the first SRS resource belong to one port group, where $N_{ap}^{SRS}$ is a positive integer; indicates that the $N_{ap}^{SRS}$ ports corresponding to the first SRS resource correspond to a same first comb offset set $\varphi_p$; or indicates that the $N_{ap}^{SRS}$ ports corresponding to the first SRS resource correspond to a same available CO value to which mapping can be performed (when CO hopping is enabled).

Optionally, P being $N_{ap}^{SRS}$ indicates that one of the $N_{ap}^{SRS}$ ports corresponding to the first SRS resource belongs to one port group, to be specific, the length of the first comb offset set $\varphi_p$ is 1, and one port in the $p^{\text{th}}$ group of ports corresponds to one comb offset; and indicates that each port of the first SRS resource corresponds to one first comb offset set $\varphi_p$. In an implementation, all ports of the first SRS resource may correspond to different first comb offset sets $\varphi_p$. In this case, all ports of the first SRS resource may perform CO hopping in different available CO areas.

Optionally, *P* being a positive integer greater than 1 or less than $N_{ap}^{SRS}$ indicates that at least two ports belong to one port group. In an implementation, different port groups of the *P* groups of ports of the first SRS resource correspond to different first comb offset sets $\varphi_p$, and different port groups include different ports. In this case, ports included in the different port groups of the first SRS resource may perform CO hopping in different available CO areas.

Optionally, before S510, the terminal device may group the $N_{ap}^{SRS}$ ports, and the terminal device may obtain the P groups of ports based on the quantity P of port groups and the $N_{ap}^{SRS}$ ports. Optionally, before S510, the network device may configure the $N_{ap}^{SRS}$ ports and the quantity P of port groups for the terminal device. The terminal device may determine the P groups of ports based on the $N_{ap}^{SRS}$ ports and P that are configured by the network device. For example, a quantity of ports included in each group of ports is $N_{ap}^{SRS} / P$. If $N_{ap}^{SRS} / P$ is not an integer, a round-up or round-down operation may be performed on $N_{ap}^{SRS} / P$ to obtain a quantity of ports included in each group of ports. Optionally, each group of ports may be obtained through equally spaced extraction from the $N_{ap}^{SRS}$ ports. To be specific, an interval between port indexes of adjacent ports included in each of the P groups of ports is $N_{ap}^{SRS} / P$. For example, when port indexes corresponding to a plurality of ports included in each group of ports are sorted in ascending order, an absolute value of a difference between port indexes of adjacent ports is $N_{ap}^{SRS} / P$. Because CSs corresponding to ports of an SRS resource are equally divided within a length of $n_{RS}^{cs,\max}$ based on a maximum interval if possible, during grouping of the ports, extraction is also performed at equal intervals as far as possible. In this way, when at least one comb offset set is selected from the first comb offset set for a group of ports, a probability of overlapping with a comb offset of a port of an SRS resource of another terminal device can be reduced as far as possible, to help reduce interference. For example, $N_{ap}^{SRS}$ is 4, and there are a total of four ports: a port 0, a port 1, a port 2, and a port 3. *P* is 2, and the ports may be divided into two groups of ports. A first group of ports includes the port 0 and the port 2, and a second group of ports includes the port 1 and the port 3. For the first group of ports, a difference between port indexes corresponding to the port 2 and the port 0 is 2. For the second group of ports, a difference between port indexes corresponding to the port 3 and the port 1 is also 2.

Optionally, before S510, or before the terminal device groups the $N_{ap}^{SRS}$ ports, the method 500 further includes: The terminal device determines to perform CO hopping, and when performing CO hopping, the terminal device may perform S510, or the terminal device groups the $N_{ap}^{SRS}$ ports. In other words, when determining that the SRS needs to be sent in a hopping mode, the terminal device may perform S510 or group the $N_{ap}^{SRS}$ ports. Optionally, the network device may send indication information for indicating the terminal device to perform CO hopping, and the terminal device may determine, based on the indication information for indicating the terminal device to perform CO hopping, to perform CO hopping. Optionally, the terminal device may determine, based on the length $n_p$ of the first comb offset set $\varphi_p$, whether to perform CO hopping. For example, the length $n_p$ of the first comb offset set $\varphi_p$ being 1 indicates that CO hopping is not to be performed, and the length $n_p$ of the first comb offset set $\varphi_p$ being greater than 1 and less than or equal to $K_{TC}$ indicates that CO hopping is to be performed. A manner of determining, by the terminal device, to perform CO hopping is not limited in this embodiment of this application.

Optionally, the terminal device may determine a comb offset set of each of the P groups of ports. For example, the network device may directly configure the comb offset set of each group of ports; or the comb offset set of each group of ports may be specified in the protocol; or the network device may configure a parameter for determining the comb offset set of each group of ports, and the terminal device determines the comb offset set of each group of ports based on the configured parameter. A form of determining, by the terminal device, the comb offset set of each of the P groups of ports is not limited in this embodiment of this application. Optionally, in some possible implementations, the network device may configure, for the terminal device, a comb offset set that corresponds to each group of ports and that does not support CO hopping, and the terminal device determines, based on $K_{TC}$ comb offsets and the comb offset set that does not support CO hopping, a comb offset set, supporting CO hopping, of each group of ports. A sum of a quantity of comb offsets included in a comb offset set, not supporting CO hopping, of a group of ports and a quantity of comb offsets included in a comb offset set, supporting CO hopping, of the group of ports is $K_{TC}$. A union set of comb offsets included in a comb offset set, not supporting CO hopping, of a group of ports and comb offsets included in a comb offset set, supporting CO hopping, of the group of ports is a set $\{0,1,2,\cdots,K_{TC}-1\}$. A comb offset set, not supporting CO hopping, of a group of ports may also be referred to as a comb offset set that cannot be used to send an SRS corresponding to the group of ports. For example, the $p$th group of ports is used as an example. $K_{TC} = 8$, and a second comb offset set, not supporting CO hopping, of the $P$th group of ports is $\{0, 1, 2, 3\}$. In this case, the first comb offset set, supporting CO hopping, of the $P$th group of ports is as follows: $\varphi_p = \{4, 5, 6, 7\}$. A sum of the length of the first comb offset set and a length of the second comb offset set is $K_{TC}$. A union set including the first comb offset set and the second comb offset set is $\{0, 1, 2, 3, 4, 5, 6, 7\}$,

The comb offset set, determined by the terminal device, of each group of ports may be in different forms. The first comb offset set $\varphi_p$ of the $p$th group of ports of the P groups of ports is used below as an example for description. The following describes, in three cases, the first comb offset set $\varphi_p$ corresponding to the $P$th group of ports.

Case 1: In a possible implementation, comb offset intervals between any two adjacent comb offsets in the first comb offset set $\varphi_p$ corresponding to the $p$th group of ports are equal. In other words, comb offsets included in the first comb offset set $\varphi_p$ are discrete at equal intervals. Two adjacent comb offsets may be understood as follows: Comb offset values included in the first comb offset set $\varphi_p$ are sorted in ascending order to obtain the following set:

$$\varphi_p^{'} = \{CO_p^o, CO_p^1, \cdots, CO_p^k, \ldots, CO_p^{n_p-1}\}$$ , where a $k$th comb offset $CO_p^k$ is adjacent to a $k$-1th comb offset

$CO_p^{k-1}$ . That comb offset intervals between any two adjacent comb offsets are equal may be understood as follows: A difference between the $k$th comb offset $CO_p^k$ and the $k$-1th comb offset $CO_p^{k-1}$ is $CO_p^k - CO_p^{k-1}$ , and a difference between a $j$th comb offset $CO_p^j$ and a $j$-1th comb offset $CO_p^{j-1}$ is $CO_p^j - CO_p^{j-1}$ . In this case,

$CO_p^k - CO_p^{k-1} = CO_p^j - CO_p^{j-1}$ , and $k \neq j$. The 1st comb offset and the last comb offset that are included in the first comb offset set $\varphi_p$ may also be considered as adjacent comb offsets. Alternatively, the 1st comb offset and the last comb offset that are included in the set $\varphi_p^{'} = \{CO_p^o, CO_p^1, \cdots, CO_p^k, \ldots, CO_p^{n_p-1}\}$ obtained by sorting, in ascending order, the comb offset values included in the first comb offset set $\varphi_p$ may also be considered as adjacent comb offsets. That is, the following is met: $CO_p^k - CO_p^{k-1} = CO_p^0 + K_{TC} - CO_p^{n_p-1}$ . For example, $K_{TC}$ is 8, and the first comb offset set is as follows: $\varphi_p = \{0, 2, 4, 6\}$. This indicates that the $p$th group of ports corresponds to a comb offset 0, a comb offset 2, a comb offset 4, and a comb offset 6, and a comb offset interval between two adjacent comb offsets is 2, where an interval between the comb offset 6 and the comb offset 0 may also be 2.

It should be noted that the foregoing describes a definition of two adjacent comb offsets, and the definition of two adjacent comb offsets is applicable to the case 1, and is also applicable to a definition of adjacent comb offsets in other embodiments of this application. In addition, a definition of adjacent CS values is also similar to the definition of adjacent comb offsets. To avoid repetition, details are not described.

For example, in the case 1, if the network device configures or predefines at least two of the following three parameters: the quantity $n_p$ of comb offsets included in the first comb offset set $\varphi_p$, a comb offset interval between any two adjacent comb offsets, and the 1st comb offset (also referred to as a reference comb offset) in the first comb offset set, the terminal device may determine the first comb offset set $\varphi_p$ based on the three parameters.

Optionally, this implementation may also be understood as follows: The first comb offset set $\varphi_p$ corresponding to the $P$th group of ports includes at least one comb offset subset, and each comb offset subset includes one comb offset. Comb offset intervals between any two adjacent comb offset subsets are equal. The last comb offset subset and the 1st comb offset subset may also be referred to as adjacent comb offset subsets. Two adjacent comb offset subsets may be understood as follows: The at least one comb offset subset is sorted in ascending order of comb offsets included in the comb offset subset. For a $k$th comb offset subset and a $(k-1)$th comb offset subset, a minimum value of a comb offset included in the $k$th comb offset subset is greater than a maximum value of a comb offset included in the $k$th comb offset subset, where k is any one of 1, 2, ..., or $S$, and S represents a total quantity of subsets. In this case, the $k$th comb offset subset and the $(k\text{-}1)^{th}$ comb offset subset are adjacent comb offset subsets, and an $S^{th}$ comb offset subset and the $1^{st}$ comb offset subset are adjacent comb offset subsets. A comb offset interval between two adjacent comb offset subsets may be understood as a difference between $j^{th}$ comb offsets included in the two adjacent comb offset subsets, or an absolute value of a difference between $j^{th}$ comb offsets included in the two adjacent comb offset subsets. In a case, a comb offset interval between two adjacent comb offset subsets may be a difference between the $1^{st}$ comb offsets included in the two adjacent comb offset subsets, or an absolute value of a difference between the $1^{st}$ comb offsets included in the two adjacent comb offset subsets. For example, $K_{TC}$ is 8, and the first comb offset set $\varphi_p$ = {0, 2, 4, 6} includes four comb offset subsets: {0},{2},{4},{6} . A comb offset interval between the $1^{st}$ comb offset subset {0} and the $2^{nd}$ comb offset subset {2} is 2, a comb offset interval between the $2^{nd}$ comb offset subset {2} and the $3^{rd}$ comb offset subset {4} is 2, a comb offset interval between the $3^{rd}$ comb offset subset {4} and the $4^{th}$ comb offset subset {6} is 2, and a comb offset interval between the $4^{th}$ comb offset subset {6} and the $1^{st}$ comb offset subset {0} is 2.

It should be noted that the foregoing describes a definition of adjacent comb offset subsets, and the definition of adjacent subsets is applicable to the case 1, and is also applicable to a definition of adjacent subsets in other embodiments of this application. In addition, a definition of adjacent CS subsets is similar to the definition of adjacent comb offset subsets. To avoid repetition, details are not described. In addition, the foregoing describes a definition of a comb offset interval between two adjacent comb offset subsets, and the definition of a comb offset interval between two adjacent comb offset subsets is applicable to the case 1, and is also applicable to a definition of a comb offset interval between two adjacent comb offset subsets in other embodiments of this application. In addition, a definition of a CS interval between adjacent CS subsets is also similar to the definition of a comb offset interval between two adjacent comb offset subsets. To avoid repetition, details are not described.

Case 2: The first comb offset set $\varphi_p$ corresponding to the $P^{th}$ group of ports includes at least one comb offset subset, comb offsets included in each of the at least one comb offset subset are consecutive, and comb offset intervals between any two adjacent comb offset subsets of the at least one comb offset subset are equal. That is, comb offsets included in a comb offset subset are consecutive, and comb offset subsets are equally spaced. The last comb offset subset and the $1^{st}$ comb offset subset may also be two adjacent comb offset subsets. That comb offsets included in each comb offset subset are consecutive may be understood as that an interval between adjacent comb offsets included in each comb offset subset is 1. For example, that comb offsets included in a comb offset subset are consecutive may be understood as follows: The comb offsets included in the comb offset subset are sorted in ascending order of values, and a difference between a $k^{th}$ comb offset $CO_p^k$ and a $(k\text{-}1)^{th}$ comb offset $CO_p^{k-1}$ is as follows: $CO_p^k - CO_p^{k-1} = 1$ . For example, $CO2 - CO1 = 1$. It should be noted that, for a comb offset $K_{TC}$ - 1 and a comb offset 0, the comb offsets may also be considered as consecutive. Optionally, all comb offset subsets include equal quantities of comb offsets. Optionally, a total comb quantity $K_{TC}$ may be exactly divided by an interval between two adjacent comb offset subsets. For example, $K_{TC}$ is 8, and the first comb offset set $\varphi_p$ = {0, 1, 4, 5} includes two subsets: {0,1},{4,5}. Comb offsets included in the $1^{st}$ subset {0,1} are consecutive, comb offsets included in the $2^{nd}$ subset {4, 5} are consecutive, an interval between the $1^{st}$ subset {0,1} and the $2^{nd}$ subset {4, 5} is 4, and an interval between the $2^{nd}$ subset {4, 5} and the $1^{st}$ subset {0,1} is also 4.

For example, in the case 2, if the network device configures or predefines the following three parameters: a quantity of comb offset subsets, a quantity of comb offsets included in each comb offset subset, and a starting comb offset (also referred to as a reference comb offset) in each comb offset subset, the terminal device may determine the first comb offset set $\varphi_p$ based on the three parameters. Alternatively, if the network device configures or predefines one or more of the following parameters: a quantity of comb offset subsets, a quantity of comb offsets included in each comb offset subset, a starting comb offset (also referred to as a reference comb offset) of at least one comb offset subset, and an interval between adjacent comb offset subsets, the terminal device may determine the first comb offset set $\varphi_p$ based on the parameters.

It should be noted that the foregoing describes a definition of comb offsets being consecutive, and the definition of comb offsets being consecutive is applicable to the case 2, and is also applicable to a definition of comb offsets being consecutive in other embodiments of this application. In addition, a definition of CS values being consecutive is also similar to the definition of comb offsets being consecutive. To avoid repetition, details are not described.

It can be understood that, for ease of description, a concept of a comb offset subset is introduced in the case 1 and the case 2. In some cases, a comb offset that may be included in the first comb offset set $\varphi_p$ may have characteristics in the case 1 and the case 2, but whether there is a concept of a comb offset subset is not limited.

Case 3: Comb offsets included in the first comb offset set $\varphi_p$ corresponding to the $P^{th}$ group of ports are consecutive. To be specific, a difference between adjacent comb offsets included in the first comb offset set $\varphi_p$ is 1. For example, the first comb offset set is as follows: $\varphi_p$ = {0, 1, 2, 3} . For a specific definition of comb offsets being consecutive, refer to the descriptions in the case 2.

Optionally, in the case 3, the first comb offset set $\varphi_p$ corresponding to the $p^{th}$ group of ports is obtained based on a reference comb offset $k_{TC,start}^p$ of the $p^{th}$ group of ports and $n_p$ comb offset steps of the $P^{th}$ group of ports, where

$k_{TC,start}^{p}$ is a positive integer. To be specific, $n_p$ consecutive comb offsets may be obtained by using the reference comb offset $k_{TC,start}^{p}$ , and the $n_p$ comb offsets may constitute the first comb offset set $\varphi_p$.

Optionally, the $n_p$ comb offset steps of the $P^{th}$ group of ports may be indicated by the network device, or may be specified in the protocol. The comb offset step may be understood as a hopping value of a comb offset in a case in which CO hopping is enabled. The comb offset step corresponds to the reference comb offset $k_{TC,start}^{p}$ , and represents a further adjustment value of the reference comb offset $k_{TC,start}^{p}$ based on the reference comb offset.

Optionally, the comb offset step represents an additional comb offset value or a comb offset difference relative to the reference comb offset, or the comb offset step represents an additional comb offset value or a comb offset difference relative to a starting comb offset, where the starting comb offset belongs to a comb offset set or a comb offset subset. When CO hopping is enabled, the comb offset step may be understood as an adjustment value or a difference of a comb offset based on a predefined or configured comb offset corresponding to an SRS port (or a corresponding comb offset in a case in which CO hopping is disabled). The comb offset step may also be referred to as a comb offset difference or a comb offset difference value.

Optionally, the reference comb offset $k_{TC,start}^{p}$ of the $p^{th}$ group of ports may be indicated by the network device, or may be specified in the protocol. The reference comb offset $k_{TC,start}^{p}$ of the $p^{th}$ group of ports may be considered as a starting comb offset or a starting position of an available comb offset area when the $p^{th}$ group of ports performs CO hopping.

When the reference comb offset $k_{TC,start}^{p}$ of the $P^{th}$ group of ports is predefined in the protocol, the reference comb offset

$k_{TC,start}^{p}$ may be one of 0, 2, or 4.

Optionally, the reference comb offset $k_{TC,start}^{p}$ of the $p^{th}$ group of ports may be determined based on some parameters configured by the network device. For example, the terminal device may obtain the reference comb offset

$k_{TC,start}^{p}$ of the $P^{th}$ group of ports based on at least one of a total comb quantity $K_{TC}$ configured by the network device,

$N_{ap}^{SRS}$ , a comb offset $\bar{k}_{TC}$ of a reference port, a maximum cyclic shift value $n_{RS}^{cs,max}$ , or a cyclic shift value $n_{SRS}^{CS}$ of a reference port in the $P^{th}$ group of ports. The reference port in the $p^{th}$ group of ports may be a port with a smallest port index in the $P^{th}$ group of ports. For example, $k_{TC,start}^{p}$ may be $k_{TC}^{p}$ in the formula (3). To be specific, the terminal device may determine $k_{TC}^{p}$ obtained according to the formula (3) as $k_{TC,start}^{p}$ . To be specific, $k_{TC}^{p}$ may be understood as a comb offset used when the terminal device does not perform CO hopping. In other words, the reference comb offset

$k_{TC,start}^{p}$ of the first comb offset set $\varphi_p$ used when the terminal device needs to perform CO hopping may be the comb offset determined when the terminal device does not perform CO hopping. The comb offset used when the terminal device does not perform CO hopping may alternatively be a comb offset configured by the network device by default. In an implementation, all ports in the $P^{th}$ group of ports correspond to a same reference comb offset $k_{TC,start}^{p}$ .

The following describes the first comb offset set $\varphi_p$ in the case 3 by using (a) and (b).

(a) The first comb offset set $\varphi_p$ corresponding to the $P^{th}$ group of ports is obtained based on at least one of the total comb quantity $K_{TC}$, the reference comb offset $k_{TC,start}^{p}$ of the $P^{th}$ group of ports, or the $n_p$ comb offset steps of the $P^{th}$ group of ports, the first comb offset set $\varphi_p$ includes $n_p$ comb offsets, the $n_p$ comb offsets are in a one-to-one correspondence with the $n_p$ comb offset steps, and $n_p$ is a positive integer less than $K_{TC}$. That is, one comb offset can be determined based on one comb offset step and the reference comb offset $k_{TC,start}^{p}$ . Optionally, the $n_p$ comb offset steps are consecutive. To be specific, an interval between two adjacent comb offset steps is 1.

Optionally, the network device may send first indication information, and the terminal device may receive the first indication information. The first indication information indicates the total comb quantity $K_{TC}$.

Optionally, the network device may send second indication information, and the terminal device may receive the second indication information. The second indication information may indicate the length $n_p$ of the first comb offset set $\varphi_p$, and $n_p$ may also be referred to as a quantity of comb offsets included in the first comb offset set $\varphi_p$. Optionally, the length $n_p$ of the first comb offset set $\varphi_p$ may alternatively be predefined. For example, the length $n_p$ of the first comb offset set $\varphi_p$ is predefined as 2, 4, or 8.

Optionally, the network device may indicate the $n_p$ comb offset steps, or the $n_p$ comb offset steps may be specified in the protocol. When the network device indicates the $n_p$ comb offset steps, the network device may directly indicate the $n_p$ comb offset steps, or may indirectly indicate the $n_p$ comb offset steps. For example, the network device may indicate a maximum value of the comb offset steps, and the terminal device may determine the $n_p$ consecutive comb offset steps based on the indicated maximum value of the comb offset steps. The network device may alternatively indicate the comb offset steps by using a bitmap. A quantity of bits included in the bitmap is $K_{TC}$, and each bit corresponds to one value in an available comb offset step set $\{0,1,\cdots,K_{TC}-1\}$. A value of a bit in the bitmap being 1 indicates that a step value corresponding to the bit in the available comb offset step set is a comb offset value of the $n_p$ comb offset steps.

Optionally, the first comb offset set is as follows: $\varphi_p = \left\{ k_{CO}^p(0), k_{CO}^p(1), k_{CO}^p(2), \cdots, k_{CO}^p\left(n_p - 1\right) \right\}$, where $k_{CO}^p(k)$ represents a comb offset with an index of $k$ or a $k$th comb offset in the first comb offset set. To be specific, the first comb offset set may include $n_p$ comb offsets, and a specific form of the $n_p$ comb offsets may not be limited. When the first comb offset set $\varphi_p = \left\{ k_{CO}^p(0), k_{CO}^p(1), k_{CO}^p(2), \cdots, k_{CO}^p\left(n_p - 1\right) \right\}$, optionally, that the terminal device sends the SRS based on the at least one comb offset in the first comb offset set $\varphi_p$ corresponding to the $p$th group of ports in S510 includes:

The terminal device determines $\overline{k}_0^p = n_{shift} N_{SC}^{RB} + k_{CO}^p(f(n_{SRS}))$, and determines a frequency domain starting position $k_0^p = \overline{k}_0^p + n_{offset}^{FH} + n_{offset}^{RPFS}$ to which the $p$th group of ports is mapped, where $n_{offset}^{FH} + n_{offset}^{RPFS}$ represents a frequency domain subband offset.

Optionally, $f(\mathrm{n}_{SRS}) = \left\lceil \sum_{m=0}^{B-1} c(m) \cdot 2^m \right\rceil \mod n_p$, where $B$ is a positive integer greater than or equal to $\left\lceil \log_2 n_p \right\rceil$, and $\lceil \cdot \rceil$ is a round-up operation. In an implementation, a value of $B$ may be 8, that is, $f(\mathrm{n}_{SRS}) = \left\lceil \sum_{m=0}^{7} c(m) \cdot 2^m \right\rceil \mod n_p$. $c(m)$ is a random sequence, or is a subsequence including a part of a random sequence. In a possible implementation, a value of $f(n_{SRS})$ is further related to one or more of a slot index $n_{s,f}^{\mu}$ corresponding to an SRS sending moment, an OFDM symbol index $l'$ corresponding to an SRS sending moment, an OFDM symbol offset $l_0$ corresponding to an SRS sending moment, an SRS sending periodicity, a system frame index $n_f$ corresponding to an SRS sending moment, or an SRS repetition factor R.

In a possible implementation, $c(m) = c(8(n_{s,f}^{\mu} N_{symb}^{slot} + l_0 + l') + m)$, where the random sequence $c(m)$ may be generated according to a formula (7), a formula (8), and a formula (9):

$$c(m) = \left( x_1(m + N_C) + x_2(m + N_C) \right) \mod 2 \tag{7}$$

$$x_1(m + 31) = \left( x_1(m + 3) + x_1(m) \right) \mod 2 \tag{8}$$

$$x_2(m + 31) = \left( x_2(m + 3) + x_2(m + 2) + x_2(m + 1) + x_2(m) \right) \mod 2 \tag{9}$$

$N_C = 1600$. The 1st $m$ sequence $x_1(n)$ is initialized into $x_1(0)=1$, $x_1(m)=0$, $n = 1, 2, 3, \cdots, 30$, and the 2nd $m$ sequence $x_2(m)$ is initialized into $c_{init} = \sum_{i=0}^{30} x_2(i) \cdot 2^i$. The network device may configure different $c_{init}$ for different terminal

devices. For example, $c_{init}$ may be a configured initial ID, for example, $c_{init} = n_{ID}^{SRS}$; or $c_{init}$ may be a cell ID.

In a possible implementation, $c(m) = c(B(n_{s,f}^{\mu} N_{symb}^{slot} + l_0 + l^{'}) + m)$, where $N_{symb}^{slot}$ is a quantity of orthogonal frequency division multiplexing (orthogonal frequency division multiplexing, OFDM) symbols included in a slot, $n_{s,f}^{\mu}$ is a slot index corresponding to an SRS sending moment, $l^{'}$ is an OFDM symbol index corresponding to the SRS sending moment, $l_0$ is an OFDM symbol offset corresponding to the SRS sending moment, $l_0 = N_{symb}^{slot} - 1 - l_{offset}$, and $l_{offset} \in \{0,1,2,\cdots,13\}$. A value of $m$ is a positive integer ranging from 0 to $B$-1. For example, when a value of $B$ may be 8, $c(m) = c(8(n_{s,f}^{\mu} N_{symb}^{slot} + l_0 + l^{'}) + m)$. For a manner in which the random sequence $c(m)$ may be generated, refer to the formula (7), the formula (8), and the formula (9).

In a possible implementation, $c(m) = c(B((n_{slot}^{frame,\mu} n_f + n_{s,f}^{\mu}) N_{symb}^{slot} + l_0 + l^{'}) + m)$, where $n_{slot}^{frame,\mu}$ represents a quantity of slots included in a system frame, $N_{symb}^{slot}$ is a quantity of OFDM symbols included in a slot, $n_f$ is a system frame index, $n_{s,f}^{\mu}$ is a slot index corresponding to an SRS sending moment, $l^{'}$ is an OFDM symbol index corresponding to the SRS sending moment, $l_0$ is an OFDM symbol offset corresponding to the SRS sending moment, $l_0 = N_{symb}^{slot} - 1 - l_{offset}$, $l_{offset} \in \{0,1,2,\cdots,13\}$, and $l_0$ represents an OFDM symbol index of a starting symbol for sending an SRS in the slot. A value of $m$ is a positive integer ranging from 0 to $B$-1. $\mu$ represents a subcarrier spacing parameter. For example, when a value of $B$ may be 8, $c(m) = c(8((n_{slot}^{frame,\mu} n_f + n_{s,f}^{\mu}) N_{symb}^{slot} + l_0 + l^{'}) + m)$. For a manner in which the random sequence $c(m)$ may be generated, refer to the formula (7), the formula (8), and the formula (9).

In a possible implementation, $c(m) = c\left(B\left(\left\lfloor \dfrac{n_{s,f}^{\mu} N_{symb}^{slot} + l_0 + l^{'}}{R} \right\rfloor\right) + m\right)$, where $R$ is an SRS repetition factor, and represents a quantity of times of repeated sending (repetition) of an SRS. At a plurality of sending moments at which an SRS is repeatedly sent, time-frequency resources or the like occupied for sending the SRS are the same. $N_{symb}^{slot}$ is a quantity of OFDM symbols included in a slot, and a value of $R$ is one of 1, 2, or 4. $n_{slot}^{frame,\mu}$ represents a quantity of slots included in a system frame, $n_f$ is a system frame index, $n_{s,f}^{\mu}$ is a slot index corresponding to an SRS sending moment, $\mu$ represents a subcarrier spacing parameter, $l^{'}$ is an OFDM symbol index corresponding to the SRS sending moment, $l_0$ is an OFDM symbol offset corresponding to the SRS sending moment, $l_0 = N_{symb}^{slot} - 1 - l_{offset}$, $l_{offset} \in \{0,1,2,\cdots,13\}$, and $l_0$ represents an OFDM symbol index of a starting symbol for sending the SRS in the slot. For example, when a value of $B$ may be 8, $c(m) = c\left(8\left(\left\lfloor \dfrac{n_{s,f}^{\mu} N_{symb}^{slot} + l_0 + l^{'}}{R} \right\rfloor\right) + m\right)$. For a manner in which the random sequence $c(m)$ may be generated, refer to the formula (7), the formula (8), and the formula (9).

In a possible implementation, $c(m) = c\left(B\left(\left\lfloor \dfrac{(n_{slot}^{frame,\mu} n_f + n_{s,f}^{\mu}) N_{symb}^{slot} + l_0 + l^{'}}{R} \right\rfloor\right) + m\right)$, where an SRS repetition factor represents a quantity of times of repeated sending (repetition) of an SRS. At a plurality of sending moments at which an SRS is repeatedly sent, time-frequency resources or the like occupied for sending the SRS are the same. $\mu$ represents a subcarrier spacing parameter, a value of $R$ is one of 1, 2, or 4, $N_{symb}^{slot}$ is a quantity of OFDM symbols included in a slot, $n_{slot}^{frame,\mu}$ represents a quantity of slots included in a system frame, $n_f$ is a system frame index, $n_{s,f}^{\mu}$ is a slot index corresponding to an SRS sending moment, $l^{'}$ is an OFDM symbol index corresponding to the SRS sending

moment, $l_0$ is an OFDM symbol offset corresponding to the SRS sending moment, $l_0 = N_{symb}^{slot} - 1 - l_{offset}$ , $l_{offset} \in$ {0,1,2,$\cdots$,13}, and $l_0$ represents an OFDM symbol index of a starting symbol for sending the SRS in the slot. A value of $m$ is a positive integer ranging from 0 to $B$-1 . For example, when a value of $B$ may be 8,

$$c(m) = c\left(8\left(\left\lfloor \frac{(n_{slot}^{frame,\mu} n_f + n_{s,f}^{\mu})N_{symb}^{slot} + l_0 + l'}{R} \right\rfloor\right) + m\right)$$ . For a manner in which the random sequence $c(m)$

may be generated, refer to the formula (7), the formula (8), and the formula (9).

In a possible implementation, $c(m) = \left(\left(\left((n_f \bmod F) + n_{s,f}^{\mu}\right)N_{symb}^{slot} + + l_0 + l'\right) + m\right)$ , or

$$c(m) = c\left(8\left(\left\lfloor \frac{(n_{slot}^{frame,\mu}(n_f \bmod F) + n_{s,f}^{\mu})N_{symb}^{slot} + l_0 + l'}{R} \right\rfloor\right) + m\right)$$ , where $R$ is an SRS repetition factor, a value of $R$ is one of 1, 2, or 4, $N_{symb}^{slot}$ is a quantity of OFDM symbols included in a slot, $n_{slot}^{frame,\mu}$ represents a quantity of slots included in a system frame, $n_f$ is a system frame index, $n_{s,f}^{\mu}$ is a slot index corresponding to an SRS sending moment, $l'$ is an OFDM symbol index corresponding to the SRS sending moment, $l_0$ is an OFDM symbol offset corresponding to the SRS sending moment, $l_0 = N_{symb}^{slot} - 1 - l_{offset}$ , and $l_{offset} \in$ {0,1,2,$\cdots$,13}. A value of $m$ is a positive integer ranging from 0 to $B$-1. For a manner in which the random sequence $c(m)$ may be generated, refer to the formula (7), the formula (8), and the formula (9). $F$ is a positive integer, a value of $F$ is 50 or 20, and F represents that a random value is initialized at an interval of $F$ system frames.

In a possible implementation,

$$f(\text{n}_{SRS}) = \sum_{m=0}^{B-1} c\left(B\left(n_{slot}^{frame,\mu}(n_f \bmod N)N_{symb}^{slot} + n_{s,f}^{\mu}N_{symb}^{slot} + l_0 + l'\right) + m\right) \cdot 2^m$$ , where $n_{slot}^{frame,\mu}$ represents a

quantity of slots included in a system frame, $n_f$ is a system frame index, $N_{symb}^{slot}$ is a quantity of OFDM symbols included in a slot, $n_{s,f}^{\mu}$ is a slot index corresponding to an SRS sending moment, $l'$ is an OFDM symbol index corresponding to the SRS sending moment, $l_0$ is an OFDM symbol offset corresponding to the SRS sending moment, $l_0 = N_{symb}^{slot} - 1 - l_{offset}$ , and $l_{offset} \in$ {0,1,2,$\cdots$,13} . A value of $m$ is a positive integer ranging from 0 to $B$-1, and $N$ is a positive integer.

In a possible implementation,

$$f(\text{n}_{SRS}) = \sum_{m=0}^{B-1} c\left(B\left(n_{slot}^{frame,\mu}(n_f \bmod N)N_{symb}^{slot} + n_{s,f}^{\mu}N_{symb}^{slot} + l_0 + \left\lfloor \frac{l'}{R} \right\rfloor\right) + m\right) \cdot 2^m$$ , where $n_{slot}^{frame,\mu}$ repre-

sents a quantity of slots included in a system frame, $n_f$ is a system frame index, $N_{symb}^{slot}$ is a quantity of OFDM symbols included in a slot, $n_{s,f}^{\mu}$ is a slot index corresponding to an SRS sending moment, $l'$ is an OFDM symbol index corresponding to the SRS sending moment, $l_0$ is an OFDM symbol offset corresponding to the SRS sending moment,

$l_0 = N_{symb}^{slot} - 1 - l_{offset}$ , and $l_{offset} \in$ {0,1,2,$\cdots$,13}. $R$ is an SRS repetition factor, and a value of $R$ is one of 1, 2, or 4. A value of $m$ is a positive integer ranging from 0 to $B$-1, and $N$ is a positive integer.

In a possible implementation,

$$f(\text{n}_{SRS}) = \sum_{m=0}^{8} c\left(8\left(n_{slot}^{frame,\mu}(n_f \bmod N)N_{symb}^{slot} + n_{s,f}^{\mu}N_{symb}^{slot} + l'\right) + m\right) \cdot 2^m$$ , where $n_{slot}^{frame,\mu}$ represents a quan-

tity of slots included in a system frame, $n_f$ is a system frame index, $N_{symb}^{slot}$ is a quantity of OFDM symbols included in a slot, $n_{s,f}^{\mu}$ is a slot index corresponding to an SRS sending moment, $l'$ is an OFDM symbol index corresponding to the SRS sending moment, and $l_{offset} \in \{0,1,2,\cdots,13\}$. A value of $m$ is a positive integer ranging from 0 to $B$-1, and $N$ is a positive integer.

In a possible implementation,

$$f(\mathrm{n}_{SRS}) = \sum_{m=0}^{B-1} c\left(B\left(n_{slot}^{frame,\mu}(n_f \bmod N)N_{symb}^{slot} + n_{s,f}^{\mu}N_{symb}^{slot} + \left\lfloor \frac{l'}{R} \right\rfloor\right) + m\right)\cdot 2^m$$ , where $n_{slot}^{frame,\mu}$ represents a

quantity of slots included in a system frame, $n_f$ is a system frame index, $N_{symb}^{slot}$ is a quantity of OFDM symbols included in a slot, $n_{s,f}^{\mu}$ is a slot index corresponding to an SRS sending moment, and $l'$ is an OFDM symbol index corresponding to the SRS sending moment. R is an SRS repetition factor, and a value of $R$ is one of 1, 2, or 4. A value of $m$ is a positive integer ranging from 0 to $B$-1, and $N$ is a positive integer.

Optionally, the first comb offset set $\varphi_p$ corresponding to the $p^{th}$ group of ports is as follows:

$$\left\{k_{TC,start}^p,\left(k_{TC,start}^p +1\right)\bmod K_{TC},\left(k_{TC,start}^p +2\right)\bmod K_{TC},\cdots,\left(k_{TC,start}^p +n_p -1\right)\bmod K_{TC}\right\}$$ , where $0,1,2,\cdots,$

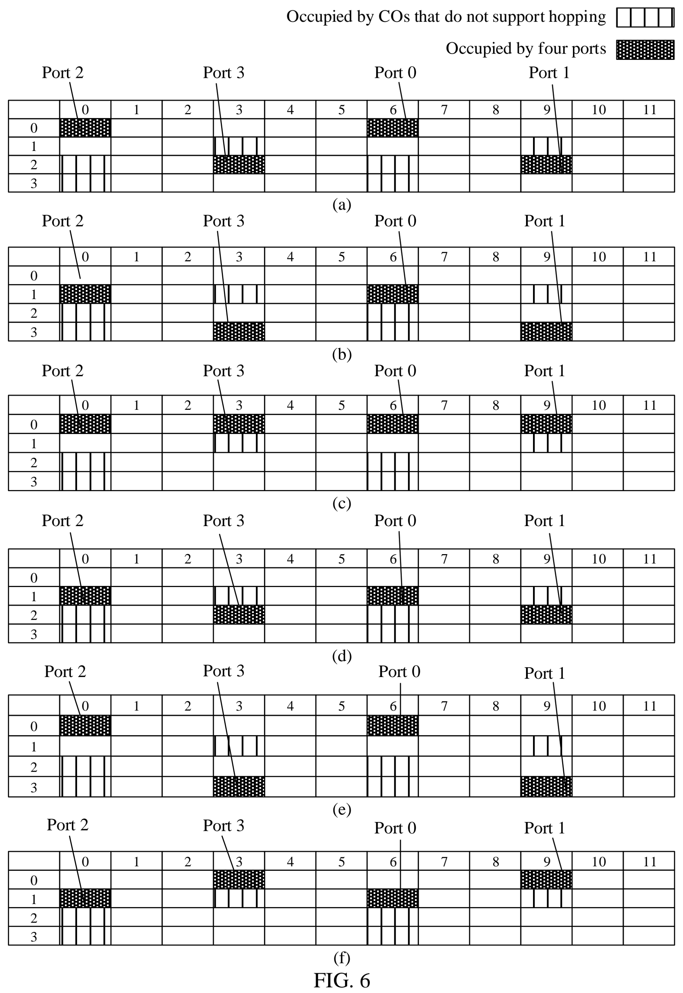

$n_p$ -1 are the $n_p$ comb offset steps. Optionally, this manner indicates that, when performing CO hopping in the first comb offset set $\varphi_p$, the terminal device hops in a direction in which a value of a comb offset increases. To be specific, a first comb offset selected by the terminal device from the first comb offset set $\varphi_p$ is greater than or equal to $k_{TC,start}^p$. This implies that a comb offset occupied by a CO that does not support CO hopping is less than $k_{TC,start}^p$. In other words, the network device may configure the first comb offset set $\varphi_p$ for the terminal device based on the CO that does not support CO hopping. For example, as shown in FIG. 6, a port group 1 includes a port 0 and a port 2, a reference comb offset of the port 0 and the port 2 is a CO 0, a port group 2 includes a port 1 and a port 3, and a parameter comb offset of the port 1 and the port 3 is a CO 2. COs that does not support CO hopping are the CO 2 and a CO 3 that correspond to a CS 0 and a CS 6, and the CO 1 corresponding to a CS 3 and a CS 9. $k_{TC,start}^1$ of the port group 1 is the CO 0, and two comb offset steps corresponding to the port group 1 are {0, 1}. Therefore, a first comb offset set corresponding to the port group 1 is as follows: $\varphi_1$ = {0,1}. $k_{TC,start}^2$ of the port group 2 is the CO 2, three comb offset steps corresponding to the port group 2 are {0, 1, 2}, and a first comb offset set corresponding to the port group 2 is as follows: $\varphi_2$ = {2,3,0} .

Optionally, the first comb offset set $\varphi_p$ corresponding to the $p^{th}$ group of ports is as follows:

$$\left\{k_{TC,start}^p,\left(k_{TC,start}^p -1\right)\bmod K_{TC},\left(k_{TC,start}^p -2\right)\bmod K_{TC},\cdots,\left(k_{TC,start}^p -n_p +1\right)\bmod K_{TC}\right\}$$ , where $0,1,2,\cdots,$

$n_p$ -1 are the $n_p$ comb offset steps. Optionally, this manner indicates that, when performing CO hopping in the first comb offset set $\varphi_p$, the terminal device hops in a direction in which a value of a comb offset decreases. To be specific, a first comb offset selected by the terminal device from the first comb offset set $\varphi_p$ is less than or equal to $k_{TC,start}^p$. This implies that a CO that does not support CO hopping is greater than $k_{TC,start}^p$. In other words, the network device may configure the first comb offset set $\varphi_p$ for the terminal device based on the CO that does not support CO hopping.

Optionally, it may be specified in the protocol that the first comb offset set $\varphi_p$ may be

$$\left\{k_{TC,start}^p,\left(k_{TC,start}^p +1\right)\bmod K_{TC},\left(k_{TC,start}^p +2\right)\bmod K_{TC},\cdots,\left(k_{TC,start}^p +n_p -1\right)\bmod K_{TC}\right\}$$ or

$$\left\{k_{TC,start}^p,\left(k_{TC,start}^p -1\right)\bmod K_{TC},\left(k_{TC,start}^p -2\right)\bmod K_{TC},\cdots,\left(k_{TC,start}^p -n_p +1\right)\bmod K_{TC}\right\}$$ . The network device may send third indication information, and the terminal device may receive the third indication information. The third indication information indicates one of the two sets that is used as the first comb offset set $\varphi_p$. In other words, two possibilities of the first comb offset set $\varphi_p$ may be specified in the protocol. A specific one of the two possibilities that is used by the terminal device may be indicated by the third indication information.

After the terminal device determines the first comb offset set $\varphi_p$ of the $p^{th}$ group of ports, in a first implementation and a second implementation, comb offsets of all ports in the $p^{th}$ group of ports may be equal, and are all a first comb offset. In a third implementation, different ports in the $P$ groups of ports may have different comb offsets. In this way, a CO occupied by a port that sends an SRS can be more random, so that a probability of overlapping between the CO occupied by the port that sends the SRS and a CO of a terminal device not supporting CO hopping is low, and interference can be reduced. The following describes the two implementations.

In the first implementation, optionally, in (a), that the terminal device sends the SRS based on the at least one comb offset in the first comb offset set $\varphi_p$ corresponding to the $p^{th}$ group of ports in S510 includes: The terminal device generates a first value based on a total quantity $n_p$ of comb offsets included in the first comb offset set $\varphi_p$, where a value range of the first value is $[0, n_p -1]$. The terminal device determines, from the first comb offset set $\varphi_p$, a first comb offset corresponding to the first value, where a comb offset of each port in the $p^{th}$ group of ports is the first comb offset. The terminal device sends the SRS based on the first comb offset. Optionally, one value in $[0, n_p -1]$ corresponds to one comb offset in the first comb offset set $\varphi_p$. In other words, $n_p$ values in $[0, n_p -1]$ are in a one-to-one correspondence with the $n_p$ comb offsets in the first comb offset set $\varphi_p$. To be specific, after the terminal device determines the first comb offset set $\varphi_p$, for a specific time of SRS sending, the terminal device needs to determine a comb offset of the $p^{th}$ group of ports from the first comb offset set $\varphi_p$. The terminal device may obtain a first value based on the total quantity $n_p$ of comb offsets; determine, from the first comb offset set $\varphi_p$ based on the first value, a first comb offset corresponding to the $p^{th}$ group of ports; and send the SRS based on the first comb offset. Optionally, during determining, from the first comb offset set $\varphi_p$ based on the first value, the first comb offset corresponding to the $p^{th}$ group of ports, a comb offset that is in the first comb offset set $\varphi_p$ and that corresponds to the first value may be determined as the first comb offset. Optionally, the first value may be a random value. Optionally, reference comb offsets of all ports in the $p^{th}$ group of ports are equal. To be specific, starting comb offsets of all ports in the $p^{th}$ group of ports are a same CO, and first comb offsets of all ports in the $p^{th}$ group of ports are equal. Optionally, reference comb offsets of different port groups may be different. Optionally, sending the SRS based on the first comb offset may be understood as sending the SRS based on the first comb offset at one sending moment. At another sending moment, the terminal device may determine another comb offset from the first comb offset set $\varphi_p$ based on another value, and send an SRS based on the another comb offset. To be specific, after determining the first comb offset set $\varphi_p$, the terminal device may select a comb offset from the first comb offset set $\varphi_p$ in each periodicity for sending an SRS, and send, based on the selected comb offset, an SRS in each periodicity for sending an SRS. Optionally, at different sending moments, the terminal device may select a same comb offset or different comb offsets from the first comb offset set $\varphi_p$. This is not limited in this embodiment of this application. For example, as shown in FIG. 6, the first SRS resource used by the terminal device to send the SRS corresponds to four ports: a port 0, a port 1, a port 2, and a port 3. A port group 1 includes the port 2 and the port 0. In other words, the $1^{st}$ group of ports includes the port 2 and the port 0. A port group 2 includes the port 3 and the port 1. In other words, the $2^{nd}$ group of ports includes the port 3 and the port 1. A diagram (a) in FIG. 6 shows a reference comb offset of a port included in each port group, and also shows that COs that do not support CO hopping occupy a CO 2 and a CO 3 of a CS 0 and a CS 6, and a CO 1 of a CS 3 and a CS 9. A reference comb offset of the port group 1 is a CO 0, and a reference comb offset of the port group 2 is the CO 2. For the $1^{st}$ group of ports, $\varphi_1 = \{0,1\}$, and a length $n_1$ of $\varphi_1$ is 2. For the $2^{nd}$ group of ports, $\varphi_2 = \{2,3,0\}$, and a length $n_2$ of $\varphi_2$ is 3. The terminal device may determine that a random first value of the port group 1 at a first sending moment is 1, and the terminal device may determine that a first comb offset of the $1^{st}$ group of ports $\varphi_1$ at the first sending moment is the $1^{st}$ comb offset {l} in $\varphi_1 = \{0,1\}$, where the $0^{th}$ comb offset in $\varphi_1 = \{0,1\}$ may be {O}. The terminal device may determine that a random first value of the port group 2 at the first sending moment is 1, and the terminal device may determine that a first comb offset of the $2^{nd}$ group of ports $\varphi_2$ at the first sending moment is the $1^{st}$ comb offset {3} in $\varphi_2 = \{2,3,0\}$, where the $0^{th}$ comb offset in $\varphi_2 = \{2,3,0\}$ may be {2}, and the $2^{nd}$ comb offset may be {0}. Therefore, the first sending moment is shown in a diagram (b) in FIG. 6. A CO of the $1^{st}$ group of ports is the CO 1, and a CO of the $2^{nd}$ group of ports is the CO 3. The terminal device may determine that a random first value of the port group 1 at a second sending moment is 0, and the terminal device may determine that a first comb offset of the $1^{st}$ group of ports $\varphi_1$ at the second sending moment is the $0^{th}$ comb offset {0} in $\varphi_1 = \{0,1\}$, where the $1^{st}$ comb offset in $\varphi_1 = \{0,1\}$ may be {1}. The terminal device may determine that a random first value of the port group 2 at the second sending moment is 2, and the terminal device may determine that a first comb offset of the $2^{nd}$ group of ports $\varphi_2$ at the second sending moment is the $2^{nd}$ comb offset {0} in $\varphi_2 = \{2,3,0\}$, where the $0^{th}$ comb offset in $\varphi_2 = \{2,3,0\}$ may be {2}, and the $1^{st}$ comb offset may be {3}. Therefore, the second sending moment is shown in a diagram (c) in FIG. 6. A CO of the $1^{st}$ group of ports is the CO 0, and a CO of the $2^{nd}$ group of ports is the CO 0. The terminal device may determine that a random first value of the port group 1 at a third sending moment is 1, and the terminal device may determine that a first comb offset of the $1^{st}$ group of ports $\varphi_1$ at the third sending moment is the $1^{st}$ comb offset {1} in $\varphi_1 = \{0,1\}$, where the $0^{th}$ comb offset in $\varphi_1 = \{0,1\}$ may be {0}. The terminal device may determine that a random first value of the port group 2 at the third sending moment is 0, and the terminal device may determine that a first comb offset of the $2^{nd}$ group of ports $\varphi_2$ at the third sending moment is the $0^{th}$ comb offset {2} in $\varphi_2 = \{2,3,0\}$, where the $2^{nd}$ comb offset in $\varphi_2 = \{2,3,0\}$ may be {0}, and the $1^{st}$ comb offset may be {3}. Therefore, the third sending moment is shown in a diagram (d) in FIG. 6. A CO of the $1^{st}$ group of ports is the CO 1, and a CO of the $2^{nd}$ group of ports is the CO 2. By analogy, a diagram (e) in FIG. 6 and a diagram (f) in FIG. 6 may be obtained. The first sending moment, the second sending moment, or the third sending moment may be a moment at which an SRS is sent. It can be understood that all of the diagrams in FIG. 6 correspond to different $f(n_{SRS})$, and different diagrams in FIG. 6 correspond to different sending moments. Alternatively, the terminal device selects, based on $f(n_{SRS})$, a manner from the diagram (a) to the diagram (f) in FIG. 6 to send an SRS.

Optionally, in (a), that the network device receives the SRS based on the at least one comb offset in the first comb offset set $\varphi_p$ corresponding to the $p^{th}$ group of ports in S510 includes: The network device generates a first value based on a

total quantity $n_p$ of comb offsets included in the first comb offset set $\varphi_p$, where a value range of the first value is $[0,n_p$-1]. The network device determines, from the first comb offset set $\varphi_p$, a first comb offset corresponding to the first value, where a comb offset of each port in the $p^{th}$ group of ports is the first comb offset. The network device receives the SRS based on the first comb offset. The first comb offset set $\varphi_p$ on the network device side is the same as the first comb offset set $\varphi_p$ on the terminal device side, and a manner in which the network device determines the first comb offset from the first comb offset set $\varphi_p$ is the same as the manner in which the terminal device determines the first comb offset. To avoid repetition, details are not described.

The network device may configure, for the terminal device, an initialization identity (identity, ID) for generating the first value, and the terminal device generates the first value based on the initialization identity; or the network device may generate the first value based on the initialization identity. In this way, the first comb offsets that correspond to the first values and that are determined by the network device and the terminal device from the first comb offset set $\varphi_p$ are equal. Therefore, the network device may receive the SRS based on the first comb offset. Optionally, the first value may be further related to one or more of a slot index corresponding to an SRS sending moment, an OFDM symbol index corresponding to an SRS sending moment, an OFDM symbol offset corresponding to an SRS sending moment, an SRS sending periodicity, a system frame index corresponding to an SRS sending moment, or an SRS repetition factor. For generation of the first value, refer to the foregoing descriptions of $f(n_{SRS})$.

In the second implementation, the network device may alternatively indicate comb offsets in the first comb offset set $\varphi_p$ by using a bitmap. A quantity of bits included in the bitmap is $K_{TC}$, and each bit corresponds to one comb offset value in the first comb offset set $\varphi_p$. A value of a bit in the bitmap being 1 indicates that a comb offset corresponding to SRS sending is a comb offset value that is in the first comb offset set $\varphi_p$ and that corresponds to the bit. To be specific, after the terminal device determines the first comb offset set $\varphi_p$, for a specific time of SRS sending, the terminal device needs to determine, from the first comb offset set $\varphi_p$ based on the bitmap, a first comb offset corresponding to the $p^{th}$ group of ports; and send the SRS based on the first comb offset.

Optionally, the network device may determine a first comb offset of the $p^{th}$ group of ports based on a comb offset that is in the first comb offset set $\varphi_p$ and that is indicated by the bitmap, and receive the SRS based on the first comb offset.

In the first implementation and the second implementation, comb offsets of all ports in the $p^{th}$ group of ports are the same, and are all the first comb offset. In some possible implementations, comb offsets of all ports in the $p^{th}$ group of ports may alternatively be different. This is not limited in this embodiment of this application.

In the third implementation, the $p^{th}$ group of ports includes $m_p$ ports. A comb offset of each of the $m_p$ ports in the first comb offset set $\varphi_p$ is related to an index of a cyclic shift group to which a cyclic shift value corresponding to the port belongs. The first SRS resource corresponds to T groups of cyclic shift values. One group of cyclic shift values corresponds to one cyclic shift group index. The $T$ groups of cyclic shift values correspond to a total of $T$ cyclic shift group indexes. The $T$ cyclic shift group indexes may be $0,1,\cdots,T$-1, where $T$ is a positive integer. That is, a comb offset set of each port in the $p^{th}$ group of ports in the first comb offset set $\varphi_p$ is related to an index of a cyclic shift group to which a cyclic shift value corresponding to the port belongs. Because different ports in the $p^{th}$ group of ports may belong to different groups of cyclic shift values, different ports may have different comb offsets. In this way, a comb offset used by the $p^{th}$ group of ports to send an SRS can be more random, to help reduce interference. Optionally, each of the $T$ groups of cyclic shift values includes $n_{SRS}^{CS,\max} / T$ cyclic shift values. Optionally, cyclic shift values included in each group of cyclic shift values are cyclic shift values with consecutive cyclic shift values. For example, $n_{RS}^{cs,\max} = 12$, all cyclic shift values are divided into $T$=4 groups of cyclic shift values, and each group of cyclic shift groups includes three cyclic shift values. The three groups of cyclic shift values respectively include the following cyclic shift values: {CS 0, CS 1, CS 2}, {CS 3, CS 4, CS 5}, {CS 6, CS 7, CS 8}, and {CS 9, CS 10, CS 11}. A cyclic shift group index corresponding to the 1$^{st}$ group of cyclic shift values {CS 0, CS 1, CS 2} may be 0. A cyclic shift group index corresponding to the 2$^{nd}$ group of cyclic shift values {CS 3, CS 4, CS 5} is 1. A cyclic shift group index corresponding to the 3$^{rd}$ group of cyclic shift values {CS 6, CS 7, CS 8} is 2. A cyclic shift group index corresponding to the 4$^{th}$ group of cyclic shift values {CS 9, CS 10, CS 11} is 3.

Optionally, a value of the quantity $T$ of groups of cyclic shift values may be a quantity $N_{ap}^{SRS}$ of antenna ports, or may be one of 1, 2, 4, or 8. The quantity $T$ of groups of cyclic shift values may be configured by the network device for the terminal device by using indication information, or may be a predefined value.

Optionally, a comb offset $n_p^j$ of an $m_p^{j\ th}$ port of the $m_p$ ports in the first comb offset set $\varphi_p$ is obtained based on $k_{TC}^p$ corresponding to the $m_p^{j\ th}$ port and an index $T^j$ of a cyclic shift group to which the cyclic shift value corresponding to the $m_p^{j\ th}$ port belongs. $k_{TC}^p$ is obtained based on at least one of the total comb quantity $K_{TC}$ configured by the network device, $N_{ap}^{SRS}$, the comb offset $\overline{k}_{TC}$ of the reference port, the maximum cyclic shift value $n_{RS}^{cs,\max}$, or the cyclic shift value

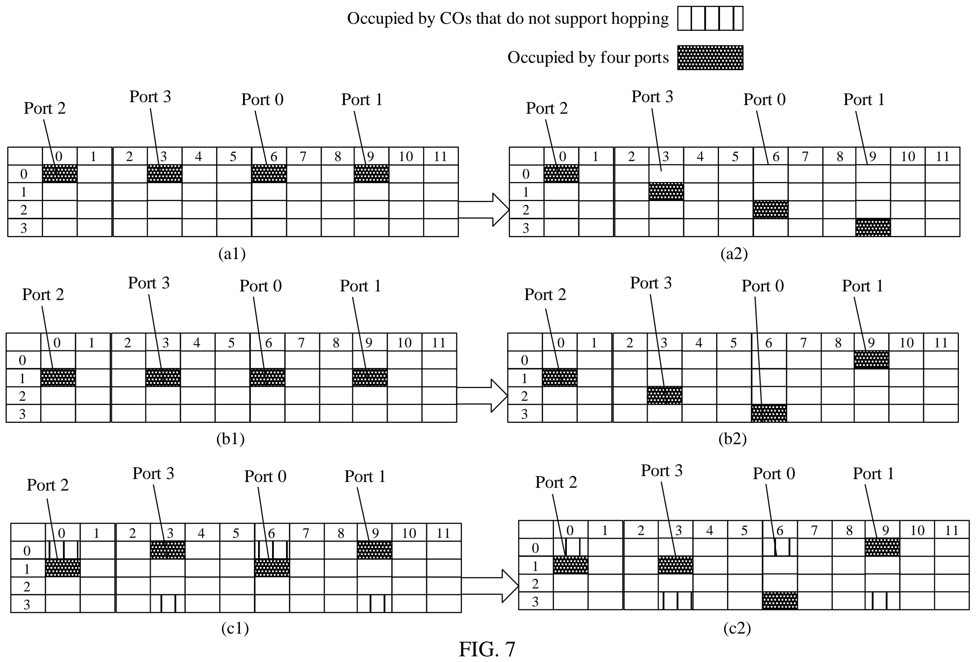

$n_{SRS}^{CS}$ of the reference port in the $p^{th}$ group of ports. $k_{TC}^{p}$ may be obtained according to the formula (3). In this case, the port P in the formula (3) may be replaced with the $m_{p}^{j}{}^{th}$ port. For example, $n_{RS}^{cs,max} = 12$. As shown in a diagram (al) in FIG. 7, a port 0, a port 1, a port 2, and a port 3 are a group of ports, and a first comb offset set of the group of ports is as follows: $\varphi_p$ = {0,1,2,3}. All CSs are divided into a total of four CS groups. An index of a CS group 1 is 0, and the CS group 1 includes a CS 0, a CS 1, and a CS 2. An index of a CS group 2 is 1, and the CS group 2 includes a CS 3, a CS 4, and a CS 5. An index of a CS group 3 is 2, and the CS group 3 includes a CS 6, a CS 7, and a CS 8. An index of a CS group 4 is 3, and the CS group 4 includes a CS 9, a CS 10, and a CS 11. The CS 6 of the port 0 belongs to the CS group with an index of 2. The CS 9 of the port 1 belongs to the CS group with an index of 3. The CS 0 of the port 2 belongs to the CS group with an index of 0. The CS 3 of the port 3 belongs to the CS group with an index of 1. Different ports included in the port group correspond to different CS group indexes. Therefore, after CO hopping is enabled, at a same SRS sending moment, different ports correspond to different comb offsets or comb offset steps For example, based on the CS group index 0, a CO corresponding to the port 2 does not hop and is still a CO 0; based on the CS group index 1, a CO corresponding to the port 3 needs to hop to a CO 1; based on the CS group index 2, a CO corresponding to the port 0 needs to hop from the CO 0 to a CO 2; and based on the CS group index 3, a CO corresponding to the port 1 needs to hop from the CO 0 to a CO 3. CSs, obtained through hopping, of the ports are shown in a diagram (a2) in FIG. 7. Similarly, before CO hopping is enabled, COs of the group of ports are all a CO 1; and COs, obtained through hopping based on CS groups to which the ports belong, of the ports are shown in a diagram (b2) in FIG. 7. COs of the ports in the diagram (a1) and a diagram (b1) in FIG. 7 may be $k_{TC}^{p}$ calculated according to the formula (3). For example, in a diagram (c1) in FIG. 7, a port group 1 includes a port 2 and a port 0, $k_{TC}^{1}$ is a CO 1, a CS 6 of the port 0 in the port group 1 belongs to a CS group with an index $T^1$ of 2, and a CS 0 of the port 2 belongs to a CS group with an index $T^2$ of 0. A first comb offset set of the port group 1 is as follows: $\varphi_1$ = {1,2,3}; $n_1$ = 3; and $T$ mod $n_1$ ( 2 mod 3 ) is 2. Therefore, a CO 3 may be obtained after the port 0 hops by two COs. Because $T^2$ mod $n_1$ ( 0 mod 3 ) is 0, the port 2 may not hop, and is still the CO 1. Therefore, COs, obtained through hopping, of the port 0 and the port 2 are shown in a diagram (c2) in FIG. 7. In the diagram (c1) in FIG. 7, a port group 2 includes a port 1 and a port 3, $k_{TC}^{2}$ is a CO 1, a CS 9 of the port 1 in the port group 2 belongs to a CS group with an index $T^1$ of 3, and a CS 3 of the port 3 belongs to a CS group with an index $T^2$ of 1. A first comb offset set of the port group 2 is as follows: $\varphi_2$ = {0,1, 2}; $n_1$ = 3; and $T'$ mod $n_1$ ( 3 mod 3 ) is 0. Therefore, the port 1 does not hop, and is still the CO. Because $T^2$ mod $n_1$ ( 1 mod 3) is 1, the port 3 hops by one CO, and the CO 1 is obtained. Therefore, COs, obtained through hopping, of the port 1 and the port 3 are shown in the diagram (c2) in FIG. 7.

Optionally, that the comb offset $n_{p}^{j}$ of the $m_{p}^{j}{}^{th}$ port of the $m_p$ ports in the first comb offset set $\varphi_p$ is obtained based on $k_{TC}^{P}$ and the cyclic shift group index $T^j$ corresponding to the $m_{p}^{j}{}^{th}$ port is specifically as follows: The comb offset $n_{p}^{j}$ of the $m_{p}^{j}{}^{th}$ port of the $m_p$ ports in the first comb offset set $\varphi_p$ is obtained by performing a modulo operation on $T^j$ based on $k_{TC}^{p}$. For example, a comb offset that is in the first comb offset set $\varphi_p$ and that corresponds to a value obtained through $T^j$ mod $n_p$ is determined as the comb offset $n_{p}^{j}$. That is, when $T^j$ is greater than $n_p$, the comb offset $n_{p}^{j}$ may be determined based on the modulo operation.

Optionally, the $p^{th}$ group of ports includes $m_p$ ports, and a comb offset of each of the $m_p$ ports in the first comb offset set $\varphi_p$ is related to a cyclic shift value $n_{SRS}^{CS,j}$ corresponding to the port. For example, $n_{SRS}^{CS,j}$ may be determined according to the formula (6). That is, a comb offset set, in the first comb offset set $\varphi_p$, of each port in the $p^{th}$ group of ports is related to a cyclic shift value of the port. Because different ports in the $p^{th}$ group of ports may belong to different cyclic shift values, different ports may have different comb offsets. In this way, a comb offset used by the $p^{th}$ group of ports to send an SRS may be more random, to help reduce interference. Different ports included in the port group correspond to different cyclic shift values. Therefore, after CO hopping is enabled, at a same SRS sending moment, different ports correspond to different comb offsets or comb offset steps Optionally, a comb offset $n_{p}^{j}$ of an $m_{p}^{j}{}^{th}$ port of the $m_p$ ports in the first comb offset set $\varphi_p$ is obtained based on $k_{TC}^{P}$ and a cyclic shift value $n_{SRS}^{CS,j}$ corresponding to the $m_{p}^{j}{}^{th}$ port. $k_{TC}^{p}$ is obtained based on at least one of the total comb quantity $K_{TC}$ configured by the network device, $N_{ap}^{SRS}$, the comb offset $\overline{k}_{TC}$ of the reference port, the maximum cyclic shift value $n_{RS}^{cs,max}$, or the cyclic shift value $n_{SRS}^{CS}$ of the reference port in the $p^{th}$ group of ports.

$k_{TC}^{p}$ may be obtained according to the formula (3). In this case, the port $P$ in the formula (3) may be replaced with the $m_{p}^{j}$ th port. A manner of obtaining the comb offset $n_{p}^{j}$ based on the cyclic shift value is similar to the manner of obtaining the comb offset $n_{p}^{j}$ based on the cyclic shift group index. To avoid repetition, details are not described in this embodiment of this application.

In the foregoing embodiment, the terminal device may obtain the comb offset $n_{p}^{j}$ based on the cyclic shift group index corresponding to the $m_{p}^{j}$ th port, or the network device may obtain the comb offset $n_{p}^{j}$ based on the cyclic shift group index corresponding to the $m_{p}^{j}$ th port. That is, the network device and the terminal device divide CS groups in a same manner, and also determine the comb offset $n_{p}^{j}$ based on the cyclic shift group index in a same manner. Similarly, the terminal device may obtain the comb offset $n_{p}^{j}$ based on the cyclic shift value corresponding to the $m_{p}^{j}$ th port, or the network device may obtain the comb offset $n_{p}^{j}$ based on the cyclic shift value corresponding to the $m_{p}^{j}$ th port.

(b) An $n_{p}^{i}$ th comb offset in the first comb offset set $\varphi_{p}$ corresponding to the $p$th group of ports corresponds to an $n_{p}^{i}$ th comb offset step, the $n_{p}^{i}$ th comb offset step corresponds to a second value generated based on a quantity $n_{p}$ of comb offset steps, and a value range of the second value is [0,$n$, -1]. Optionally, the second value may be a random value. Optionally, the terminal device may determine a random second value from [0, $n_{p}$ -1], the $n_{p}$ comb offset steps correspond to one value, and the second value may correspond to one comb offset step. Optionally, that the $n_{p}^{i}$ th comb offset step corresponds to the second value generated based on the quantity $n_{p}$ of comb offset steps is specifically as follows: The $n_{p}^{i}$ th comb offset step $k_{COH,i}^{p}$ is $(-1)^{b}f(n_{SRS})$, where $f(n_{SRS})$ is the second value, and a value of $b$ is 0 or 1. To be specific, the terminal device may determine the second value, and determine that the $n_{p}^{i}$ th comb offset step $k_{COH,i}^{p}$ is $(-1)^{b}f$ $(n_{SRS})$. Optionally, it is specified in the protocol that the value of $b$ is 0; or it may be specified in the protocol that the value of $b$ is 1. Optionally, the network device may configure the value of $b$ to 0, or the network device may configure the value of $b$ to 1.

Optionally, the $n_{p}^{i}$ th comb offset step is not limited to being determined based on the second value. The $n_{p}^{i}$ th comb offset step of the $n_{p}$ comb offset steps may alternatively be determined in another form. For example, the $n_{p}$ comb offset steps corresponding to the $p$th group of ports may be indicated by the network device, or the $n_{p}$ comb offset steps corresponding to the $p$th group of ports may be specified in the protocol. A manner of determining, by the terminal device, the $n_{p}$ comb offset steps corresponding to the $p$th group of ports is not limited in this embodiment of this application. The network device may configure, for the terminal device, an initialization identity (identity, ID) for generating the second value, and the terminal device generates the second value based on the initialization identity; or the network device may generate the second value based on the initialization identity. In this way, the network device and the terminal device determine equal $n_{p}^{i}$ th comb offset steps based on the second value. Optionally, the second value may be further related to one or more of a slot index corresponding to an SRS sending moment, an OFDM symbol index corresponding to an SRS sending moment, an OFDM symbol offset corresponding to an SRS sending moment, an SRS sending periodicity, a system frame index corresponding to an SRS sending moment, or an SRS repetition factor. For generation of the second value, refer to the foregoing descriptions of $f(n_{SRS})$.

To be specific, one comb offset in the first comb offset set $\varphi_{p}$ corresponding to the $p$th group of ports corresponds to one comb offset step, and the terminal device may obtain the $n_{p}$ comb offset steps, and determine, based on the $n_{p}$ comb offset steps and the reference comb offset $k_{TC,start}^{p}$, a specific comb offset step that is to be used to determine a first comb offset. In other words, in the case 2, the terminal device does not need to sequentially determine the $n_{p}$ comb offsets included in the first comb offset set $\varphi_{p}$, but the terminal device needs to learn of the $n_{p}$ comb offset steps. To be specific, in the case 1, the $n_{p}$ comb offsets included in the first comb offset set $\varphi_{p}$ represent the first comb offset set $\varphi_{p}$; and in the case 2, the $n_{p}$ comb offset steps corresponding to the first comb offset set $\varphi_{p}$ represent the first comb offset set $\varphi_{p}$. Although the first comb offset set $\varphi_{p}$ is represented in different forms in the case 1 and the case 2, the case 2 also implies that the first comb offset set $\varphi_{p}$ may alternatively be the case in the case 1. For example, the $n_{p}$ comb offset steps being 0,1,2,$\cdots$, $n_{p}$-1, in other

words, the value of $b$ being 0, implies that the first comb offset set $\varphi_p$ is

$$\left\{ k_{TC,start}^{p}, \left( k_{TC,start}^{p} + 1 \right) \bmod K_{TC}, \left( k_{TC,start}^{p} + 2 \right) \bmod K_{TC}, \cdots, \left( k_{TC,start}^{p} + n_p - 1 \right) \bmod K_{TC} \right\}$$ ; and the $n_p$ comb

offset steps being 0, -1,-2,$\cdots$, -$n_p$+1, in other words, the value of $b$ being 1, implies that the first comb offset set $\varphi_p$ is

$$\left\{ k_{TC,start}^{p}, \left( k_{TC,start}^{p} - 1 \right) \bmod K_{TC}, \left( k_{TC,start}^{p} - 2 \right) \bmod K_{TC}, \cdots, \left( k_{TC,start}^{p} - n_p + 1 \right) \bmod K_{TC} \right\}.$$

Optionally, in (b), that the terminal device sends the SRS based on the at least one comb offset in the first comb offset set $\varphi_p$ corresponding to the $p$th group of ports includes: The terminal device determines a first comb offset of the $p$th group of ports based on at least one of the $n_p^i$ th comb offset step $k_{COH,i}^{p}$ in the first comb offset set $\varphi_p$, the reference comb offset $k_{TC,start}^{p}$ of the $p$th group of ports, or the total comb quantity $K_{TC}$, where comb quantities of all ports in the $p$th group of ports are the first comb offset. The terminal device determines, based on the first comb offset and a frequency domain resource offset, a frequency domain starting position to which the $p$th group of ports is mapped. The terminal device sends the SRS based on the frequency domain starting position to which the $p$th group of ports is mapped. For different reference comb offsets $k_{TC,start}^{p}$, the terminal device determines the first comb offset in different manners.

Optionally, the first comb offset set $\varphi_p$ may correspond to a first comb offset step set. For example, the first comb offset step set is $\left\{ \Delta_{COH}^{p}(0), \Delta_{COH}^{p}(1), \Delta_{COH}^{p}(2), \cdots, \Delta_{COH}^{p}\left( n_p - 1 \right) \right\}$, where $\Delta_{COH}^{p}(k)$ represents a comb offset step with an index of $k$ or a $k$th comb offset step in the first comb offset step set. That is, the first comb offset set may correspond to the first comb offset step set, the first comb offset step set may include $n_p$ comb offset steps, and a specific form of the $n_p$ comb offset steps may not be limited. When the first comb offset step set is $\left\{ \Delta_{COH}^{p}(0), \Delta_{COH}^{p}(1), \Delta_{COH}^{p}(2), \cdots, \Delta_{COH}^{p}\left( n_p - 1 \right) \right\}$, optionally, that the terminal device sends the SRS based on the at least one comb offset in the first comb offset set $\varphi_p$ corresponding to the $P$th group of ports in S510 includes: The terminal device determines $\overline{k}_0^{p} = n_{shift} N_{SC}^{RB} + (k_{TC}^{p} + k_{offset}^{i} + \Delta_{COH}^{p}(f(n_{SRS}))) \bmod K_{TC}$ , and determines the frequency domain starting position $k_0^{p} = \overline{k}_0^{p} + n_{offset}^{FH} + n_{offset}^{RPFS}$ to which the $p$th group of ports is mapped, where $n_{offset}^{FH} + n_{offset}^{RPFS}$ represents a frequency domain subband offset, $k_{offset}^{i}$ is a comb offset adjustment value, and $n_{shift} N_{SC}^{RB}$ is the frequency domain resource offset. For $f(n_{SRS})$, refer to the foregoing descriptions. $k_{TC}^{p}$ is obtained based on at least one of the total comb quantity $K_{TC}$ configured by the network device, $N_{ap}^{SRS}$, the comb offset $\overline{k}_{TC}$ of the reference port, the maximum cyclic shift value $n_{RS}^{cs,max}$, or the cyclic shift value of the reference port in the $p$th group of ports, for example, is determined according to the formula (3). In this case, $p$ in the formula (3) represents the $p$th group of ports. A value of $k_{offset}^{i}$ may be 0.

Optionally, it is assumed that the reference comb offset $k_{TC,start}^{p}$ is determined by the terminal device based on a parameter configured by the network device, for example, based on the total comb quantity $K_{TC}$ configured by the network device, $N_{ap}^{SRS}$, the comb offset $\overline{K}_{TC}$ of the reference port, the maximum cyclic shift value $n_{RS}^{cs,max}$, or the cyclic shift value of the reference port in the $p$th group of ports. For example, $k_{TC,start}^{p}$ may be $k_{TC}^{p}$ obtained according to the formula (3). In this case, $p$ in the formula (3) may represent the $p$th group of ports. That the terminal device determines the first comb offset of the $p$th group of ports based on at least one of the $n_p^i$ th comb offset step $k_{COH,i}^{p}$ in the first comb offset set $\varphi_p$, the reference comb offset $k_{TC,start}^{p}$ of the $p$th group of ports, or the total comb quantity $K_{TC}$ includes: The terminal device determines that the first comb offset of the $p$th group of ports is $(k_{TC}^{p} + k_{offset}^{i} + k_{COH,i}^{p}) \bmod K_{TC}$ , where $k_{offset}^{i}$ is a comb offset adjustment value. Determining, based on the first comb offset and the frequency domain resource offset, the frequency domain starting position to which the $p$th group of ports is mapped includes: determining that the frequency domain starting position to which the $p$th group of ports is mapped is $n_{shift} N_{SC}^{RB} + (k_{TC}^{p} + k_{offset}^{i} + k_{COH,i}^{p}) \bmod K_{TC}$ ,

where $n_{shift}N_{SC}^{RB}$ is the frequency domain resource offset, and $k_{COH,i}^{p}$ is $(-1)^b f(n_{SRS})$. Optionally, $k_{offset}^{i'}$ may not exist. In this case, the first comb offset, determined by the terminal device, of the $p^{th}$ group of ports is $(k_{TC}^{p}+k_{COH,i}^{p})\bmod K_{TC}$.

To be specific, in this case, if CO hopping can be performed, the frequency domain starting position to which the $p^{th}$ group of ports is mapped is $n_{shift}N_{SC}^{RB}+(k_{TC}^{p}+k_{COH,i}^{p})\bmod K_{TC}$; or if CO hopping cannot be performed, $k_{offset}^{i'}$ may alternatively exist, and therefore the frequency domain starting position to which the $p^{th}$ group of ports is mapped is $n_{shift}N_{SC}^{RB}+(k_{TC}^{p}+k_{offset}^{i'})\bmod K_{TC}$, that is, the formula may be the formula (2). In other words, the frequency domain starting position to which the $p^{th}$ group of ports is mapped is as follows:

$$\begin{cases} \overline{k}_0^{p} = n_{shift}N_{SC}^{RB}+(k_{TC}^{p}+k_{offset}^{i'})\bmod K_{TC} & \text{if } CO \text{ } hopping \text{ is disabled} \\ \overline{k}_0^{p} = n_{shift}N_{SC}^{RB}+(k_{TC}^{p}+k_{COH,i}^{p})\bmod K_{TC} & \text{if } CO \text{ } hopping \text{ is enabled} \end{cases}$$

Optionally, if the reference comb offset $k_{TC,start}^{p}$ of the $p^{th}$ group of ports is specified in the protocol or is indicated by the network device, determining the first comb offset of the $p^{th}$ group of ports based on at least one of the $n_p^{i}$ ${}^{th}$ comb offset step $k_{COH,i}^{p}$ in the first comb offset set $\varphi_p$, the reference comb offset $k_{TC,start}^{p}$ of the $p^{th}$ group of ports, or the total comb quantity $K_{TC}$ includes: determining that the first comb offset of the $p^{th}$ group of ports is $\{[(k_{TC}^{p}+k_{offset}^{i'}+k_{COH,i}^{p}-k_{TC,start}^{p})\bmod n_p]+k_{TC,start}^{p}\}\bmod K_{TC}$, where $k_{offset}^{i'}$ is a comb offset adjustment value; $k_{TC}^{p}$ is obtained based on at least one of the total comb quantity $K_{TC}$ configured by the network device, $N_{ap}^{SRS}$, the comb offset $\overline{k}_{TC}$ of the reference port, the maximum cyclic shift value $n_{RS}^{cs,max}$, or the cyclic shift value of the reference port in the $p^{th}$ group of ports, for example, is obtained according to the formula (3); and $k_{COH,i}^{p}$ is $(-1)^b f(n_{SRS})$. Determining, based on the first comb offset and the frequency domain resource offset, the frequency domain starting position to which the $p^{th}$ group of ports is mapped includes: determining that the frequency domain starting position to which the $p^{th}$ group of ports is mapped is $n_{shift}N_{SC}^{RB}+\{[(k_{TC}^{p}+k_{offset}^{'}+k_{COH,i}^{p}-k_{TC,start}^{P})\bmod n_p]+k_{TC,start}^{P}\}\bmod K_{TC}$, where $n_{shift}N_{SC}^{RB}$ is the frequency domain resource offset. When $k_{TC,start}^{p}$ is 0, the frequency domain starting position to which the $p^{th}$ group of ports is mapped is $n_{shift}N_{SC}^{RB}+(k_{TC}^{p}+k_{offset}^{'}+k_{COH,i}^{p})\bmod n_p$.

Optionally, determining, based on the first comb offset and the frequency domain resource offset, the frequency domain starting position to which the $p^{th}$ group of ports is mapped includes: determining that the frequency domain starting position to which the $p^{th}$ group of ports is mapped is $n_{shift}N_{SC}^{RB}+\{[(k_{TC}^{p}+k_{offset}^{'}+k_{COH,i}^{p})\bmod n_p]+k_{TC,start}^{p}\}\bmod K_{TC}$. When $k_{TC,start}^{p}$ is 0, the frequency domain starting position to which the $p^{th}$ group of ports is mapped is $n_{shift}N_{SC}^{RB}+(k_{TC}^{p}+k_{offset}^{'}+k_{COH,i}^{p})\bmod n_p$.

Optionally, determining, based on the first comb offset and the frequency domain resource offset, the frequency domain starting position to which the $p^{th}$ group of ports is mapped includes: determining that the frequency domain starting position to which the $p^{th}$ group of ports is mapped is $(k_{TC,start}^{p}+k_{COH,i}^{p})\bmod K_{TC}$. To be specific, when CO hopping can be performed, $k_{offset}^{i'}$ may not exist, and hopping is performed by starting from the configured reference comb offset, for example, $k_{TC,start}^{p}$ is 0; or when CO hopping cannot be performed, a comb offset of the $p^{th}$ group of ports is $(k_{TC}^{p}+k_{COH,i}^{p})\bmod K_{TC}$. In other words, the frequency domain starting position to which the $p^{th}$ group of ports is mapped is as follows:

$$\begin{cases} \overline{k}_0^p = n_{shift} N_{SC}^{RB} + (k_{TC}^p + k_{offset}^{i'}) \bmod K_{TC} & \text{if } CO \text{ hopping is disabled} \\ \overline{k}_0^p = n_{shift} N_{SC}^{RB} + (k_{TC,start}^p + k_{COH,i}^p) \bmod K_{TC} & \text{if } CO \text{ hopping is enabled} \end{cases}$$

Optionally, in (b), that the network device receives the SRS based on the at least one comb offset in the first comb offset set $\varphi_p$ corresponding to the $p$th group of ports in S510 includes: The network device determines a first comb offset of the $p$th group of ports based on at least one of the $n_p^{i}$ th comb offset step $k_{COH,i}^p$ in the first comb offset set $\varphi_p$, the reference comb offset $k_{TC,start}^p$ of the $p$th group of ports, or the total comb quantity $K_{TC}$, where comb offsets of all ports in the $p$th group of ports are the first comb offset. The network device determines, based on the first comb offset and a frequency domain resource offset, a frequency domain starting position to which the $p$th group of ports is mapped. The network device sends the SRS based on the frequency domain starting position to which the $p$th group of ports is mapped. The first comb offset set $\varphi_p$ on the network device side is the same as the first comb offset set $\varphi_p$ on the terminal device side, and a manner in which the network device determines the first comb offset from the first comb offset set $\varphi_p$ is the same as the manner in which the terminal device determines the first comb offset. To avoid repetition, details are not described. When the reference comb offset $k_{TC,start}^p$ is determined by the terminal device based on a parameter configured by the network device, or is specified in the protocol, or is indicated by the network device, a manner in which the network device determines the first comb offset is the same as the manner in which the terminal device determines the first comb offset, and a manner in which the network device performs mapping to the frequency domain starting position for receiving the SRS is also the same as the manner in which the terminal device performs mapping to the frequency domain starting position for sending the SRS. To avoid repetition, details are not described in this embodiment of this application. That is, the network device and the terminal device determine the first comb offset in a same manner, and also send the SRS based on the first comb offset in a same manner. This can ensure that the network device can receive the SRS sent by the terminal device.

In (b), the first comb offset set $\varphi_p$ corresponding to the $p$th group of ports corresponds to the $n_p^{i}$ th comb offset step. In some implementations, different ports in the $p$ groups of ports may have different comb offset steps. In this way, a CO occupied by a port that sends an SRS can be more random, so that a probability of overlapping between the CO occupied by the port that sends the SRS and a CO of a terminal device not supporting CO hopping is low, and interference can be reduced. The following describes (c).

(c) An $m_p^{j}$ th port of the $m_p$ ports in the $p$th group of ports corresponds to an $n_p^{j}$ th comb offset step, the $n_p^{j}$ th comb offset step corresponds to a third value generated based on a quantity $n_p$ of comb offset steps, and a value range of the third value is $[0, n_p\text{-}1]$. Optionally, the third value may be a random value. Optionally, the terminal device may determine a random third value from $[0, n_p\text{-}1]$, and the $n_p^{j}$ th comb offset step of the $n_p$ comb offset steps corresponds to the third value. Optionally, the third value may be further related to one or more of a slot index corresponding to an SRS sending moment, an OFDM symbol index corresponding to an SRS sending moment, an OFDM symbol offset corresponding to an SRS sending moment, an SRS sending periodicity, a system frame index corresponding to an SRS sending moment, or an SRS repetition factor.

Optionally, similar to the third implementation in (a), a comb offset of each of the $m_p$ ports in the first comb offset set $\varphi_p$ is related to an index of a cyclic shift group to which a cyclic shift value corresponding to the port belongs, the first SRS resource corresponds to T groups of cyclic shift values, and the $T$ groups of cyclic shift values correspond to $T$ cyclic shift group indexes. In this case, that the $n_p^{j}$ th comb offset step of the $n_p$ comb offset steps corresponds to the third value is specifically as follows: The $n_p^{j}$ th comb offset step $k_{COH,j}^p$ is $(-1)^b[f(n_{SRS}) + Tj]$, where $Tj$ is an index of a cyclic shift group to which a cyclic shift value corresponding to the $m_p^{j}$ th port belongs, $f(n_{SRS})$ is the third value, a value of $b$ is 0 or 1. For a definition of $f(n_{SRS})$, refer to the descriptions of the formula (7) to the formula (9). $Tj$ is a positive integer ranging from 0 to $T\text{-}1$.

Optionally, a comb offset of each of the $m_p$ ports in the first comb offset set $\varphi_p$ is related to a cyclic shift value $n_{SRS}^{CS,j}$ corresponding to the port, and the first SRS resource corresponds to $n_{srs}^{CS,max}$ cyclic shift values. Optionally, a comb offset of each of the $m_p$ ports in the first comb offset set $\varphi_p$ is related to a cyclic shift value $n_{SRS}^{CS,j}$ corresponding to the port, a quantity $T$ of cyclic shift groups, and the maximum cyclic shift value $n_{srs}^{CS,\max}$. Optionally, the $n_p^{j\,\text{th}}$ comb offset step $k_{COH,j}^p$ is $(-1)^b \left[ f(n_{SRS}) + \left\lfloor n_{SRS}^{CS,j} \cdot T / n_{srs}^{CS,\max} \right\rfloor \right]$, where $f(n_{SRS})$ is the third value, a value of $b$ is 0 or 1, $n_{srs}^{CS,\max}$ is the maximum cyclic shift value, $n_{SRS}^{CS,j}$ is a cyclic shift value corresponding to the $m_p^{j\,\text{th}}$ port, and $T$ is a quantity of cyclic shift groups. For a definition of $f(n_{SRS})$, refer to the foregoing descriptions.

Optionally, it is specified in the protocol that the value of $b$ is 0; or it may be specified in the protocol that the value of $b$ is 1. Optionally, the network device may configure the value of $b$ to 0, or the network device may configure the value of $b$ to 1. Optionally, the $n_p^{j\,\text{th}}$ comb offset step is not limited to being determined based on the third value. The $n_p^{j\,\text{th}}$ comb offset step of the $n_p$ comb offset steps may alternatively be determined in another form. For example, a comb offset step corresponding to each port in the $p^{\text{th}}$ group of ports may be indicated by the network device, or a comb offset step corresponding to each port in the $p^{\text{th}}$ group of ports may be specified in the protocol. A manner of determining, by the terminal device, a comb offset step corresponding to each group of ports in the $p^{\text{th}}$ group of ports is not limited in this embodiment of this application. The network device may configure, for the terminal device, an initialization identity (identity, ID) for generating the third value, and the terminal device generates the third value based on the initialization identity; or the network device may generate the third value based on the initialization identity. In this way, the network device and the terminal device determine equal $n_p^{j\,\text{th}}$ comb offset steps based on the third value.

Optionally, in (c), that the terminal device receives the SRS based on the at least one comb offset in the first comb offset set $\varphi_p$ corresponding to the $p^{\text{th}}$ group of ports in S510 includes: The terminal device determines a comb offset of the $m_p^{j\,\text{th}}$ port based on at least one of the $n_p^{j\,\text{th}}$ comb offset step $k_{COH,j}^p$ corresponding to the $m_p^{j\,\text{th}}$ port, a reference comb offset $k_{TC,start}^p$ of the $m_p^{j\,\text{th}}$ port, or the total comb quantity $K_{TC}$. The terminal device determines, based on the comb offset of the $m_p^{j\,\text{th}}$ port and a frequency domain resource offset, a frequency domain starting position to which the $m_p^{j\,\text{th}}$ port is mapped. The terminal device sends the SRS based on the frequency domain starting position to which the $m_p^{j\,\text{th}}$ port is mapped. $m_p^j$ is a positive integer ranging from 1 to $m_p$. For different reference comb offsets $k_{TC,start}^p$, the terminal device determines the comb offset of the $m_p^{j\,\text{th}}$ port in different manners.

Optionally, it is assumed that the reference comb offset $k_{TC,start}^p$ is determined by the terminal device based on a parameter configured by the network device. For example, $k_{TC,start}^p$ is obtained based on at least one of the total comb quantity $K_{TC}$ configured by the network device, $N_{ap}^{SRS}$, the comb offset $\overline{K}_{TC}$ of the reference port, the maximum cyclic shift value $n_{RS}^{cs,\max}$, or the cyclic shift value of the reference port in the $p^{\text{th}}$ group of ports. For example, $k_{TC,start}^p$ may be $k_{TC}^p$ obtained according to the formula (3). That the terminal device determines the comb offset of the $m_p^{j\,\text{th}}$ port based on at least one of the $n_p^{j\,\text{th}}$ comb offset step $k_{COH,j}^p$ corresponding to the $m_p^{j\,\text{th}}$ port, the reference comb offset $k_{TC,start}^p$ of the $m_p^{j\,\text{th}}$ port, or the total comb quantity $K_{TC}$ includes: The terminal device determines that the comb offset of the $m_p^{j\,\text{th}}$ port is $(k_{TC}^p + k_{offset}^{i'} + k_{COH,j}^p) \bmod K_{TC}$, where $k_{offset}^{i'}$ is a comb offset adjustment value. Determining, based on the comb offset of the $m_p^{j\,\text{th}}$ port and the frequency domain resource offset, the frequency domain starting position to which the $m_p^{j\,\text{th}}$ port is mapped includes: determining that the frequency domain starting position to which the $m_p^{j\,\text{th}}$ port is mapped is $n_{shift} N_{SC}^{RB} + (k_{TC}^p + k_{offset}^{'} + k_{COH,j}^p) \bmod K_{TC}$, where $n_{shift} N_{SC}^{RB}$ is the frequency domain resource offset, and $k_{COH,j}^p$ is $(-1)^b \left[ f(n_{SRS}) + \left\lfloor n_{SRS}^{CS,j} \cdot T / n_{srs}^{CS,\max} \right\rfloor \right]$ or $(-1)^b \left[ f(n_{SRS}) + T^j \right]$.

Optionally, if the reference comb offset $k_{TC,start}^p$ of the $p^{\text{th}}$ group of ports is specified in the protocol or is indicated by the network device, determining the comb offset of the $m_p^{j\ \text{th}}$ port based on at least one of the $n_p^{j\ \text{th}}$ comb offset step $k_{COH,j}^p$ corresponding to the $m_p^{j\ \text{th}}$ port, the reference comb offset $k_{TC,start}^p$ of the $m_p^{j\ \text{th}}$ port, or the total comb quantity $K_{TC}$ includes: determining that the comb offset of the $m_p^{j\ \text{th}}$ port is $\{[(k_{TC}^p + k_{offset}^{i'} + k_{COH,j}^p - k_{TC,start}^p) \bmod n_p] + k_{TC,start}^p\} \bmod K_{TC}$, where $k_{offset}^{i'}$ is a comb offset adjustment value, and $k_{TC}^p$ is obtained based on at least one of the total comb quantity $K_{TC}$ configured by the network device, $N_{ap}^{SRS}$, the comb offset $\overline{k}_{TC}$ of the reference port, the maximum cyclic shift value $n_{RS}^{cs,\max}$, or the cyclic shift value of the reference port in the $p^{\text{th}}$ group of ports, for example, is obtained according to the formula (3). Determining, based on the comb offset of the $m_p^{j\ \text{th}}$ port and the frequency domain resource offset, the frequency domain starting position to which the $m_p^{j\ \text{th}}$ port is mapped includes: determining that the frequency domain starting position to which the $m_p^{j\ \text{th}}$ port is mapped is

$$n_{shift}N_{SC}^{RB} + \{[(k_{TC}^p + k_{offset}^{'} + k_{COH,j}^p - k_{TC,start}^p) \bmod n_p] + k_{TC,start}^p\} \bmod K_{TC}$$, where $n_{shift}N_{SC}^{RB}$ is the frequency domain resource offset.

Optionally, in (c), that the network device receives the SRS based on the at least one comb offset in the first comb offset set $\varphi_p$ corresponding to the $p^{\text{th}}$ group of ports in S510 includes: The network device determines a comb offset of the $m_p^{j\ \text{th}}$ port based on at least one of the $n_p^{j\ \text{th}}$ comb offset step $k_{COH,j}^p$ corresponding to the $m_p^{j\ \text{th}}$ port, a reference comb offset $k_{TC,start}^p$ of the $m_p^{j\ \text{th}}$ port, or the total comb quantity $K_{TC}$. The network device determines, based on the comb offset of the $m_p^{j\ \text{th}}$ port and a frequency domain resource offset, a frequency domain starting position to which the $m_p^{j\ \text{th}}$ port is mapped. The network device receives the SRS based on the frequency domain starting position to which the $m_p^{j\ \text{th}}$ port is mapped. $m_p^{j}$ is a positive integer ranging from 1 to $m_p$. The first comb offset set $\varphi_p$ on the network device side is the same as the first comb offset set $\varphi_p$ on the terminal device side, and a manner in which the network device determines the reference comb offset of the $m_p^{j\ \text{th}}$ port in the $p^{\text{th}}$ group of ports from the first comb offset set $\varphi_p$ is the same as the manner in which the terminal device determines the reference comb offset of the $m_p^{j\ \text{th}}$ port in the $p^{\text{th}}$ group of ports. To avoid repetition, details are not described. When the reference comb offset $k_{TC,start}^p$ is determined by the terminal device based on a parameter configured by the network device, or is specified in the protocol, or is indicated by the network device, a manner in which the network device determines the reference comb offset of the $m_p^{j\ \text{th}}$ port in the $p^{\text{th}}$ group of ports is the same as the manner in which the terminal device determines the reference comb offset of the $m_p^{j\ \text{th}}$ port in the $p^{\text{th}}$ group of ports, and a manner in which the network device performs mapping to the frequency domain starting position for receiving the SRS is also the same as the manner in which the terminal device performs mapping to the frequency domain starting position for sending the SRS. To avoid repetition, details are not described in this embodiment of this application. That is, the network device and the terminal device determine the reference comb offset of the $m_p^{j\ \text{th}}$ port in the $p^{\text{th}}$ group of ports in a same manner, and also send the SRS based on the reference comb offset of the $m_p^{j\ \text{th}}$ port in the $p^{\text{th}}$ group of ports in a same manner. This can ensure that the network device can receive the SRS sent by the terminal device.

It can be understood that, in this embodiment of this application, a comb offset set of each group of ports may be in any form, and is not limited to the cases described in the foregoing three cases. For example, comb offsets included in the comb offset set of each group of ports may be any $n_p$ comb offsets ranging from 0 to $K_{TC}$ - 1.

Optionally, in the foregoing method 500, the first comb offset set $\varphi_p$ corresponds to an initial comb offset value of the $p^{\text{th}}$ group of ports and a first comb offset bias value set. In other words, the first comb offset set $\varphi_p$ may be determined based on the initial comb offset value of the $p^{\text{th}}$ group of ports and the first comb offset bias value set. For example, the initial comb offset value of the $p^{\text{th}}$ group of ports is 1, and the first comb offset bias value set is {0, 1}. In this case, the first comb offset set is {1, 2}. To be specific, the terminal device may send the SRS based on at least one comb offset in the first comb offset set $\varphi_p$, or may send the SRS based on the initial comb offset value of the $p^{th}$ group of ports and the first comb offset bias value set; or the terminal device may determine the first comb offset set $\varphi_p$ based on the initial comb offset value of the $p^{th}$ group of ports and the first comb offset bias value set, and send the SRS based on at least one comb offset in the first comb offset set $\varphi_p$. Optionally, that the terminal device sends the SRS based on the initial comb offset value of the $p^{th}$ group of ports and the first comb offset bias value set includes: The terminal device selects a first comb offset bias value of the $p^{th}$ group of ports from the first comb offset bias value set, determines a first comb offset value based on the initial comb offset value of the $p^{th}$ group of ports and the first comb offset bias value of the $p^{th}$ group of ports, and sends the SRS on the first comb offset value.

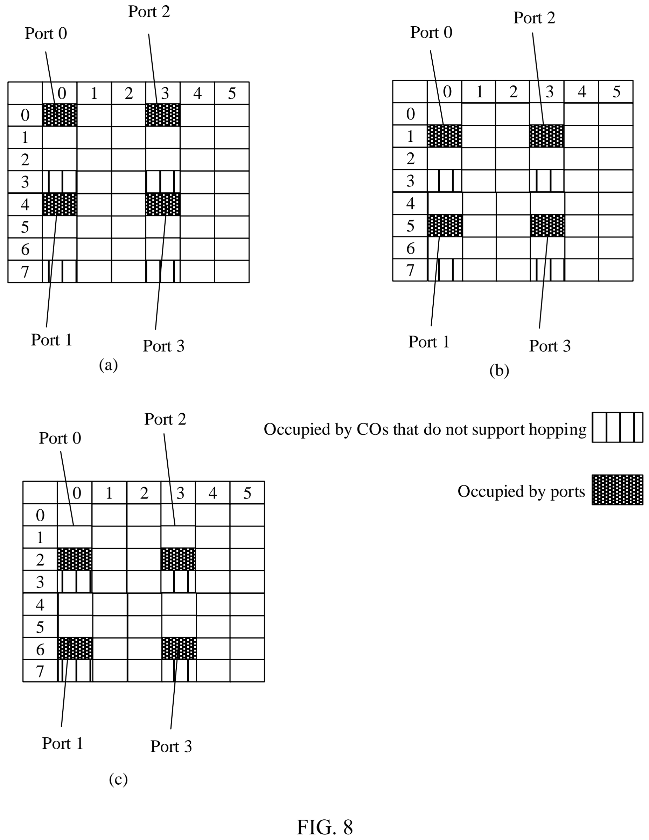

Optionally, initial comb offset values of all ports in the $p^{th}$ group of ports are equal, and initial comb offset values of different groups of ports may be different. To be specific, during port division, ports belonging to a same comb may be considered as one group of ports, and ports on different combs may be divided into different groups of ports. For example, as shown in FIG. 8, four ports corresponding to the first SRS resource are ports 0, 1, 2, and 3. Among the four ports, 0 and 2 are a port group 1, and 1 and 3 are a port group 2. As shown in a diagram (a) in FIG. 8, an initial comb offset value of the port group 1 is 0, an initial comb offset value of the port group 2 is 4, and the first comb offset bias value set is {0, 1, 2}. In this case, a comb offset set corresponding to the port group 1 is {0, 1, 2}, and a comb offset set corresponding to the port group 2 is {4, 5, 6}. For example, as shown in a diagram (b) in FIG. 8, for the 1st SRS sending occasion, COs of the ports in the port group 1 are a CO 1, and COs of the ports in the port group 2 are a CO 5. For another example, as shown in a diagram (c) in FIG. 8, for the 2nd SRS sending occasion, COs of the ports in the port group 1 are a CO 2, and a CO of the port group 2 is a CO 6.

Optionally, for an SRS sending occasion, first comb offset bias values of different port groups in the first comb offset bias value set may be the same, or certainly may be different. This is not limited in this embodiment of this application.

The first comb offset bias value set is discussed below in two cases.

Case 1: Comb offset bias values included in the first comb offset bias value set are consecutive.

Optionally, the first comb offset bias value set includes $L_{g,1}$ consecutive cyclic shift biases, where $L_{g,1}$ is greater than or equal to 1 and less than or equal to the total comb quantity $K_{TC}$. For example, the first comb offset bias value set is {0, 1, 2}, and $L_{g,1}$ is 3. To be specific, a difference between a $k^{th}$ comb bias value $CO_{p}^{k}$ and a $(k-1)^{th}$ comb offset bias value $CO_{p}^{k-1}$ that are included in the first comb offset bias value set is as follows: $CO_{p}^{k} - CO_{p}^{k-1} = 1$. For example, $CO2-CO1=1$. It should be noted that, for a comb offset bias value $L_{g,1} - 1$ and a comb offset bias value 0, the comb offset bias values may also be considered as consecutive.

Optionally, the network device may send indication information that indicates $L_{g,1}$, and the terminal device may receive the indication information that indicates $L_{g,1}$ from the network device, so that the terminal device can determine $L_{g,1}$.

Optionally, the first comb offset bias value set is {0, 1 mod $K_{TC}$, $\cdots$, ($L_{g,1}$ -1)mod $K_{TC}$}, where mod($\cdot$) is a modulo operation. When the first comb offset bias value set is 0, 1 mod $K_{TC}$, $\cdots$, ($L_{g,1}$ -1)mod $K_{TC}$, the first comb offset set $\varphi_p$ corresponding to the $p^{th}$ group of ports corresponds to a direction in which a comb offset increases by starting from the initial comb offset value of the $p^{th}$ group of ports. For the initial comb offset value $k_{TC}^{p}$ of the $p^{th}$ group of ports, refer to the foregoing descriptions of the formula (3). To avoid repetition, details are not described. Optionally, the initial comb offset value $k_{TC}^{p}$ of the $p^{th}$ group of ports may alternatively be indicated by the network device. This is not limited in this embodiment of this application.

Optionally, the first comb offset bias value set is {0, -1 mod $K_{TC}$, $\cdots$, ($-L_{g,1}$ + 1) mod $K_{TC}$}, where mod($\cdot$) is a modulo operation. When the first comb offset bias value set is {0, -1 mod $K_{TC}$, $\cdots$, ($-L_{g,1}$+1)mod $K_{TC}$}, the first comb offset set $\varphi_p$ corresponding to the $p^{th}$ group of ports corresponds to a direction in which a comb offset decreases by starting from the initial comb offset value $k_{TC}^{p}$ of the $p^{th}$ group of ports. For the initial comb offset value $k_{TC}^{p}$ of the $p^{th}$ group of ports, refer to the foregoing descriptions of the formula (3). To avoid repetition, details are not described. Optionally, the initial comb offset value $k_{TC}^{p}$ of the $p^{th}$ group of ports may alternatively be indicated by the network device. This is not limited in this embodiment of this application.

Optionally, in the case 1, the terminal device may determine, from the first comb offset bias value set based on $L_{g,1}$ and a random function $f(n_{SRS})$, a first comb offset bias value $n_{SRS}^{comb,\ offset}$ of an SRS sending occasion, and may obtain, based on the initial comb offset value of the $p^{th}$ group of ports and the first comb offset bias value, the frequency domain starting position to which the $p^{th}$ group of ports is mapped.

For example, the frequency domain starting position to which the $p^{th}$ group of ports is mapped is

$$n_{shift} N_{SC}^{RB} + (k_{TC}^{p} + k_{offset}^{'} + n_{SRS}^{comb,\ offset}) \bmod K_{TC}.$$ $n_{shift} N_{SC}^{RB}$ is a frequency domain resource offset, $k_{offset}^{i}$ is a comb

offset adjustment value, $k_{TC}^{p}$ is the initial comb offset value of the $p^{th}$ group of ports, and $f(n_{SRS})$ is the random function.

Refer to the foregoing descriptions. $n_{SRS}^{comb,\ offset} = f(n_{SRS}) \bmod L_{g,1}$, where $L_{g,1} = K_{TC}$, or $L_{g,1}$ is a value configured by the network device or is a preset value, and $n_{SRS}^{comb,\ offset}$ is the first comb offset bias value. To be specific, for one SRS sending occasion, the first comb offset bias value is one comb offset bias value in the first comb offset bias value set. Refer to the example shown in FIG. 8. For example, in the diagram (b) in FIG. 8, on an SRS sending occasion, first comb offset bias values of the port group 1 and the port group 2 are 1. For another example, in the diagram (c) in FIG. 8, on the 1st SRS sending occasion, first comb offset bias values of the port group 1 and the port group 2 are 2.

Optionally, the network device may configure *'combOffsetHoppingSubset'*. If the network device configures *'combOffsetHoppingSubset'*, $L_{g,1}$ is a value configured by the network device or is a preset value. If the network device does not configure *'combOffsetHoppingSubset'*, $L_{g,1} = K_{TC}$. To be specific, the terminal device may determine a value of $L_{g,1}$ depending on whether the network device configures *'combOffsetHoppingSubset'*. In different cases, the value of $L_{g,1}$ varies. The network device configuring *'combOffsetHoppingSubset'* indicates that CO subset hopping is enabled, and the network device may configure a quantity of comb offset bias values included in the first comb offset bias value set, or a quantity of comb offset bias values included in the first comb offset bias value set may be preset. The network device not configuring *'combOffsetHoppingSubset'* indicates that CO subset hopping is disabled. This implies that the first comb offset bias value set may include all comb offsets.

Case 2: Comb offset bias values included in the first comb offset bias value set are inconsecutive.

Optionally, the first comb offset bias value set includes at least one comb offset bias value subset, and comb offset bias values included in each of the at least one comb offset bias value subset are consecutive. Optionally, the at least one comb offset bias value subset is inconsecutive. To be specific, the first comb offset bias value set may include a plurality of subsets that each are consecutive, and the subsets may be inconsecutive.

Optionally, comb offset bias value intervals between any two adjacent comb offset bias value subsets of the at least one comb offset bias value subset are equal. Optionally, a comb offset bias value interval between two adjacent comb offset bias value subsets is greater than 1, for example, is $\Delta''$.

Optionally, all of the at least one comb offset bias value subset include equal quantities of comb offset bias values. For example, the quantities are all $L_g$, where $L_g$ is a positive integer greater than or equal to 1.

Optionally, the first comb offset bias value set includes G comb offset value subsets, where G is a positive integer greater than 1 or less than $K_{TC}$.

Optionally, the first comb offset bias value set may be obtained based on the total comb quantity $K_{TC}$, the comb offset bias value interval $\Delta''$ between any two adjacent comb offset bias value subsets, and the quantity $L_g$ of comb offset bias values included in each comb offset bias value subset.

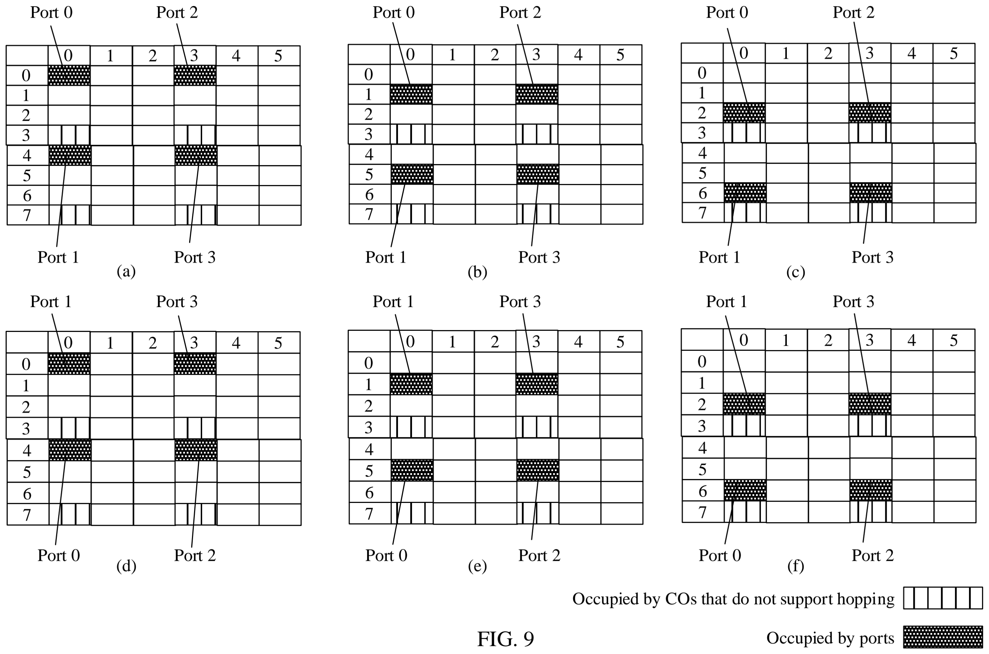

Optionally, a $g^{th}$ comb offset bias value subset of the G comb offset bias value subsets is $\{\Delta_g \bmod K_{TC}, (\Delta_g + 1) \bmod K_{TC} \cdots, (\Delta_g + L_g - 1) \bmod K_{TC}\}$, where $\Delta_0 = 0$, $\Delta_g = \Delta'' \cdot g$, g=0,1,$\cdots$, G-1, $\Delta''$ is the comb offset bias value interval between any two adjacent comb offset bias value subsets, $K_{TC}$ is the total comb quantity, $L_g$ is a quantity of comb offset bias values included in the $g^{th}$ comb offset bias value subset, $\sum_{g=1}^{G} L_g = L_{g,1}$, and $L_{g,1}$ is a total quantity of comb offset bias values included in the first comb offset bias value set. For example, as shown in FIG. 9, the first comb offset bias value set is {0, 1, 2, 4, 5, 6}, G is 2, and the two comb offset bias subsets are {0, 1, 2} and {4, 5, 6}. That is, the two comb offset bias subsets {0, 1, 2} and {4, 5, 6} constitute the first comb offset bias value set {0, 1, 2, 4, 5, 6}, or the first comb offset bias value set {0, 1, 2, 4, 5, 6} is divided into the two comb offset bias subsets {0, 1, 2} and {4, 5, 6}. The first SRS resource corresponds to four ports: ports 0, 1, 2, and 3. Among the four ports, 0 and 2 are a port group 1, and 1 and 3 are a port group 2. As shown in a diagram (a) in FIG. 9, an initial comb offset value of the port group 1 is a CO 0, and an initial comb offset value of the port group 2 is a CO 4. In this case, a comb offset set corresponding to the port group 1 is {0, 1, 2, 4, 5, 6}, a comb offset set corresponding to the port group 2 is {4, 5, 6, 0, 1, 2}, and the comb offset sets corresponding to the port group 1 and the port group 2 may be a same set: {0, 1, 2, 4, 5, 6}. For example, as shown in a diagram (b) in FIG. 9, on an SRS sending occasion, the port group 1 corresponds to the CO 1 in the comb offset set {0, 1, 2, 4, 5, 6}, and therefore COs of the ports in the port group 1 are the CO 1; and the port group 2 corresponds to the CO 5 in the comb offset set {0, 1, 2, 4, 5, 6}, and therefore COs of the ports in the port group 2 are the CO 5. For example, as shown in a diagram (c) in FIG. 9, on an SRS sending occasion, the port group 1 corresponds to the CO 2 in the comb offset set {0, 1, 2, 4, 5, 6}, and therefore COs of the ports in the port group 1 are the CO 2; and the port group 2 corresponds to the CO 6 in the comb offset set {0, 1, 2, 4, 5, 6}, and COs of the ports in the port group 2 are the CO 6. For example, as shown in a diagram (d) in FIG. 9, on an SRS sending occasion, the port group 1 corresponds to the CO 4 in the comb offset set {0, 1, 2, 4, 5, 6}, and therefore COs of the ports in the port group 1 is the CO 4;

and the port group 2 corresponds to the CO 0 in the comb offset set {0, 1, 2, 4, 5, 6}, and COs of the ports in the port group 2 are the CO 0. For example, as shown in a diagram (e) in FIG. 9, on an SRS sending occasion, the port group 1 corresponds to the CO 5 in the comb offset set {0, 1, 2, 4, 5, 6}, and therefore COs of the ports in the port group 1 are the CO 5; and the port group 2 corresponds to the CO 1 in the comb offset set {0, 1, 2, 4, 5, 6}, and COs of the ports in the port group 2 are the CO 1. For example, as shown in a diagram (f) in FIG. 9, on the $4^{th}$ SRS sending occasion, the port group 1 corresponds to the CO 5 in the comb offset set {0, 1, 2, 4, 5, 6}, and therefore COs of the ports in the port group 1 are the CO 5; and the port group 2 corresponds to the CO 2 in the comb offset set {0, 1, 2, 4, 5, 6}, and COs of the ports in the port group 2 are the CO 2.

Optionally, a $g^{th}$ comb offset bias value subset of the G comb offset bias value subsets is $\{-\Delta_g \bmod K_{TC}, (-\Delta_g - 1) \bmod K_{TC} \cdots, (-\Delta_g - L_g + 1) \bmod K_{TC}\}$, where $\Delta_0 = 0$, $\Delta_g = \Delta'' \cdot g$, g=0,1,$\cdots$, G-1, $\Delta''$ is the comb offset bias value interval between any two adjacent comb offset bias value subsets, $K_{TC}$ is the total comb quantity, $L_g$ is a quantity of comb offset bias values included in the $g^{th}$ comb offset bias value subset, $\sum_{g=1}^{G} L_g = L_{g,1}$, and $L_{g,1}$ is a total quantity of comb offset bias values included in the first comb offset bias value set.

Optionally, there is an association relationship between the quantity $L_g$ of comb offset bias values included in each comb offset bias value subset, the quantity G of comb offset bias value subsets, and the quantity $L_{g,1}$ of comb offset bias values included in the first comb offset bias value set. The network device may configure two of $L_g$, G, or $L_{g,1}$. The terminal device may determine the other one of $L_g$, G, or $L_{g,1}$ based on the two items configured by the network device. For example, the network device may configure $L_g$ and $L_{g,1}$, and the terminal device obtains G based on $L_g$ and $L_{g,1}$; or the network device may configure G and $L_{g,1}$, and the terminal device may obtain $L_g$ based on G and $L_{g,1}$. For example, the association relationship may be as follows: $L_g \times G = L_{g,1}$.

Optionally, there is an association relationship between the total comb quantity $K_{TC}$, the quantity G of comb offset bias value subsets, and the comb offset bias value interval $\Delta''$ between any two adjacent comb offset bias value subsets. The network device may configure two of $K_{TC}$, G, or $\Delta''$. The terminal device may determine the other one of $K_{TC}$, G, or $\Delta''$ based on the two items configured by the network device. For example, the network device may configure $\Delta''$ and $K_{TC}$, and the terminal device obtains G based on $\Delta''$ and $K_{TC}$; or the network device may configure G and $K_{TC}$, and the terminal device may obtain $\Delta''$ based on $K_{TC}$ and G. For example, the association relationship may be as follows: $K_{TC} = \Delta'' \cdot G$.

Optionally, in a case 1, the terminal device may determine a quantity of ports on a same cyclic shift among the $N_{ap}^{SRS}$ ports as G. For example, as shown in FIG. 8, among the four ports, the port 0 and the port 1 are on a CS 0, and the port 2 and the port 3 are on a CS 3. That is, two ports occupy one CS. Therefore, for FIG. 8, the terminal device may determine that the quantity G is 2. In this case, G may be replaced with $N_{ap,cs}^{SRS}$.

Optionally, in a case 2, G is a quantity of different comb offsets occupied by the $N_{ap}^{SRS}$ ports corresponding to the first SRS resource. For example, as shown in FIG. 8, the port 0 and the port 2 occupy a CO 1, and the port 1 and the port 3 occupy a CO 4. Therefore, the four ports occupy a total of two outputs, and the terminal device may determine that G is 2. In this case, G may be replaced with $N_{ap,diffcomb}^{SRS}$.

Optionally, in a case 3,
$$G = \begin{cases} 4 & \text{if } N_{ap}^{SRS} = 8 \text{ and } K_{TC} = 8 \\ 2 & \text{if } N_{ap}^{SRS} = 8 \text{ and } K_{TC} = 8; \text{ or if } N_{ap}^{SRS} = 4 \text{ and } K_{TC} = 8 \\ 1 & \text{others} \end{cases}.$$

When the terminal device determines G according to any one of the foregoing case 1, case 2, and case 3, to be specific, when G is $N_{ap,diffcomb}^{SRS}$, G is $N_{ap,cs}^{SRS}$, or

$$G = \begin{cases} 4 & \text{if } N_{ap}^{SRS} = 8 \text{ and } K_{TC} = 8 \\ 2 & \text{if } N_{ap}^{SRS} = 8 \text{ and } K_{TC} = 8; \text{ or if } N_{ap}^{SRS} = 4 \text{ and } K_{TC} = 8 \\ 1 & \text{others} \end{cases}$$, the terminal device may determine the first comb offset bias value $n_{SRS}^{comb,\ offset}$ of the $p^{th}$ group of ports from the first comb offset bias value set based on at least one of the random function $f(n_{SRS})$, the total quantity $L_g$ of comb offset bias values included in the first comb offset bias value set, the quantity G of comb offset bias value subsets, the total comb quantity $K_{TC}$, or the quantity $S_g$ of comb offset bias values included in each comb offset bias value subset. Then the terminal device obtains, based on the first comb offset bias value $n_{SRS}^{comb,\ offset}$, the frequency domain starting position to which the $p^{th}$ group of ports is mapped. Certainly, the terminal device may alternatively determine the first comb offset bias value $n_{SRS}^{comb,\ offset}$ based on another parameter.

The following describes six manners of determining the first comb offset bias value $n_{SRS}^{comb,\ offset}$ of the $p^{th}$ group of ports from the first comb offset bias value set. The network device or the protocol may specify one of the following six manners that is to be used by the terminal device. Alternatively, there may be a priority relationship between the six manners, and the terminal device may select a manner with a high priority to determine the first comb offset bias value $n_{SRS}^{comb,\ offset}$. Alternatively, the terminal device may select, based on an implementation of the terminal device, one of the six manners to determine the first comb offset bias value $n_{SRS}^{comb,\ offset}$.

Manner 1: The terminal device may determine the first comb offset bias value $n_{SRS}^{comb,\ offset}$ based on $L_{g,1}$ and the random function $f(n_{SRS})$.

For example, $n_{SRS}^{comb,\ offset} = S(f(n_{SRS}) \bmod L_{g,1}) = f(n_{SRS}) \bmod L_{g,1}$, where $L_{g,1} = K_{TC}$.

Optionally, if the network device does not configure *combOffsetHoppingSubset,* the first comb offset bias value $n_{SRS}^{comb,\ offset}$ may be determined in the manner 1. To be specific, when the network device does not enable CO subset hopping, if the first comb offset bias value set may include all combs, the terminal device may determine the first comb offset bias value $n_{SRS}^{comb,\ offset}$ based on $L_{g,1}$ and the random function $f(n_{SRS})$.

It can be understood that the terminal device may determine the first comb offset bias value $n_{SRS}^{comb,\ offset}$ based on $L_{g,1}$ and the random function $f(n_{SRS})$ by using another formula. In this embodiment of this application, a manner in which the terminal device determines the first comb offset bias value $n_{SRS}^{comb,\ offset}$ based on $L_{g,1}$ and the random function $f(n_{SRS})$ is not limited, and the formula in the manner 1 may be transformed in any manner.

Manner 2: The terminal device may determine the first comb offset bias value $n_{SRS}^{comb,\ offset}$ based on $L_{g,1}$, $G$, the random function $f(n_{SRS})$, and $K_{TC}$.

For example, $n_{SRS}^{comb,\ offset} = \left( \left\lfloor \dfrac{f(n_{SRS}) \bmod L_{g,1}}{L_{g,1}/G} \right\rfloor \times \dfrac{K_{TC}}{G} + \left( \left( f(n_{SRS}) \bmod L_{g,1} \right) \bmod (L_{g,1}/G) \right) \right)$,

where $L_{g,1}$ is a value configured by the network device or is a preset value, $f(n_{SRS})$ is the random function, and $\lfloor \cdot \rfloor$ is a round-down operation.

Optionally, if the network device configures *combOffsetHoppingSubset,* the first comb offset bias value $n_{SRS}^{comb,\ offset}$ may be determined in the manner 2. To be specific, when the network device enables CO subset hopping, the terminal device may determine the first comb offset bias value $n_{SRS}^{comb,\ offset}$ based on $L_{g,1}$, G, the random function $f(n_{SRS})$, and $K_{TC}$.

Optionally, when $L_{g,1}$ is not exactly divided by $G$, $L_{g,1} / G$ may be replaced with $\lceil L_{g,1}/G \rceil$ or $\lfloor L_{g,1}/G \rfloor$, where $\lfloor \cdot \rfloor$ is a round-down operation, and $\lceil \cdot \rceil$ is a round-up operation.

Optionally, $L_{g,1}$ may be a positive integer multiple of $G$.

It can be understood that the terminal device may determine the first comb offset bias value $n_{SRS}^{comb,\ offset}$ based on $L_{g,1}$, G, the random function $f(n_{SRS})$, and $K_{TC}$ by using another formula. In this embodiment of this application, a manner in which the terminal device determines the first comb offset bias value $n_{SRS}^{comb,\ offset}$ based on $L_{g,1}$, G, the random function $f(n_{SRS})$, and $K_{TC}$ is not limited, and the formula in the manner 2 may be transformed in any manner.

Manner 3: The terminal device may determine the first comb offset bias value $n_{SRS}^{comb,\ offset}$ based on $S_g$, $f(n_{SRS})$, $L_{g,1}$, G, and $K_{TC}$.

For example, $n_{SRS}^{comb,\ offset} = \left( \left\lfloor \dfrac{f(n_{SRS}) \bmod L_{g,1}}{S_g} \right\rfloor \times \dfrac{K_{TC}}{G} + \left( (f(n_{SRS}) \bmod G) \bmod S_g \right) \right)$, where $S_g$ is a value configured by the network device or is a preset value, and $L_{g,1} = G \cdot S_g$.

Optionally, if the network device configures *combOffsetHoppingSubset,* the first comb offset bias value $n_{SRS}^{comb,\ offset}$ may be determined in the manner 3. To be specific, when the network device enables CO subset hopping, the terminal device may determine the first comb offset bias value $n_{SRS}^{comb,\ offset}$ based on $S_g$, $f(n_{SRS})$, $L_{g,1}$, and G.

It can be understood that the terminal device may determine the first comb offset bias value $n_{SRS}^{comb,\ offset}$ based on $S_g$, $f(n_{SRS})$, $L_{g,1}$, G, and $K_{TC}$ by using another formula. In this embodiment of this application, a manner in which the terminal device determines the first comb offset bias value $n_{SRS}^{comb,\ offset}$ based on $S_g$, $f(n_{SRS})$, $L_{g,1}$, G, and $K_{TC}$ is not limited, and the formula in the manner 3 may be transformed in any manner.

Manner 4: The terminal device may determine the first comb offset bias value $n_{SRS}^{comb,\ offset}$ based on $f(n_{SRS})$ and $K_{TC}$.

For example, $n_{SRS}^{comb,\ offset} = f(n_{SRS}) \bmod K_{TC}$ .

Optionally, if the network device does not configure *combOffsetHoppingSubset,* the first comb offset bias value $n_{SRS}^{comb,\ offset}$ may be determined in the manner 4. To be specific, when the network device does not enable CO subset hopping, if the first comb offset bias value set may include all combs, the terminal device may determine the first comb offset bias value $n_{SRS}^{comb,\ offset}$ based on $f(n_{SRS})$ and $K_{TC}$.

It can be understood that the terminal device may determine the first comb offset bias value $n_{SRS}^{comb,\ offset}$ based on $f(n_{SRS})$ and $K_{TC}$ by using another formula. In this embodiment of this application, a manner in which the terminal device determines the first comb offset bias value $n_{SRS}^{comb,\ offset}$ based on $f(n_{SRS})$ and $K_{TC}$ is not limited, and the formula in the manner 4 may be transformed in any manner.

Manner 5: The terminal device may determine the first comb offset bias value $n_{SRS}^{comb,\ offset}$ based on $f(n_{SRS})$, $L_{g,1}$, G , and $K_{TC}$.

For example, $n_{SRS}^{comb,\ offset} = \left( \left\lfloor \dfrac{f(n_{SRS}) \bmod L_{g,1}}{L_{g,1} / G} \right\rfloor \times \dfrac{K_{TC}}{G} + \left( f(n_{SRS}) \bmod (L_{g,1} / G) \right) \right)$, where $L_{g,1}$ is a value configured by the network device or is a preset value.

Optionally, if the network device configures *combOffsetHoppingSubset*, the first comb offset bias value $n_{SRS}^{comb,\ offset}$ may be determined in the manner 5. To be specific, when the network device enables CO subset hopping, the terminal device may determine the first comb offset bias value $n_{SRS}^{comb,\ offset}$ based on $f(n_{SRS})$, $L_{g,1}$, G , and $K_{TC}$.

Optionally, when $L_{g,1}$ is not exactly divided by G, $L_{g,1} / G$ may be replaced with $\left\lceil L_{g,1} / G \right\rceil$ or $\left\lfloor L_{g,1} / G \right\rfloor$, where $\left\lfloor \cdot \right\rfloor$ is a round-down operation, and $\left\lceil \cdot \right\rceil$ is a round-up operation.

Optionally, $L_{g,1}$ may be a positive integer multiple of G .

It can be understood that the terminal device may determine the first comb offset bias value $n_{SRS}^{comb,\ offset}$ based on $f(n_{SRS})$, $L_{g,1}$, G , and $K_{TC}$ by using another formula. In this embodiment of this application, a manner in which the terminal device determines the first comb offset bias value $n_{SRS}^{comb,\ offset}$ based on $f(n_{SRS})$, $L_{g,1}$, G , and $K_{TC}$ is not limited, and the formula in the manner 5 may be transformed in any manner.

Manner 6: The terminal device may determine the first comb offset bias value $n_{SRS}^{comb,\ offset}$ based on $f(n_{SRS})$, $L_{g,1}$,

$S_g$, $G$, and $K_{TC}$.

For example, $n_{SRS}^{comb,\ offset} = \left( \left\lfloor \dfrac{f(n_{SRS}) \bmod L_{g,1}}{S_g} \right\rfloor \times \dfrac{K_{TC}}{G} + \left( f(n_{SRS}) \bmod S_g \right) \right)$.

Optionally, if the network device configures *combOffsetHoppingSubset*, the first comb offset bias value $n_{SRS}^{comb,\ offset}$ may be determined in the manner 6. To be specific, when the network device enables CO subset hopping, the terminal device may determine the first comb offset bias value $n_{SRS}^{comb,\ offset}$ based on $f(n_{SRS})$, $L_{g,1}$, $S_g$, $G$, and $K_{TC}$.

It can be understood that the terminal device may determine the first comb offset bias value $n_{SRS}^{comb,\ offset}$ based on $f(n_{SRS})$, $L_{g,1}$, $S_g$, $G$, and $K_{TC}$ by using another formula. In this embodiment of this application, a manner in which the terminal device determines the first comb offset bias value $n_{SRS}^{comb,\ offset}$ based on $f(n_{SRS})$, $Lg_{,1}$, $S_g$, $G$, and $K_{TC}$ is not limited, and the formula in the manner 6 may be transformed in any manner.

Optionally, after determining the first comb offset bias value $n_{SRS}^{comb,\ offset}$ in any one of the foregoing six manners, the terminal device may obtain, based on the first comb offset bias value $n_{SRS}^{comb,\ offset}$, the frequency domain starting position $n_{shift} N_{SC}^{RB} + (k_{TC}^{p} + k_{offset}' + n_{SRS}^{comb,\ offset}) \bmod K_{TC}$ to which the $P^{th}$ group of ports is mapped, where $n_{shift} N_{SC}^{RB}$ is a frequency domain resource offset, $k_{offset}^{i}$ is a comb offset adjustment value, and $k_{TC}^{p}$ is the initial comb offset value of the P groups of ports.

Optionally, in some cases, the network device may indicate $\Delta''$ or $\Delta'' = \begin{cases} 1, & \text{if } K_{TC} = 2 \\ 2, & \text{others} \end{cases}$, and $\Delta'' = \begin{cases} 1, & \text{if } K_{TC} = 2 \\ 2, & \text{others} \end{cases}$ may be specified in the protocol or configured by the network device. Optionally, the terminal device may determine $\Delta''$ based on $G$ and $n_{SRS}^{cs,\max}$. For example, $\Delta'' = n_{SRS}^{cs,\max} / G$, where

$$G = \begin{cases} 4 & \text{if } N_{ap}^{SRS} = 8 \text{ and } K_{TC} = 8 \\ 2 & \text{if } N_{ap}^{SRS} = 8 \text{ and } K_{TC} = 8; \text{ or if } N_{ap}^{SRS} = 4 \text{ and } K_{TC} = 8 \\ 1 & \text{others} \end{cases}$$

. When the terminal device determines $\Delta''$, the following describes six manners of determining the first comb offset bias value $n_{SRS}^{comb,\ offset}$ of the $p^{th}$ group of ports from the first comb offset bias value set. The network device or the protocol may specify one of the following six manners that is to be used by the terminal device. Alternatively, there may be a priority relationship between the six manners, and the terminal device may select a manner with a high priority to determine the first comb offset bias value $n_{SRS}^{comb,\ offset}$. Alternatively, the terminal device may select, based on an implementation of the terminal device, one of the six manners to determine the first comb offset bias value $n_{SRS}^{comb,\ offset}$.

Manner 1: The terminal device may determine the first comb offset bias value $n_{SRS}^{comb,\ offset}$ based on $L_{g,1}$ and the random function $f(n_{SRS})$.

For example, $n_{SRS}^{comb,\ offset} = S(f(n_{SRS}) \bmod L_{g,1}) = f(n_{SRS}) \bmod L_{g,1}$, where $L_{g,1} = K_{TC}$.

Optionally, if the network device does not configure *combOffsetHoppingSubset*, the first comb offset bias value $n_{SRS}^{comb,\ offset}$ may be determined in the manner 1. To be specific, when the network device does not enable CO subset hopping, if the first comb offset bias value set may include all combs, the terminal device may determine the first comb offset bias value $n_{SRS}^{comb,\ offset}$ based on $L_{g,1}$ and the random function $f(n_{SRS})$.

It can be understood that the terminal device may determine the first comb offset bias value $n_{SRS}^{comb,\ offset}$ based on $L_{g,1}$ and the random function $f(n_{SRS})$ by using another formula. In this embodiment of this application, a manner in which the terminal device determines the first comb offset bias value $n_{SRS}^{comb,\ offset}$ based on $L_{g,1}$ and the random function $f(n_{SRS})$ is not limited, and the formula in the manner 1 may be transformed in any manner.

Manner 2: The terminal device may determine the first comb offset bias value $n_{SRS}^{comb,\ offset}$ based on $L_{g,1}$, $\Delta''$, the random function $f(n_{SRS})$, and $K_{TC}$.

For example,

$$n_{SRS}^{comb,\ offset} = \left( \left\lfloor \frac{f(n_{SRS}) \bmod L_{g,1}}{(L_{g,1} \times \Delta'')/K_{TC}} \right\rfloor \times \Delta'' + \left( \left( f(n_{SRS}) \bmod L_{g,1} \right) \bmod \left( (L_{g,1} \times \Delta)/K_{TC} \right) \right) \right)$$

, where $L_{g,1}$ is a value configured by the network device or is a preset value.

Optionally, when $L_{g,1} \times \Delta''$ is not exactly divided by $K_{TC}$, $(L_{g,1} \times \Delta'')/K_{TC}$ may be replaced with $\left\lceil (L_{g,1} \times \Delta'')/K_{TC} \right\rceil$ or $\left\lfloor (L_{g,1} \times \Delta'')/K_{TC} \right\rfloor$, where $\lfloor \cdot \rfloor$ is a round-down operation, and $\lceil \cdot \rceil$ is a round-up operation.

Optionally, $L_{g,1} \times \Delta''$ may be a positive integer multiple of $K_{TC}$.

Optionally, if the network device configures *combOffsetHoppingSubset*, the first comb offset bias value $n_{SRS}^{comb,\ offset}$ may be determined in the manner 2. To be specific, when the network device enables CO subset hopping, the terminal device may determine the first comb offset bias value $n_{SRS}^{comb,\ offset}$ based on $L_{g,l}$, $\Delta''$, the random function $f(n_{SRS})$, and $K_{TC}$.

Manner 3: The terminal device may determine the first comb offset bias value $n_{SRS}^{comb,\ offset}$ based on $S_g$, $f(n_{SRS})$, $L_{g,l}$, $G$, and $\Delta''$.

For example, $n_{SRS}^{comb,\ offset} = \left( \left\lfloor \frac{f(n_{SRS}) \bmod L_{g,1}}{S_g} \right\rfloor \times \Delta'' + \left( (f(n_{SRS}) \bmod G) \bmod S_g \right) \right)$ , where $S_g$ is a value configured by the network device or is a preset value, and $L_{g,1} = G \cdot S_g$.

Optionally, if the network device configures *combOffsetHoppingSubset*, the first comb offset bias value $n_{SRS}^{comb,\ offset}$ may be determined in the manner 3. To be specific, when the network device enables CO subset hopping, the terminal device may determine the first comb offset bias value $n_{SRS}^{comb,\ offset}$ based on $S_g$, $f(n_{SRS})$, $L_{g,l}$, $G$, and $\Delta''$.

Manner 4: The terminal device may determine the first comb offset bias value $n_{SRS}^{comb,\ offset}$ based on $f(n_{SRS})$ and $K_{TC}$.

For example, $n_{SRS}^{comb,\ offset} = f(n_{SRS}) \bmod K_{TC}$ .

Optionally, if the network device does not configure *combOffsetHoppingSubset*, the first comb offset bias value $n_{SRS}^{comb,\ offset}$ may be determined in the manner 4. To be specific, when the network device does not enable CO subset hopping, if the first comb offset bias value set may include all combs, the terminal device may determine the first comb offset bias value $n_{SRS}^{comb,\ offset}$ based on $f(n_{SRS})$ and $K_{TC}$.

It can be understood that the terminal device may determine the first comb offset bias value $n_{SRS}^{comb,\ offset}$ based on $f(n_{SRS})$ and $K_{TC}$ by using another formula. In this embodiment of this application, a manner in which the terminal device determines the first comb offset bias value $n_{SRS}^{comb,\ offset}$ based on $f(n_{SRS})$ and $K_{TC}$ is not limited, and the formula in the manner 4 may be transformed in any manner.

Manner 5: The terminal device may determine the first comb offset bias value $n_{SRS}^{comb,\ offset}$ based on $f(nSRS)$, $L_{g,l}$, and $K_{TC}$.

For example,
$$n_{SRS}^{comb,\ offset} = \left( \left\lfloor \frac{f(n_{SRS}) \bmod L_{g,1}}{(L_{g,1} \times \Delta^{"}) / K_{TC}} \right\rfloor \times \Delta^{"} + \left( f(n_{SRS}) \bmod \left( (L_{g,1} \times \Delta^{"}) / K_{TC} \right) \right) \right),$$

where $L_{g,1}$ is a value configured by the network device or is a preset value.

Optionally, if the network device configures *combOffsetHoppingSubset*, the first comb offset bias value $n_{SRS}^{comb,\ offset}$ may be determined in the manner 5. To be specific, when the network device enables CO subset hopping, the terminal device may determine the first comb offset bias value $n_{SRS}^{comb,\ offset}$ based on $f(n_{SRS})$, $L_{g,1}$, $\Delta^{"}$, and $K_{TC}$.

Optionally, when $L_{g,1} \times \Delta^{"}$ is not exactly divided by $K_{TC}$, $(L_{g,1} \times \Delta^{"})/K_{TC}$ may be replaced with $\left\lceil (L_{g,1} \times \Delta^{"}) / K_{TC} \right\rceil$ or $\left\lfloor (L_{g,1} \times \Delta^{"}) / K_{TC} \right\rfloor$, where $\lfloor \cdot \rfloor$ is a round-down operation, and $\lceil \cdot \rceil$ is a round-up operation.

Optionally, $L_{g,1} \times \Delta^{"}$ may be a positive integer multiple of $K_{TC}$.

It can be understood that the terminal device may determine the first comb offset bias value $n_{SRS}^{comb,\ offset}$ based on $f(n_{SRS})$, $L_{g,1}$, $\Delta^{"}$, and $K_{TC}$ by using another formula. In this embodiment of this application, a manner in which the terminal device determines the first comb offset bias value $n_{SRS}^{comb,\ offset}$ based on $f(n_{SRS})$, $L_{g,1}$, $\Delta^{"}$, and $K_{TC}$ is not limited, and the formula in the manner 5 may be transformed in any manner.

Manner 6: The terminal device may determine the first comb offset bias value $n_{SRS}^{comb,\ offset}$ based on $f(n_{SRS})$, $L_{g,1}$, $S_g$, and $\Delta^{"}$.

For example,
$$n_{SRS}^{comb,\ offset} = \left( \left\lfloor \frac{f(n_{SRS}) \bmod L_{g,1}}{S_g} \right\rfloor \times \Delta^{"} + \left( f(n_{SRS}) \bmod S_g \right) \right),$$
where $S_g$ is a value configured by the network device or is a preset value, and $L_{g,1} = G \cdot K_{TC}/\Delta^{"}$.

Optionally, if the network device configures *combOffsetHoppingSubset*, the first comb offset bias value $n_{SRS}^{comb,\ offset}$ may be determined in the manner 6. To be specific, when the network device enables CO subset hopping, the terminal device may determine the first comb offset bias value $n_{SRS}^{comb,\ offset}$ based on $f(n_{SRS})$, $L_{g,1}$, $S_g$, and $\Delta^{"}$.

It can be understood that the terminal device may determine the first comb offset bias value $n_{SRS}^{comb,\ offset}$ based on $f(n_{SRS})$, $L_{g,1}$, $S_g$, and $\Delta^{"}$ by using another formula. In this embodiment of this application, a manner in which the terminal device determines the first comb offset bias value $n_{SRS}^{comb,\ offset}$ based on $f(n_{SRS})$, $L_{g,1}$, $S_g$, and $\Delta^{"}$ is not limited, and the formula in the manner 6 may be transformed in any manner.

Optionally, after determining the first comb offset bias value $n_{SRS}^{comb,\ offset}$ in any one of the foregoing six manners, the terminal device may obtain, based on the first comb offset bias value $n_{SRS}^{comb,\ offset}$, the frequency domain starting position $n_{shift} N_{SC}^{RB} + (k_{TC}^p + k_{offset}^{'} + n_{SRS}^{comb,\ offset}) \bmod K_{TC}$ to which the $p^{th}$ group of ports is mapped, where $n_{shift} N_{SC}^{RB}$ is a frequency domain resource offset, $k_{offset}^{'}$ is a comb offset adjustment value, and $k_{TC}^p$ is the initial comb offset value of the P groups of ports.

The first comb offset set $\varphi_p$ described above corresponds to the initial comb offset value of the $P^{th}$ group of ports and the first comb offset bias value set. To be specific, the first comb offset bias value set may be combined with the method 500, or the first comb offset bias value set may be an independent embodiment. The following briefly describes a solution in which the first comb offset bias value set may serve as an independent embodiment. In the solution of an independent embodiment, the foregoing descriptions of the $P^{th}$ group of ports may be replaced with an $i^{th}$ port of the $N_{ap}^{SRS}$ ports. In other words, the $N_{ap}^{SRS}$ ports may alternatively not be divided into groups. The terminal device may send the SRS based on an initial comb offset value of the $i^{th}$ port of the $N_{ap}^{SRS}$ ports corresponding to the first SRS resource and a first comb offset bias value of the i $^{th}$ port in the first comb offset bias value set, where i is a positive integer ranging from 1 to $N_{ap}^{SRS}$. That is, for each port, the SRS may be sent based on an initial comb offset value of the port and a first comb offset bias value of the port in the first comb offset bias value set. In other words, in this solution, in the method 500, $N_{ap}^{SRS} = P$. When the first comb offset bias value set may alternatively be an independent embodiment, $n_{SRS}^{comb,\ offset}$ obtained in the foregoing manners may be the first comb offset bias value of the i $^{th}$ port in the first comb offset bias value set. The terminal device may obtain, based on the first comb offset bias value $n_{SRS}^{comb,\ offset}$, a frequency domain starting position

$$n_{shift}N_{SC}^{RB} + (k_{TC}^i + k_{offset}' + n_{SRS}^{comb,\ offset}) \bmod K_{TC}$$ of the i $^{th}$ port, where $k_{TC}^i$ is the initial comb offset value of the i $^{th}$ port. To avoid repetition, details are not described herein.

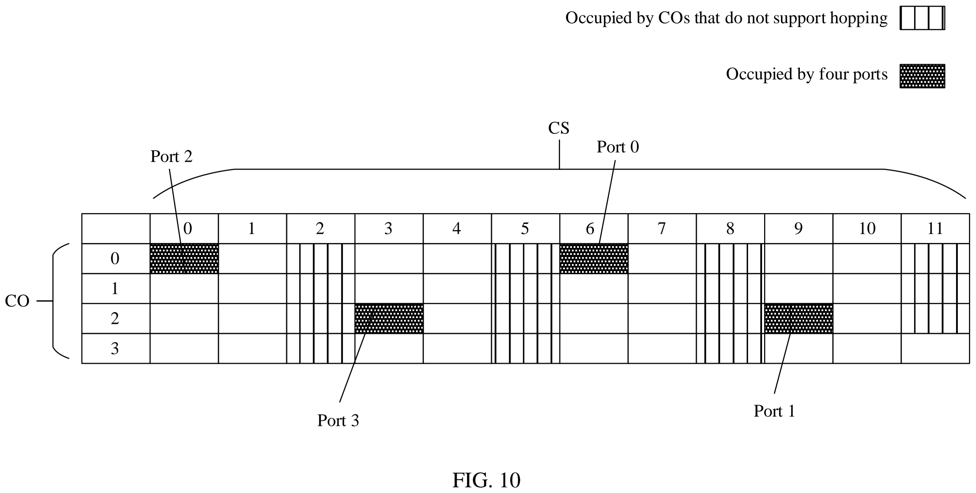

In a possible implementation, to resolve an interference problem, interference between SRS sequences is randomized through cyclic shift hopping (CS hopping), and good interference randomization effect can be achieved by randomizing interference between SRS sequences through CS hopping. However, in an actual application scenario, there are both a terminal device supporting CS hopping and a terminal device not supporting CS hopping. In this application, the terminal device supporting CS hopping is a terminal device that can randomize interference between SRS sequences through CS hopping. In other words, the terminal device supporting CS hopping has a capability or a function of randomizing interference between SRS sequences through CS hopping. In this application, the terminal device not supporting CS hopping is a terminal device that cannot randomize interference between SRS sequences through CS hopping. In other words, the terminal device not supporting CS hopping does not have a capability or a function of randomizing interference between SRS sequences through CS hopping. When the network device configures, on a same CS for multiplexing, an SRS port corresponding to the terminal device supporting CS hopping and an SRS port corresponding to the terminal device not supporting CS hopping, channel estimation performance of the two terminal devices may be seriously degraded. Therefore, how to avoid degradation of channel estimation performance in the foregoing case while fully leveraging interference randomization effect of cyclic shift hopping is an urgent problem to be resolved. In the CS hopping mode, CS ranges in which ports, for sending the SRS, of the terminal device perform CS hopping are a same range. For example, as shown in FIG. 10, an SRS resource of UE may correspond to four ports: a port 0, a port 1, a port 2, and a port 3. A CS range in which the port 0, the port 1, the port 2, and the port 3 perform CS hopping may be {CS 0, CS 1, CS 2, CS 3, CS 4, CS 5, CS 6, CS 7, CS 8, CS 9, CS 10, CS 11}. A CS of the port 0 is the CS 6, a CS of the port 2 is the CS 0, a CS of the port 3 is the CS 3, and a CS of the port 1 is the CS 9. CSs of ports of UE that does not support CS hopping are the CS 2, the CS 5, the CS 5, and the CS 11. All of the four ports may move rightward by two CSs. After the movement, a CS of the port 0 is the CS 8, a CS of the port 1 is the CS 11, a CS of the port 2 is the CS 2, and a CS of the port 3 is the CS 5. Consequently, the CSs, obtained through hopping, of the ports overlap the CSs occupied by the UE that does not support CS hopping, and sending on the CSs is affected.

That is, in the foregoing implementation, to reduce interference, CSs, by which ports used by the terminal device to send an SRS are hopped, are the same. Consequently, the CSs obtained through hopping overlap the CSs of the UE that does not support CS hopping, and SRS sending of the UE that does not support CS hopping is affected.

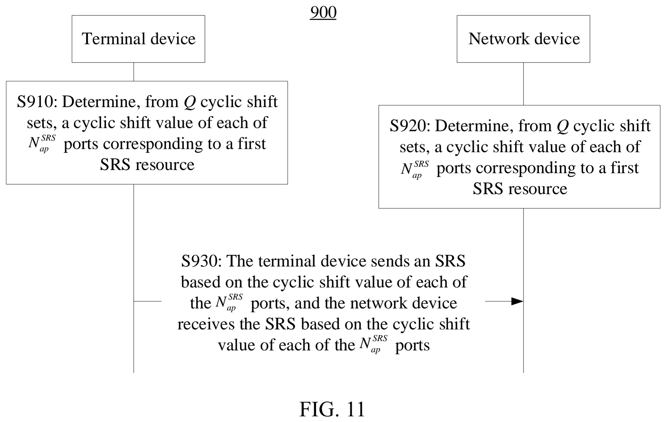

In this application, a CS range in which ports used by a terminal device to send an SRS perform CS hopping may be at least one CS set, and each of the at least one CS set does not include CSs of ports of UE that does not support CS hopping. In this way, when CSs for hopping are selected from the at least one CS set for the ports used by the terminal device to send the SRS, the CSs of the ports of the UE that does not support CS hopping are not selected, to reduce interference. The following describes a communication method in embodiments of this application with reference to FIG. 11. As shown in FIG. 11, the communication method 900 includes the following steps.

S910: A terminal device determines, from Q cyclic shift value sets, a cyclic shift value of each of $N_{ap}^{SRS}$ ports corresponding to a first SRS resource, where $N_{ap}^{SRS}$ is a positive integer, and Q is a positive integer greater than 1 and less than or equal to $N_{ap}^{RS}$.

Optionally, $N_{ap}^{RS}$ may be configured by a network device for the terminal device.

Optionally, the Q cyclic shift value sets may constitute a cyclic shift value set that supports CS hopping. To be specific, each of the $N_{ap}^{SRS}$ ports may determine a cyclic shift value of the port from the cyclic shift value set that supports CS hopping.

Optionally, all of the Q cyclic shift value sets include equal quantities of cyclic shift values, and the quantities are all

$L_l$. That is, lengths of all of the cyclic shift value sets are equal. Optionally, the network device may send fourth indication information to the terminal device, and the terminal device may receive the fourth indication information from the network device. The fourth indication information indicates that a quantity of cyclic shift values included in each of the $Q$ cyclic shift value sets is $L_l$. $L_l$ is a positive integer greater than or equal to 1 and less than or equal to a maximum cyclic shift value $n_{RS}^{cs,\max}$. Alternatively, $L_l$ is greater than or equal to 1 and less than or equal to a maximum cyclic shift value $n_{RS}^{cs,\max}/Q$. Optionally, $L_l =1$ indicates that a length of each of the Q cyclic shift value sets is 1. To be specific, each cyclic shift value set includes one CS. This also indicates that CS hopping is not performed or CS hopping is disabled. $L_1$ being an integer greater than 1 and less than $n_{RS}^{cs,\max}$ indicates that there is a cyclic shift value set with a length greater than 1. This also indicates that CS hopping is performed. When CS hopping is performed or CS hopping is enabled, the method 900 may be performed; otherwise, the method 900 may not be performed.

In some embodiments, the network device may send, to the terminal device, indication information for indicating whether CS hopping is to be performed, and the terminal device determines, based on the indication information, whether to perform CS hopping. For example, the indication information may be the quantity $L_l$ of cyclic shift values included in each cyclic shift value set, and whether CS hopping is to be performed is implicitly indicated by the quantity $L_1$ of cyclic shift values. The quantity $L_l$ of cyclic shift values included in each cyclic shift value set=1 indirectly indicates that CS hopping is not to be performed. The quantity $L_1$ of cyclic shift values included in each cyclic shift value set being greater than 1 and less than $n_{RS}^{cs,\max}$ indirectly indicates that CS hopping is not to be performed.

Optionally, in some possible implementations, $N_{ap}^{SRS}$ ports corresponding to a target SRS resource correspond to a cyclic shift value set that supports CS hopping, or a cyclic shift value set that does not support CS hopping. A quantity of cyclic shift value sets included in the cyclic shift value set that supports CS hopping is referred to as a length $L_1$ of an area that supports CS hopping. A quantity of cyclic shift value sets included in the cyclic shift value set that does not support CS hopping is referred to as a length $L_2$ of an area that does not support CS hopping. The cyclic shift value set that supports CS hopping and the cyclic shift value set that does not support CS hopping are equivalent. To be specific, a union set of the cyclic shift value set that supports CS hopping and the cyclic shift value set that does not support CS hopping is $\{0,1,\cdots,n_{SRS}^{cs,\max}-1\}$. $L_1 + L_2 = n_{SRS}^{cs,\max}$ For example, $n_{SRS}^{cs,\max}=12$, the cyclic shift value set that supports CS hopping is {0,1, 3, 4, 6, 7, 9,10}, the cyclic shift value set that does not support CS hopping is {2,5,8,11}, and the union set of the cyclic shift value set that supports CS hopping and the cyclic shift value set that does not support CS hopping is {0,1, 2, 3, 4, 5, 6, 7, 8, 9,10,11}. In this embodiment of this application, the cyclic shift value set that supports CS hopping is used as an example for description.

Optionally, cyclic shift values included in any two adjacent cyclic shift value sets of the Q cyclic shift value sets are inconsecutive. To be specific, there is an interval between values in any two adjacent cyclic shift value sets of the Q cyclic shift value sets, and the interval is greater than 1. An interval between values in two adjacent cyclic shift value sets may be understood as a difference between the 1st cyclic shift value in a $(k+1)$th cyclic shift value set and the last cyclic shift value in a $k$th cyclic shift value set when cyclic shift values included in each cyclic shift value set are sorted in ascending order of values. Optionally, intervals ∆ between values in any two adjacent cyclic shift value sets of the Q cyclic shift value sets are equal. Optionally, that the intervals between values in any two adjacent cyclic shift value sets of the Q cyclic shift value sets are equal may be understood as follows: intervals between corresponding cyclic shift values in any two adjacent cyclic shift value sets are equal. For example, intervals between the 1st cyclic shift values in any two adjacent cyclic shift value sets are equal. For example, the 1st cyclic shift value set is {0,1}, the 2nd cyclic shift value set is {3,4}, the 3rd cyclic shift value set is {6,7}, and the 4th cyclic shift value set is {9,10}. In this case, an interval between the 1st cyclic shift value set {0,1} and the 2nd cyclic shift value set {3,4} is three CSs, an interval between the 2nd cyclic shift value set {3,4} and the 3rd cyclic shift value set {6,7} is three CSs, and an interval between the 3rd cyclic shift value set {6,7} and the 4th cyclic shift value set {9,10} is three CSs.

Optionally, in some embodiments, cyclic shift values included in any two adjacent cyclic shift value sets of the Q cyclic shift value sets may alternatively be consecutive.

For a definition of intervals between corresponding cyclic shift values in any two adjacent cyclic shift value sets being equal, refer to the foregoing definition of intervals between any two adjacent comb offset subsets being equal. To avoid repetition, details are not described.

Optionally, cyclic shift values included in each of the Q cyclic shift value sets are consecutive. To be specific, an interval between two adjacent cyclic shift values in each cyclic shift value set is 1. For example, as shown in FIG. 10, the 1st cyclic shift value set is {0,1}, the 2nd cyclic shift value set is {3,4}, the 3rd cyclic shift value set is {6,7}, and the 4th cyclic shift value set is {9,10}. In this case, cyclic shift values in each cyclic shift value set are consecutive. For a definition of adjacent cyclic shift values being consecutive, refer to the foregoing definition of any two adjacent comb offset sets. To avoid repetition, details are not described.

Optionally, a CS set that supports CS hopping may be performed may be a subset including some of the $Q$ cyclic shift value sets. In other words, when there are $Q$ cyclic shift value sets, CS hopping may be performed in a subset including some of the Q cyclic shift value sets.

Optionally, the Q cyclic shift value sets may be specified in a protocol or configured by the network device.

Optionally, a $q$ th cyclic shift value set of the Q cyclic shift value sets is obtained based on at least one of a starting cyclic shift value $n_{CS}^{\text{start}}$, a cyclic shift value interval $\Delta$ between any two adjacent cyclic shift value sets, a quantity $L_1$ of comb shifts included in the $q$ th cyclic shift value set, or the maximum cyclic shift value $n_{RS}^{cs,\text{max}}$. In other words, the terminal device may determine the $q$ th cyclic shift value set based on at least one of the starting cyclic shift value $n_{CS}^{\text{start}}$, the cyclic shift value interval $\Delta$ between any two adjacent cyclic shift value sets, the quantity $L_1$ of comb shifts included in the $q$ th cyclic shift value set, or the maximum cyclic shift value $n_{RS}^{cs,\text{max}}$, where cyclic shift value intervals between any two adjacent cyclic shift value sets are all $\Delta$, $q$ is a positive integer ranging from 1 to $Q$, and a starting cyclic shift value corresponding to each of the $Q$ cyclic shift value sets is $n_{CS}^{\text{start}}$. To be specific, optionally, the network device may indicate at least one of the starting cyclic shift value $n_{CS}^{\text{start}}$, the cyclic shift value interval $\Delta$ between any two adjacent cyclic shift value sets, or the maximum cyclic shift value $n_{RS}^{cs,\text{max}}$ to the terminal device. Optionally, the starting cyclic shift value $n_{CS}^{\text{start}}$ may be indicated by the network device or specified in the protocol, or may be determined based on a parameter configured by the network device. For example, $n_{CS}^{\text{start}}$ may be $n_{SRS}^{CS,i}$ determined according to the formula (6). Optionally, a $q$ th cyclic shift value set is obtained based on at least one of $q$, a starting cyclic shift value $n_{CS}^{\text{start}}$, a cyclic shift value interval $\Delta$ between any two adjacent cyclic shift value sets, or the maximum cyclic shift value $n_{RS}^{cs,\text{max}}$. Optionally, the $q$ th cyclic shift value set is

$$\left\{ \left( n_{CS}^{\text{start}} + (q-1)\Delta \right) \bmod n_{SRS}^{CS,\text{max}}, \left( n_{CS}^{\text{start}} + (q-1)\Delta + 1 \right) \bmod n_{SRS}^{CS,\text{max}}, \cdots, \left( n_{CS}^{\text{start}} + (q-1)\Delta + L_1 - 1 \right) \bmod n_{SRS}^{CS,\text{max}} \right\},$$

where $\bmod(\cdot)$ is a modulo operation. For example, as shown in FIG. 8, $n_{RS}^{cs,\text{max}}$ is 12, $n_{CS}^{\text{start}}$ is 0, $\Delta$ is 3, and a length $L_1$ of the $q$ th cyclic shift value set is 2. In this case, the 1st ($q$ =1) comb shift set is $\{0,1\}$, the 2nd ($q$ =2) comb shift set is $\{3,4\}$, the 3rd ($q$ =3) comb shift set is $\{6,7\}$, and the 4th ($q$ =4) comb shift set is $\{9,10\}$. Optionally, the cyclic shift value interval $\Delta$ between any two adjacent cyclic shift value sets is related to a quantity $n_{SRS}^{cs,\text{max}}$ of maximum cyclic shifts and the quantity $Q$ of cyclic shift sets. For example, $\Delta = \dfrac{n_{SRS}^{CS,\text{max}}}{Q}$. For example, in FIG. 10, $n_{SRS}^{cs,\text{max}}$ is 12. Because the UE that does not support CS hopping occupies four CSs, and the four CSs are equally spaced, the quantity Q of cyclic shift sets may be 4. Therefore, the terminal device may determine that $\Delta$ is 3. In some embodiments, the network device may directly indicate $\Delta$ ; or the network device may indicate $n_{SRS}^{cs,\text{max}}$ and $Q$, and the terminal device determines, based on $n_{SRS}^{cs,\text{max}}$ and $Q$, that $\Delta$ is 3.

Optionally, the terminal device may determine a cyclic shift value of a reference port among the $N_{ap}^{SRS}$ ports from one of the $Q$ cyclic shift value sets, and the terminal device may determine a cyclic shift value of another port among the $N_{ap}^{SRS}$ ports based on the cyclic shift value of the reference port. For example, the reference port may be the 1st port of the $N_{ap}^{SRS}$ ports, and the 1st port may be understood as a port with a smallest CS. For example, as shown in FIG. 10, $Q=4$, the 1st cyclic shift value set is $\{0,1\}$, the 2nd cyclic shift value set is $\{3,4\}$, the 3rd cyclic shift value set is $\{6,7\}$, the 4th cyclic shift value set is $\{9,10\}$, and the reference port is a port 2. For example, it is determined that a cyclic shift value of the port 2 is a CS 1. Because two adjacent ports are spaced by three CSs, it can be determined that a cyclic shift value of a port 3 is a CS 4, a cyclic shift value of a port 0 is a CS 7, and a cyclic shift value of a port 1 is a CS 10.

Optionally, variations of cyclic shift values of all of the $N_{ap}^{SRS}$ ports (the variation may also be referred to as a step relative to a reference cyclic shift value of each port) may be the same. For example, if the port 1 hops from a first cyclic shift value to a second cyclic shift value and the port 2 hops from a third cyclic shift value to a fourth cyclic shift value, a cyclic shift value interval 1 is the same as a cyclic shift value interval 2, where the cyclic shift value interval 1 is a cyclic shift value interval between the second cyclic shift value and the first cyclic shift value, and the cyclic shift value interval 2 is a cyclic shift value interval between the fourth cyclic shift value and the third cyclic shift value. For example, as shown in FIG. 10, a reference cyclic shift value of the port 2 is a CS 0, a reference cyclic shift value of the port 3 is a CS 3, a reference cyclic shift value of the port 0 is a CS 6, and a reference cyclic shift value of the port 1 is a CS 9. If a cyclic shift value variation of the port 2 is 1, the port 2 needs to hop from the CS 0 to the CS 1, the port 3 needs to hop from the CS 3 to the CS 4, and the port 0 needs to hop from the CS 6 to the CS 7, and the port 1 needs to hop from the CS 9 to the CS 10.

The following describes two cases in which the terminal device determines a cyclic shift value $\alpha_i$ of an $i^{th}$ port of the $N_{ap}^{SRS}$ ports.

Case 1: The terminal device may determine, based on at least one of the maximum cyclic shift value $n_{SRS}^{cs,max}$, the length $L_1$ of each cyclic shift set, the quantity Q of cyclic shift sets, an initial cyclic shift value $n_{SRS}^{CS,i}$ of the $i^{th}$ port, or $n_{SRS}^{CSH}$, that a cyclic shift value of the $i^{th}$ port of the $N_{ap}^{SRS}$ ports is $\alpha_i$, where $n_{SRS}^{CS,i}$ is a cyclic shift value used when CO hopping is not performed. For example, $n_{SRS}^{CS,i}$ may be obtained according to the formula (6).

Optionally, $\alpha_i$ may be obtained according to a formula (10):

$$\alpha_i = 2\pi \frac{\left[ n_{SRS}^{CS,i} + \left\lfloor \frac{n_{SRS}^{CSH}}{L_1} \right\rfloor \cdot \frac{n_{SRS}^{cs,max}}{Q} + \left( n_{SRS}^{CSH} \bmod L_1 \right) \right] \bmod n_{SRS}^{cs,max}}{n_{SRS}^{cs,max}} \tag{10}$$

In the formula (10), $n_{SRS}^{CSH} = (-1)^b f(n_{SRS})$, a value of b is 0 or 1, and $f(n_{SRS})$ is a value generated based on a random sequence. A value range of $f(n_{SRS})$ is $[0,QL_1 -1]$, or a value range of $f(n_{SRS})$ may be a subset of $[0,QL_1 -1]$. For example, when Q is greater than 2, a value range of $f(n_{SRS})$ may alternatively be $[0,L_1 -1]$ or $[0, 2L_1 -1]$. For a definition of $f$ $(n_{SRS})$, refer to the descriptions in the foregoing embodiments. A difference from the foregoing embodiments lies in that, in $f(n_{SRS})$, a modulo operation is performed on $L_1$. For example, $f(n_{SRS}) = \left[ \sum_{m=0}^{B-1} c(m) \cdot 2^m \right] \bmod L_1$. There may be a plurality of implementations of $c(m)$. For details, refer to the descriptions in the foregoing embodiments.

Case 2: The terminal device may determine, based on at least one of the maximum cyclic shift value $n_{SRS}^{cs,max}$, the length $L_1$ of each cyclic shift set, the quantity Q of cyclic shift sets, an initial cyclic shift value $n_{CS}^{start}$ of the $i^{th}$ port, or $n_{SRS}^{CSH}$, that a cyclic shift value of the $i^{th}$ port of the $N_{ap}^{SRS}$ ports is $\alpha_i$. $n_{CS}^{start}$ may be specified in the protocol or indicated by the network device.

Optionally, the cyclic shift value $\alpha_i$ of the $i^{th}$ port is obtained according to a formula (11):

$$\alpha_i = 2\pi \frac{\left[ n_{CS}^{start} + \left\lfloor \frac{n_{SRS}^{CSH}}{L_1} \right\rfloor \cdot \frac{n_{SRS}^{cs,max}}{Q} + \left( n_{SRS}^{CSH} \bmod L_1 \right) \right] \bmod n_{SRS}^{cs,max}}{n_{SRS}^{cs,max}} \tag{11}$$

In the formula (11), $n_{SRS}^{CSH} = (-1)^b f(n_{SRS})$, a value of b is 0 or 1, and $f(n_{SRS})$ is a value generated based on a random sequence. A value range of $f(n_{SRS})$ is $[0,QL_1 -1]$, or a value range of $f(n_{SRS})$ may be a subset of $[0,QL_1 -1]$. For example, when Q is greater than 2, a value range of $f(n_{SRS})$ may alternatively be $[0,L_1 -1]$ or $[0, 2L_1 -1]$. For a definition of $f$ $(n_{SRS})$, refer to the descriptions in the foregoing embodiments. A difference from the foregoing embodiments lies in that, in $f(n_{SRS})$, a modulo operation is performed on $L_1$. For example, $f(n_{SRS}) = \left[ \sum_{m=0}^{B-1} c(m) \cdot 2^m \right] \bmod L_1$. There may be a plurality of implementations of $c(m)$. For details, refer to the descriptions in the foregoing embodiments.

When $n_{CS}^{start}$ is 0, the formula (11) may be transformed into the following formula:

$$\alpha_i = 2\pi \frac{\left[\left\lfloor \frac{n_{SRS}^{CSH}}{L_1} \right\rfloor \cdot \frac{n_{SRS}^{cs,\max}}{Q} + \left(n_{SRS}^{CSH} \bmod L_1\right)\right] \bmod n_{SRS}^{cs,\max}}{n_{SRS}^{cs,\max}}$$

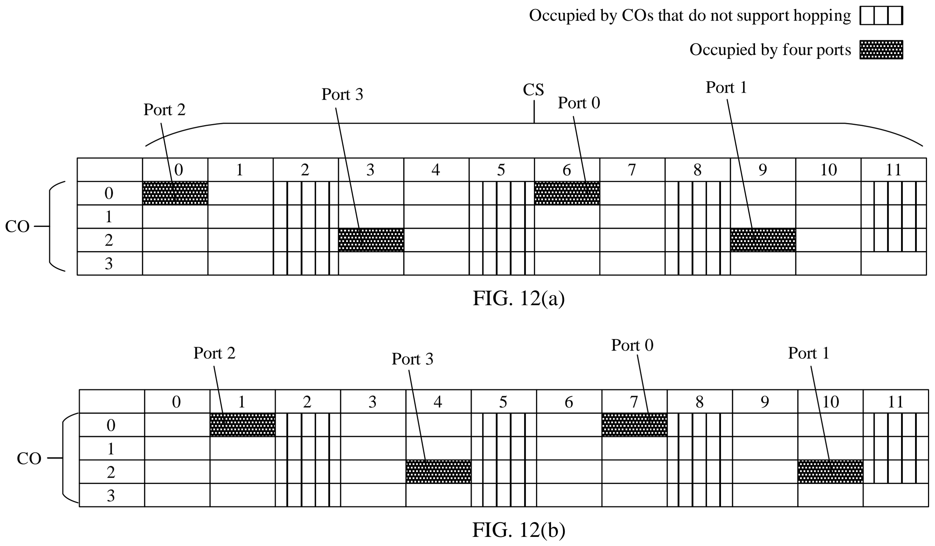

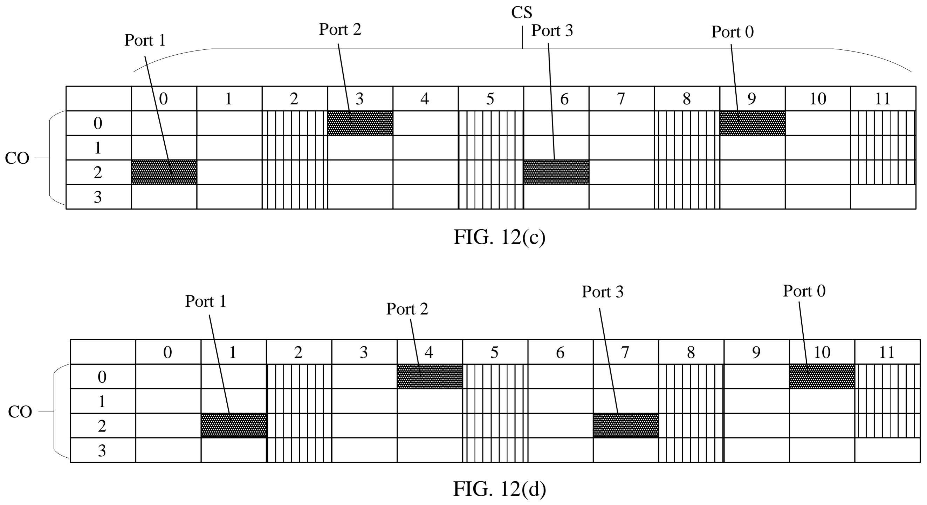

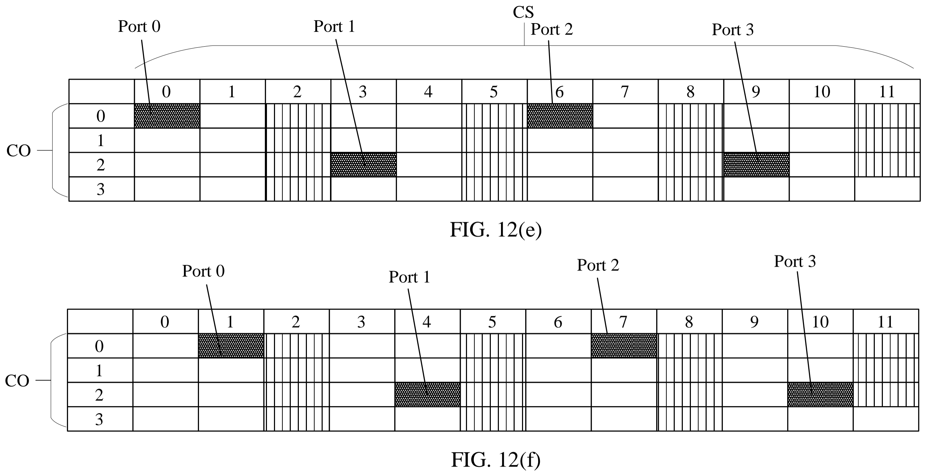

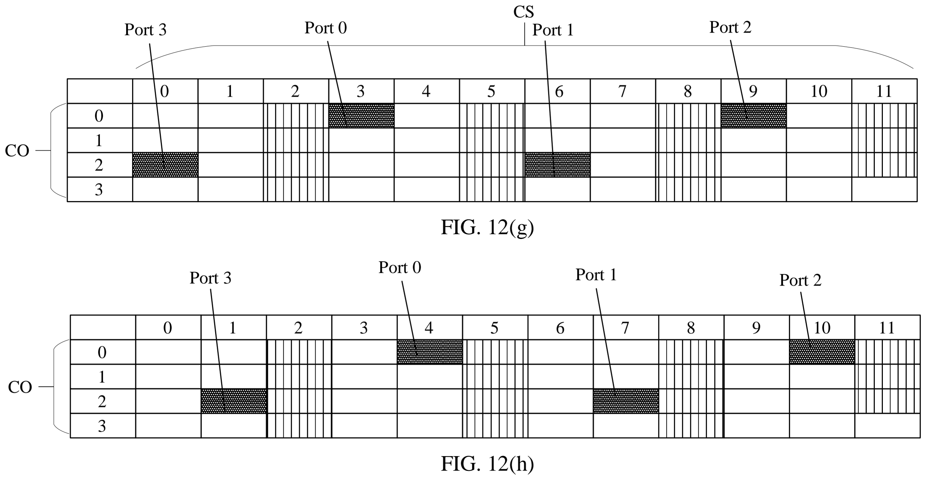

For example, as shown in FIG. 12(a) to FIG. 12(h), optionally, $Q=4$. The four cyclic shift value sets are $\{0,1\}$, $\{3,4\}$, $\{6,7\}$, and $\{9,10\}$. The four cyclic shift value sets may constitute a cyclic shift value set $\{0,1,3,4,6,7,9,10\}$ that supports CS hopping. A cyclic shift value of each of four ports, that is, a port 0, a port 1, a port 2, and a port 3, of the terminal device may be determined from $\{0,1,3,4,6,7,9,10\}$, and cyclic shift values of all of the ports may be the same. For example, FIG. 12(a) shows reference cyclic shift values of the four ports. In the case 1, the reference cyclic shift values of the four ports are calculated according to the formula (6). In the case 2, the reference cyclic shift values of the four ports may be indicated by the network device or predefined in the protocol; or the network device indicates reference cyclic shift values of some of the ports, and the terminal device may obtain reference cyclic shift values of other ports based on the reference cyclic shift values of the some of the ports. A reference cyclic shift value of the port 2 is a CS 0, a reference cyclic shift value of the port 3 is a CS 3, a reference cyclic shift value of the port 0 is a CS 6, and a reference cyclic shift value of the port 1 is a CS 9. During one time of SRS sending, a CS of each port varies by 1. As shown in FIG. 12(b), CSs of the port 2, the port 3, the port 0, and the port 1 are a CS 1, a CS 4, a CS 7, and a CS 10 respectively. During another time of SRS sending, a CS of each port varies by 2. As shown in FIG. 12(c), CSs of the port 2, the port 3, the port 0, and the port 1 are the CS 3, the CS 6, the CS 9, and the CS 0 respectively. During the 2nd time of SRS sending, a CS of each port varies by 2. As shown in FIG. 12(c), CSs of the port 2, the port 3, the port 0, and the port 1 are the CS 3, the CS 6, the CS 9, and the CS 0 respectively. During another time of SRS sending, a CS of each port varies by 1. As shown in FIG. 12(d), CSs of the port 2, the port 3, the port 0, and the port 1 are the CS 4, the CS 7, the CS 10, and the CS 1 respectively. During another time of SRS sending, a CS of each port varies by 2. As shown in FIG. 12(e), CSs of the port 2, the port 3, the port 0, and the port 1 are the CS 6, the CS 9, the CS 0, and the CS 3 respectively. During another time of SRS sending, a CS of each port varies by 1. As shown in FIG. 12(f), CSs of the port 2, the port 3, the port 0, and the port 1 are the CS 7, the CS 10, the CS 1, and the CS 4 respectively. During another time of SRS sending, a CS of each port varies by 2. As shown in FIG. 12(g), CSs of the port 2, the port 3, the port 0, and the port 1 are the CS 9, the CS 0, the CS 3, and the CS 6 respectively. During another time of SRS sending, a CS of each port varies by 2. As shown in FIG. 12(h), CSs of the port 2, the port 3, the port 0, and the port 1 are the CS 10, the CS 1, the CS 4, and the CS 7 respectively. It can be understood that all of FIG. 12(a) to FIG. 12(h) correspond to different $f(n_{SRS})$. Alternatively, the terminal device selects, based on $f(n_{SRS})$, a manner from FIG. 12(a) to FIG. 12(h) to send an SRS.

In the foregoing two cases, the maximum comb offset value $n_{SRS}^{cs,\max}$ may be fixed. In some cases, the maximum comb offset value may be $K$ times of $n_{SRS}^{cs,\max}$, where $K$ is a positive integer. In this case, there are a total of $n_{SRS}^{cs,\max} \cdot K$ comb offset values. To be specific, CSs are divided at a smaller granularity. In this case, a quantity of cyclic shift values included in each CS group is $\dfrac{n_{SRS}^{cs,\max} \cdot K}{Q}$. In this case, the length $L_1$ of each comb offset set is a positive integer greater than or equal to 1 and less than or equal to $n_{SRS}^{cs,\max} \cdot K$. To be specific, if the terminal device performs CS hopping, the fixed maximum comb offset value in the foregoing case may be used; or the maximum comb offset value may be increased, and an increased maximum comb offset value can cause an increase in a comb offset range of hopping for the terminal device, to increase a success rate of sending an SRS by the terminal device. Optionally, K may be indicated by the network device to the terminal device, or may be specified in the protocol, or may be a predefined value. For example, a value of K may be 1, 2, 4, or 6. Optionally, the terminal device may alternatively determine, based on the value of $K$, whether to perform CS hopping. The value of $K$ being 1 indicates that CS hopping is not to be performed. The value of $K$ being a value greater than 1 indicates that CS hopping is to be performed. The following describes two cases in which the terminal device determines a cyclic shift value $\alpha_i$ of an $i$th port of the $N_{ap}^{SRS}$ ports when K is greater than 1.

Case 1: The terminal device may determine, based on at least one of the maximum cyclic shift value $n_{SRS}^{cs,\max}$, $K$, the length $L_1$ of each cyclic shift set, the quantity $Q$ of cyclic shift sets, an initial cyclic shift value $n_{SRS}^{CS,i}$ of the $i$th port, or $n_{SRS}^{CSH}$, that a cyclic shift value of the $i$th port of the $N_{ap}^{SRS}$ ports is $\alpha_i$, where $n_{SRS}^{CS,i}$ is a cyclic shift value used when CO hopping is not performed. A value of $L_1$ ranges from 1 to $\dfrac{K \cdot n_{SRS}^{cs,\max}}{Q}$. For example, $n_{SRS}^{CS,i}$ may be obtained according to the formula (6).

Optionally, $\alpha_i$ may be obtained according to a formula (12):

$$\alpha_i = 2\pi \frac{n_{SRS}^{CS,i}}{n_{SRS}^{cs,max}} + \frac{\left[\left\lfloor \frac{n_{SRS}^{CSH}}{L_1} \right\rfloor \cdot \frac{K \cdot n_{SRS}^{cs,max}}{Q} + \left(n_{SRS}^{CSH} \bmod L_1\right)\right] \bmod (K \cdot n_{SRS}^{cs,max})}{K \cdot n_{SRS}^{cs,max}} \tag{12}$$

In the formula (12), $n_{SRS}^{CSH} = (-1)^b f(n_{SRS})$, a value of $b$ is 0 or 1, and $f(n_{SRS})$ is a value generated based on a random sequence. A value range of $f(n_{SRS})$ is $[0, QL_1 -1]$, or a value range of $f(n_{SRS})$ may be a subset of $[0, QL_1 -1]$. For example, when Q is greater than 2, a value range of $f(n_{SRS})$ may alternatively be $[0, L_1 -1]$ or $[0, 2L_1 - 1]$. For a definition of $f$ ($n_{SRS}$), refer to the descriptions in the foregoing embodiments. A difference from the foregoing embodiments lies in that, in $f(n_{SRS})$, a modulo operation is performed on $L_1$. For example, $f(\mathrm{n}_{SRS}) = \left[\sum_{m=0}^{B-1} c(m) \cdot 2^m\right] \bmod L_1$. There may be a plurality of implementations of $c(m)$. For details, refer to the descriptions in the foregoing embodiments.

Alternatively, the formula (12) may be replaced with a formula (13):

$$\alpha_i = 2\pi \frac{n_{SRS}^{CS,i}}{n_{SRS}^{cs,max}} + \frac{\left[\left\lfloor \frac{n_{SRS}^{CSH}}{L_1} \right\rfloor \cdot \frac{K \cdot n_{SRS}^{cs,max}}{Q} + \left(n_{SRS}^{CSH} \bmod L_1\right)\right]}{K \cdot n_{SRS}^{cs,max}} \tag{13}$$

Case 2: The terminal device may determine, based on at least one of the maximum cyclic shift value $n_{SRS}^{cs,max}$, K, the length $L_1$ of each cyclic shift set, the quantity Q of cyclic shift sets, an initial cyclic shift value $n_{CS}^{start}$ of the $i$th port, or $n_{SRS}^{CSH}$, that a cyclic shift value of the $i$th port of the $N_{ap}^{SRS}$ ports is $\alpha_i$. $n_{CS}^{start}$ may be specified in the protocol or indicated by the network device.

Optionally, the cyclic shift value $\alpha_i$ of the $i$th port is obtained according to a formula (14):

$$\alpha_i = 2\pi \frac{n_{CS}^{start}}{n_{SRS}^{cs,max}} + \frac{\left[\left\lfloor \frac{n_{SRS}^{CSH}}{L_1} \right\rfloor \cdot \frac{K \cdot n_{SRS}^{cs,max}}{Q} + \left(n_{SRS}^{CSH} \bmod L_1\right)\right] \bmod (K \cdot n_{SRS}^{cs,max})}{K \cdot n_{SRS}^{cs,max}} \tag{14}$$

In the formula (14), $n_{SRS}^{CSH} = (-1)^b f(n_{SRS})$, a value of $b$ is 0 or 1, and $f(n_{SRS})$ is a value generated based on a random sequence. A value range of $f(n_{SRS})$ is $[0, QL_1 -1]$, or a value range of $f(n_{SRS})$ may be a subset of $[0, QL_1 -1]$. For example, when Q is greater than 2, a value range of $f(n_{SRS})$ may alternatively be $[0, L_1 -1]$ or $[0, 2L_1 -1]$. For a definition of $f$ ($n_{SRS}$), refer to the descriptions in the foregoing embodiments. A difference from the foregoing embodiments lies in that, in $f(n_{SRS})$, a modulo operation is performed on $L_1$. For example, $f(\mathrm{n}_{SRS}) = \left[\sum_{m=0}^{B-1} c(m) \cdot 2^m\right] \bmod L_1$. There may be a plurality of implementations of $c(m)$. For details, refer to the descriptions in the foregoing embodiments.

If $n_{CS}^{start}$ is 0, the formula (14) may be changed to a formula (15):

$$\alpha_i = \frac{\left[\left\lfloor \frac{n_{SRS}^{CSH}}{L_1} \right\rfloor \cdot \frac{K \cdot n_{SRS}^{cs,max}}{Q} + \left(n_{SRS}^{CSH} \bmod L_1\right)\right] \bmod (K \cdot n_{SRS}^{cs,max})}{K \cdot n_{SRS}^{cs,max}} \tag{15}$$

Alternatively, the formula (14) may be replaced with a formula (16):

$$\alpha_i = 2\pi \frac{n_{CS}^{start}}{n_{SRS}^{cs,\max}} + \frac{\left[\left\lfloor \frac{n_{SRS}^{CSH}}{L_1}\right\rfloor \cdot \frac{K \cdot n_{SRS}^{cs,\max}}{Q} + \left(n_{SRS}^{CSH} \bmod L_1\right)\right]}{K \cdot n_{SRS}^{cs,\max}} \tag{16}$$

If $n_{CS}^{start}$ is 0, the formula (16) may be changed to a formula (17):

$$\alpha_i = \frac{\left[\left\lfloor \frac{n_{SRS}^{CSH}}{L_1}\right\rfloor \cdot \frac{K \cdot n_{SRS}^{cs,\max}}{Q} + \left(n_{SRS}^{CSH} \bmod L_1\right)\right]}{K \cdot n_{SRS}^{cs,\max}} \tag{17}$$

S920: The network device determines, from Q cyclic shift value sets, a cyclic shift value of each of $N_{ap}^{SRS}$ ports corresponding to a first SRS resource, where $N_{ap}^{SRS}$ is a positive integer, and Q is a positive integer greater than 1 and less than or equal to $N_{ap}^{RS}$ .

A manner in which the network device determines, from the Q cyclic shift value sets, the cyclic shift value of each of the $N_{ap}^{SRS}$ ports corresponding to the first SRS resource is the same as the manner in which the terminal device determines, from the Q cyclic shift value sets, the cyclic shift value of each of the $N_{ap}^{SRS}$ ports corresponding to the first SRS resource. In this way, the cyclic shift value of each port that is determined by the network device is the same as the cyclic shift value of each port that is determined by the terminal device, so that an SRS can be correctly sent and received. To avoid repetition, that the network device determines, from the Q cyclic shift value sets, the cyclic shift value of each of the $N_{ap}^{SRS}$ ports corresponding to the first SRS resource is not described in detail in S920.

It should be noted that a sequence of S910 and S920 is not limited, and S910 may be performed before, after, or simultaneously with S920.

S930: The terminal device sends an SRS based on the cyclic shift value of each of the $N_{ap}^{SRS}$ ports, and the network device receives the SRS based on the cyclic shift value of each of the $N_{ap}^{SRS}$ ports.

In the foregoing method, the terminal device and the network device may determine, from the Q cyclic shift value sets, the cyclic shift value of each of the $N_{ap}^{SRS}$ ports corresponding to the first SRS resource. Because any two of the Q cyclic shift value sets are inconsecutive, overlapping with a CS of UE that does not support CS hopping can be avoided, to reduce interference.

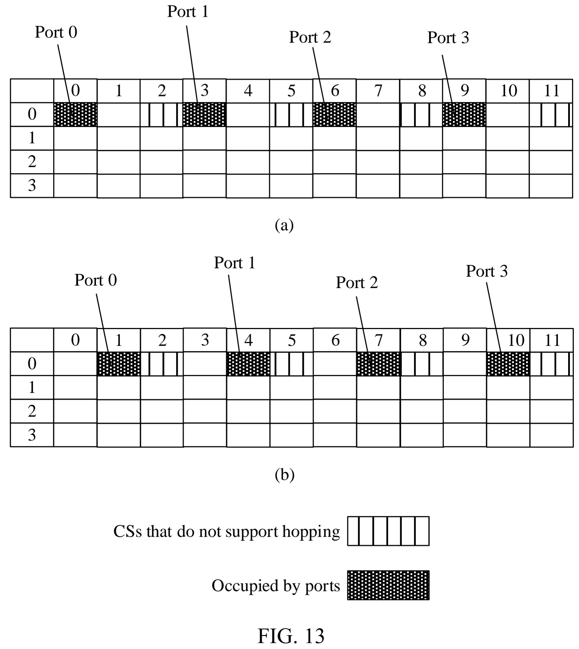

In the foregoing method 900, the Q cyclic shift value sets correspond to Q cyclic shift bias value subsets. Optionally, the Q cyclic shift bias value subsets constitute a first cyclic shift bias value set. To be specific, the terminal device may determine a cyclic shift bias value from the first cyclic shift bias value set based on each of the $N_{ap}^{SRS}$ ports corresponding to the first SRS resource, and the terminal device may determine the cyclic shift value of each port based on the cyclic shift bias value of each port and an initial cyclic shift bias value of each port, and send the SRS based on the cyclic shift value of each port. That is, the terminal device may send the SRS based on a cyclic shift in the Q cyclic shift value sets, or may send the SRS based on the Q cyclic shift bias value subsets; or the terminal device may determine the Q cyclic shift value sets based on the initial cyclic shift value of each port and the Q cyclic shift bias value subsets, and send the SRS based on the Q cyclic shift value sets. For example, as shown in FIG. 13, $N_{ap}^{SRS} = 4$ , and the four ports are a port 0, a port 1, a port 2, and a port 3. The network device may configure a length of the first cyclic shift bias value set as follows: $Y_1 = 2$ ; and configure the maximum comb offset value as follows: $n_{SRS}^{CS,\max} = 12$ . A shift bias value subset is {0, 1}, and a first cyclic shift bias value set including the cyclic shift bias value subset is also {0, 1}. A starting cyclic shift value of the port 0 is

$n_{SRS}^{CS,i} = 0$ , and a cyclic shift value set corresponding to the port 0 may be {0, 1} . A starting cyclic shift value of the port 1 is

$n_{SRS}^{CS,i} = 3$ , and a cyclic shift value set corresponding to the port 1 may be {3, 4}. A starting cyclic shift value of the port 2 is

$n_{SRS}^{CS,i} = 6$ , and a cyclic shift value set corresponding to the port 1 may be {6, 7}. A starting cyclic shift value of the port 3 is

$n_{SRS}^{CS,i} = 9$ , and a cyclic shift value set corresponding to the port 3 may be {9, 10}. As shown in a diagram (b) in FIG. 13, on an SRS sending occasion, a CS of the port 0 is the CS 1 in {0, 1}, a CS of the port 1 is the CS 4 in {3, 4}, a CS of the port 2 is the CS 7 in {6, 7}, and a CS of the port 3 is the CS 10 in {9, 10}. Optionally, in this embodiment of this application, $n_{SRS}^{CS,i}$ may be replaced with $n_{CS}^{start,i}$ .

Optionally, different ports may correspond to different cyclic shift offset value sets.

The first cyclic shift bias value set is discussed below in two cases.

Case 1: Cyclic shift bias values included in the first cyclic shift bias value set are consecutive.

Optionally, the first cyclic shift bias value set including the Q cyclic shift bias value subsets includes $Y_l$ consecutive cyclic shift biases, where $Y_l$ is greater than or equal to 1 and less than or equal to the maximum cyclic shift value $n_{RS}^{cs,max}$ . For example, the first cyclic shift bias value set is {0, 1, 2}, and $Y_l$ is 3.

Optionally, the network device may send indication information that indicates $Y_l$, and the terminal device may receive the indication information that indicates $Y_l$ from the network device, so that the terminal device can determine $Y_l$.

Optionally, the first cyclic shift bias value set is $\left\{0, 1 \bmod n_{SRS}^{CS,max}, \cdots, (Y_1 - 1) \bmod n_{SRS}^{CS,max}\right\}$, where mod(·) is a modulo operation. When the first cyclic shift bias value set is $\left\{0, 1 \bmod n_{SRS}^{CS,max}, \cdots, (Y_1 - 1) \bmod n_{SRS}^{CS,max}\right\}$, a cyclic shift value set corresponding to the i th port corresponds to a direction in which a cyclic shift increases by starting from an initial cyclic shift value of the $i$ th port. For the initial cyclic shift value $n_{SRS}^{CS,i}$ of the $i$ th port, refer to the foregoing descriptions of the formula (6). To avoid repetition, details are not described. Optionally, the initial cyclic shift value $n_{SRS}^{CS,i}$ of the $i$ th port may alternatively be indicated by the network device. This is not limited in this embodiment of this application.

Optionally, the first cyclic shift bias value set is $\left\{0, -1 \bmod n_{SRS}^{CS,max}, \cdots, (-Y_1 + 1) \bmod n_{SRS}^{CS,max}\right\}$ , where mod(·) is a modulo operation. When the first cyclic shift bias value set is $\left\{0, -1 \bmod n_{SRS}^{CS,max}, \cdots, (-Y_1 + 1) \bmod n_{SRS}^{CS,max}\right\}$ , a cyclic shift value set corresponding to the i th port corresponds to a direction in which a cyclic shift decreases by starting from an initial cyclic shift value of the i th port. For the initial cyclic shift value $n_{SRS}^{CS,i}$ of the i th port, refer to the foregoing descriptions of the formula (6). To avoid repetition, details are not described. Optionally, the initial cyclic shift value $n_{SRS}^{CS,i}$ of the $i$ th port may alternatively be indicated by the network device. This is not limited in this embodiment of this application.

Optionally, in the case 1, the terminal device may determine, from the first cyclic shift bias value set based on $Y_l$ and a random function $f(n_{SRS})$ , a first cyclic shift bias value $n_{SRS}^{cs, offset}$ of an SRS sending occasion, and may obtain the cyclic shift value $\alpha_i$ of the i th port based on the initial cyclic shift value of the i th port and a first cyclic shift bias value.

For example, the cyclic shift value $\alpha_i$ of the $i$ th port of the $N_{ap}^{SRS}$ ports is as follows:

$$\alpha_i = 2\pi \frac{n_{SRS}^{cs,i}}{n_{SRS}^{cs,max}} + 2\pi \frac{n_{SRS}^{cs,offset}}{K n_{SRS}^{cs,max}}$$

$n_{SRS}^{cs,offset} = f(n_{SRS}) \bmod Y_1$ . $Y_1$ is $n_{SRS}^{cs,max}$ , and $K$ is 1; or $Y_1 = K \cdot n_{SRS}^{cs,max}$ , and $K$ is a value configured by the network device or is a preset value; or $Y_l$ is a value configured by the network device, and $K$ is 1. $f(n_{SRS})$ is the random function. $K$ is 1 or a preset value. $n_{SRS}^{CS,i}$ is the initial cyclic shift value of the i th port. $n_{SRS}^{cs,max}$ is the maximum cyclic shift value. $n_{SRS}^{cs,offset}$ is the first cyclic shift bias value. To be specific, for one SRS sending occasion, the first comb offset bias value is one comb offset bias value in the first comb offset bias value set. Refer to the example shown in FIG. 13. For example, in a diagram (a) in FIG. 13, on an SRS sending occasion, first comb offset bias values of the four ports are 1.

Optionally, if the network device does not configure '*cyclicShiftHoppingSubset*' or '*cyclicShiftHoppingFiner-Granularity*', $Y_1 = n_{SRS}^{cs,\max}$, and $K$ =1. Optionally, if the network device does not configure '*cyclicShiftHoppingSubset*' but configures '*cyclicShiftHoppingFinerGranularity*', $Y_1 = K \cdot n_{SRS}^{cs,\max}$, where $K$ is a value configured by the network device or is a preset value. Optionally, if the network device configures '*cyclicShiftHoppingSubset*', $Y_1$ is a value configured by the network device, and $K$ is 1. In different cases, a value of $Y_1$ varies. The network device configuring '*cyclicShiftHopping-Subset*' indicates that CS subset hopping is enabled, and the network device may configure a quantity of cyclic shift bias values included in the first cyclic shift bias value set, or a quantity of cyclic shift biases included in the first cyclic shift bias value set may be preset. The network device not configuring '*cyclicShiftHoppingSubset*' indicates that CS subset hopping is disabled. This implies that the first cyclic shift bias value set may include all cyclic shifts. The network device configuring '*cyclicShiftHoppingSubset*' indicates that small-granularity CS subset hopping is enabled.

Case 2: Cyclic shift bias values included in the first cyclic shift bias value set are inconsecutive.

Optionally, the first cyclic shift bias value set includes at least one cyclic shift bias value subset, and cyclic shift bias values included in each of the at least one cyclic shift bias value subset are consecutive. Optionally, the at least one cyclic shift bias value subset is inconsecutive. To be specific, the first cyclic shift bias value set may include a plurality of subsets that each are consecutive, and the subsets may be inconsecutive.

Optionally, cyclic shift bias value intervals between any two adjacent cyclic shift bias value subsets of the at least one cyclic shift bias value subset are equal. Optionally, a cyclic shift bias value interval between two adjacent cyclic shift bias value subsets is greater than 1, for example, is $\Delta'$.

Optionally, all of the at least one cyclic shift bias value subset include equal quantities of cyclic shift bias values. For example, the quantities are all $S_q$, where $S_q$ is a positive integer greater than or equal to 1.

Optionally, the first cyclic shift bias value set includes $Q$ cyclic shift value subsets, where $Q$ is a positive integer greater than 1 or less than $n_{SRS}^{cs,\max}$.

Optionally, the first cyclic shift bias value set may be obtained based on the total cyclic shift quantity $n_{SRS}^{cs,\max}$, the cyclic shift bias value interval $\Delta'$ between any two adjacent cyclic shift bias value subsets, and the quantity $S_q$ of cyclic shift bias values included in each cyclic shift bias value subset.

Optionally, a $q$th cyclic shift bias value subset of the $Q$ cyclic shift bias value subsets is

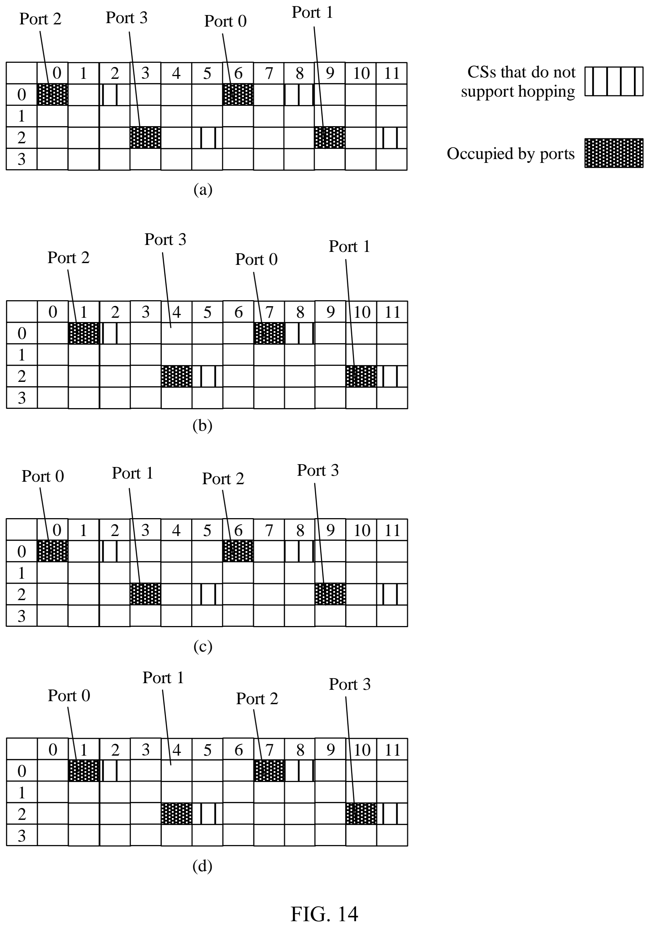

$$\left\{ \Delta_q \bmod n_{SRS}^{CS,\max}, (\Delta_q + 1) \bmod n_{SRS}^{CS,\max} \cdots, (\Delta_q + S_q - 1) \bmod n_{SRS}^{CS,\max} \right\}$$, where $\Delta_0 = 0$, $\Delta_q = \Delta' \cdot q$, $q$=0,1,..., $Q$-1, $\Delta'$ is

the cyclic shift bias interval between any two adjacent cyclic shift bias value subsets, $n_{SRS}^{cs,\max}$ is the maximum cyclic shift value, $S_q$ is a quantity of cyclic shift bias values included in the $q$th cyclic shift bias value subset, $\sum_{q=1}^{Q} S_q = Y_1$, and $Y_1$ is a total quantity of cyclic shift bias values included in the first cyclic shift bias value set. For example, as shown in FIG. 14, the first cyclic shift bias value set is {0, 1, 6, 7}, $G$ is 2, and the two cyclic shift bias subsets are {0, 1}, and {6, 7}. That is, the two cyclic shift bias subsets {0, 1} and {6, 7} constitute the first cyclic shift bias value set {0, 1, 6, 7}, or the first cyclic shift bias value set {0, 1, 6, 7} is divided into the two cyclic shift bias subsets {0, 1} and {6, 7}. The first SRS resource corresponds to four ports: ports 0, 1, 2, and 3. As shown in a diagram (a) in FIG. 14, an initial cyclic shift value of the port 0 is a CS 6, an initial cyclic shift value of the port 1 is a CS 9, an initial cyclic shift value of the port 2 is a CS 0, and an initial cyclic shift value of the port 3 is a CS 3. Cyclic shift value sets corresponding to the ports 0, 1, 2, and 3 are {6, 7, 0, 1}, {9, 10, 3, 4}, {0, 1, 6, 7}, and {3, 4, 9, 10}. For example, as shown in a diagram (b) in FIG. 14, on an SRS sending occasion, the port 0 corresponds to the CS 7 in the cyclic shift value set {6, 7, 0, 1}, the port 1 corresponds to the CS 10 in the cyclic shift value set {9, 10, 3, 4}, the port 2 corresponds to the CS 1 in the cyclic shift value set {0, 1, 6, 7}, and the port 3 corresponds to the CS 4 in the cyclic shift value set {3, 4, 9, 10}. For example, as shown in a diagram (c) in FIG. 14, on an SRS sending occasion, the port 0 corresponds to the CS 0 in the cyclic shift value set {6, 7, 0, 1}, the port 1 corresponds to the CS 3 in the cyclic shift value set {9, 10, 3, 4}, the port 2 corresponds to the CS 6 in the cyclic shift value set {0, 1, 6, 7}, and the port 3 corresponds to the CS 9 in the cyclic shift value set {3, 4, 9, 10}. For example, as shown in a diagram (d) in FIG. 14, on an SRS sending occasion, the port 0 corresponds to the CS 1 in the cyclic shift value set {6, 7, 0, 1}, the port 1 corresponds to the CS 4 in the cyclic shift value set {9, 10, 3, 4}, the port 2 corresponds to the CS 7 in the cyclic shift value set {0, 1, 6, 7}, and the port 3 corresponds to the CS 10 in the cyclic shift value set {3, 4, 9, 10}.

Optionally, a $q$th cyclic shift bias value subset of the $Q$ cyclic shift bias value subsets is

$$\left\{-\Delta_q \bmod n_{SRS}^{CS,\max}, (-\Delta_q - 1)\bmod n_{SRS}^{CS,\max} \cdots, (-\Delta_q - S_q + 1)\bmod n_{SRS}^{CS,\max}\right\}$$ , where $\Delta_0$=0, $\Delta_q$=$\Delta'\cdot q$, $q$=0,1,$\cdots$, $Q$-1,

$\Delta'$ is the cyclic shift bias interval between any two adjacent cyclic shift bias value subsets, $n_{SRS}^{cs,\max}$ is the maximum cyclic shift value, $S_q$ is a quantity of cyclic shift bias values included in the $q^{th}$ cyclic shift bias value subset, $\sum_{q=1}^{Q} S_q = Y_1$, and $Y_1$ is a total quantity of cyclic shift bias values included in the first cyclic shift bias value set. $\Delta_0$=0, $\Delta q$=$\Delta'\cdot q$, $q$=0,1,$\cdots$, $Q$-1, $\Delta'$ is the cyclic shift bias interval between any two adjacent cyclic shift bias value subsets, $n_{SRS}^{cs,\max}$ is the maximum cyclic shift value, $S_q$ is a quantity of cyclic shift bias values included in the $q^{th}$ cyclic shift bias value subset, $\sum_{q=1}^{Q} S_q = Y_1$, and $Y_1$ is a total quantity of cyclic shift bias values included in the first cyclic shift bias value set.

Optionally, when the $q^{th}$ cyclic shift bias value subset is

$$\left\{\Delta_q \bmod n_{SRS}^{CS,\max}, (\Delta_q + 1)\bmod n_{SRS}^{CS,\max} \cdots, (\Delta_q + S_q - 1)\bmod n_{SRS}^{CS,\max}\right\}$$ or

$$\left\{-\Delta_q \bmod n_{SRS}^{CS,\max}, (-\Delta_q - 1)\bmod n_{SRS}^{CS,\max} \cdots, (-\Delta_q - S_q + 1)\bmod n_{SRS}^{CS,\max}\right\},$$

$$n_{SRS}^{cs,offset} = \left\lfloor \frac{f(n_{SRS})\bmod Y_1}{(Y_1 \times \Delta') / n_{SRS}^{cs,\max}} \right\rfloor \times \Delta' + \left(f(n_{SRS})\bmod((Y_1 \times \Delta') / n_{SRS}^{cs,\max})\right),$$ or

$$n_{SRS}^{cs,offset} = \left\lfloor \frac{f(n_{SRS})\bmod Y_1}{S_q} \right\rfloor \times \Delta' + \left(f(n_{SRS})\bmod S_q\right),$$ or

$$n_{SRS}^{cs,offset} = \left\lfloor \frac{f(n_{SRS})\bmod Y_1}{S_q} \right\rfloor \times \frac{n_{SRS}^{cs,\max}}{Q} + \left(f(n_{SRS})\bmod S_q\right).$$

Optionally, there is an association relationship between the quantity $S_q$ of cyclic shift bias values included in each cyclic shift bias value subset, the quantity $Q$ of cyclic shift bias value subsets, and the quantity $Y_1$ of cyclic shift bias values included in the first cyclic shift bias value set. The network device may configure two of $L_g$, $Q$, or $Y_1$. The terminal device may determine the other one of $S_q$, $Q$, or $Y_1$ based on the two items configured by the network device. For example, the network device may configure $L_g$ and $Y_1$, and the terminal device obtains $G$ based on $S_q$ and $Y_1$; or the network device may configure $Q$ and $Y_1$, and the terminal device may obtain $S_q$ based on $Q$ and $Y_1$. For example, the association relationship may be as follows: $S_q \times Q = Y_1$.

Optionally, there is an association relationship between the maximum cyclic shift value $n_{SRS}^{cs,\max}$, the quantity $Q$ of cyclic shift bias value subsets, and the cyclic shift bias value interval $\Delta'$ between any two adjacent cyclic shift bias value subsets. The network device may configure two of $n_{SRS}^{cs,\max}$, $Q$, or $\Delta'$. The terminal device may determine the other one of $n_{SRS}^{cs,\max}$, $Q$, or $\Delta'$ based on the two items configured by the network device. For example, the network device may configure $\Delta'$ and $n_{SRS}^{cs,\max}$, and the terminal device obtains $G$ based on $\Delta'$ and $K_{TC}$; or the network device may configure $Q$ and $n_{SRS}^{cs,\max}$, and the terminal device may obtain $\Delta'$ based on $K_{TC}$ and $Q$. For example, the association relationship may be as follows: $n_{SRS}^{cs,\max} = \Delta' \cdot Q$.

Optionally, in a case 1, the terminal device may determine a quantity of ports on a same comb offset among the $N_{ap}^{SRS}$ ports as $Q$. For example, as shown in FIG. 13, all of the four ports are on a CO 0. In this case, $Q$ may be 4. As shown in FIG. 14, among the four ports, the port 0 and the port 2 are on a CO 0, and the port 1 and the port 3 are on a CO 2. In this case, $Q$ may be 2. In this case, $Q$ may be replaced with $N_{ap.comb}^{SRS}$.

Optionally, in a case 2, the terminal device may determine that $Q$ is a quantity of different cyclic shifts occupied by the $N_{ap}^{SRS}$ ports. For example, as shown in the diagram (a) in FIG. 13, the four ports respectively occupy a CS 0, a CS 3, a CS 6, and a CS 9. In this case, $Q$ may be 4. In this case, $Q$ may be replaced with $N_{ap.diffics}^{SRS}$ .

Optionally, in a case 3, the terminal device may determine that $Q$ is a total quantity $N_{ap}^{SRS}$ of ports corresponding to the first SRS resource. For example, in FIG. 13 and FIG. 14, $Q$ is 4. In this case, $Q$ may be replaced with $N_{ap}^{SRS}$ .

Optionally, in a case 4, $Q = \begin{cases} 4, & \text{if } n_{SRS}^{cs,\max} = 8 \text{ or } 12 \\ 2, & \text{others} \end{cases}$ . In this case, $Q$ may be indicated by the network device or specified in the protocol.

When the terminal device determines $Q$ according to any one of the foregoing case 1, case 2, case 3, and case 4, to be specific, when $Q$ is $N_{ap.comb}^{SRS}$ , $Q$ is $N_{ap.diffics}^{SRS}$ , $Q$ is $N_{ap}^{SRS}$ , or $Q = \begin{cases} 4, & \text{if } n_{SRS}^{cs,\max} = 8 \text{ or } 12 \\ 2, & \text{others} \end{cases}$ , the terminal device may determine the first cyclic shift bias value $n_{SRS}^{cs,offset}$ of the $i$th port from the first cyclic shift bias value set based on at least one of the random function $f(n_{SRS})$, the total quantity $Y_1$ of cyclic shift bias values included in the first cyclic shift bias value set, the quantity $Q$ of cyclic shift bias value subsets, the maximum cyclic shift value $n_{SRS}^{cs,\max}$ , or the quantity $S_q$ of cyclic shift bias values included in each cyclic shift bias value subset. Then the terminal device obtains the cyclic shift value $\alpha_i$ of the $i$th port based on the first cyclic shift bias value $n_{SRS}^{cs,offset}$ . Certainly, the terminal device may alternatively determine the first cyclic shift bias value $n_{SRS}^{cs,offset}$ based on another parameter.

The following describes six manners of determining the first cyclic shift bias value $n_{SRS}^{cs,offset}$ of the $i$th port from the first cyclic shift bias value set. The network device or the protocol may specify one of the following seven manners that is to be used by the terminal device. Alternatively, there may be a priority relationship between the six manners, and the terminal device may select a manner with a high priority to determine the first cyclic shift bias value $n_{SRS}^{cs,offset}$ . Alternatively, the terminal device may select, based on an implementation of the terminal device, one of the six manners to determine the first cyclic shift bias value $n_{SRS}^{cs,offset}$ .

Manner 1: The terminal device may determine the first cyclic shift bias value $n_{SRS}^{cs,offset}$ based on $Y_1$ and the random function $f(n_{SRS})$.

For example, $n_{SRS}^{cs,offset} = S(f(n_{SRS}) \bmod Y_1) = f(n_{SRS}) \bmod Y_1$ .

Optionally, if the network device does not configure *'cyclicShiftHoppingSubset'* or *'cyclicShiftHoppingFinerGranularity'*, $Y_1 = n_{SRS}^{cs,\max}$ , and $K$ is 1. To be specific, when the network device does not enable CS subset hopping, the first comb offset bias value may be determined in the manner 1. To be specific, when the network device does not enable CS subset hopping or finer-granularity CS subset hopping, the first cyclic shift bias value may be determined in the manner 1.

Optionally, if the network device does not configure *'cyclicShiftHoppingSubset'* but configures *'cyclicShiftHoppingFinerGranularity'*, $Y_1 = K \cdot n_{SRS}^{cs,\max}$ , and $K$ is a value configured by the network device or is a preset value. To be specific, when the network device does not enable CS subset hopping but enables finer-granularity CS subset hopping, the first cyclic shift bias value may be determined in the manner 1.

It can be understood that the terminal device may determine the first cyclic shift bias value $n_{SRS}^{cs,offset}$ based on $Y_1$ and the random function $f(n_{SRS})$ by using another formula. In this embodiment of this application, a manner in which the terminal device determines the first cyclic shift bias value $n_{SRS}^{cs,offset}$ based on $Y_1$ and the random function $f(n_{SRS})$ is not limited, and the formula in the manner 1 may be transformed in any manner.

Manner 2: The terminal device may determine the first cyclic shift bias value $n_{SRS}^{cs,offset}$ based on $Y_1$, $Q$, the random function $f(n_{SRS})$, and $n_{SRS}^{cs,\max}$ .

For example, $n_{SRS}^{cs,offset} = \left( \left\lfloor \dfrac{f(n_{SRS}) \bmod Y_1}{Y_1/Q} \right\rfloor \times \dfrac{n_{SRS}^{cs,\max}}{Q} + \left( (f(n_{SRS}) \bmod Y_1) \bmod (Y_1/Q) \right) \right)$ , where $Y_1$ is configured by the network device or is a preset value, and $K$ is 1.

Optionally, if the network device configures *cyclicShiftHoppingSubset*, the first cyclic shift bias value $n_{SRS}^{cs,offset}$ may be determined in the manner 2. To be specific, when the network device enables CS subset hopping, the terminal device may determine the first comb offset bias value $n_{SRS}^{cs,offset}$ based on $Y_1$, $Q$, the random function $f(n_{SRS})$, and $n_{SRS}^{cs,\max}$ .

Optionally, when $Y_1$ is not exactly divided by $Q$, $Y_1/Q$ may be replaced with $\left\lceil Y_1/Q \right\rceil$ or $\left\lfloor Y_1/Q \right\rfloor$, where $\left\lfloor \cdot \right\rfloor$ is a round-down operation, and $\left\lceil \cdot \right\rceil$ is a round-up operation.

Optionally, $Y_1$ may be a positive integer multiple of $Q$.

It can be understood that the terminal device may determine the first cyclic shift bias value $n_{SRS}^{cs,offset}$ based on $Y_1$, $Q$, the random function $f(n_{SRS})$, and $n_{SRS}^{cs,\max}$ by using another formula. In this embodiment of this application, a manner in which the terminal device determines the first cyclic shift bias value $n_{SRS}^{cs,offset}$ based on $Y_1$, $Q$, the random function $f(n_{SRS})$, and $n_{SRS}^{cs,\max}$ is not limited, and the formula in the manner 2 may be transformed in any manner.

Manner 3: The terminal device may determine the first cyclic shift bias value $n_{SRS}^{cs,offset}$ based on $Y_1$, $Q$, the random function $f(n_{SRS})$, $S_q$, and $n_{SRS}^{cs,\max}$ .

For example, $n_{SRS}^{cs,offset} = \left( \left\lfloor \dfrac{f(n_{SRS}) \bmod Y_1}{S_q} \right\rfloor \times \dfrac{n_{SRS}^{cs,\max}}{Q} + \left( (f(n_{SRS}) \bmod Y_1) \bmod S_q \right) \right)$ , where $S_q$ is a value configured by the network device or is a preset value, $Y_1 = Q \cdot S_q$, and $K$ is 1.

Optionally, if the network device configures *cyclicShiftHoppingSubset*, the first cyclic shift bias value $n_{SRS}^{cs,offset}$ may be determined in the manner 3. To be specific, when the network device enables CS subset hopping, the terminal device may determine the first comb offset bias value $n_{SRS}^{cs,offset}$ based on $Y_1$, $Q$, the random function $f(n_{SRS})$, $S_q$, and $n_{SRS}^{cs,\max}$ .

It can be understood that the terminal device may determine the first cyclic shift bias value $n_{SRS}^{cs,offset}$ based on $Y_1$, $Q$, the random function $f(n_{SRS})$, $S_q$, and $n_{SRS}^{cs,\max}$ by using another formula. In this embodiment of this application, a manner in which the terminal device determines the first cyclic shift bias value $n_{SRS}^{cs,offset}$ based on $Y_1$, $Q$, the random function $f(n_{SRS})$, $S_q$, and $n_{SRS}^{cs,\max}$ is not limited, and the formula in the manner 3 may be transformed in any manner.

Manner 4: The terminal device may determine the first cyclic shift bias value $n_{SRS}^{cs,offset}$ based on the random function $f(n_{SRS})$ and $n_{SRS}^{cs,\max}$ .

For example, $n_{SRS}^{cs,offset} = f(n_{SRS}) \bmod n_{SRS}^{cs,\max}$ , and $K$ is 1.

Optionally, if the network device does not configure *'cyclicShiftHoppingSubset'* or *'cyclicShiftHoppingFiner-Granularity'*, $K$ is 1. To be specific, when the network device does not enable CS subset hopping, the first comb offset bias value may be determined in the manner 4. To be specific, when the network device does not enable CS subset hopping or finer-granularity CS subset hopping, the first cyclic shift bias value may be determined in the manner 4.

It can be understood that the terminal device may determine the first cyclic shift bias value $n_{SRS}^{cs,offset}$ based on $n_{SRS}^{cs,\max}$ and the random function $f(n_{SRS})$ by using another formula. In this embodiment of this application, a manner in which the terminal device determines the first cyclic shift bias value $n_{SRS}^{cs,offset}$ based on $n_{SRS}^{cs,\max}$ and the random function $f(n_{SRS})$ is not limited, and the formula in the manner 4 may be transformed in any manner.

Manner 5: The terminal device may determine the first cyclic shift bias value based on $K$, the random function $f(n_{SRS})$, and $n_{SRS}^{cs,\max}$ .

For example, $n_{SRS}^{cs,offset} = f(n_{SRS}) \bmod \left( K \cdot n_{SRS}^{cs,\max} \right)$, where $K$ is a value configured by the network device or is a preset value.

Optionally, if the network device does not configure *'cyclicShiftHoppingSubset'* but configures *'cyclicShiftHoppingFinerGranularity'*, $K$ is a value configured by the network device or is a preset value. To be specific, when the network device does not enable CS subset hopping but enables finer-granularity CS subset hopping, the first cyclic shift bias value may be determined in the manner 5.

It can be understood that the terminal device may determine the first cyclic shift bias value $n_{SRS}^{cs,offset}$ based on $K$, the random function $f(n_{SRS})$, and $n_{SRS}^{cs,\max}$ by using another formula. In this embodiment of this application, a manner in which the terminal device determines the first cyclic shift bias value $n_{SRS}^{cs,offset}$ based on $K$, the random function $f(n_{SRS})$, and $n_{SRS}^{cs,\max}$ is not limited, and the formula in the manner 5 may be transformed in any manner.

Manner 6: The terminal device may determine the first cyclic shift bias value $n_{SRS}^{cs,offset}$ based on the random function $f(n_{SRS})$, $Y_1$, $Q$, and $n_{SRS}^{cs,\max}$ .

For example, $n_{SRS}^{cs,offset} = \left( \left\lfloor \dfrac{f(n_{SRS}) \bmod Y_1}{Y_1 / Q} \right\rfloor \times \dfrac{n_{SRS}^{cs,\max}}{Q} + \left( f(n_{SRS}) \right) \bmod (Y_1 / Q) \right)$ , where $Y_1$ is a value configured by the network device or is a preset value, and $K$ is 1.

Optionally, if the network device configures *cyclicShiftHoppingSubset*, the first cyclic shift bias value $n_{SRS}^{cs,offset}$ may be determined in the manner 6. To be specific, when the network device enables CS subset hopping, the terminal device may determine the first comb offset bias value $n_{SRS}^{cs,offset}$ based on $f(n_{SRS})$, $Y_1$, $Q$, and $n_{SRS}^{cs,\max}$ .

Optionally, when $Y_1$ is not exactly divided by $Q$, $Y_1 / Q$ may be replaced with $\left\lceil Y_1 / Q \right\rceil$ or $\left\lfloor Y_1 / Q \right\rfloor$ , where $\left\lfloor \cdot \right\rfloor$ is a round-down operation, and $\left\lceil \cdot \right\rceil$ is a round-up operation.

Optionally, $Y_1$ may be a positive integer multiple of $Q$.

It can be understood that the terminal device may determine the first cyclic shift bias value $n_{SRS}^{cs,offset}$ based on $f(n_{SRS})$, $Y_1$, $Q$, and $n_{SRS}^{cs,\max}$ by using another formula. In this embodiment of this application, a manner in which the terminal device determines the first cyclic shift bias value $n_{SRS}^{cs,offset}$ based on $f(n_{SRS})$, $Y_1$, $Q$, and $n_{SRS}^{cs,\max}$ is not limited, and the formula in the manner 6 may be transformed in any manner.

Manner 7: The terminal device may determine the first cyclic shift bias value $n_{SRS}^{cs,offset}$ based on the random function $f(n_{SRS})$, $Y_1$, $S_q$, $Q$, and $n_{SRS}^{cs,\max}$ .

For example, $n_{SRS}^{cs,offset} = \left( \left\lfloor \dfrac{f(n_{SRS}) \bmod Y_1}{S_q} \right\rfloor \times \dfrac{n_{SRS}^{cs,\max}}{Q} + \left( f(n_{SRS}) \right) \bmod S_q \right)$ , where $S_q$ is a value configured by the network device or is a preset value, $Y_1 = Q \cdot S_q$, and $K$ is 1.

Optionally, if the network device configures *cyclicShiftHoppingSubset*, the first cyclic shift bias value $n_{SRS}^{cs,offset}$ may be determined in the manner 7. To be specific, when the network device enables CS subset hopping, the terminal device may determine the first comb offset bias value $n_{SRS}^{cs,offset}$ based on $f(n_{SRS})$, $Y_1$, $S_q$, $Q$, and $n_{SRS}^{cs,max}$ .

It can be understood that the terminal device may determine the first cyclic shift bias value $n_{SRS}^{cs,offset}$ based on $f$ $(n_{SRS})$, $Y_1$, $S_q$, $Q$, and $n_{SRS}^{cs,max}$ by using another formula. In this embodiment of this application, a manner in which the terminal device determines the first cyclic shift bias value $n_{SRS}^{cs,offset}$ based on $f(n_{SRS})$, $Y_1$, $S_q$, $Q$, and $n_{SRS}^{cs,max}$ is not limited, and the formula in the manner 7 may be transformed in any manner.

Optionally, after determining the first cyclic shift bias value $n_{SRS}^{cs,offset}$ in any one of the foregoing seven manners, the terminal device may obtain the cyclic shift value $\alpha_i = 2\pi \dfrac{n_{SRS}^{cs,i}}{n_{SRS}^{cs,max}} + 2\pi \dfrac{n_{SRS}^{cs,offset}}{Kn_{SRS}^{cs,max}}$ of the $i^{th}$ port of the $N_{ap}^{SRS}$ ports based on the first cyclic shift bias value: $n_{SRS}^{cs,offset}$ , where $n_{SRS}^{CS,i}$ is the initial cyclic shift value of the $i^{th}$ port, $f(n_{SRS})$ is the random function, mod$(\cdot)$ is a modulo operation, $n_{SRS}^{cs,offset}$ is the first cyclic shift bias value, and $\lfloor \cdot \rfloor$ is a round-down operation.

Optionally, in some cases, the network device may indicate $\Delta'$ or $\Delta' = \begin{cases} 2, & \text{if } n_{SRS}^{cs,max} = 8 \\ 3, & \text{others} \end{cases}$ , and

$\Delta' = \begin{cases} 2, & \text{if } n_{SRS}^{cs,max} = 8 \\ 3, & \text{others} \end{cases}$ may be specified in the protocol or configured by the network device. Optionally, the terminal device may determine $\Delta'$ based on $Q$ and $n_{SRS}^{cs,max}$ . For example, $Q = \begin{cases} 4, & \text{if } n_{SRS}^{cs,max} = 8 \text{ or } 12 \\ 2, & \text{others} \end{cases}$ , or

$Q = \begin{cases} N_{ap}^{SRS}/2, & \text{if } N_{ap}^{SRS} = 4 \text{ and } n_{SRS}^{cs,max} = 6; \text{ or } N_{ap}^{SRS} = 8 \text{ and } n_{SRS}^{cs,max} = 12 \\ N_{ap}^{SRS}/4, & \text{if } N_{ap}^{SRS} = 8 \text{ and } n_{SRS}^{cs,max} = 6. \\ N_{ap}^{SRS}, & \text{others} \end{cases}$

When the terminal device determines $\Delta'$, the following describes seven manners of determining the first cyclic shift bias value $n_{SRS}^{cs,offset}$ of the $p^{th}$ group of ports from the first cyclic shift bias value set. The network device or the protocol may specify one of the following seven manners that is to be used by the terminal device. Alternatively, there may be a priority relationship between the seven manners, and the terminal device may select a manner with a high priority to determine the first cyclic shift bias value $n_{SRS}^{cs,offset}$ . Alternatively, the terminal device may select, based on an implementation of the terminal device, one of the seven manners to determine the first cyclic shift bias value $n_{SRS}^{cs,offset}$ .

Manner 1: The terminal device may determine the first cyclic shift bias value $n_{SRS}^{cs,offset}$ based on $Y_1$ and the random function $f(n_{SRS})$.

For example, $n_{SRS}^{cs,offset} = S(f(n_{SRS}) \bmod Y_1) = f(n_{SRS}) \bmod Y_1$ .

Optionally, if the network device does not configure '*cyclicShiftHoppingSubset*' or '*cyclicShiftHoppingFiner-Granularity*', $Y_1 = n_{SRS}^{cs,max}$ , and $K$ is 1. To be specific, when the network device does not enable CS subset hopping, the first comb offset bias value may be determined in the manner 1. To be specific, when the network device does not enable CS subset hopping or finer-granularity CS subset hopping, the first cyclic shift bias value may be determined in the manner 1.

Optionally, if the network device does not configure '*cyclicShiftHoppingSubset*' but configures '*cyclicShiftHoppingFinerGranularity*', $Y_1 = K \cdot n_{SRS}^{cs,\max}$, and $K$ is a value configured by the network device or is a preset value. To be specific, when the network device does not enable CS subset hopping but enables finer-granularity CS subset hopping, the first cyclic shift bias value may be determined in the manner 1.

It can be understood that the terminal device may determine the first cyclic shift bias value $n_{SRS}^{cs,offset}$ based on $Y_1$ and the random function $f(n_{SRS})$ by using another formula. In this embodiment of this application, a manner in which the terminal device determines the first cyclic shift bias value $n_{SRS}^{cs,offset}$ based on $Y_1$ and the random function $f(n_{SRS})$ is not limited, and the formula in the manner 1 may be transformed in any manner.

Manner 2: The terminal device may determine the first cyclic shift bias value $n_{SRS}^{cs,offset}$ based on $Y_1$, $\Delta'$, the random function $f(n_{SRS})$, and $n_{SRS}^{cs,\max}$.

For example, $n_{SRS}^{cs,offset} = \left( \left\lfloor \dfrac{f(n_{SRS}) \bmod Y_1}{(Y_1 \times \Delta')/ n_{SRS}^{cs,\max}} \right\rfloor \times \Delta' + \left( (f(n_{SRS}) \bmod Y_1) \bmod ((Y_1 \times \Delta')/ n_{SRS}^{cs,\max}) \right) \right)$,

where $Y_1$ is a value configured by the network device or is a preset value, $K$ is 1, and $\lfloor \cdot \rfloor$ is a round-down operation.

Optionally, if the network device configures *cyclicShiftHoppingSubset*, the first cyclic shift bias value $n_{SRS}^{cs,offset}$ may be determined in the manner 2. To be specific, when the network device enables CS subset hopping, the terminal device may determine the first comb offset bias value $n_{SRS}^{cs,offset}$ based on $Y_1$, $\Delta'$, the random function $f(n_{SRS})$, and $n_{SRS}^{cs,\max}$.

Optionally, when $Y_1 \times \Delta'$ is not exactly divided by $n_{SRS}^{cs,\max}$, $(Y_1 \times \Delta')/ n_{SRS}^{cs,\max}$ may be replaced with $\left\lceil (Y_1 \times \Delta')/ n_{SRS}^{cs,\max} \right\rceil$ or $\left\lfloor (Y_1 \times \Delta')/ n_{SRS}^{cs,\max} \right\rfloor$, where $\lfloor \cdot \rfloor$ is a round-down operation, and $\lceil \cdot \rceil$ is a round-up operation.

Optionally, $Y_1 \times \Delta'$ may be a positive integer multiple of $n_{SRS}^{cs,\max}$.

It can be understood that the terminal device may determine the first cyclic shift bias value $n_{SRS}^{cs,offset}$ based on $Y_1$, $\Delta'$, the random function $f(n_{SRS})$, and $n_{SRS}^{cs,\max}$ by using another formula. In this embodiment of this application, a manner in which the terminal device determines the first cyclic shift bias value $n_{SRS}^{cs,offset}$ based on $Y_1$, $\Delta'$, the random function $f(n_{SRS})$, and $n_{SRS}^{cs,\max}$ is not limited, and the formula in the manner 2 may be transformed in any manner.

Manner 3: The terminal device may determine the first cyclic shift bias value $n_{SRS}^{cs,offset}$ based on $Y_1$, $\Delta'$, the random function $f(n_{SRS})$, and $S_q$.

For example, $n_{SRS}^{cs,offset} = \left( \left\lfloor \dfrac{f(n_{SRS}) \bmod Y_1}{S_q} \right\rfloor \times \Delta' + \left( (f(n_{SRS}) \bmod Y_1) \bmod S_q \right) \right)$, where $S_q$ is a value configured by the network device or is a preset value, $Y_1 = Q \cdot S_q$, and $K$ is 1.

Optionally, if the network device configures *cyclicShiftHoppingSubset*, the first cyclic shift bias value $n_{SRS}^{cs,offset}$ may be determined in the manner 3. To be specific, when the network device enables CS subset hopping, the terminal device may determine the first comb offset bias value $n_{SRS}^{cs,offset}$ based on $Y_1$, $\Delta'$, the random function $f(n_{SRS})$, $S_q$, and

$n_{SRS}^{cs,\max}$ .

It can be understood that the terminal device may determine the first cyclic shift bias value $n_{SRS}^{cs,offset}$ based on $Y_1$, $\Delta'$, the random function $f(n_{SRS})$, and $S_q$ by using another formula. In this embodiment of this application, a manner in which the terminal device determines the first cyclic shift bias value $n_{SRS}^{cs,offset}$ based on $Y_1$, $\Delta'$, the random function $f(n_{SRS})$, and $S_q$ is not limited, and the formula in the manner 3 may be transformed in any manner.

Manner 4: The terminal device may determine the first cyclic shift bias value $n_{SRS}^{cs,offset}$ based on the random function $f(n_{SRS})$ and $n_{SRS}^{cs,\max}$ .

For example, $n_{SRS}^{cs,offset} = f(n_{SRS}) \bmod n_{SRS}^{cs,\max}$ , and $K$ is 1.

Optionally, if the network device does not configure *'cyclicShiftHoppingSubset'* or *'cyclicShiftHoppingFinerGranularity'*, $K$ is 1. To be specific, when the network device does not enable CS subset hopping, the first comb offset bias value may be determined in the manner 4. To be specific, when the network device does not enable CS subset hopping or finer-granularity CS subset hopping, the first cyclic shift bias value may be determined in the manner 4.

It can be understood that the terminal device may determine the first cyclic shift bias value $n_{SRS}^{cs,offset}$ based on $n_{SRS}^{cs,\max}$ and the random function $f(n_{SRS})$ by using another formula. In this embodiment of this application, a manner in which the terminal device determines the first cyclic shift bias value $n_{SRS}^{cs,offset}$ based on $n_{SRS}^{cs,\max}$ and the random function $f(n_{SRS})$ is not limited, and the formula in the manner 4 may be transformed in any manner.

Manner 5: The terminal device may determine the first cyclic shift bias value $n_{SRS}^{cs,offset}$ based on $K$, the random function $f(n_{SRS})$, and $n_{SRS}^{cs,\max}$ .

For example, $n_{SRS}^{cs,offset} = f(n_{SRS}) \bmod \left( K \cdot n_{SRS}^{cs,\max} \right)$ , where $K$ is a value configured by the network device or is a preset value.

Optionally, if the network device does not configure *'cyclicShiftHoppingSubset'* but configures *'cyclicShiftHoppingFinerGranularity'*, $K$ is a value configured by the network device or is a preset value. To be specific, when the network device does not enable CS subset hopping but enables finer-granularity CS subset hopping, the first cyclic shift bias value may be determined in the manner 5.

It can be understood that the terminal device may determine the first cyclic shift bias value $n_{SRS}^{cs,offset}$ based on $K$, the random function $f(n_{SRS})$, and $n_{SRS}^{cs,\max}$ by using another formula. In this embodiment of this application, a manner in which the terminal device determines the first cyclic shift bias value $n_{SRS}^{cs,offset}$ based on $K$, the random function $f(n_{SRS})$, and $n_{SRS}^{cs,\max}$ is not limited, and the formula in the manner 5 may be transformed in any manner.

Manner 6: The terminal device may determine the first cyclic shift bias value $n_{SRS}^{cs,offset}$ based on the random function $f(n_{SRS})$, $Y_1$, $\Delta'$, and $n_{SRS}^{cs,\max}$ .

For example, $n_{SRS}^{cs,offset} = \left( \left\lfloor \dfrac{f(n_{SRS}) \bmod Y_1}{(Y_1 \times \Delta')/n_{SRS}^{cs,\max}} \right\rfloor \times \Delta' + \left( f(n_{SRS}) \bmod((Y_1 \times \Delta')/n_{SRS}^{cs,\max}) \right) \right)$ , where $Y_1$ is a value configured by the network device or is a preset value, $K$ is 1, and $\lfloor \cdot \rfloor$ is a round-down operation.

Optionally, if the network device configures *cyclicShiftHoppingSubset*, the first cyclic shift bias value $n_{SRS}^{cs,offset}$ may be determined in the manner 6. To be specific, when the network device enables CS subset hopping, the terminal device may determine the first comb offset bias value $n_{SRS}^{cs,offset}$ based on $f(n_{SRS})$, $Y_1$, $\Delta'$, and $n_{SRS}^{cs,\max}$ .

Optionally, when $Y_1 \times \Delta'$ is not exactly divided by $n_{SRS}^{cs,max}$, $(Y_1 \times \Delta')/n_{SRS}^{cs,max}$ may be replaced with $\left\lceil (Y_1 \times \Delta')/n_{SRS}^{cs,max} \right\rceil$ or $\left\lfloor (Y_1 \times \Delta')/n_{SRS}^{cs,max} \right\rfloor$, where $\lfloor \cdot \rfloor$ is a round-down operation, and $\lceil \cdot \rceil$ is a round-up operation.

Optionally, $Y_1 \times \Delta'$ may be a positive integer multiple of $n_{SRS}^{cs,max}$.

It can be understood that the terminal device may determine the first cyclic shift bias value $n_{SRS}^{cs,offset}$ based on $f(n_{SRS})$, $Y_1$, $\Delta'$, and $n_{SRS}^{cs,max}$ by using another formula. In this embodiment of this application, a manner in which the terminal device determines the first cyclic shift bias value $n_{SRS}^{cs,offset}$ based on $f(n_{SRS})$, $Y_1$, $\Delta'$, and $n_{SRS}^{cs,max}$ is not limited, and the formula in the manner 6 may be transformed in any manner.

Manner 7: The terminal device may determine the first cyclic shift bias value $n_{SRS}^{cs,offset}$ based on the random function $f(n_{SRS})$, $Y_1$, $S_q$, and $\Delta'$.

For example, $n_{SRS}^{cs,offset} = \left( \left\lfloor \dfrac{f(n_{SRS}) \bmod Y_1}{S_q} \right\rfloor \times \Delta' + \left( f(n_{SRS}) \bmod S_q \right) \right)$, where $S_q$ is a value configured by the network device or is a preset value, $Y_1 = Q \cdot S_q$, and $K$ is 1.

Optionally, if the network device configures *cyclicShiftHoppingSubset*, the first cyclic shift bias value $n_{SRS}^{cs,offset}$ may be determined in the manner 7. To be specific, when the network device enables CS subset hopping, the terminal device may determine the first comb offset bias value $n_{SRS}^{cs,offset}$ based on $f(n_{SRS})$, $Y_1$, $S_q$, and $\Delta'$.

It can be understood that the terminal device may determine the first cyclic shift bias value $n_{SRS}^{cs,offset}$ based on $f(n_{SRS})$, $Y_1$, $S_q$, and $\Delta'$ by using another formula. In this embodiment of this application, a manner in which the terminal device determines the first cyclic shift bias value $n_{SRS}^{cs,offset}$ based on $f(n_{SRS})$, $Y_1$, $S_q$, and $\Delta'$ is not limited, and the formula in the manner 7 may be transformed in any manner.

Optionally, after determining the first cyclic shift bias value $n_{SRS}^{cs,offset}$ in any one of the foregoing seven manners, the terminal device may obtain the cyclic shift value $\alpha_i = 2\pi \dfrac{n_{SRS}^{cs,i}}{n_{SRS}^{cs,max}} + 2\pi \dfrac{n_{SRS}^{cs,offset}}{K n_{SRS}^{cs,max}}$ of the $i^{th}$ port of the $N_{ap}^{SRS}$ ports based on the first cyclic shift bias value: $n_{SRS}^{cs,offset}$, where $n_{SRS}^{CS,i}$ is the initial cyclic shift value of the $i^{th}$ port, $f(n_{SRS})$ is the random function, $\bmod(\cdot)$ is a modulo operation, $n_{SRS}^{cs,offset}$ is the first cyclic shift bias value, and $\lfloor \cdot \rfloor$ is a round-down operation.

The first cyclic shift set described above corresponds to the initial cyclic shift value of the $i^{th}$ port and the first cyclic shift bias value set. To be specific, the first cyclic shift bias value set may be combined with the method 1100, or the first cyclic shift bias value set may be an independent embodiment. The following briefly describes a solution in which the first cyclic shift bias value set may serve as an independent embodiment. In the solution of an independent embodiment, the terminal device may send the SRS based on the initial comb offset value of the $i^{th}$ port of the $N_{ap}^{SRS}$ ports corresponding to the first SRS resource and the first cyclic shift bias value of the $i^{th}$ port in the first cyclic shift bias value set, where $i$ is a positive integer ranging from 1 to $N_{ap}^{SRS}$. That is, for each port, the SRS may be sent based on an initial cyclic shift value of the port and a first cyclic shift bias value of the port in the first cyclic shift bias value set. When the first cyclic shift bias value set may alternatively be an independent embodiment, $n_{SRS}^{cs,offset}$ obtained in the foregoing manners may be the first comb offset bias value of the $i^{th}$ port in the first cyclic shift bias value set. The terminal device may obtain, based on the first cyclic shift bias value $n_{SRS}^{cs,offset}$ , the cyclic shift value $\alpha_i = 2\pi \dfrac{n_{SRS}^{cs,i}}{n_{SRS}^{cs,\max}} + 2\pi \dfrac{n_{SRS}^{cs,offset}}{Kn_{SRS}^{cs,\max}}$ of the $i^{th}$ port, where $n_{SRS}^{CS,i}$ is the initial cyclic shift value of the $i^{th}$ port. To avoid repetition, details are not described herein.

In embodiments of this application, the SRS sending moment may be understood as an SRS sending periodicity, or a specific time of SRS sending in an SRS sending periodicity, or SRS sending on a specific OFDM symbol in an SRS sending periodicity.

In embodiments of this application, supporting CS hopping may indicate that CS hopping is enabled, not supporting CS hopping may indicate that CS hopping is disabled, supporting CO hopping may indicate that CO hopping is enabled, and not supporting CO hopping may indicate that CO hopping is disabled.

In embodiments of this application, a condition for determining whether to perform CO hopping or CS hopping is not limited, and the network device may indicate whether to perform CO hopping or CS hopping.

In embodiments of this application, the comb offset, the comb offset step, the cyclic shift value, the cyclic shift index, and the like may alternatively have other names. These names are not limited in embodiments of this application.

It should be noted that the formulas shown in embodiments of this application may be transformed in any forms, and forms of the formulas are not limited in embodiments of this application.

It should also be noted that any parameter used in the formulas in embodiments of this application may be indicated by the network device, may be specified in the protocol, or may be obtained by the terminal device through calculation based on another parameter.

The foregoing describes the method embodiments provided in this application, and the following describes apparatus embodiments provided in this application. It should be understood that descriptions of the apparatus embodiments correspond to the descriptions of the method embodiments. Therefore, for content that is not described in detail, refer to the foregoing method embodiments. For brevity, details are not described herein again.

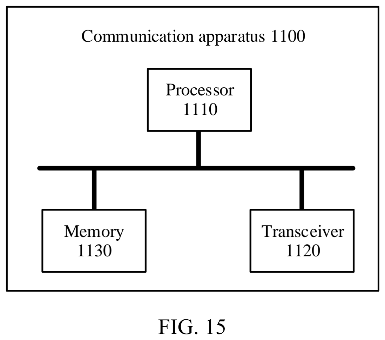

FIG. 15 shows a communication apparatus 1100 according to an embodiment of this application. The communication apparatus 1100 includes a processor 1110 and a transceiver 1120. The processor 1110 and the transceiver 1120 communicate with each other through an internal connection path. The processor 1110 is configured to execute instructions, to control the transceiver 1120 to send a signal and/or receive a signal.

Optionally, the communication apparatus 1100 may further include a memory 1130. The memory 1130 communicates with the processor 1110 and the transceiver 1120 through internal connection paths. The memory 1130 is configured to store instructions, and the processor 1110 may execute the instructions stored in the memory 1130. In a possible implementation, the communication apparatus 1100 is configured to implement the processes and the operations corresponding to the network device in the method 500 or the method 900. In a possible implementation, the communication apparatus 1100 is configured to implement the processes and the operations corresponding to the terminal device in the method 500 or the method 900.

It should be understood that the communication apparatus 1100 may be specifically the devices (for example, the network device or the terminal device) in the foregoing embodiments, or may be a chip or a chip system. Correspondingly, the transceiver 1120 may be a transceiver circuit of the chip. This is not limited herein. Specifically, the communication apparatus 1100 may be configured to perform the operations and/or the processes corresponding to the network device or the terminal device in the foregoing method embodiments. Optionally, the memory 1130 may include a read-only memory and a random access memory, and provide instructions and data for the processor. A part of the memory may further include a non-volatile random access memory. For example, the memory may further store information about a device type. The processor 1110 may be configured to execute the instructions stored in the memory. In addition, when the processor 1110 executes the instructions stored in the memory, the processor 1110 is configured to perform the operations and/or the processes corresponding to the devices in the foregoing method embodiments.

During implementation, the operations in the foregoing methods may be performed by using a hardware integrated logic circuit in the processor or instructions in a form of software. The operations in the methods disclosed with reference to embodiments of this application may be directly performed by a hardware processor, or may be performed by a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in a memory. The processor reads information in the memory, and performs the operations in the foregoing methods based on the hardware in the processor. To avoid repetition, details are not described herein again.

It should be noted that the processor in embodiments of this application may be an integrated circuit chip and has a signal processing capability. During implementation, the operations in the foregoing method embodiments may be performed by using a hardware integrated logic circuit in the processor or instructions in a form of software. The processor may be a general-purpose processor, a digital signal processor (DSP), an application-specific integrated circuit (ASIC), a field programmable gate array (FPGA) or another programmable logic device, a discrete gate or transistor logic device, or a discrete hardware component. The processor may implement or perform the methods, the operations, and the logical block diagrams that are disclosed in embodiments of this application. The general-purpose processor may be a microprocessor, or the processor may be any conventional processor or the like. The operations in the methods disclosed with reference to embodiments of this application may be directly performed by a hardware decoding processor, or may be performed by a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in a memory. The processor reads information in the memory, and performs the operations in the foregoing methods based on the hardware in the processor.

It can be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and serves as an external cache. By way of example but not limitative description, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory in the systems and the methods described in this specification is intended to include but is not limited to these memories and any other appropriate type of memory.

According to the methods provided in embodiments of this application, this application further provides a computer program product. The computer program product includes computer program code. When the computer program code is run on a computer, the computer is enabled to perform the operations or the processes performed by the network device or the terminal device in the foregoing method embodiments.

According to the methods provided in embodiments of this application, this application further provides a computer-readable storage medium. The computer-readable storage medium stores program code. When the program code is run on a computer, the computer is enabled to perform the operations or the processes performed by the network device or the terminal device in the foregoing method embodiments.

According to the methods provided in embodiments of this application, this application further provides a communication system, including the foregoing network device and terminal device.

The foregoing apparatus embodiments exactly correspond to the foregoing method embodiments. A corresponding module or unit performs a corresponding operation. For example, a communication unit (a transceiver) performs a sending or receiving operation in the method embodiments, and a processing unit (a processor) may perform an operation other than sending and receiving. A function of a specific unit may be based on a corresponding method embodiment. There may be one or more processors.

In embodiments of this application, the terms and English acronyms/abbreviations are all examples given for ease of description, and shall not constitute any limitation on this application. This application does not exclude a possibility of defining another term that can implement same or similar functions in an existing or future protocol.

It should be understood that "and/or" in this specification describes an association relationship between associated objects, and indicates that three relationships may exist. For example, A and/or B may indicate the following three cases: Only A exists, both A and B exist, and only B exists, where A and B may be in a singular or plural form. The character "/" usually indicates an "or" relationship between the associated objects.

In the descriptions of this application, to clearly describe the technical solutions in embodiments of this application, the terms "first", "second", and the like are used in embodiments of this application to distinguish between same items or similar items that have basically same functions or purposes. A person skilled in the art can understand that the terms "first", "second", and the like do not limit a quantity or an execution sequence, and the terms "first", "second", and the like do not indicate a definite difference.

It should be understood that, in this application, descriptions similar to "in a case that...", "if...", "when...", "it is assumed that...", and the like may be used interchangeably.

A person of ordinary skill in the art may be aware that the illustrative logical blocks (illustrative logical blocks) and operations described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application. However, it should not be considered that the implementation goes beyond the scope of this application.

It can be clearly understood by a person skilled in the art that, for ease and brevity of description, detailed working processes of the foregoing systems, apparatuses, and units may be based on corresponding processes in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, division into the units is merely logical function division. During actual implementation, another division manner may be used. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separated, and components shown as units may or may not be physical units, to be specific, may be located in one place, or may be distributed on a plurality of network units. Some or all of the units may be selected according to actual requirements to achieve the objectives of the solutions of embodiments.

In addition, functional units in embodiments of this application may be integrated into one processing unit, or each unit may exist alone physically, or two or more units may be integrated into one unit.

In the foregoing embodiments, all or some of the functions of the functional units may be implemented by software, hardware, firmware, or any combination thereof. When the functions are implemented by software, all or some of the functions may be implemented in a form of a computer program product. The computer program product includes one or more computer instructions (programs). When the computer program instructions (programs) are loaded and executed on a computer, all or some of processes or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the operations of the methods in embodiments of this application. The storage medium includes any medium that can store program code, for example, a USB flash drive, a removable hard disk drive, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:

   sending an SRS based on at least one comb offset in a first comb offset set $\varphi_p$ corresponding to a $p^{\text{th}}$ group of ports, wherein $N_{ap}^{SRS}$ ports corresponding to a first SRS resource are divided into $P$ groups, the $P$ groups of ports corresponding to the first SRS resource comprise the $p^{\text{th}}$ group of ports, $N_{ap}^{SRS}$ is a positive integer, $p$ is a positive integer ranging from 1 to $P$, and a value of $P$ is a positive integer greater than or equal to 1 and less than or equal to $N_{ap}^{SRS}$.

2. The method according to claim 1, wherein comb offset intervals between any two adjacent comb offsets in the first comb offset set $\varphi_p$ corresponding to the $p^{\text{th}}$ group of ports are equal.

3. The method according to claim 1, wherein the first comb offset set $\varphi_p$ corresponding to the $p^{\text{th}}$ group of ports comprises at least one comb offset subset, comb offsets comprised in each of the at least one comb offset subset are consecutive, and comb offset intervals between any two adjacent comb offset subsets of the at least one comb offset subset are equal.

4. The method according to claim 1, wherein comb offsets comprised in the first comb offset set $\varphi_p$ corresponding to the $p^{\text{th}}$ group of ports are consecutive.

5. The method according to claim 4, wherein the first comb offset set $\varphi_p$ corresponding to the $p^{\text{th}}$ group of ports is obtained based on a reference comb offset $k_{TC,start}^{p}$ of the $p^{\text{th}}$ group of ports and a comb offset step of the $p^{\text{th}}$ group of ports, and $k_{TC,start}^{p}$ is a positive integer.

6. The method according to claim 5, wherein the reference comb offset $k_{TC,start}^{p}$ of the $p^{\text{th}}$ group of ports is specified in a protocol or is indicated by a network device.

7. The method according to claim 5, wherein the reference comb offset $k_{TC,start}^{p}$ of the $p^{\text{th}}$ group of ports is obtained based on at least one of a total comb quantity $K_{TC}$ configured by a network device, $N_{ap}^{SRS}$, a comb offset $\overline{k}_{TC}$ of a reference port, a maximum cyclic shift value $n_{RS}^{cs,\max}$, or a cyclic shift value of a reference port in the $p^{\text{th}}$ group of ports, $K_{TC}$ is a positive integer greater than or equal to 1, $n_{SRS}^{cs,\max}$ is a positive integer greater than or equal to 1, and $\overline{k}_{TC}$ is a positive integer greater than or equal to 0 and less than $K_{TC}$.

8. The method according to any one of claims 5 to 7, wherein the first comb offset set $\varphi_p$ corresponding to the $p^{\text{th}}$ group of ports is obtained based on at least one of the total comb quantity $K_{TC}$, the reference comb offset $k_{TC,start}^{p}$ of the $p^{\text{th}}$ group of ports, or $n_P$ comb offset steps of the $p^{\text{th}}$ group of ports, the first comb offset set $\varphi_p$ comprises $n_p$ comb offsets, the $n_p$ comb offsets are in a one-to-one correspondence with the $n_p$ comb offset steps, and $n_p$ is a positive integer less than or equal to $K_{TC}$.

9. The method according to claim 8, wherein the method further comprises:
receiving first indication information and second indication information from the network device, wherein the first indication information indicates the total comb quantity $K_{TC}$, and the second indication information indicates $n_p$.

10. The method according to claim 8 or 9, wherein the first comb offset set $\varphi_p$ corresponding to the $p^{\text{th}}$ group of ports is as follows:

$$\left\{k_{TC,start}^{p},\left(k_{TC,start}^{p}+1\right)\bmod K_{TC},\left(k_{TC,start}^{p}+2\right)\bmod K_{TC},\cdots,\left(k_{TC,start}^{p}+n_{p}-1\right)\bmod K_{TC}\right\} ,$$

wherein $0,1,2,\cdots, n_p$-1 are the $n_p$ comb offset steps; or is as follows:

$$\left\{k_{TC,start}^{p},\left(k_{TC,start}^{p}-1\right)\bmod K_{TC},\left(k_{TC,start}^{p}-2\right)\bmod K_{TC},\cdots,\left(k_{TC,start}^{p}-n_{p}+1\right)\bmod K_{TC}\right\} ,$$

wherein $0,-1,-2,\cdots, -n_p$ +1 are the $n_p$ comb offset steps, wherein
mod$(\cdot)$ is a modulo operation.

11. The method according to claim 10, wherein the method further comprises:
receiving third indication information from the network device, wherein the third indication information indicates that the first comb offset set $\varphi_p$ corresponding to the $p^{\text{th}}$ group of ports is

$$\left\{ k_{TC,start}^{p}, \left( k_{TC,start}^{p} + 1 \right) \bmod K_{TC}, \left( k_{TC,start}^{p} + 2 \right) \bmod K_{TC}, \cdots, \left( k_{TC,start}^{p} + n_{p} - 1 \right) \bmod K_{TC} \right\}$$ , or the third indication information indicates that the first comb offset set $\varphi_p$ corresponding to the $P^{\text{th}}$ group of ports is

$$\left\{ k_{TC,start}^{p}, \left( k_{TC,start}^{p} - 1 \right) \bmod K_{TC}, \left( k_{TC,start}^{p} - 2 \right) \bmod K_{TC}, \cdots, \left( k_{TC,start}^{p} - n_{p} + 1 \right) \bmod K_{TC} \right\}$$ .

**12.** The method according to any one of claims 7 to 11, wherein sending the SRS based on the at least one comb offset in the first comb offset set $\varphi_p$ corresponding to the $p^{\text{th}}$ group of ports comprises:

generating a first value based on a total quantity $n_p$ of comb offsets comprised in the first comb offset set $\varphi_p$, wherein a value range of the first value is $[0,n_p-1]$ ;
determining, from the first comb offset set $\varphi_p$, a first comb offset corresponding to the first value, wherein a comb offset of each port in the $P^{\text{th}}$ group of ports is the first comb offset, and one value in $[0, n_p-1]$ corresponds to one comb offset in the first comb offset set $\varphi_p$ ; and
sending the SRS based on the first comb offset.

**13.** The method according to any one of claims 5 to 7, wherein an $n_p^{i\,\text{th}}$ comb offset in the first comb offset set $\varphi_p$ corresponding to the $P^{\text{th}}$ group of ports corresponds to an $n_p^{i\,\text{th}}$ comb offset step, the $n_p^{i\,\text{th}}$ comb offset step corresponds to a second value generated based on a quantity $n_p$ of comb offset steps, and a value range of the second value is $[0,n_p-1]$.

**14.** The method according to claim 13, wherein the $n_p^{i\,\text{th}}$ comb offset step $k_{COH,i}^{p}$ is $(-1)^b f(n_{SRS})$, wherein $f(n_{SRS})$ is the second value, and a value of $b$ is 0 or 1.

**15.** The method according to claim 14, wherein sending the SRS based on the at least one comb offset in the first comb offset set $\varphi_p$ corresponding to the $P^{\text{th}}$ group of ports comprises:

determining a first comb offset of the $P^{\text{th}}$ group of ports based on at least one of the $n_p^{i\,\text{th}}$ comb offset step $k_{COH,i}^{p}$ in the first comb offset set $\varphi_p$, the reference comb offset $k_{TC,start}^{p}$ of the $P^{\text{th}}$ group of ports, or the total comb quantity $K_{TC}$ ;
determining, based on the first comb offset and a frequency domain resource offset, a frequency domain starting position to which the $P^{\text{th}}$ group of ports is mapped; and
sending the SRS based on the frequency domain starting position to which the $P^{\text{th}}$ group of ports is mapped.

**16.** The method according to claim 15, wherein the reference comb offset $k_{TC,start}^{p}$ of the $P^{\text{th}}$ group of ports is $k_{TC}^{p}$ obtained based on at least one of the total comb quantity $K_{TC}$ configured by the network device, $N_{ap}^{SRS}$ , the comb

offset $\overline{k}_{TC}$ of the reference port, the maximum cyclic shift value $n_{RS}^{cs,\text{max}}$ , or the cyclic shift value of the reference port in

the $p^{\text{th}}$ group of ports, and determining the first comb offset of the $P^{\text{th}}$ group of ports based on at least one of the $n_p^{i\,\text{th}}$

comb offset step $k_{COH,i}^{p}$ in the first comb offset set $\varphi_p$, the reference comb offset $k_{TC,start}^{p}$ of the $p^{\text{th}}$ group of ports, or the total comb quantity $K_{TC}$ comprises:

determining that the first comb offset of the $P^{\text{th}}$ group of ports is $(k_{TC}^{P} + k_{offset}^{i} + k_{COH,i}^{p}) \bmod K_{TC}$ , wherein

$k_{offset}^{i}$ is a comb offset adjustment value; and

determining, based on the first comb offset and the frequency domain resource offset, the frequency domain starting position to which the P th group of ports is mapped comprises:

determining that the frequency domain starting position to which the $P$ th group of ports is mapped is

$$n_{shift} N_{SC}^{RB} + (k_{TC}^P + k_{offset}^{'} + k_{COH,i}^P) \bmod K_{TC}$$ , wherein $n_{shift} N_{SC}^{RB}$ is the frequency domain resource offset.

17. The method according to claim 15, wherein the reference comb offset $k_{TC,start}^p$ of the $p$ th group of ports is specified in the protocol or is indicated by the network device, and determining the first comb offset of the P th group of ports based on at least one of the $n_p^i$ th comb offset step $k_{COH,i}^p$ in the first comb offset set $\varphi_p$, the reference comb offset $k_{TC,start}^p$ of the P th group of ports, or the total comb quantity $K_{TC}$ comprises:

determining that the first comb offset of the $P$ th group of ports is

$$\{ [(k_{TC}^p + k_{offset}^l + k_{COH,i}^p - k_{TC,start}^p) \bmod n_p ] + k_{TC,start}^p \} \bmod K_{TC}$$ , wherein $k_{offset}^l$ is a comb offset adjustment value, and $k_{TC}^p$ is obtained based on at least one of the total comb quantity $K_{TC}$ configured by the network device, $N_{ap}^{SRS}$, the comb offset $\overline{k}_{TC}$ of the reference port, the maximum cyclic shift value $n_{RS}^{cs,max}$, or the cyclic shift value of the reference port in the $p$th group of ports; and

determining, based on the first comb offset and the frequency domain resource offset, the frequency domain starting position to which the $P$ th group of ports is mapped comprises:

determining that the frequency domain starting position to which the $p$th group of ports is mapped is

$$n_{shift} N_{SC}^{RB} + \{ [(k_{TC}^p + k_{offset}^l + k_{COH,i}^p - k_{TC,start}^p) \bmod n_p ] + k_{TC,start}^P \} \bmod K_{TC}$$ , wherein $n_{shift} N_{SC}^{RB}$ is the frequency domain resource offset.

18. The method according to any one of claims 1 to 11, wherein the $p$th group of ports comprises $m_p$ ports, a comb offset of each of the $m_p$ ports in the first comb offset set $\varphi_p$ is related to an index of a cyclic shift group to which a cyclic shift value corresponding to the port belongs, the first SRS resource corresponds to $T$ groups of cyclic shift values, and the $T$ groups of cyclic shift values correspond to T cyclic shift group indexes; or a comb offset of each of the $m_p$ ports in the first comb offset set $\varphi_p$ is related to a cyclic shift value corresponding to the port, and the first SRS resource corresponds to T cyclic shift values, wherein

$T$ is a positive integer.

19. The method according to claim 18, wherein a comb offset $n_p^j$ of an $m_p^{j}$ th port of the $m_p$ ports in the first comb offset set $\varphi_p$ is obtained based on at least one of $k_{TC}^P$ or an index of a cyclic shift group to which a cyclic shift value corresponding to the $m_p^{j}$ th port belongs; or a comb offset $n_p^j$ of an $m_p^{j}$ th port of the $m_p$ ports in the first comb offset set $\varphi_p$ is obtained based on $k_{TC}^p$ and/or a cyclic shift value corresponding to the $m_p^{j}$ th port, wherein

$k_{TC}^p$ is obtained based on at least one of the total comb quantity $K_{TC}$ configured by the network device, $N_{ap}^{SRS}$, the comb offset $\overline{k}_{TC}$ of the reference port, the maximum cyclic shift value $n_{RS}^{cs,max}$, or the cyclic shift value of the reference port in the P th group of ports.

20. The method according to claim 18, wherein an $m_p^{j}$ th port of the $m_p$ ports corresponds to an $n_p^{j}$ th comb offset step, the $n_p^{j}$ th comb offset step corresponds to a third value generated based on a quantity $n_p$ of comb offset steps, and a value range of the third value is $[0, n_p -1]$.

21. The method according to claim 20, wherein the $n_p^{j\text{ th}}$ comb offset step $k_{COH,j}^p$ is $(-1)^b[f(n_{SRS}) + \lfloor n_{SRS}^{CS,j} \cdot T / n_{srs}^{CS,\max} \rfloor]$ , wherein $f(n_{SRS})$ is the third value, a value of $b$ is 0 or 1, $n_{srs}^{CS,\max}$ is the maximum cyclic shift value, $n_{SRS}^{CS,j}$ is a cyclic shift value corresponding to the $m_p^j{}^{\text{th}}$ port, and T is a quantity of cyclic shift groups; or

the $n_p^{j\text{ th}}$ comb offset step $k_{COH,j}^p$ is $(-1)^b[f(n_{SRS}) + Tj]$, wherein $Tj$ is an index of a cyclic shift group to which a cyclic shift value corresponding to the $m_p^{j\text{ th}}$ th port belongs, and a value of $Tj$ is a positive integer ranging from 0 to $T$-1.

22. The method according to claim 21, wherein sending the SRS based on the at least one comb offset in the first comb offset set $\varphi_p$ corresponding to the $p^{\text{th}}$ group of ports comprises:

   determining a comb offset of the $m_p^{j\text{ th}}$ port based on at least one of the $n_p^{j\text{ th}}$ comb offset step $k_{COH,j}^p$ corresponding to the $m_p^{j\text{ th}}$ port, a reference comb offset $k_{TC,start}^p$ of the $m_p^{j\text{ th}}$ port, or the total comb quantity $K_{TC}$ ;

   determining, based on the comb offset of the $m_p^{j\text{ th}}$ port and a frequency domain resource offset, a frequency domain starting position to which the $m_p^{j\text{ th}}$ port is mapped; and

   sending the SRS based on the frequency domain starting position to which the $m_p^{j\text{ th}}$ port is mapped, wherein $m_p^j$ is a positive integer ranging from 1 to $m_p$.

23. The method according to claim 22, wherein the reference comb offset $k_{TC,start}^p$ of the $P^{\text{th}}$ group of ports is obtained based on at least one of the total comb quantity $K_{TC}$ configured by the network device, $N_{ap}^{SRS}$ , the comb offset $\overline{k}_{TC}$ of the reference port, the maximum cyclic shift value $n_{RS}^{cs,\max}$ , or the cyclic shift value $k_{TC}^p$ of the reference port in the $p^{\text{th}}$ group of ports, and determining the comb offset of the $m_p^{j\text{ th}}$ port based on at least one of the $n_p^{j\text{ th}}$ comb offset step $k_{COH,j}^p$ corresponding to the $m_p^{j\text{ th}}$ port, the reference comb offset $k_{TC,start}^p$ of the $m_p^{j\text{ th}}$ port, or the total comb quantity $K_{TC}$ comprises:

   determining that the comb offset of the $m_p^{j\text{ th}}$ port is $(k_{TC}^p + k_{offset}^{i} + k_{COH,j}^p) \bmod K_{TC}$ , wherein $k_{offset}^{i}$ is a comb offset adjustment value; and

   determining, based on the comb offset of the $m_p^{j\text{ th}}$ port and the frequency domain resource offset, the frequency domain starting position to which the $m_p^{j\text{ th}}$ port is mapped comprises:

   determining that the frequency domain starting position to which the $m_p^{j\text{ th}}$ port is mapped is

   $n_{shift} N_{SC}^{RB} + (k_{TC}^P + k_{offset}^{i} + k_{COH,j}^p) \bmod K_{TC}$ , wherein $n_{shift} N_{SC}^{RB}$ is the frequency domain resource offset.

24. The method according to claim 22, wherein the reference comb offset $k_{TC,start}^{p}$ of the P th group of ports is specified in the protocol or is indicated by the network device, and determining the comb offset of the $m_{p}^{j\ \text{th}}$ port based on at least one of the $n_{p}^{j\ \text{th}}$ comb offset step $k_{COH,j}^{p}$ corresponding to the $m_{p}^{j\ \text{th}}$ port, the reference comb offset $k_{TC,start}^{p}$ of the $m_{p}^{j\ \text{th}}$ port, or the total comb quantity $K_{TC}$ comprises:

determining that the comb offset of the $m_{p}^{j\ \text{th}}$ port is $\{[(k_{TC}^{p}+k_{offset}^{l}+k_{COH,j}^{p}-k_{TC,start}^{p})\bmod n_{p}]+k_{TC,start}^{p}\}\bmod K_{TC}$ , wherein $k_{offset}^{l}$ is a comb offset adjustment value, and $k_{TC}^{p}$ is obtained based on at least one of the total comb quantity $K_{TC}$ configured by the network device, $N_{ap}^{SRS}$ , the comb offset $\overline{k}_{TC}$ of the reference port, the maximum cyclic shift value $n_{RS}^{cs,\max}$ , or the cyclic shift value of the reference port in the P th group of ports; and

determining, based on the comb offset of the $m_{p}^{j\ \text{th}}$ port and the frequency domain resource offset, the frequency domain starting position to which the $m_{p}^{j\ \text{th}}$ port is mapped comprises:

determining that the frequency domain starting position to which the $m_{p}^{j\ \text{th}}$ port is mapped is $n_{shift}N_{SC}^{RB}+\{[(k_{TC}^{p}+k_{offset}^{l}+k_{COH,j}^{p}-k_{TC,start}^{p})\bmod n_{p}]+k_{TC,start}^{p}\}\bmod K_{TC}$ , wherein $n_{shift}N_{SC}^{RB}$ is the frequency domain resource offset.

25. The method according to any one of claims 14 to 17 or any one of claims 21 to 24, wherein a value of $b$ is specified in the protocol or is indicated by the network device.

26. The method according to any one of claims 14 to 17 or any one of claims 21 to 24 or claim 25, wherein

$$f(\mathrm{n}_{SRS})=\left[\sum_{m=0}^{B-1}c(m)\cdot 2^{m}\right]\bmod n_{p}\ ,$$

wherein

$c(m)$ is an $m^{th}$ element of a random sequence, $B$ is a positive integer greater than or equal to $\lceil\log_{2}n_{p}\rceil$ , and $\lceil\cdot\rceil$ is a round-up operation.

27. The method according to any one of claims 1 to 26, wherein the first comb offset set $\varphi_{p}$ is obtained based on a second comb offset set that is not able to be used for sending an SRS on the first SRS resource.

28. The method according to any one of claims 1 to 27, wherein the P groups of ports are obtained based on the $N_{ap}^{SRS}$ ports corresponding to the first SRS resource and a quantity P of port groups.

29. The method according to claim 28, wherein an interval between port indexes of adjacent ports comprised in each of the P groups of ports is $N_{ap}^{SRS}/P$ .

30. The method according to claim 1, wherein the first comb offset set $\varphi_{p}$ corresponds to an initial comb offset value of the P th group of ports and a first comb offset bias value set.

**31.** The method according to claim 30, wherein the first comb offset bias value set comprises $L_{g,1}$ consecutive cyclic shift biases, wherein
$L_{g,1}$ is a positive integer greater than or equal to 1 and less than or equal to a total comb quantity $K_{TC}$, and the total comb quantity $K_{TC}$ is a positive integer greater than or equal to 1.

**32.** The method according to claim 31, wherein indication information that indicates $L_{g,1}$ is received from a network device.

**33.** The method according to claim 31 or 32, wherein the first comb offset bias value set is {0,1mod $K_{TC}$,$\cdots$,($L_{g,1}$ -1)mod $K_{TC}$}; or
the first comb offset bias value set is {0,-1 mod $K_{TC}$,$\cdots$,($-L_{g,1}$ + 1)mod $K_{TC}$}, wherein mod($\cdot$) is a modulo operation.

**34.** The method according to any one of claims 31 to 33, wherein a frequency domain starting position to which the $P^{th}$ group of ports is mapped is $n_{shift}N_{SC}^{RB}+(k_{TC}^{p}+k_{offset}^{'}+n_{SRS}^{comb,\ offset})\mathrm{mod}\,K_{TC}$ , wherein

$n_{shift}N_{SC}^{RB}$ is a frequency domain resource offset, $k_{offset}^{l}$ is a comb offset adjustment value, $k_{TC}^{p}$ is the initial comb offset value of the $P^{th}$ group of ports, $f(n_{SRS})$ is a random function, $n_{SRS}^{comb,\ offset}=f(n_{SRS})\,\mathrm{mod}\,L_{g,1}$ , $L_{g,1}=K_{TC}$ or $L_{g,1}$ is a value configured by the network device or is a preset value, and $n_{SRS}^{comb,\ offset}$ offset is the first comb offset bias value of the $P^{th}$ group of ports in the first comb offset bias value set.

**35.** The method according to claim 30, wherein the first comb offset bias value set comprises at least one comb offset bias value subset, and comb offset bias values comprised in each of the at least one comb offset bias value subset are consecutive.

**36.** The method according to claim 35, wherein comb offset bias value intervals between any two adjacent comb offset bias value subsets of the at least one comb offset bias value subset are equal.

**37.** The method according to claim 35 or 36, wherein all of the at least one comb offset bias value subset comprise equal quantities of comb offset bias values.

**38.** The method according to any one of claims 35 to 37, wherein a quantity of the at least one comb offset bias value subset is G , and a $g^{th}$ comb offset bias value subset of the G comb offset bias value subsets is {$\Delta_g$ mod $K_{TC}$, {$\Delta_g$ +1) mod $K_{TC}$ $\cdots$,($\Delta_g$ + $L_g$ -1) mod $K_{TC}$}, or is as follows:

$$\left\{-\Delta_g \,\mathrm{mod}\,K_{TC},(-\Delta_g-1)\,\mathrm{mod}\,K_{TC}\cdots,(-\Delta_g-L_g+1)\,\mathrm{mod}\,K_{TC}\right\},$$

wherein
$\Delta_0$ = 0, $\Delta_g$ =$\Delta''\cdot g$, g = 0,1,$\cdots$, G-1, $\Delta''$ is the comb offset bias value interval between any two adjacent comb offset bias value subsets, $K_{TC}$ is a total comb quantity, $L_g$ is a quantity of comb offset bias values comprised in the $g^{th}$ comb offset bias value subset, $\sum_{g=1}^{G}L_g=L_{g,1}$ , and $L_{g,1}$ is a total quantity of comb offset bias values comprised in the first comb offset bias value set.

**39.** The method according to claim 38, wherein $K_{TC}$ = $\Delta''\cdot G$.

**40.** The method according to claim 38 or 39, wherein G is a quantity of ports of the $N_{ap}^{SRS}$ ports on a same cyclic shift, or G is a quantity of different comb offsets occupied by the $N_{ap}^{SRS}$ ports.

**41.** The method according to claim 40, wherein a frequency domain starting position to which the $P^{th}$ group of ports is mapped is $n_{shift}N_{SC}^{RB}+(k_{TC}^{p}+k_{offset}^{'}+n_{SRS}^{comb,\ offset})\mathrm{mod}\,K_{TC}$ , wherein

$$n_{SRS}^{comb,\ offset} = S(f(n_{SRS})\bmod L_{g,1}) = f(n_{SRS})\bmod L_{g,1},$$

**and** $L_{g,1} = K_{TC}$; or

$$n_{SRS}^{comb,\ offset} = \left(\left\lfloor \frac{f(n_{SRS})\bmod L_{g,1}}{L_{g,1}/G} \right\rfloor \times \frac{K_{TC}}{G} + \left(\left(f(n_{SRS})\bmod L_{g,1}\right)\bmod(L_{g,1}/G)\right)\right),$$

wherein $L_{g,1}$ is a value configured by a network device or is a preset value; or

$$n_{SRS}^{comb,\ offset} = \left(\left\lfloor \frac{f(n_{SRS})\bmod L_{g,1}}{S_g} \right\rfloor \times \frac{K_{TC}}{G} + \left(\left(f(n_{SRS})\bmod G\right)\bmod S_g\right)\right),$$

wherein $S_g$ is a value **configured** by a network device or is a preset value, and $L_{g,1} = G \cdot S_g$; or

$$n_{SRS}^{comb,\ offset} = f(n_{SRS})\bmod K_{TC};$$

or

$$n_{SRS}^{comb,\ offset} = \left(\left\lfloor \frac{f(n_{SRS})\bmod L_{g,1}}{L_{g,1}/G} \right\rfloor \times \frac{K_{TC}}{G} + \left(f(n_{SRS})\bmod(L_{g,1}/G)\right)\right),$$

**wherein** $L_{g,1}$ is a value configured by a network device or is a preset value; or

$$n_{SRS}^{comb,\ offset} = \left(\left\lfloor \frac{f(n_{SRS})\bmod L_{g,1}}{S_g} \right\rfloor \times \frac{K_{TC}}{G} + \left(f(n_{SRS})\bmod S_g\right)\right),$$

wherein

$n_{shift}N_{SC}^{RB}$ is a frequency domain resource offset, $k_{offset}^{'}$ is a comb offset adjustment value, $k_{TC}^{p}$ is an initial comb offset value of the P groups of ports, $n_{SRS}^{comb,\ offset}$ is the first comb offset bias value of the P groups of ports in the first comb offset bias value set, $f(n_{SRS})$ is a random function, and $\lfloor \cdot \rfloor$ is a round-down operation.

42. The method according to claim 38 or 39, wherein $\Delta^{"} = \begin{cases} 1, & \text{if } K_{TC} = 2 \\ 2, & \text{others} \end{cases}$, or $\Delta^{"}$ is indicated by a network device.

43. The method according to claim 42, wherein a frequency domain starting position to which the P groups of ports are mapped is $n_{shift}N_{SC}^{RB} + (k_{TC}^{p} + k_{offset}^{'} + n_{SRS}^{comb,\ offset})\bmod K_{TC}$, wherein

$$n_{SRS}^{comb,\ offset} = S(f(n_{SRS})\bmod L_{g,1}) = f(n_{SRS})\bmod L_{g,1},$$

**and** $L_{g,1} = K_{TC}$; or

$$n_{SRS}^{comb,\ offset} = \left( \left\lfloor \frac{f(n_{SRS}) \bmod L_{g,1}}{(L_{g,1} \times \Delta^{''})/K_{TC}} \right\rfloor \times \Delta^{''} + \left( \left( f(n_{SRS}) \bmod L_{g,1} \right) \bmod \left( (L_{g,1} \times \Delta)/K_{TC} \right) \right) \right) ,$$

, wherein $L_{g,1}$ is a value configured by the network device or is a preset value; or

$$n_{SRS}^{comb,\ offset} = \left( \left\lfloor \frac{f(n_{SRS}) \bmod L_{g,1}}{S_g} \right\rfloor \times \Delta^{''} + \left( \left( f(n_{SRS}) \bmod G \right) \bmod S_g \right) \right) ,$$

wherein $S_g$ is a value configured by the network device or is a preset value, and $L_{g,1} = G \cdot S_g$ ; or

$$n_{SRS}^{comb,\ offset} = f(n_{SRS}) \bmod K_{TC} ;$$

or

$$n_{SRS}^{comb,\ offset} = \left( \left\lfloor \frac{f(n_{SRS}) \bmod L_{g,1}}{\left( L_{g,1} \times \Delta^{''} \right)/K_{TC}} \right\rfloor \times \Delta^{''} + \left( f(n_{SRS}) \bmod \left( \left( L_{g,1} \times \Delta^{''} \right)/K_{TC} \right) \right) \right) ,$$

wherein $L_{g,1}$ is a value configured by the network device or is a preset value; or

$$n_{SRS}^{comb,\ offset} = \left( \left\lfloor \frac{f(n_{SRS}) \bmod L_{g,1}}{S_g} \right\rfloor \times \Delta^{''} + \left( f(n_{SRS}) \bmod S_g \right) \right) ,$$

wherein $S_g$ is a value configured by the network device or is a preset value, and $L_{g,1} = G \cdot K_{TC} / \Delta^{''}$, wherein $n_{shift} N_{SC}^{RB}$ is a frequency domain resource offset, $k_{offset}^{i}$ is a comb offset adjustment value, $k_{TC}^{p}$ is an initial comb offset value of the P groups of ports, $n_{SRS}^{comb,\ offset}$ is the first comb offset bias value, $f(n_{SRS})$ is a random function, and $\lfloor \cdot \rfloor$ is a round-down operation.

44. A communication method, comprising:

determining, from $Q$ cyclic shift value sets, a cyclic shift value of each of $N_{ap}^{SRS}$ ports corresponding to a first SRS resource, wherein $N_{ap}^{SRS}$ is a positive integer, and $Q$ is a positive integer greater than 1 and less than or equal to $N_{ap}^{RS}$ ; and

sending an SRS based on the cyclic shift value of each of the $N_{ap}^{SRS}$ ports.

45. The method according to claim 44, wherein cyclic shift values comprised in any two of the Q cyclic shift value sets are inconsecutive, and cyclic shift values comprised in each of the Q cyclic shift value sets are consecutive.

46. The method according to claim 44 or 45, wherein the method further comprises:
receiving fourth indication information from a network device, wherein the fourth indication information indicates that a quantity of cyclic shift values comprised in each of the Q cyclic shift value sets is $L_1$, $L_1$ is a positive integer greater than or equal to 1 and less than or equal to a maximum cyclic shift value $n_{RS}^{cs,\max}$, and $n_{SRS}^{cs,\max}$ is a positive integer greater than 1.

**47.** The method according to claim 46, wherein a $q^{th}$ cyclic shift value set of the Q cyclic shift value sets is obtained based on at least one of a starting cyclic shift value $n_{CS}^{\text{start}}$, a cyclic shift value interval $\Delta$ between any two adjacent cyclic shift value sets, a quantity $L_1$ of cyclic shift values comprised in the $q^{th}$ cyclic shift value set, or the maximum cyclic shift value $n_{RS}^{cs,\max}$, wherein

the cyclic shift value interval between any two adjacent cyclic shift value sets is $\Delta$, $\Delta$ is greater than or equal to 1 and less than $n_{RS}^{cs,\max}$, and $q$ is a positive integer ranging from 1 to $Q$.

**48.** The method according to claim 47, wherein the $q^{th}$ cyclic shift value set is as follows:

$$\left\{ \left( n_{CS}^{\text{start}} + (q-1)\Delta \right) \bmod n_{SRS}^{CS,\max}, \left( n_{CS}^{\text{start}} + (q-1)\Delta + 1 \right) \bmod n_{SRS}^{CS,\max}, \cdots, \left( n_{CS}^{\text{start}} + (q-1)\Delta + L_1 - 1 \right) \bmod n_{SRS}^{CS,\max} \right\}$$

, wherein mod($\cdot$) is a modulo operation.

**49.** The method according to claim 47 or 48, wherein the cyclic shift value interval $\Delta$ between any two adjacent cyclic shift value sets is related to the maximum cyclic shift value $n_{SRS}^{cs,\max}$ and the quantity Q of cyclic shift value sets.

**50.** The method according to claim 49, wherein $\Delta = \dfrac{n_{SRS}^{CS,\max}}{Q}$ .

**51.** The method according to any one of claims 44 to 50, wherein a cyclic shift value of an $i^{th}$ port of the $N_{ap}^{SRS}$ ports is $\alpha_i$, wherein

$$\alpha_i = 2\pi \frac{\left[ n_{SRS}^{CS,i} + \left\lfloor \frac{n_{SRS}^{CSH}}{L_1} \right\rfloor \cdot \frac{n_{SRS}^{cs,\max}}{Q} + \left( n_{SRS}^{CSH} \bmod L_1 \right) \right] \bmod n_{SRS}^{cs,\max}}{n_{SRS}^{cs,\max}},$$

wherein

$n_{SRS}^{CSH} = (-1)^b f(n_{SRS})$, a value of $b$ is 0 or 1, $f(n_{SRS}) = \left[ \sum_{m=0}^{B-1} c(m) \cdot 2^m \right] \bmod L_1$, $c(m)$ is an $m^{th}$ element of a random sequence, $B$ is a positive integer greater than or equal to $\lceil \log_2 n_p \rceil$, $\lceil \cdot \rceil$ is a round-up operation, $\alpha_i$ is a positive integer, $n_{SRS}^{CS,i}$ is an initial cyclic shift value of the i$^{th}$ port, and $n_{SRS}^{cs,\max}$ is the maximum cyclic shift value.

**52.** The method according to claim 44, wherein the Q cyclic shift value sets correspond to Q cyclic shift bias value subsets.

**53.** The method according to claim 52, wherein a first cyclic shift bias value set comprising the Q cyclic shift bias value subsets comprises $Y_1$ consecutive cyclic shift biases, wherein

$Y_1$ is greater than or equal to 1 and less than or equal to the maximum cyclic shift value $n_{RS}^{cs,\max}$.

**54.** The method according to claim 53, wherein indication information that indicates $Y_1$ is received from a network device.

**55.** The method according to claim 53 or 54, wherein the first cyclic shift bias value set is

$$\left\{0, 1 \bmod n_{SRS}^{CS,\max}, \cdots, (Y_1 - 1) \bmod n_{SRS}^{CS,\max}\right\}$$ ; or

the first cyclic shift bias value set is $\left\{0, -1 \bmod n_{SRS}^{CS,\max}, \cdots, (-Y_1 + 1) \bmod n_{SRS}^{CS,\max}\right\}$ , wherein mod($\cdot$) is a modulo operation.

**56.** The method according to any one of claims 53 to 55, wherein a cyclic shift value of an $i$th port of the $N_{ap}^{SRS}$ ports is $\alpha_i$, wherein

$$\alpha_i = 2\pi \frac{n_{SRS}^{cs,i}}{n_{SRS}^{cs,\max}} + 2\pi \frac{n_{SRS}^{cs,offset}}{K n_{SRS}^{cs,\max}},$$

wherein

$n_{SRS}^{cs,offset} = f(n_{SRS}) \bmod Y_1$ ; $Y_1$ is $n_{SRS}^{cs,\max}$ and K is 1, or $Y_1 = K \cdot n_{SRS}^{cs,\max}$ and K is a value configured by the network device or is a preset value, or $Y_1$ is a value configured by the network device and K is 1; $f(n_{SRS})$ is a random function; K is 1 or a preset value; $n_{SRS}^{CS,i}$ is an initial cyclic shift value of the $i$th port; $n_{SRS}^{cs,\max}$ is the maximum cyclic shift value; and $n_{SRS}^{cs,offset}$ is the first cyclic shift bias value.

**57.** The method according to claim 52, wherein cyclic shift biases comprised in each of the Q cyclic shift bias value subsets are consecutive.

**58.** The method according to claim 57, wherein cyclic shift bias intervals between any two adjacent cyclic shift bias value subsets of the Q cyclic shift bias value subsets are equal.

**59.** The method according to claim 57 or 58, wherein all of the Q cyclic shift bias value subsets comprise equal quantities of cyclic shift bias values.

**60.** The method according to any one of claims 57 to 59, wherein a quantity of the Q cyclic shift bias value subsets is *Q*, and a *q*th cyclic shift bias value subset of the *Q* cyclic shift bias value subsets is

$$\left\{\Delta_q \bmod n_{SRS}^{CS,\max}, (\Delta_q + 1) \bmod n_{SRS}^{CS,\max} \cdots, (\Delta_q + S_q - 1) \bmod n_{SRS}^{CS,\max}\right\}$$ , or is as follows:

$$\left\{-\Delta_q \bmod n_{SRS}^{CS,\max}, (-\Delta_q - 1) \bmod n_{SRS}^{CS,\max} \cdots, (-\Delta_q - S_q + 1) \bmod n_{SRS}^{CS,\max}\right\},$$

wherein
$\Delta_0 = 0$, $\Delta_q = \Delta' \cdot q$, $q = 0, 1, \cdots$, Q-1, $\Delta'$ is a cyclic shift bias interval between any two adjacent cyclic shift bias value subsets, $n_{SRS}^{cs,\max}$ is a maximum cyclic shift value, $S_q$ is a quantity of cyclic shift bias values comprised in the $q^{th}$ cyclic shift bias value subset, $\sum_{q=1}^{Q} S_q = Y_1$ , and $Y_1$ is a total quantity of cyclic shift bias values comprised in the first cyclic shift bias value set.

**61.** The method according to claim 60, wherein $n_{SRS}^{cs,\max} = \Delta' \cdot Q$ .

**62.** The method according to claim 60 or 61, wherein Q is a quantity of ports of the $N_{ap}^{SRS}$ ports on a same comb offset, or

$Q$ is a quantity of different cyclic shifts occupied by the $N_{ap}^{SRS}$ ports, or $Q$ is a total quantity $N_{ap}^{SRS}$ of ports corresponding to the first SRS resource, or

63. The method according to claim 62, wherein a cyclic shift value of an i th port of the $N_{ap}^{SRS}$ ports is $\alpha_i$, wherein

$$\alpha_i = 2\pi \frac{n_{SRS}^{cs,i}}{n_{SRS}^{cs,\max}} + 2\pi \frac{n_{SRS}^{cs,offset}}{Kn_{SRS}^{cs,\max}},$$

wherein

$$n_{SRS}^{cs,offset} = S(f(n_{SRS}) \bmod Y_1) = f(n_{SRS}) \bmod Y_1,$$

$Y_1 = n_{SRS}^{cs,\max}$, and K is 1; or $Y_1 = K \cdot n_{SRS}^{cs,\max}$, and K is a value configured by a network device or is a preset value; or

$$n_{SRS}^{cs,offset} = \left( \left\lfloor \frac{f(n_{SRS}) \bmod Y_1}{Y_1 / Q} \right\rfloor \times \frac{n_{SRS}^{cs,\max}}{Q} + \left( (f(n_{SRS}) \bmod Y_1) \bmod (Y_1 / Q) \right) \right),$$

$Y_1$ is configured by a network device or is a preset value, and K is 1; or

$$n_{SRS}^{cs,offset} = \left( \left\lfloor \frac{f(n_{SRS}) \bmod Y_1}{S_q} \right\rfloor \times \frac{n_{SRS}^{cs,\max}}{Q} + \left( (f(n_{SRS}) \bmod Y_1) \bmod S_q \right) \right),$$

$S_q$ is a value configured by a network device or is a preset value, $Y_1 = Q \cdot S_q$, and K is 1; or

$$n_{SRS}^{cs,offset} = f(n_{SRS}) \bmod n_{SRS}^{cs,\max},$$

and K is 1; or

$$n_{SRS}^{cs,offset} = f(n_{SRS}) \bmod \left( K \cdot n_{SRS}^{cs,\max} \right),$$

and K is a value configured by a network device or is a preset value; or

$$n_{SRS}^{cs,offset} = \left( \left\lfloor \frac{f(n_{SRS}) \bmod Y_1}{Y_1 / Q} \right\rfloor \times \frac{n_{SRS}^{cs,\max}}{Q} + \left( f(n_{SRS}) \right) \bmod (Y_1 / Q) \right),$$

$Y_1$ is a value configured by a network device or is a preset value, and K is 1; or

$$n_{SRS}^{cs,offset} = \left( \left\lfloor \frac{f(n_{SRS}) \bmod Y_1}{S_q} \right\rfloor \times \frac{n_{SRS}^{cs,\max}}{Q} + \left( f(n_{SRS}) \right) \bmod S_q \right),$$

$S_q$ is a value configured by a network device or is a preset value, $Y_1 = Q \cdot S_q$, and $K$ is 1, wherein

$n_{SRS}^{CS,i}$ is an initial cyclic shift value of the i th port, $f(n_{SRS})$ is a random function, mod($\cdot$) is a modulo operation, $n_{SRS}^{cs,offset}$ is the first cyclic shift bias value, and $\lfloor \cdot \rfloor$ is a round-down operation.

64. The method according to claim 60 or 61, wherein $\Delta^{'} = \begin{cases} 2, & \text{if } n_{SRS}^{cs,\max} = 8 \\ 3, & \text{others} \end{cases}$ , or

$$Q = \begin{cases} 4, & \text{if } n_{SRS}^{cs,\max} = 8 \text{ or } 12 \\ 2, & \text{others} \end{cases} \cdot$$

65. The method according to claim 64, wherein a cyclic shift value of an i th port of the $N_{ap}^{SRS}$ ports is $\alpha_i$, wherein

$$\alpha_i = 2\pi \frac{n_{SRS}^{cs,i}}{n_{SRS}^{cs,\max}} + 2\pi \frac{n_{SRS}^{cs,offset}}{K n_{SRS}^{cs,\max}} ,$$

wherein

$$n_{SRS}^{cs,offset} = S(f(n_{SRS}) \bmod Y_1) = f(n_{SRS}) \bmod Y_1 ,$$

$Y_1 = n_{SRS}^{cs,\max}$ , and K is **1**; or $Y_1 = K \cdot n_{SRS}^{cs,\max}$ , and K is a value configured by a network device or is a preset value; or

$$n_{SRS}^{cs,offset} = \left( \left\lfloor \frac{f(n_{SRS}) \bmod Y_1}{(L_1 \times \Delta^{'}) / n_{SRS}^{cs,\max}} \right\rfloor \times \Delta^{'} + \left( \left( f(n_{SRS}) \bmod Y_1 \right) \bmod ((L_1 \times \Delta^{'}) / n_{SRS}^{cs,\max}) \right) \right) ,$$

$Y_1$ is a value configured by a network device or is a preset value, K is 1, and $\lfloor \cdot \rfloor$ is a round-down operation; or

$$n_{SRS}^{cs,offset} = \left( \left\lfloor \frac{f(n_{SRS}) \bmod Y_1}{S_q} \right\rfloor \times \Delta^{'} + \left( \left( f(n_{SRS}) \bmod Y_1 \right) \bmod S_q \right) \right) ,$$

$S_q$ is a value configured by a network device or is a preset value, $Y_1 = Q \cdot S_q$, and $K$ is 1; or

$$n_{SRS}^{cs,offset} = f(n_{SRS}) \bmod n_{SRS}^{cs,\max} ,$$

and K is 1; or

$$n_{SRS}^{cs,offset} = f(n_{SRS}) \bmod \left( K \cdot n_{SRS}^{cs,\max} \right) ,$$

and $K$ is a value configured by a network device or is a preset value; or

$$n_{SRS}^{cs,offset} = \left( \left\lfloor \frac{f(n_{SRS}) \bmod Y_1}{(L_1 \times \Delta^{'}) / n_{SRS}^{cs,\max}} \right\rfloor \times \Delta^{'} + \left( f(n_{SRS}) \bmod ((Y_1 \times \Delta^{'}) / n_{SRS}^{cs,\max}) \right) \right) ,$$

$Y_1$ is a value configured by a network device or is a preset value, K is 1, and $\lfloor \cdot \rfloor$ is a round-down operation; or

$$n_{SRS}^{cs,offset} = \left( \left\lfloor \frac{f(n_{SRS}) \bmod Y_1}{S_q} \right\rfloor \times \Delta' + \left( f(n_{SRS}) \bmod S_q \right) \right),$$

$S_q$ is a value configured by a network device or is a preset value, $Y_1 = Q \cdot S_q$, and $K$ is 1, wherein $n_{SRS}^{CS,i}$ is an initial cyclic shift value of the i th port, $f(n_{SRS})$ is a random function, mod($\cdot$) is a modulo operation, and $n_{SRS}^{cs,offset}$ is the first cyclic shift bias value.

66. A communication apparatus, comprising a unit for implementing the method according to any one of claims 1 to 65.

67. A computer-readable storage medium, wherein the computer-readable storage medium stores a computer program, and when the computer program is run, the method according to any one of claims 1 to 65 is implemented.

68. A chip, comprising a processor, wherein the processor is connected to a memory, the memory is configured to store a computer program, and the processor is configured to execute the computer program stored in the memory, to implement the method according to any one of claims 1 to 65.

69. A computer program product, wherein when the computer program product is run on an electronic device, the electronic device is enabled to perform the method according to any one of claims 1 to 65.

Network
device 110

Terminal
device 122

Terminal
device 121

FIG. 1

$K_{TC} = 2$    $K_{TC} = 4$    $K_{TC} = 8$

FIG. 2

FIG. 3

FIG. 4

EP 4 686 132 A1

500

Terminal device

Network device

S510: The terminal device sends an SRS based on at least one comb offset in a first comb offset set $\varphi_p$ corresponding to a $p^{\text{th}}$ group of ports, and the network device receives the SRS based on at least one comb offset in the first comb offset set $\varphi_p$ corresponding to the $p^{\text{th}}$ group of ports

FIG. 5

EP 4 686 132 A1

Occupied by COs that do not support hopping

Occupied by four ports

(a)

(b)

(c)

(d)

(e)

(f)

FIG. 6

FIG. 7

FIG. 8

FIG. 9

Occupied by COs that do not support hopping

Occupied by ports

EP 4 686 132 A1

108

FIG. 10

900

Terminal device

Network device

S910: Determine, from $Q$ cyclic shift sets, a cyclic shift value of each of $N_{ap}^{SRS}$ ports corresponding to a first SRS resource

S920: Determine, from $Q$ cyclic shift sets, a cyclic shift value of each of $N_{ap}^{SRS}$ ports corresponding to a first SRS resource

S930: The terminal device sends an SRS based on the cyclic shift value of each of the $N_{ap}^{SRS}$ ports, and the network device receives the SRS based on the cyclic shift value of each of the $N_{ap}^{SRS}$ ports

FIG. 11

FIG. 12(a)

FIG. 12(b)

FIG. 12(c)

FIG. 12(d)

FIG. 12(e)

FIG. 12(f)

EP 4 686 132 A1

FIG. 12(g)

FIG. 12(h)

Port 1

Port 0

Port 2

Port 3

|   | 0 | 1 | 2 | 3 | 4 | 5 | 6 | 7 | 8 | 9 | 10 | 11 |
|---|---|---|---|---|---|---|---|---|---|---|----|----|
| 0 | ▓ |   |   | ▓ |   |   | ▓ |   |   | ▓ |    |    |
| 1 |   |   |   |   |   |   |   |   |   |   |    |    |
| 2 |   |   |   |   |   |   |   |   |   |   |    |    |
| 3 |   |   |   |   |   |   |   |   |   |   |    |    |

(a)

Port 1

Port 0

Port 2

Port 3

|   | 0 | 1 | 2 | 3 | 4 | 5 | 6 | 7 | 8 | 9 | 10 | 11 |
|---|---|---|---|---|---|---|---|---|---|---|----|----|
| 0 |   | ▓ |   |   | ▓ |   |   | ▓ |   |   | ▓  |    |
| 1 |   |   |   |   |   |   |   |   |   |   |    |    |
| 2 |   |   |   |   |   |   |   |   |   |   |    |    |
| 3 |   |   |   |   |   |   |   |   |   |   |    |    |

(b)

CSs that do not support hopping ▯

Occupied by ports ▓

FIG. 13

FIG. 14

FIG. 15

## INTERNATIONAL SEARCH REPORT

| | International application No. |
|---|---|
| | **PCT/CN2024/085879** |

### A. CLASSIFICATION OF SUBJECT MATTER

H04L5/00(2006.01)i; H04W72/0453(2023.01)i

According to International Patent Classification (IPC) or to both national classification and IPC

### B. FIELDS SEARCHED

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNTXT, ENTXT, ENTXTC, VEN, VCN, DWPI, 3GPP: 端口, 梳齿, 梳状, 偏移, 偏置, 探测参考信号, 探通参考信号, 组, 集合, 循环移位, port, comb, offset, SRS, group, set, CS, cyclic shift

### C. DOCUMENTS CONSIDERED TO BE RELEVANT

| Category* | Citation of document, with indication, where appropriate, of the relevant passages | Relevant to claim No. |
|---|---|---|
| X | CN 115706686 A (HUAWEI TECHNOLOGIES CO., LTD.) 17 February 2023 (2023-02-17) claims 1-28, and description, paragraphs 4-393 | 1-69 |
| X | CN 115706629 A (HUAWEI TECHNOLOGIES CO., LTD.) 17 February 2023 (2023-02-17) description, paragraphs 30-41 and 82-161 | 44-69 |
| A | CN 110603771 A (HUAWEI TECHNOLOGIES CO., LTD.) 20 December 2019 (2019-12-20) entire document | 1-69 |
| A | WO 2023031796 A1 (TELEFONAKTIEBOLAGET LM ERICSSON (PUBL)) 09 March 2023 (2023-03-09) entire document | 1-69 |
| A | US 2012183086 A1 (NOH, Minseok et al.) 19 July 2012 (2012-07-19) entire document | 1-69 |

☐ Further documents are listed in the continuation of Box C.    ☑ See patent family annex.

| | | |
|---|---|---|
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **28 June 2024** | **05 July 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/085879**

| Patent document cited in search report | | | Publication date (day/month/year) | Patent family member(s) | | | Publication date (day/month/year) |
|---|---|---|---|---|---|---|---|
| CN | 115706686 | A | 17 February 2023 | WO | 2023011211 | A1 | 09 February 2023 |
| CN | 115706629 | A | 17 February 2023 | WO | 2023011110 | A1 | 09 February 2023 |
| CN | 110603771 | A | 20 December 2019 | EP | 3905578 | A1 | 03 November 2021 |
| | | | | JP | 2020516124 | A | 28 May 2020 |
| | | | | CA | 3055797 | A1 | 27 September 2018 |
| | | | | US | 2020007201 | A1 | 02 January 2020 |
| | | | | KR | 20190117750 | A | 16 October 2019 |
| | | | | EP | 3588830 | A1 | 01 January 2020 |
| | | | | BR | 112019019885 | A2 | 22 April 2020 |
| | | | | WO | 2018171614 | A1 | 27 September 2018 |
| | | | | CN | 108632001 | A | 09 October 2018 |
| | | | | CN | 108964866 | A | 07 December 2018 |
| | | | | CN | 109257153 | A | 22 January 2019 |
| | | | | IN | 201947035078 | A | 27 September 2019 |
| | | | | VN | 67593 | A | 25 December 2019 |
| WO | 2023031796 | A1 | 09 March 2023 | CN | 117897924 | A | 16 April 2024 |
| US | 2012183086 | A1 | 19 July 2012 | US | 2014079001 | A1 | 20 March 2014 |
| | | | | AU | 2011355861 | A1 | 31 January 2013 |
| | | | | US | 2013208773 | A1 | 15 August 2013 |
| | | | | KR | 20120084240 | A | 27 July 2012 |
| | | | | ES | 2668097 | T3 | 16 May 2018 |
| | | | | WO | 2012099301 | A1 | 26 July 2012 |
| | | | | EP | 2625796 | A1 | 14 August 2013 |
| | | | | US | 2016344462 | A1 | 24 November 2016 |
| | | | | JP | 2014510433 | A | 24 April 2014 |
| | | | | US | 2014079151 | A1 | 20 March 2014 |
| | | | | US | 2013279626 | A1 | 24 October 2013 |
| | | | | US | 2015372734 | A1 | 24 December 2015 |
| | | | | EP | 3349369 | A1 | 18 July 2018 |
| | | | | TW | 201233088 | A | 01 August 2012 |
| | | | | US | 2015222405 | A1 | 06 August 2015 |
| | | | | CA | 2806662 | A1 | 26 July 2012 |
| | | | | IN | 4128KOLNP2012 | A | 28 June 2013 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310411270
- CN 202311021417